(19) **Europäisches Patentamt / European Patent Office / Office européen des brevets**

(11) **EP 1 783 622 A1**

(12) **EUROPEAN PATENT APPLICATION**
published in accordance with Art. 158(3) EPC

(43) Date of publication:
**09.05.2007 Bulletin 2007/19**

(51) Int Cl.:
*G06F 13/00* (2006.01)    *H04L 12/46* (2006.01)
*H04L 12/56* (2006.01)

(21) Application number: **05780099.7**

(22) Date of filing: **06.06.2005**

(86) International application number:
**PCT/JP2005/010361**

(87) International publication number:
**WO 2006/006324 (19.01.2006 Gazette 2006/03)**

(84) Designated Contracting States:
**DE GB**

(30) Priority: **07.06.2004 JP 2004168253**

(71) Applicant: **MATSUSHITA ELECTRIC INDUSTRIAL CO., LTD.**
**Osaka 571-8501 (JP)**

(72) Inventors:
• **TAKECHI, Hideaki**
c/o Matsushita El. Ind. Co., Ltd
Chuo-ku, Osaka-shi, Osaka 540-6319 (JP)

• **NAKATSUKA, Monta**
c/o Matsushita El. Ind. Co., Ltd
Chuo-ku, Osaka-shi, Osaka 540-6319 (JP)
• **KUNIHIRA, Tadashi**
c/o Matsushita El. Ind. Co., Ltd
Chuo-ku, Osaka-shi, Osaka 540-6319 (JP)
• **KATO, Naonori**
c/o Matsushita El. Ind. Co., Ltd
Chuo-ku, Osaka-shi, Osaka 540-6319 (JP)

(74) Representative: **Eisenführ, Speiser & Partner**
**Patentanwälte Rechtsanwälte**
**Postfach 10 60 78**
**28060 Bremen (DE)**

(54) **COMMUNICATION SYSTEM**

(57)    A server apparatus (103) selects one of communication equipment (101, 102) that has a waiting and reception capability as a waiting and receiving side communication equipment based on waiting and reception capability information on the respective communication equipments (101, 102), and selects another communication equipment as a connection side communication equipment. The waiting and receiving side communication equipment sets a router apparatus connected to the waiting and receiving side communication equipment so that the router apparatus receives a signal having a destination of waiting and receiving address information, and transfers the received signal to the waiting and receiving side communication equipment. The connection side communication equipment transmits a packet (212) having the destination of the waiting and receiving address information to the waiting and receiving side communication equipment.

*Fig.1*

**Description**

TECHNICAL FIELD

The present invention relates to a communication system that adopts an IP protocol. More specifically, the present invention relates to a communication system for allowing a peer-to-peer communication to be held between a communication equipment connected to a network such as the Internet via, for example, a LAN and a different communication equipment connected to the network via another LAN, to a server apparatus and a communication equipment that constitute the communication system, and to a communication method. The present invention also relates to a program that includes steps for the communication method, and a recording medium that stores the program.

BACKGROUND ART

In recent years, due to establishment of a broadband environment for an xDSL, an optical fiber cable, and the like, the Internet has been rapidly spreading not only in companies but also in homes. In addition, it is possible to connect home electric appliances such as a television receiver, a DVD recorder, an air-conditioner, and a refrigerator besides a personal computer (PC) to the Internet. In the specification of the present application, an equipment that is connected to the network such as the Internet and that holds a communication will be referred to as "a communication equipment" or "an equipment" hereinafter.

In order to connect an equipment to the Internet via a local area network (hereinafter, referred to as "a LAN") in a home or a company, a router apparatus that includes a network address translation (hereinafter, referred to as " a NAT") function and a network address port translation (hereinafter, referred to as "a NAPT") function (which function is sometimes referred to as "an IP masquerade function") is normally employed.

In order to hold a communication between equipment connected to the Internet, global IP addresses uniquely respectively allocated to the respective equipments are used. However, because of a rapid increase in the number of equipments connected to the Internet, global IP addresses tend to be insufficient. Due to this, for an equipment that is connected to the Internet not directly but via the LAN, a private IP address specified in Non-Patent Document 1 and unique only in the LAN is often used. However, the private IP address is not unique in the entire Internet and not permitted to be used in the Internet. For these reasons, the equipment having the private IP address cannot hold a communication with another equipment connected to the Internet by using its private IP address.

The NAT or NAPT function is intended to solve such a problem. The NAT or NAPT function performs a mutual translation between the private IP address and the global IP address, and enables the equipment that is connected to the LAN and that is allocated the private IP address to communicate with another equipment connected to the Internet.

In the following description, in order to clearly distinguish the so-called Internet from the LAN, the Internet will be referred to as "a WAN" (Wide Area Network). In addition, if it is unnecessary to distinguish the NAT function from the NAPT function since these functions are equal in operation and properties, they will be equally represented by "a NAT function".

According to the NAT technique, it is possible to easily establish a connection from an equipment connected to the LAN and having a private IP address to a server apparatus directly connected to the Internet. However, a restriction that a different equipment connected to the Internet cannot be freely connected to the equipment connected to the LAN and having the private IP address at desired time is imposed on the NAT technique. In order to solve this problem, a function called "static NAT" "port forwarding" or the like is provided.

According to the static NAT technique, a user needs to set a static NAT table of a router apparatus in advance. Entries of the static NAT table include a private IP address and a port number of a connection destination equipment connected to the router apparatus via the LAN, and a port number of an arbitrary free unoccupied WAN side port of the router apparatus. If the user intends to connect a user's equipment to an equipment connected to the LAN and having only a private IP address via the Internet (WAN) (that is, the user intends to transmit a packet to the equipment), the user designates, as a destination, a set of a global IP address of the router apparatus that connects the equipment to the Internet and the WAN side port number of the router apparatus set to the entry of the static NAT table, and transmits the packet to the destination. The router apparatus collates the transmission destination with the entries of the static NAT table set in advance, translates the transmission destination of the packet into the private IP address and the port number of the equipment recorded in the entries, and transfers the packet to the translated destination.

The static NAT function mentioned above makes it possible for the equipment connected to the Internet and having the global IP address to communicate with the equipment connected to the LAN and having the private IP address. However, a communication method using the static NAT requires the user to set the static NAT table in advance. For an end user unfamiliar with the IP address, there is such a problem that the setting contents are complicated. Further, if the global IP address of the router apparatus is dynamically allocated by PPP (Point-to-Point Protocol) or DHCP (Dynamic Host Configuration Protocol), there is such a problem that it is difficult for the user to grasp the address and impossible for the user to specify the connection destination. In other words, the static NAT function has a first problem that it is impossible to connect, to the equipment connected to the LAN and having only the private IP address, another equipment via the Internet without any user's static NAT setting in the router apparatus and user's search for the WAN side dynamic address of the router apparatus. The NAT function, and detailed operation and problems of the static NAT function are disclosed in Patent Document 1.

In order to solve the first problem and to enable the communication equipment connected directly to the Internet (WAN) to be connected to the communication equipment connected to the LAN and having only the private IP address without any complicated setting of the static NAT table, there has been conventionally known a method using a Universal Plug and Play NAT traversal (UPnP-NAT traversal) technique, and a method using a communication system disclosed in the Patent Document 1.

The UPnP-NAT traversal method is premised on mounting a Universal Plug and Play Internet Gateway Device (UPnP-IGD) function in a broadband router apparatus. The UPnP-IGD function is a standard according to an industry standard specification issued by the UPnP forum and implemented in many broadband router apparatus. According to the UPnP-NAT traversal method, the equipment connected to the LAN and having only the private IP address is TCP/IP connected to the broadband router apparatus connected to the equipment, and can invoke the UPnP-IGD function of the router apparatus and refer to or set the static NAT table of the router apparatus. According to this method, the equipment connected to the LAN and having only the private IP address can set the static NAT table of the router apparatus that connects the equipment to the Internet so that another equipment can automatically start a communication with the equipment via the Internet without any user's manual and complicated table setting. At that moment, the equipment can automatically acquire the WAN side IP address and port number of the router apparatus. On the other hand, if the equipment connected to the LAN and having only the private IP address does not set the static NAT table of the router apparatus that includes the UPnP-IGD function in advance, another equipment connected to the Internet cannot directly operate the UPnP-IGD function of the router apparatus via the Internet. Due to this, there is such a problem that it is impossible to start a connection from the equipment connected to the Internet to the equipment connected to the LAN and having only the private IP address via the Internet and the LAN at arbitrary time. Further, if the equipment connected to the LAN sets the static NAT table of the router apparatus that includes the UPnP-IGD function in advance, an arbitrary equipment connected to the Internet can be always and indiscriminatingly connected to the equipment connected to the LAN via the router apparatus that includes the UPnP-IGD function. This poses a communication safety problem. In addition, the setting of the static NAT table in advance cannot be applied to a case of employing a router apparatus that does not include the UPnP-IGD function. In other words, the UPnP-NAT traversal method has such a second problem that a connection cannot be started from the equipment connected to the Internet to the equipment connected to the LAN and having only the private IP address at arbitrary time when maintaining the safety, and that the router apparatus that includes the UPnP-IGD function is necessary so as to start the connection.

In the communication system disclosed in the Patent Document 1, a dedicated server apparatus connected to the Internet is prepared, and an equipment connected to the LAN and having only a private IP address regularly transmits a user datagram protocol (UDP) packet to this server apparatus. The server apparatus transmits a packet for starting a communication as a response packet to this UDP packet to the equipment if it is necessary to do so. Then this leads to that it is possible for the server apparatus connected to the Internet to communicate with the equipment connected to the LAN and having only the private IP address over the NAT router apparatus. According to the static NAT function or UPnP-IGD method, the settings are made so as to be able to receive a packet from an arbitrary equipment connected to the Internet, According to this method disclosed in the Patent Document 1, by contrast, only the UDP packet, which is the response packet from the server apparatus, is basically caused to pass through the LAN. In addition, when the equipment connected to the LAN and having only the private IP address stops regularly transmitting the UDP packet, the connection from another equipment to this equipment via the Internet is automatically prohibited. Therefore, high safety is ensured. Further, according to the method disclosed in the Patent Document 1, the communication system can operate by using the router apparatus including the simple NAT function without any need of the router apparatus that includes the UPnP-IGD function. In addition, it is possible to start a connection from the equipment connected to the Internet to the equipment connected to the LAN and having only the private IP address at arbitrary time. Thus, the method disclosed in the Patent Document 1 can simultaneously solve the first and second problems. However, the communication system disclosed in the Patent Document 1 has the following third problem. If two equipments connected to different LANs, respectively, are to communicate with each other, it is always necessary to hold the communication via the server apparatus connected to the Internet. Due to this, if a large capacity of data, e.g., AV data such as moving images or voices is to be transmitted and received between the equipments; remarkably heavy load is imposed on the server apparatus.

According to a method disclosed in Patent Document 2, data can be transmitted and received between equipment each of which is connected directly to the Internet and each of which has a global IP address by the peer-to-peer (P2P) communication that can be established not via the server apparatus. This method can reduce the load of the server apparatus. However, the peer-to-peer communication cannot be held between the equipment each connected to the LAN and having only the private IP address. As a result, this method cannot solve the third problem.

Moreover, when the equipments are to be peer-to-peer connected to one another in a home or an office, it is desirable that the equipments are mutually authenticated so as to maintain communication safety. As an authentication method, various methods such as SSL (Secure Socket Layer) and IKE (The Internet Key Exchange) have been conventionally used (See Non-Patent Documents 2 to 4). However, these methods have the following problems (the fourth problem). For example, it is necessary to acquire, hold, and collate certificate revocation lists (CRL). It is necessary to register certificates in a certificate authority (CA) apparatus and regularly update them. In order to hold not only a public key but also a private key and to execute a challenge-response authentication or a Diffie-Hellman authentication, it is necessary to take strict measures to prevent leakage of the private key. As can be seen, if higher security is to be ensured, management load normally tends to be heavier. According to a server-client communication method, since a server can include a great part of the authentication function accompanied by high management load, a management load on a client equipment in the home can be suppressed low. Nevertheless, this method has the following fourth problem. There is no avoiding installing these functions in a home equipment or an office equipment so as to perform a mutual authentication by the peer-to-peer connection. If the management load is heavier, then reduction in the user-friendliness, the cost increase, reduction in the security and the like occur.

Patent document 1: Japanese Patent No. 3445986;
Patent document 2: Japanese patent laid-open publication No. JP-2003-203023-A;
Non-patent document 1: RFC1918, Internet Engineering Task Force, February 1996;
Non-patent document 2: RFC2246, Internet Engineering Task Force, January 1999;
Non-patent document 3: Alan O. Freier et al., "The SSL Protocol Version 3.0", Transport Layer Security Working Group INTERNET DRAFT, draft-freier-ssl-version3-0.2.txt, revised on November 1996, http://wp.netscape.com/eng/ssl3/draft302.txt, printed on April 1, 2004 ; and
Non-patent document 4: RFC2409, Internet Engineering Task Force, November 1998.

DISCLOSURE OF THE INVENTION

PROBLEMS TO BE SOLVED BY THE INVENTION

As mentioned above, the peer-to-peer connection between the equipment each connected to the LAN and having only the private IP address via the Internet is confronted with many problems and difficult to establish. As a result, large amounts of data are inevitably transferred between the equipment via the server, and this leads to increase in the load on the server. Due to this, it is difficult to provide a communication system capable of transmitting and receiving large amounts of data such as an AV stream between, for example, a PC or an electric appliance in a home and a PC or an electric appliance in a different home at lower cost with maintaining a communication band and a quick response.

It is an object of the present invention to solve the problems of the prior arts. In other words, the present invention provides a method capable of simultaneously solving the following problems:

(a) such a first problem that it is impossible to connect, to the equipment connected to the LAN and having only the private IP address, the equipment connected to the Internet without any user's static NAT setting in the router apparatus and user's search for the WAN side dynamic address of the router apparatus,

(b) such a second problem with the UPnP-NAT traversal method that a connection cannot be started from the equipment connected to the Internet to the equipment connected to the LAN and having only the private IP address at arbitrary time with maintaining the safety, and that the router apparatus that includes the UPnP-IGD function is necessary so as to start the connection,

(c) such a third problem with the method disclosed in the Patent Document 1 that if two equipments connected to different LANs, respectively, are to communicate with each other, then it is always necessary to hold the communication via the server apparatus connected to the Internet and thus remarkably heavy load is imposed on the server apparatus, and

(d) such a fourth problem with the peer-to-peer communication that heavier management load related to the mutual authentication between the equipment causes the reduction in user-friendliness, the cost increase, the reduction in security and the like.

It is an object of the present invention to provide a communication system that can solve these problems and that enables a peer-to-peer communication to be held between a communication equipment connected to a network via a LAN and a different communication equipment connected to the network via a different LAN, a server apparatus and a communication equipment that constitute the communication system, and a communication method. It is another object of the present invention to provide a program that includes steps for the communication method and a recording medium that stores the program.

MEANS FOR SOLVING THE PROBLEMS

According to a first aspect of the present invention, there is provided a server apparatus provided in a communication system, for mediating establishment of a connection between a request issuance side communication equipment and a request acceptance side communication equipment. The communication system includes the request issuance side communication equipment connected to a network via a first router apparatus; the request acceptance side communication equipment connected to the network via a second router apparatus; and a server apparatus connected to the network.

The server apparatus establishes a first communication path for connecting the server apparatus to the request issuance side communication equipment via the first router apparatus between the server apparatus and the request issuance side communication equipment prior to issuance of a request.

The server apparatus maintains, in advance, a second communication path for connecting the server apparatus to the request acceptance side communication equipment via the second router apparatus between the server apparatus and the request acceptance side communication equipment.

The server apparatus receives waiting and reception capability information on the request issuance side communication equipment from the request issuance side communication equipment, the waiting and reception capability information on the request issuance side communication equipment indicating whether or not the request issuance side communication equipment has a waiting and reception capability to wait for and receive a signal transmitted from the request acceptance side communication equipment via the network, and stores the waiting and reception capability information in equipment information storage means.

The server apparatus receives waiting and reception capability information on the request acceptance side communication equipment from the request acceptance side communication equipment, the waiting and reception capability information on the request acceptance side communication equipment indicating whether or not the request acceptance side communication equipment has a waiting and reception capability to wait for and receive a signal transmitted from the request issuance side communication equipment via the network, and stores the waiting and reception capability information in the equipment information storage means.

In the case that the server apparatus receives a signal for requesting the establishment of the connection between the request issuance side communication equipment and the request acceptance side communication equipment from the request issuance side communication equipment, when the server apparatus judges that at least one of the request issuance side communication equipment and the request acceptance side communication equipment has the waiting and reception capability based on the waiting and reception capability information stored in the equipment information storage means, then the server apparatus selects the one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, notifies the request issuance side communication equipment and the request acceptance side communication equipment, as which the respective communication equipments are selected by using the first and second communication paths, respectively, among the waiting and receiving side communication equipment and the connection side communication equipment.

The server apparatus receives waiting and receiving address information made to be associated with the selected waiting and receiving side communication equipment from the waiting and receiving side communication equipment.

The server apparatus transfers the received waiting and receiving address information to the connection side communication equipment via one of the first communication path and the second communication path for connecting the server apparatus to the selected connection side communication equipment.

According to a second aspect of the present invention, there is provided a request issuance side communication equipment provided in a communication system, for establishing a connection with the request acceptance side communication equipment through a mediation of a server apparatus, and for holding a communication with the request acceptance side communication equipment by using the connection established through the mediation of the server apparatus. The communication system includes the request issuance side communication equipment connected to a network via a first router apparatus; the request acceptance side communication equipment connected to the network via a second router apparatus; and the server apparatus connected to the network.

The request issuance side communication equipment establishes a first communication path between the request issuance side communication equipment and the server apparatus prior to issuance of a request.

The request issuance side communication equipment judges whether or not the request issuance side communication equipment has a waiting and reception capability to wait for and receive a signal transmitted from the request acceptance side communication equipment via the network, and transmits waiting and reception capability information as judgment results to the server apparatus.

The request issuance side communication equipment transmits a signal for requesting the establishment of the connection between the request issuance side communication equipment and the request acceptance side communication equipment to the server apparatus.

The request issuance side communication equipment receives from the server apparatus via the first communication path as which the request issuance side communication equipment is selected, a waiting and receiving side communication equipment that receives a connection start signal for establishing a direct connection between the request issuance side communication equipment and the request acceptance side communication equipment or a connection side communication equipment that transmits the connection start signal.

(a) When the request issuance side communication equipment is selected as the waiting and receiving side communication equipment, then the request issuance side communication equipment sets the first router apparatus so that the first router apparatus receives a signal being transmitted from the request acceptance side communication equipment and having a destination of waiting and receiving address information made to be associated with the request issuance side communication equipment, and so that the first router apparatus transfers the received signal to the request issuance side communication equipment, and transmits the waiting and receiving address information made to be associated with the request issuance side communication equipment to the server apparatus.

The request issuance side communication equipment receives the connection start signal having the destination of the waiting and receiving address information made to be associated with the request issuance side communication equipment from the request acceptance side communication equipment not via the server apparatus but via the network, so as to establish the direct connection between the request issuance side communication equipment and the request acceptance side communication equipment.

(b) When the request issuance side communication equipment is selected as the connection side communication equipment,

then the request issuance side communication equipment receives the waiting and receiving address information made to be associated with the request acceptance side communication equipment from the server apparatus via the first communication path.

The request issuance side communication equipment transmits the connection start signal having the destination of the waiting and receiving address information made to be associated with the request acceptance side communication equipment to the request acceptance side communication equipment not via the server apparatus but via the network, so as to establish the direct connection between the request issuance side communication equipment and the request acceptance side communication equipment.

According to a third aspect of the present invention, there is provided a request acceptance side communication equipment provided in a communication system, for establishing a connection with the request issuance side communication equipment through a mediation of a server apparatus, and for holding a communication with the request issuance side communication equipment by using the connection established through the mediation of the server apparatus. The communication system includes the request issuance side communication equipment connected to a network via a first router apparatus; the request acceptance side communication equipment connected to the network via a second router apparatus; and the server apparatus connected to the network.

The request acceptance side communication equipment maintains, in advance, a second communication path between the request acceptance side communication equipment and the server apparatus for connecting the server apparatus to the request acceptance side communication equipment via the second router apparatus

The request acceptance side communication equipment judges whether or not the request acceptance side communication equipment has a waiting and reception capability to wait for and receive a signal transmitted from the request issuance side communication equipment via the network, and transmits waiting and reception capability information as judgment results to the server apparatus.

The request acceptance side communication equipment receives from the server apparatus via the second communication path as which the request acceptance side communication equipment is selected, a waiting and receiving side communication equipment that receives a connection start signal for establishing a direct connection between the request issuance side communication equipment and the request acceptance side communication equipment or a connection side communication equipment that transmits the connection start signal.

(a) When the request acceptance side communication equipment is selected as the waiting and receiving side communication equipment,

then the request acceptance side communication equipment sets the second router apparatus so that the second router apparatus receives a signal being transmitted from the request issuance side communication equipment and having a destination of waiting and receiving address information made to be associated with the request acceptance side communication equipment, and so that the second router apparatus transfers the received signal to the request acceptance side communication equipment, and transmits the waiting and receiving address information made to be associated with the request acceptance side communication equipment to the server apparatus.

The request acceptance side communication equipment receives the connection start signal having the destination of the waiting and receiving address information made to be associated with the request acceptance side communication equipment from the request issuance side communication equipment not via the server apparatus but via the network, so as to establish the direct connection between the request issuance side communication equipment and the request acceptance side communication equipment.

(b) When the request acceptance side communication equipment is selected as the connection side communication equipment,

then the request acceptance side communication equipment receives the waiting and receiving address information made to be associated with the request issuance side communication equipment from the server apparatus via the second communication path.

The request acceptance side communication equipment transmits the connection start signal having the destination of the waiting and receiving address information made to be associated with the request issuance side communication equipment to the request issuance side communication equipment not via the server apparatus but via the network, so as to establish the direct connection between the request issuance side communication equipment and the request acceptance side communication equipment.

According to a fourth aspect of the present invention, there is provided a communication system including a request issuance side communication equipment connected to a network via a first router apparatus; a request acceptance side communication equipment connected to the network via a second router apparatus; and a server apparatus connected to the network. The communication system mediates establishment of a connection between the request issuance side communication equipment and the request acceptance side communication equipment by using the server apparatus, and holds a communication by using the connection established through a mediation of the server apparatus.

The server apparatus and the request issuance side communication equipment establish a first communication path for connecting the server apparatus to the request issuance side communication equipment via the first router apparatus between the server apparatus and the request issuance side communication equipment prior to issuance of a request.

The server apparatus and the request acceptance side communication equipment maintain, in advance, a second communication path for connecting the server apparatus to the request acceptance side communication equipment via the second router apparatus between the server apparatus and the request acceptance side communication equipment.

The request issuance side communication equipment judges whether or not the request issuance side communication equipment has a waiting and reception capability to wait for and receive a signal transmitted from the request acceptance side communication equipment via the network, and transmits waiting and reception capability information on the request issuance side communication equipment as judgment results to the server apparatus.

The request acceptance side communication equipment judges whether or not the request acceptance side communication equipment has the waiting and reception capability to wait for and receive a signal transmitted from the request issuance side communication equipment via the network, and transmits waiting and reception capability information on the request acceptance side communication equipment as judgment results to the server apparatus.

The server apparatus receives the waiting and reception capability information on the request issuance side communication equipment and the waiting and reception capability information on the request acceptance side communication equipment, and stores the waiting and reception capability information in equipment information storage means.

In the case that the server apparatus judges that at least one of the request issuance side communication equipment and the request acceptance side communication equipment has the waiting and reception capability based on the waiting and reception capability information stored in the equipment information storage means, when the server apparatus receives a signal for requesting the establishment of the connection between the request issuance side communication equipment and the request acceptance side communication equipment from the request issuance side communication equipment, then the server apparatus selects the one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, notifies the request issuance side communication equipment and the request acceptance side communication equipment, as which the respective communication equipments are selected by using the first and second communication paths, respectively, among the waiting and receiving side communication equipment and the connection side communication equipment.

The selected waiting and receiving side communication equipment sets the router apparatus that connects the waiting and receiving side communication equipment to the network so that the router apparatus receives a signal being transmitted from the selected connection side communication equipment and having a destination of waiting and receiving address information made to be associated with the waiting and receiving side communication equipment, and so that the router apparatus transfers the received signal to the waiting and receiving side communication equipment, and transmits the waiting and receiving address information to the server apparatus.

The server apparatus transfers the waiting and receiving address information to the connection side communication equipment via one of the first communication path and the second communication path for connecting the server apparatus to the selected connection side communication equipment

The connection side communication equipment transmits the connection start signal having the destination of the waiting and receiving address information to the waiting and receiving side communication equipment not via the server apparatus but via the network, so as to establish the direct connection between the request issuance side communication equipment and the request acceptance side communication equipment.

According to a fifth aspect of the present invention, there is provided a server apparatus provided in a communication system, for mediating establishment of a connection between a request issuance side communication equipment and a request acceptance side communication equipment. The communication system includes the request issuance side communication equipment connected to a network via a first router apparatus; the request acceptance side communication equipment connected to the network via a second router apparatus; and the server apparatus connected to the network.

The server apparatus establishes a first communication path for connecting the server apparatus to the request issuance side communication equipment via the first router apparatus between the server apparatus and the request issuance side communication equipment prior to issuance of a request.

The server apparatus maintains, in advance, a second communication path for connecting the server apparatus to the request acceptance side communication equipment via the second router apparatus between the server apparatus and the request acceptance side communication equipment.

The server apparatus receives a connection request signal including waiting and reception capability information on the request issuance side communication equipment from the request issuance side communication equipment, the waiting and reception capability information on the request issuance side communication equipment indicating whether or not the request issuance side communication equipment has a waiting and reception capability to wait for and receive a signal transmitted from the request acceptance side communication equipment via the network.

The server apparatus transfers the received connection request signal to the request acceptance side communication equipment via the second communication path.

The server apparatus receives a first connection response signal from the request acceptance side communication equipment, the first connection response signal notifying the request issuance side communication equipment, as which the request issuance side communication equipment is selected, among a waiting and receiving side communication equipment that receives a connection start signal for establishing a direct connection between the request issuance side communication equipment and the request acceptance side communication equipment or a connection side communication equipment that transmits the connection start signal.

The server apparatus transfers the received first connection response signal to the request issuance side communication equipment via the first communication path.

The server apparatus receives waiting and receiving address information made to be associated with the selected waiting and receiving side communication equipment from the waiting and receiving side communication equipment.

The server apparatus transfers the received waiting and receiving address information to the connection side communication equipment via one of the first communication path and the second communication path for connecting the server apparatus to the selected connection side communication equipment.

According to a sixth aspect of the present invention, there is provided a request issuance side communication equipment provided in a communication system, for establishing a connection with the request acceptance side communication equipment through a mediation of a server apparatus, and for holding a communication with the request acceptance side communication equipment by using the connection established through the mediation of the server apparatus. The communication system includes the request issuance side communication equipment connected to a network via a first router apparatus; the request acceptance side communication equipment connected to the network via a second router apparatus; and the server apparatus connected to the network.

The request issuance side communication equipment establishes a first communication path between the request issuance side communication equipment and the server apparatus prior to issuance of a request.

When the request issuance side communication equipment desires to establish the connection with the request acceptance side communication equipment, then the request issuance side communication equipment judges whether or not the request issuance side communication equipment has a waiting and reception capability to wait for and receive a signal transmitted from the request acceptance side communication equipment via the network, and transmits a connection request signal including waiting and reception capability information as judgment results to the server apparatus.

The request issuance side communication equipment receives a first connection response signal from the server apparatus via the first communication path, the first connection response signal notifying the request issuance side communication equipment, as which the request issuance side communication equipment is selected, among a waiting and receiving side communication equipment that receives a connection start signal for establishing a direct connection between the request issuance side communication equipment and the request acceptance side communication equipment or a connection side communication equipment that transmits the connection start signal.

(a) When the request issuance side communication equipment is selected as the waiting and receiving side communication equipment,
then the request issuance side communication equipment sets the first router apparatus so that the first router apparatus receives a signal being transmitted from the request acceptance side communication equipment and having a destination of waiting and receiving address information made to be associated with the request issuance side communication equipment, and so that the first router apparatus transfers the received signal to the request issuance side communication equipment, transmits the waiting and receiving address information made to be associated with the request issuance side communication equipment to the server apparatus..
The request issuance side communication equipment receives the connection start signal having the destination of the waiting and receiving address information made to be associated with the request issuance side communication equipment from the request acceptance side communication equipment not via the server apparatus but via the network, so as to establish the direct connection between the request issuance side communication equipment and the request acceptance side communication equipment.
(b) When the request issuance side communication equipment is selected as the connection side communication equipment,
then the request issuance side communication equipment receives the waiting and receiving address information made to be associated with the request acceptance side communication equipment from the server apparatus via the first communication path.
The request issuance side communication equipment transmits the connection start signal having the destination of the waiting and receiving address information made to be associated with the request acceptance side communication equipment to the request acceptance side communication equipment not via the server apparatus but via the network, so as to establish the direct connection between the request issuance side communication equipment and the request acceptance side communication equipment.

According to a seventh aspect of the present invention, there is provided a request acceptance side communication equipment provided in a communication system, for establishing a connection with the request issuance side communication equipment through a mediation of a server apparatus, and for holding a communication with the request issuance side communication equipment by using the connection established through the mediation of the server apparatus. The communication system includes the request issuance side communication equipment connected to a network via a first router apparatus; the request acceptance side communication equipment connected to the network via a second router apparatus; and the server apparatus connected to the network.
The request acceptance side communication equipment maintains, in advance, a second communication path between the request acceptance side communication equipment and the server apparatus for connecting the server apparatus to the request acceptance side communication equipment via the second router apparatus.
The request acceptance side communication equipment receives a connection request signal including waiting and reception capability information on the request issuance side communication equipment from the server apparatus via the second communication path, the waiting and reception capability information on the request issuance side communication equipment indicating whether or not the request issuance side communication equipment has a waiting and reception capability to wait for and receive a signal transmitted from the request acceptance side communication equipment via the network.
When the request acceptance side communication equipment receives the connection request signal, then the request acceptance side communication equipment judges whether or not the request acceptance side communication equipment has a waiting and reception capability to wait for and receive a signal transmitted from the request issuance side communication equipment via the network, and generates waiting and reception capability information on the request acceptance side communication equipment as judgment results.
When the request acceptance side communication equipment judges that at least one of the request issuance side communication equipment and the request acceptance side communication equipment has the waiting and reception capability based on the waiting and reception capability information on the request issuance side communication equipment and on the waiting and reception capability information on the request acceptance side communication equipment, then the request acceptance side communication equipment selects the at least one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, and transmits a first connection response signal to the server apparatus, the first connection response signal notifying the request issuance side communication equipment, as which the request issuance side communication equipment is selected, among the waiting and receiving side communication equipment and the connection side communication equipment.

(a) When the request acceptance side communication equipment is selected as the waiting and receiving side communication equipment,
then the request acceptance side communication equipment sets the second router apparatus so that the second router apparatus receives a signal being transmitted from the request issuance side communication equipment and having a destination of waiting and receiving address information made to be associated with the request acceptance side communication equipment, and so that the second router apparatus transfers the received signal to the request acceptance side communication equipment, transmits the waiting and receiving address information made to be associated with the request acceptance side communication equipment to the server apparatus.
The request acceptance side communication equipment receives the connection start signal having the destination of the waiting and receiving address information made to be associated with the request acceptance side communication equipment from the request issuance side communication equipment not via the server apparatus but via the network, so as to establish a direct connection between the request issuance side communication equipment and the request acceptance side communication equipment.
(b) When the request acceptance side communication equipment is selected as the connection side communication equipment,
then the request acceptance side communication equipment receives the waiting and receiving address information made to be associated with the request issuance side communication equipment from the server apparatus via the second communication path.
The request acceptance side communication equipment transmits the connection start signal having the destination of the waiting and receiving address information made to be associated with the request issuance side communication equipment to the request issuance side communication equipment not via the server apparatus but via the network, so as to establish the direct connection between the request issuance side communication equipment and the request acceptance side communication equipment.

According to an eighth aspect of the present invention, there is provided a communication system including a request issuance side communication equipment connected to a network via a first router apparatus; a request acceptance side communication equipment connected to the network via a second router apparatus; and a server apparatus connected to the network. The communication system mediates establishment of a connection between the request issuance side communication equipment and the request acceptance side communication equipment by using the server apparatus, and holds a communication by using the connection established through a mediation of the server apparatus.
The server apparatus and the request issuance side communication equipment establish a first communication path for connecting the server apparatus to the request issuance side communication equipment via the first router apparatus between the server apparatus and the request issuance side communication equipment prior to issuance of a request.
The server apparatus and the request acceptance side communication equipment maintain, in advance, a second communication path for connecting the server apparatus to the request acceptance side communication equipment via the second router apparatus between the server apparatus and the request acceptance side communication equipment.
When the request issuance side communication equipment desires to establish the connection with the request acceptance side communication equipment, then the request issuance side communication equipment judges whether or not the request issuance side communication equipment has a waiting and reception capability to wait for and receive a signal transmitted from the request acceptance side communication equipment via the network, and transmits a connection request signal including waiting and reception capability information on the request issuance side communication equipment as judgment results to the server apparatus.
The server apparatus transfers the connection request signal to the request acceptance side communication equipment via the second communication path.
When the request acceptance side communication equipment receives the transferred connection request signal, then the request acceptance side communication equipment judges whether or not the request acceptance side communication equipment has the waiting and reception capability to wait for and receive a signal transmitted from the request issuance side communication equipment via the network, and generates waiting and reception capability information on the request acceptance side communication equipment as judgment results.
When the request acceptance side communication equipment judges that at least one of the request issuance side communication equipment and the request acceptance side communication equipment has the waiting and reception capability based on the waiting and reception capability information on the request issuance side communication equipment and on the waiting and reception capability information on the request acceptance side communication equipment, then the request acceptance side communication equipment selects the at least one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, and transmits a first connection response signal to the server apparatus, the first connection response signal notifying the request issuance side communication equipment, as which the request issuance side communication equipment is selected, among the waiting and receiving side communication equipment and the connection side communication equipment.

The server apparatus transfers the first connection response signal to the request issuance side communication equipment via the first communication path.

The selected waiting and receiving side communication equipment sets the router apparatus that connects the waiting and receiving side communication equipment to the network so that the router apparatus receives a signal being transmitted from the selected connection side communication equipment and having a destination of waiting and receiving address information made to be associated with the waiting and receiving side communication equipment, and so that the router apparatus transfers the received signal to the waiting and receiving side communication equipment, and transmits the waiting and receiving address information to the server apparatus.

The server apparatus transfers the waiting and receiving address information to the connection side communication equipment via one of the first communication path and the second communication path for connecting the server apparatus to the selected connection side communication equipment.

The connection side communication equipment transmits the connection start signal having the destination of the waiting and receiving address information to the waiting and receiving side communication equipment not via the server apparatus but via the network, so as to establish a direct connection between the request issuance side communication equipment and the request acceptance side communication equipment.

According to a ninth aspect of the present invention, there is provided a server apparatus provided in a communication system, for mediating establishment of a connection between a request issuance side communication equipment and a request acceptance side communication equipment. The communication system including the request issuance side communication equipment connected to a network via a first router apparatus; the request acceptance side communication equipment connected to the network via a second router apparatus; and the server apparatus connected to the network.

The server apparatus establishes a first communication path for connecting the server apparatus to the request issuance side communication equipment via the first router apparatus between the server apparatus and the request issuance side communication equipment prior to issuance of a request.

The server apparatus maintains, in advance, a second communication path for connecting the server apparatus to the request acceptance side communication equipment via the second router apparatus between the server apparatus and the request acceptance side communication equipment.

The server apparatus receives a waiting and reception capability notification request signal for requesting waiting and reception capability information on the request acceptance side communication equipment from the request issuance side communication equipment, the waiting and reception capability information on the request acceptance side communication equipment indicating whether or not the request acceptance side communication equipment has a waiting and reception capability to wait for and receive a signal transmitted from the request issuance side communication equipment via the network.

The server apparatus transfers the received waiting and reception capability notification request signal to the request acceptance side communication equipment via the second communication path.

The server apparatus receives a waiting and reception capability notification response signal including the waiting and reception capability information on the request acceptance side communication equipment from the request acceptance side communication equipment.

The server apparatus transfers the received waiting and reception capability notification response signal to the request issuance side communication equipment via the first communication path.

The server apparatus receives a first connection request signal from the request issuance side communication equipment, the first connection request signal notifying the request acceptance side communication equipment, as which the request acceptance side communication equipment is selected, among a waiting and receiving side communication equipment that receives a connection start signal for establishing a direct connection between the request issuance side communication equipment, and the request acceptance side communication equipment or a connection side communication equipment that transmits the connection start signal.

The server apparatus transfers the received first connection response signal to the request acceptance side communication equipment via the second communication path.

The server apparatus receives waiting and receiving address information made to be associated with the waiting and receiving side communication equipment from the waiting and receiving side communication equipment.

The server apparatus transfers the received waiting and receiving address information to the connection side communication equipment via one of the first communication path and the second communication path for connecting the server apparatus to the selected connection side communication equipment.

According to a tenth aspect of the present invention, there is provided a request issuance side communication equipment provided in a communication system, for establishing a connection with the request acceptance side communication equipment through a mediation of a server apparatus, and for holding a communication with the request acceptance side communication equipment by using the connection established through the mediation of the server apparatus. The communication system includes the request issuance side communication equipment connected to a network via a first router apparatus; the request acceptance side communication equipment connected to the network via a second router apparatus; and the server apparatus connected to the network.

The request issuance side communication equipment establishes a first communication path between the request issuance side communication equipment and the server apparatus prior to issuance of a request.

When the request issuance side communication equipment desires to establish the connection with the request acceptance side communication equipment, then the request issuance side communication equipment judges whether or not the request issuance side communication equipment has a waiting and reception capability to wait for and receive a signal transmitted from the request acceptance side communication equipment via the network, and generates waiting and reception capability information as judgment results.

The request issuance side communication equipment transmits a waiting and reception capability notification request signal for requesting waiting and reception capability information on the request acceptance side communication equipment to the server apparatus, the waiting and reception capability information on the request acceptance side communication equipment indicating whether or not the request acceptance side communication equipment has a waiting and reception capability to wait for and receive a signal transmitted from the request issuance side communication equipment via the network.

The request issuance side communication equipment receives the waiting and reception capability notification response signal including the waiting and reception capability information on the request acceptance side communication equipment from the server apparatus via the first communication path.

When the request issuance side communication equipment judges that at least one of the request issuance side communication equipment and the request acceptance side communication equipment has the waiting and reception capability based on the waiting and reception capability information on the request issuance side communication equipment and on the waiting and reception capability information on the request acceptance side communication equipment, then the request issuance side communication equipment selects the at least one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, and transmits a first connection request signal to the server apparatus, the first connection request signal notifying the server apparatus, as which the request acceptance side communication equipment is selected, among the waiting and receiving side communication equipment and the connection side communication equipment.

(a) When the request issuance side communication equipment is selected as the waiting and receiving side communication equipment,

then the request issuance side communication equipment sets the first router apparatus so that the first router apparatus receives a signal being transmitted from the request acceptance side communication equipment and having a destination of waiting and receiving address information made to be associated with the request issuance side communication equipment, and so that the first router apparatus transfers the received signal to the request issuance side communication equipment, transmits the waiting and receiving address information made to be associated with the request issuance side communication equipment to the server apparatus.

The request issuance side communication equipment receives the connection start signal having the destination of the waiting and receiving address information made to be associated with the request issuance side communication equipment from the request acceptance side communication equipment not via the server apparatus but via the network, so as to establish the direct connection between the request issuance side communication equipment and the request acceptance side communication equipment.

(b) When the request issuance side communication equipment is selected as the connection side communication equipment,

then the request issuance side communication equipment receives the waiting and receiving address information made to be associated with the request acceptance side communication equipment from the server apparatus via the first communication path.

The request issuance side communication equipment transmits the connection start signal having the destination of the waiting and receiving address information made to be associated with the request acceptance side communication equipment to the request acceptance side communication equipment not via the server apparatus but via the network, so as to establish the direct connection between the request issuance side communication equipment and the request acceptance side communication equipment.

According to an eleventh aspect of the present invention, there is provided a request acceptance side communication equipment provided in a communication system, for establishing a connection with the request issuance side communication equipment through a mediation of a server apparatus, and for holding a communication with the request issuance side communication equipment by using the connection established through the mediation of the server apparatus. The communication system includes the request issuance side communication equipment connected to a network via a first router apparatus; the request acceptance side communication equipment connected to the network via a second router apparatus; and the server apparatus connected to the network.

The request acceptance side communication equipment maintains, in advance, a second communication path between the request acceptance side communication equipment and the server apparatus for connecting the server apparatus to the request acceptance side communication equipment via the second router apparatus.

The request acceptance side communication equipment receives a waiting and reception capability notification request signal for requesting waiting and reception capability information on the request acceptance side communication equipment from the server apparatus via the second communication path, the waiting and reception capability information on the request acceptance side communication equipment indicating whether or not the request acceptance side communication equipment has a waiting and reception capability to wait for and receive a signal transmitted from the request issuance side communication equipment via the network.

When the request acceptance side communication equipment receives the waiting and reception capability notification request signal, then the request acceptance side communication equipment judges whether or not the request acceptance side communication equipment has the waiting and reception capability, and transmits a waiting and reception capability notification response signal including the waiting and reception capability information as judgment results to the server apparatus.

The request acceptance side communication equipment receives which the request acceptance side communication equipment is selected as, a waiting and receiving side communication equipment that receives a connection start signal for establishing a direct connection between the request issuance side communication equipment and the request acceptance side communication equipment or a connection side communication equipment that transmits the connection start signal, from the server apparatus via the second communication path.

(a) When the request acceptance side communication equipment is selected as the waiting and receiving side communication equipment,

then the request acceptance side communication equipment sets the second router apparatus so that the second router apparatus receives a signal being transmitted from the request issuance side communication equipment and having a destination of waiting and receiving address information made to be associated with the request acceptance side communication equipment, and so that the second router apparatus transfers the received signal to the request acceptance side communication equipment, transmits the waiting and receiving address information made to be associated with the request acceptance side communication equipment to the server apparatus.

The request acceptance side communication equipment receives the connection start signal having the destination of the waiting and receiving address information made to be associated with the request acceptance side communication equipment from the request issuance side communication equipment not via the server apparatus but via the network, so as to establish a direct connection between the request issuance side communication equipment and the request acceptance side communication equipment.

(b) When the request acceptance side communication equipment is selected as the connection side communication equipment,

then the request acceptance side communication equipment receives the waiting and receiving address information made to be associated with the request issuance side communication equipment from the server apparatus via the second communication path.

The request acceptance side communication equipment transmits the connection start signal having the destination of the waiting and receiving address information made to be associated with the request issuance side communication equipment to the request issuance side communication equipment not via the server apparatus but via the network, so as to establish the direct connection between the request issuance side communication equipment and the request acceptance side communication equipment.

According to a twelfth aspect of the present invention, there is provided a communication system including a request issuance side communication equipment connected to a network via a first router apparatus; a request acceptance side communication equipment connected to the network via a second router apparatus; and a server apparatus connected to the network. The communication system mediates establishment of a connection between the request issuance side communication equipment and the request acceptance side communication equipment by using the server apparatus, and holds a communication by using the connection established through a mediation of the server apparatus.

The server apparatus and the request issuance side communication equipment establish a first communication path for connecting the server apparatus to the request issuance side communication equipment via the first router apparatus between the server apparatus and the request issuance side communication equipment prior to issuance of a request. The server apparatus and the request acceptance side communication equipment maintain, in advance, a second communication path for connecting the server apparatus to the request acceptance side communication equipment via the second router apparatus between the server apparatus and the request acceptance side communication equipment.

When the request issuance side communication equipment desires to establish the connection with the request acceptance side communication equipment, then the request issuance side communication equipment judges whether or not the request issuance side communication equipment has a waiting and reception capability to wait for and receive a signal transmitted from the request acceptance side communication equipment via the network, and generates waiting and reception capability information on the request issuance side communication equipment as judgment results.

The request issuance side communication equipment transmits a waiting and reception capability notification request signal for requesting waiting and reception capability information on the request acceptance side communication equipment to the server apparatus, the waiting and reception capability information on the request acceptance side communication equipment indicating whether or not the request acceptance side communication equipment has a waiting and reception capability to wait for and receive a signal transmitted from the request issuance side communication equipment via the network.

The server apparatus transfers the waiting and reception capability notification request signal to the request acceptance side communication equipment via the second communication path.

When the request acceptance side communication equipment receives the waiting and reception capability notification request signal, then the request acceptance side communication equipment judges whether or not the request acceptance side communication equipment has the waiting and reception capability, and transmits a waiting and reception capability notification response signal including the waiting and reception capability information on the request acceptance side communication equipment as judgment results to the server apparatus.

The server apparatus transfers the waiting and reception capability notification response signal to the request issuance side communication equipment via the first communication path.

When the request issuance side communication equipment judges that at least one of the request issuance side communication equipment and the request acceptance side communication equipment has the waiting and reception capability based on the waiting and reception capability information on the request issuance side communication equipment and on the waiting and reception capability information on the request acceptance side communication equipment, then the request issuance side communication equipment selects the at least one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, and transmits a first connection request signal to the server apparatus, the first connection request signal notifying the server apparatus, as which the request acceptance side communication equipment is selected, among the waiting and receiving side communication equipment or the connection side communication equipment.

The server apparatus transfers the first connection request signal to the request acceptance side communication equipment via the second communication equipment.

The selected waiting and receiving side communication equipment sets the router apparatus that connects the waiting and receiving side communication equipment to the network so that the router apparatus receives a signal being transmitted from the selected connection side communication equipment and having a destination of waiting and receiving address information made to be associated with the waiting and receiving side communication equipment, and so that the router apparatus transfers the received signal to the waiting and receiving side communication equipment, and transmits the waiting and receiving address information to the server apparatus.

The server apparatus transfers the waiting and receiving address information to the connection side communication equipment via one of the first communication path and the second communication path for connecting the server apparatus to the selected connection side communication equipment.

The connection side communication equipment transmits the connection start signal having the destination of the waiting and receiving address information to the waiting and receiving side communication equipment not via the server apparatus but via the network, so as to establish a direct connection between the request issuance side communication equipment and the request acceptance side communication equipment.

According to a thirteenth aspect of the present invention, there is provided a server apparatus provided in a communication system, for mediating establishment of a connection between a request issuance side communication equipment and a request acceptance side communication equipment. The communication system includes the request issuance side communication equipment connected to a network via a first router apparatus; the request acceptance side communication equipment connected to the network via a second router apparatus; and the server apparatus connected to the network.

The server apparatus establishes a first communication path for connecting the server apparatus to the request issuance side communication equipment via the first router apparatus between the server apparatus and the request issuance side communication equipment prior to issuance of a request.

The server apparatus maintains, in advance, a second communication path for connecting the server apparatus to the request acceptance side communication equipment via the second router apparatus between the server apparatus and the request acceptance side communication equipment.

The server apparatus receives a connection request signal including waiting and reception capability information on the request issuance side communication equipment from the request issuance side communication equipment, the waiting and reception capability information on the request issuance side communication equipment indicating whether or not the request issuance side communication equipment has a waiting and reception capability to wait for and receive a signal transmitted from the request acceptance side communication equipment via the network.

When the server apparatus receives the connection request signal, the server apparatus transmits a waiting and reception capability notification request signal for requesting waiting and reception capability information on the request acceptance side communication equipment to the request acceptance side communication equipment via the second communication path, the waiting and reception capability information on the request acceptance side communication equipment indicating whether or not the request acceptance side communication equipment has a waiting and reception capability to wait for and receive a signal transmitted from the request issuance side communication equipment via the network.

The server apparatus receives the waiting and reception capability information on the request acceptance side communication equipment from the request acceptance side communication equipment.

When the server apparatus judges that at least one of the request issuance side communication equipment and the request acceptance side communication equipment has the waiting and reception capability based on the waiting and reception capability information on the request issuance side communication equipment and on the waiting and reception capability information on the request acceptance side communication equipment, then the server apparatus selects the one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, and notifies the request issuance side communication equipment and the request acceptance side communication equipment, as which the respective communication equipments are selected by using the first and second communication paths, respectively, among the waiting and receiving side communication equipment and the connection side communication equipment.

The server apparatus receives waiting and receiving address information made to be associated with the waiting and receiving side communication equipment from the waiting and receiving side communication equipment.

The server apparatus transfers the received waiting and receiving address information to the connection side communication equipment via one of the first communication path and the second communication path for connecting the server apparatus to the selected connection side communication equipment.

According to a fourteenth aspect of the present invention, there is provided a request issuance side communication equipment provided in a communication system, for establishing a connection with the request acceptance side communication equipment through a mediation of a server apparatus, and for holding a communication with the request acceptance side communication equipment by using the connection established through the mediation of the server apparatus. The communication system including the request issuance side communication equipment connected to a network via a first router apparatus; the request acceptance side communication equipment connected to the network via a second router apparatus; and the server apparatus connected to the network.

The request issuance side communication equipment establishes a first communication path between the request issuance side communication equipment and the server apparatus prior to issuance of a request.

When the request issuance side communication equipment desires to establish the connection with the request acceptance side communication equipment, then the request issuance side communication equipment judges whether or not the request issuance side communication equipment has a waiting and reception capability to wait for and receive a signal transmitted from the request acceptance side communication equipment via the network, and transmits a connection request signal including waiting and reception capability information as judgment results to the server apparatus.

The request issuance side communication equipment receives, from the server apparatus via the first communication path, which the request issuance side communication equipment is selected as, a waiting and receiving side communication equipment that receives a connection start signal for establishing a direct connection between the request issuance side communication equipment and the request acceptance side communication equipment or a connection side communication equipment that transmits the connection start signal.

(a) When the request issuance side communication equipment is selected as the waiting and receiving side communication equipment,
then the request issuance side communication equipment sets the first router apparatus so that the first router apparatus receives a signal being transmitted from the request acceptance side communication equipment and having a destination of waiting and receiving address information made to be associated with the request issuance side communication equipment, and so that the first router apparatus transfers the received signal to the request issuance side communication equipment made to be associated with the request issuance side communication equipment, transmits the waiting and receiving address information to the server apparatus.
The request issuance side communication equipment receives the connection start signal having the destination of the waiting and receiving address information made to be associated with the request issuance side communication equipment from the request acceptance side communication equipment not via the server apparatus but via the network, so as to establish the direct connection between the request issuance side communication equipment and the request acceptance side communication equipment.
(b) When the request issuance side communication equipment is selected as the connection side communication equipment,
then the request issuance side communication equipment receives the waiting and receiving address information made to be associated with the request acceptance side communication equipment from the server apparatus via the first communication path.
The request issuance side communication equipment transmits the connection start signal having the destination of the waiting and receiving address information made to be associated with the request acceptance side communication equipment to the request acceptance side communication equipment not via the server apparatus but via the network, so as to establish the direct connection between the request issuance side communication equipment and the request acceptance side communication equipment.

According to a fifteenth aspect of the present invention, there is provided a request acceptance side communication equipment provided in a communication system, for establishing a connection with the request issuance side communication equipment through a mediation of a server apparatus, and for holding a communication with the request issuance side communication equipment by using the connection established through the mediation of the server apparatus. The communication system includes the request issuance side communication equipment connected to a network via a first router apparatus; the request acceptance side communication equipment connected to the network via a second router apparatus; and the server apparatus connected to the network.
The request acceptance side communication equipment maintains, in advance, a second communication path between the request acceptance side communication equipment and the server apparatus for connecting the server apparatus to the request acceptance side communication equipment via the second router apparatus.
The request acceptance side communication equipment receives a waiting and reception capability notification request signal for requesting waiting and reception capability information on the request acceptance side communication equipment from the server apparatus via the second communication path, the waiting and reception capability information on the request acceptance side communication equipment indicating whether or not the request acceptance side communication equipment has a waiting and reception capability to wait for and receive a signal transmitted from the request issuance side communication equipment via the network.
When the request acceptance side communication equipment receives the waiting and reception capability notification request signal, then the request acceptance side communication equipment judges whether or not the request acceptance side communication equipment has the waiting and reception capability, and transmits the waiting and reception capability information on the request acceptance side communication equipment as judgment results to the server apparatus.
The request acceptance side communication equipment receives information from the server apparatus via the second communication path, the information indicating as which the request acceptance side communication equipment is selected, a waiting and receiving side communication equipment that receives a connection start signal for establishing a direct connection between the request issuance side communication equipment and the request acceptance side communication equipment or a connection side communication equipment that transmits the connection start signal.

(a) When the request acceptance side communication equipment is selected as the waiting and receiving side communication equipment,
then the request acceptance side communication equipment sets the second router apparatus so that the second router apparatus receives a signal being transmitted from the request issuance side communication equipment and having a destination of waiting and receiving address information made to be associated with the request acceptance side communication equipment, and so that the second router apparatus transfers the received signal to the request acceptance side communication equipment, transmits the waiting and receiving address information made to be associated with the request acceptance side communication equipment to the server apparatus.

The request acceptance side communication equipment receives the connection start signal having the destination of the waiting and receiving address information made to be associated with the request acceptance side communication equipment from the request issuance side communication equipment not via the server apparatus but via the network, so as to establish a direct connection between the request issuance side communication equipment and the request acceptance side communication equipment.

(b) When the request acceptance side communication equipment is selected as the connection side communication equipment,

then the request acceptance side communication equipment receives the waiting and receiving address information made to be associated with the request issuance side communication equipment from the server apparatus via the second communication path.

The request acceptance side communication equipment transmits the connection start signal having the destination of the waiting and receiving address information made to be associated with the request issuance side communication equipment to the request issuance side communication equipment not via the server apparatus but via the network, so as to establish the direct connection between the request issuance side communication equipment and the request acceptance side communication equipment.

According to a sixteenth aspect of the present invention, there is provided a communication system including a request issuance side communication equipment connected to a network via a first router apparatus; a request acceptance side communication equipment connected to the network via a second router apparatus; and a server apparatus connected to the network. The communication system mediates establishment of a connection between the request issuance side communication equipment and the request acceptance side communication equipment by using the server apparatus, and holding a communication by using the connection established through a mediation of the server apparatus. The server apparatus and the request issuance side communication equipment establish a first communication path for connecting the server apparatus to the request issuance side communication equipment via the first router apparatus between the server apparatus and the request issuance side communication equipment prior to issuance of a request. The server apparatus and the request acceptance side communication equipment maintain, in advance, a second communication path for connecting the server apparatus to the request acceptance side communication equipment via the second router apparatus between the server apparatus and the request acceptance side communication equipment. When the request issuance side communication equipment desires to establish the connection with the request acceptance side communication equipment, then the request issuance side communication equipment judges whether or not the request issuance side communication equipment has a waiting and reception capability to wait for and receive a signal transmitted from the request acceptance side communication equipment via the network, and transmits a connection request signal including waiting and reception capability information on the request issuance side communication equipment as judgment results to the server apparatus.

When the server apparatus receives the connection request signal, the server apparatus transmits a waiting and reception capability notification request signal for requesting waiting and reception capability information on the request acceptance side communication equipment to the request acceptance side communication equipment via the second communication path, the waiting and reception capability information on the request acceptance side communication equipment indicating whether or not the request acceptance side communication equipment has a waiting and reception capability to wait for and receive a signal transmitted from the request issuance side communication equipment via the network.

When the request acceptance side communication equipment receives the waiting and reception capability notification request signal, then the request acceptance side communication equipment judges whether or not the request acceptance side communication equipment has the waiting and reception capability, and transmits the waiting and reception capability information on the request acceptance side communication equipment as judgment results to the server apparatus.

When the server apparatus judges that at least one of the request issuance side communication equipment and the request acceptance side communication equipment has the waiting and reception capability based on the waiting and reception capability information on the request issuance side communication equipment and on the waiting and reception capability information on the request acceptance side communication equipment, then the server apparatus selects the one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, notifies the request issuance side communication equipment and the request acceptance side communication equipment, as which the respective communication equipments are selected by using the first and second communication paths, respectively, among the waiting and receiving side communication equipment and the connection side communication equipment.

The selected waiting and receiving side communication equipment sets the router apparatus that connects the waiting and receiving side communication equipment to the network so that the router apparatus receives a signal being transmitted from the selected connection side communication equipment and having a destination of waiting and receiving address information made to be associated with the waiting and receiving side communication equipment, and so that the router apparatus transfers the received signal to the waiting and receiving side communication equipment, and transmits the waiting and receiving address information to the server apparatus.

The server apparatus transfers the waiting and receiving address information to the connection side communication equipment via one of the first communication path and the second communication path for connecting the server apparatus to the selected connection side communication equipment.

The connection side communication equipment transmits the connection start signal having the destination of the waiting and receiving address information to the waiting and receiving side communication equipment not via the server apparatus but via the network, so as to establish a direct connection between the request issuance side communication equipment and the request acceptance side communication equipment.

In the invention of the sixteenth aspect of the present application, when the server apparatus judges that each of the request issuance side communication equipment and the request acceptance side communication equipment does not have the waiting and reception capability based on the waiting and reception capability information on the request issuance side communication equipment and on the waiting and reception capability information on the request acceptance side communication equipment, then the server apparatus decides to relay a communication between the request issuance side communication equipment and the request acceptance side communication equipment, notifies the request issuance side communication equipment and the request acceptance side communication equipment that the server apparatus relays the communication between the request issuance side communication equipment and the request acceptance side communication equipment by using the first and second communication paths, respectively, and establishes the connection between the request issuance side communication equipment and the request acceptance side communication equipment relayed by the server apparatus.

According to a seventeenth aspect of the present invention, there is provided a server apparatus provided in a communication system, for mediating establishment of a connection between a request issuance side communication equipment and a request acceptance side communication equipment. The communication system includes the request issuance side communication equipment connected to a network via a first router apparatus; the request acceptance side communication equipment connected to the network via a second router apparatus; at least one relay communication equipment connected to the network; and the server apparatus connected to the network.

The server apparatus establishes a first communication path for connecting the server apparatus to the request issuance side communication equipment via the first router apparatus between the server apparatus and the request issuance side communication equipment prior to issuance of a request.

The server apparatus maintains, in advance, a second communication path for connecting the server apparatus to the request acceptance side communication equipment via the second router apparatus between the server apparatus and the request acceptance side communication equipment.

The server apparatus maintains, in advance, a communication path for connecting the server apparatus to the respective relay communication equipments between the server apparatus and the respective relay communication equipments.

The server apparatus receives waiting and reception capability information on the request issuance side communication equipment from the request issuance side communication equipment, the waiting and reception capability information on the request issuance side communication equipment indicating whether or not the request issuance side communication equipment has a waiting and reception capability to wait for and receive a signal transmitted from the request acceptance side communication equipment via the network, and stores the waiting and reception capability information in equipment information storage means.

The server apparatus receives waiting and reception capability information on the request acceptance side communication equipment from the request acceptance side communication equipment, the waiting and reception capability information on the request acceptance side communication equipment indicating whether or not the request acceptance side communication equipment has a waiting and reception capability to wait for and receive a signal transmitted from the request issuance side communication equipment via the network, and stores the waiting and reception capability information in the equipment information storage means.

The server apparatus receives waiting and reception capability information on the respective relay communication equipments from the respective relay communication equipments, the waiting and reception capability information on the respective relay communication equipments indicating whether or not the respective relay communication equipments have a waiting and reception capability to wait for and receive a signal transmitted from each of the request issuance side communication equipment and the request acceptance side communication equipment via the network, and stores the waiting and reception capability information in the equipment information storage means.

In the case that the server apparatus receives a signal for requesting the establishment of the connection between the request issuance side communication equipment and the request acceptance side communication equipment from the request issuance side communication equipment, when the server apparatus judges that at least one of the request issuance side communication equipment and the request acceptance side communication equipment has the waiting and reception capability based on the waiting and reception capability information stored in the equipment information storage means, then the server apparatus selects the one communication equipment having the waiting and reception capability as a waiting and receiving side communication equipment that receives a first connection start signal for establishing a direct connection between the request issuance side communication equipment and the request acceptance side communication equipment, and selects another communication equipment as a connection side communication equipment that transmits the first connection start signal, on the other hand, when the server apparatus judges that each of the request issuance side communication equipment and the request acceptance side communication equipment does not have the waiting and reception capability, then the server apparatus selects the request issuance side communication equipment as the connection side communication equipment that transmits a second connection start signal for establishing a direct connection between the request issuance side communication equipment and one relay communication equipment selected from among the at least one relay communication equipment, and selects the request acceptance side communication equipment as the connection side communication equipment that transmits a third connection start signal for establishing a direct connection between the request acceptance side communication equipment and the selected relay communication equipment.

The server apparatus notifies the request issuance side communication equipment and the request acceptance side communication equipment, as which the respective communication equipments are selected by using the first and second communication paths, respectively, among the waiting and receiving side communication equipment and the connection side communication equipment.

(a) When one of the request issuance side communication equipment and the request acceptance side communication equipment is selected as the waiting and receiving side communication equipment,
then the server apparatus receives first waiting and receiving address information made to be associated with the waiting and receiving side communication equipment from the waiting and receiving side communication equipment. The server apparatus transfers the received waiting and receiving address information to the connection side communication equipment via one of the first and second communication paths for connecting the server apparatus to the selected connection side communication equipment.
(b) When each of the request issuance side communication equipment and the request acceptance side communication equipment is selected as the connection side communication equipment,
then the server apparatus selects one arbitrary relay communication equipment judged to have the waiting and reception capability from among the relay communication equipments as the waiting and receiving side communication equipment based on the waiting and reception capability information stored in the equipment information storage means, notifies the selected relay communication equipment that the relay communication equipment is selected as the waiting and receiving side communication equipment via the communication path for connecting the server apparatus to the selected relay communication equipment.
The server apparatus receives second and third waiting and receiving address information made to be associated with the selected relay communication equipment from the relay communication equipment.
The server apparatus transmits the second waiting and receiving address information to the request issuance side communication equipment via the first communication path, and transmits the third waiting and receiving address information to the request acceptance side communication equipment via the second communication path.

According to an eighteenth aspect of the present invention, there is provided a request issuance side communication equipment provided in a communication system, for establishing a connection with the request acceptance side communication equipment through a mediation of a server apparatus, and for holding a communication with the request acceptance side communication equipment by using the connection established through the mediation of the server apparatus. The communication system includes the request issuance side communication equipment connected to a network via a first router apparatus; the request acceptance side communication equipment connected to the network via a second router apparatus; at least one relay communication equipment connected to the network; and the server apparatus connected to the network.

The request issuance side communication equipment establishes a first communication path between the request issuance side communication equipment and the server apparatus prior to issuance of a request.

The request issuance side communication equipment judges whether or not the request issuance side communication equipment has a waiting and reception capability to wait for and receive a signal transmitted from the request acceptance side communication equipment via the network, and transmits waiting and reception capability information as judgment results to the server apparatus.

The request issuance side communication equipment transmits a signal for requesting the establishment of the connection between the request issuance side communication equipment and the request acceptance side communication equipment to the server apparatus.

The request issuance side communication equipment receives from the server apparatus via the first communication path as which the request issuance side communication equipment is selected, a waiting and receiving side communication equipment that receives a first connection start signal for establishing a direct connection between the request issuance side communication equipment and the request acceptance side communication equipment or a connection side communication equipment that transmits the first connection start signal or a second connection start signal for establishing the direct connection between the request issuance side communication equipment and one relay communication equipment selected from among the at least one relay communication equipment.

(a) When the request issuance side communication equipment is selected as the waiting and receiving side communication equipment,

then the request issuance side communication equipment sets the first router apparatus so that the first router apparatus receives a signal being transmitted from the request acceptance side communication equipment and having a destination of first waiting and receiving address information made to be associated with the request issuance side communication equipment, and so that the first router apparatus transfers the received signal to the request issuance side communication equipment, and transmits the first waiting and receiving address information made to be associated with the request issuance side communication equipment to the server apparatus.

The request issuance side communication equipment receives the first connection start signal having the destination of the first waiting and receiving address information made to be associated with the request issuance side communication equipment from the request acceptance side communication equipment not via the server apparatus but via the network, so as to establish the direct connection between the request issuance side communication equipment and the request acceptance side communication equipment.

(b) In the case that the request issuance side communication equipment is selected as the connection side communication equipment,

when receiving the first waiting and receiving address information made to be associated with the request acceptance side communication equipment from the server apparatus via the first communication path, the request issuance side communication equipment transmits the first connection start signal having the destination of the first waiting and receiving address information made to be associated with the request acceptance side communication equipment to the request acceptance side communication equipment not via the server apparatus but via the network, so as to establish the direct connection between the request issuance side communication equipment and the request acceptance side communication equipment.

When the request issuance side communication equipment receives the second waiting and receiving address information made to be associated with the relay communication equipment selected as the waiting and receiving side communication equipment by the server apparatus from the server apparatus via the first communication path, the request issuance side communication equipment transmits the second connection start signal having the destination of the second waiting and receiving address information made to be associated with the relay communication equipment to the selected relay communication equipment not via the server apparatus but via the network, so as to establish the direct connection between the request issuance side communication equipment and the selected relay communication equipment, and establishing the communication between the request issuance side communication equipment and the request acceptance side communication equipment relayed by the relay communication equipment.

According to a nineteenth aspect of the present invention, there is provided a request acceptance side communication equipment provided in a communication system, for establishing a connection with the request issuance side communication equipment through a mediation of a server apparatus, and for holding a communication with the request issuance side communication equipment by using the connection established through the mediation of the server apparatus. The communication system includes the request issuance side communication equipment connected to a network via a first router apparatus; the request acceptance side communication equipment connected to the network via a second router apparatus; at least one relay communication equipment connected to the network; and the server apparatus connected to the network.

The request acceptance side communication equipment maintains, in advance, a second communication path between the request acceptance side communication equipment and the server apparatus for connecting the server apparatus to the request acceptance side communication equipment via the second router apparatus.

The request acceptance side communication equipment judges whether or not the request acceptance side communication equipment has a waiting and reception capability to wait for and receive a signal transmitted from the request issuance side communication equipment via the network, and transmits waiting and reception capability information as judgment results to the server apparatus.

The request acceptance side communication equipment receives from the server apparatus via the second communication path as which the request acceptance side communication equipment is selected, a waiting and receiving side communication equipment that receives a first connection start signal for establishing a direct connection between the request issuance side communication equipment and the request acceptance side communication equipment or a connection side communication equipment that transmits the first connection start signal or a third connection start signal for establishing the direct connection between the request acceptance side communication equipment and one relay communication equipment selected from among the at least one relay communication equipment.

(a) When the request acceptance side communication equipment is selected as the waiting and receiving side communication equipment,
then the request acceptance side communication equipment sets the second router apparatus so that the second router apparatus receives a signal being transmitted from the request issuance side communication equipment and having a destination of first waiting and receiving address information made to be associated with the request acceptance side communication equipment, and so that the second router apparatus transfers the received signal to the request acceptance side communication equipment, transmits the first waiting and receiving address information made to be associated with the request acceptance side communication equipment to the server apparatus. The request acceptance side communication equipment receives the first connection start signal having the destination of the first waiting and receiving address information made to be associated with the request acceptance side communication equipment from the request issuance side communication equipment not via the server apparatus but via the network, so as to establish the direct connection between the request issuance side communication equipment and the request acceptance side communication equipment.
(b) In the case that the request acceptance side communication equipment is selected as the connection side communication equipment,
when receiving the first waiting and receiving address information made to be associated with the request issuance side communication equipment from the server apparatus via the second communication path, the request acceptance side communication equipment transmits the first connection start signal having the destination of the first waiting and receiving address information made to be associated with the request issuance side communication equipment to the request issuance side communication equipment not via the server apparatus but via the network, so as to establish the direct connection between the request issuance side communication equipment and the request acceptance side communication equipment.
When the request acceptance side communication equipment receives third waiting and receiving address information made to be associated with the relay communication equipment selected as the waiting and receiving side communication equipment by the server apparatus from the server apparatus via the second communication path, the request acceptance side communication equipment transmits the third connection start signal having the destination of the third waiting and receiving address information made to be associated with the relay communication equipment to the selected relay communication equipment not via the server apparatus but via the network, so as to establish the direct connection between the request acceptance side communication equipment and the selected relay communication equipment, and establishing the communication between the request issuance side communication equipment and the request acceptance side communication equipment relayed by the relay communication equipment.

According to a twentieth aspect of the present invention, there is provided a relay communication equipment provided in a communication system, for relaying a connection between a request issuance side communication equipment and a request acceptance side communication equipment through a mediation of a server apparatus. The communication system including the request issuance side communication equipment connected to a network via a first router apparatus; the request acceptance side communication equipment connected to the network via a second router apparatus; at least one relay communication equipment connected to the network; and the server apparatus connected to the network.
The server apparatus and the relay communication equipment respectively maintain, in advance, a communication path for connecting the server apparatus to the relay communication equipment.
The relay communication equipment judges whether or not the relay communication equipment has a waiting and reception capability to wait for and receive a signal transmitted from each of the request issuance side communication equipment and the request acceptance side communication equipment via the network, and transmits waiting and reception capability information as judgment results to the server apparatus.
The relay communication equipment receives from the server apparatus via the communication path for connecting the server apparatus to the relay communication equipment information indicating that the relay communication equipment is selected as a waiting and receiving side communication equipment that receives a second connection start signal for establishing a direct connection with the request issuance side communication equipment, and a third connection start signal for establishing the direct connection with the request acceptance side communication equipment.

The relay communication equipment transmits second and third waiting and receiving address information made to be associated with the relay communication equipment to the server apparatus.

The relay communication equipment receives the second connection start signal having a destination of the second waiting and receiving address information from the request issuance side communication equipment not via the server apparatus but via the network.

The relay communication equipment receives the third connection start signal having a destination of the third waiting and receiving address information from the request acceptance side communication equipment not via the server apparatus but via the network.

The relay communication equipment then establishes the direct connection between the relay communication equipment and the request issuance side communication equipment and direct connection between the relay communication equipment and the request acceptance side communication equipment, and establishes the communication between the request issuance side communication equipment and the request acceptance side communication equipment relayed by the relay communication equipment.

According to a twenty first aspect of the present invention, there is provided a communication system including a request issuance side communication equipment connected to a network via a first router apparatus; a request acceptance side communication equipment connected to the network via a second router apparatus; at least one relay communication equipment connected to the network; and a server apparatus connected to the network. The communication system mediates establishment of a connection between the request issuance side communication equipment and the request acceptance side communication equipment by using the server apparatus, and holding a communication by using the connection established through a mediation of the server apparatus.

The server apparatus and the request issuance side communication equipment establish a first communication path for connecting the server apparatus to the request issuance side communication equipment via the first router apparatus between the server apparatus and the request issuance side communication equipment prior to issuance of a request.

The server apparatus and the request acceptance side communication equipment maintain, in advance, a second communication path for connecting the server apparatus to the request acceptance side communication equipment via the second router apparatus between the server apparatus and the request acceptance side communication equipment.

The server apparatus and each of the relay communication equipment maintains, in advance, a communication path for connecting the server apparatus to the relay communication equipment.

The request issuance side communication equipment judges whether or not the request issuance side communication equipment has a waiting and reception capability to wait for and receive a signal transmitted from the request acceptance side communication equipment via the network, and transmits waiting and reception capability information on the request issuance side communication equipment as judgment results to the server apparatus.

The request acceptance side communication equipment judges whether or not the request acceptance side communication equipment has the waiting and reception capability to wait for and receive a signal transmitted from the request issuance side communication equipment via the network, and transmits waiting and reception capability information on the request acceptance side communication equipment as judgment results to the server apparatus.

Each of the relay communication equipment judges whether or not the relay communication equipment has a waiting and reception capability to wait for and receive a signal transmitted from each of the request issuance side communication equipment and the request acceptance side communication equipment via the network, and transmits waiting and reception capability information as judgment results to the server apparatus, respectively.

The server apparatus receives the waiting and reception capability information on the request issuance side communication equipment, the waiting and reception capability information on the request acceptance side communication equipment, and the waiting and reception capability information on the relay communication equipment, and stores the waiting and reception capability information in equipment information storage means.

In the case that the server apparatus receives a signal for requesting the establishment of the connection between the request issuance side communication equipment and the request acceptance side communication equipment from the request issuance side communication equipment, when the server apparatus judges that at least one of the request issuance side communication equipment and the request acceptance side communication equipment has the waiting and reception capability based on the waiting and reception capability information stored in the equipment information storage means, then the server apparatus selects the one communication equipment having the waiting and reception capability as a waiting and receiving side communication equipment that receives a first connection start signal for establishing a direct connection between the request issuance side communication equipment and the request acceptance side communication equipment, and selects another communication equipment as a connection side communication equipment that transmits the first connection start signal, and on the other hand, when the server apparatus judges that each of the request issuance side communication equipment and the request acceptance side communication equipment does not have the waiting and reception capability, then the server apparatus selects the request issuance side communication equipment as the connection side communication equipment that transmits a second connection start signal for establishing a direct connection between the request issuance side communication equipment and one relay communication equipment selected from among the at least one relay communication equipment, and selects the request acceptance side communication equipment as the connection side communication equipment that transmits a third connection start signal for establishing a direct connection between the request acceptance side communication equipment and the selected relay communication equipment.

The server apparatus notifies the request issuance side communication equipment and the request acceptance side communication equipment, as which the respective communication equipments are selected by using the first and second communication paths, respectively, among the waiting and receiving side communication equipment and the connection side communication equipment.

(a) When one of the request issuance side communication equipment and the request acceptance side communication equipment is selected as the waiting and receiving side communication equipment,
then the request issuance side communication equipment sets the router apparatus that connects the waiting and receiving side communication equipment to the network so that the router apparatus receives a signal being transmitted from the selected connection side communication equipment and having a destination of first waiting and receiving address information made to be associated with the waiting and receiving side communication equipment, and so that the router apparatus transfers the received signal to the waiting and receiving side communication equipment, and transmits the first waiting and receiving address information to the server apparatus.
The server apparatus transfers the received first waiting and receiving address information to the connection side communication equipment via one of the first and second communication paths for connecting the server apparatus to the selected connection side communication equipment.
The connection side communication equipment transmits the first connection start signal having the destination of the first waiting and receiving address information to the waiting and receiving side communication equipment not via the server apparatus but via the network, so as to establish the direct connection between the request issuance side communication equipment and the request acceptance side communication equipment.
(b) When each of the request issuance side communication equipment and the request acceptance side communication equipment is selected as the connection side communication equipment,
then the server apparatus selects one arbitrary relay communication equipment judged to have the waiting and reception capability from among the relay communication equipments as the waiting and receiving side communication equipment based on the waiting and reception capability information stored in the equipment information storage means, notifies the selected relay communication equipment that the relay communication equipment is selected as the waiting and receiving side communication equipment via the communication path for connecting the server apparatus to the selected relay communication equipment.
The selected relay communication equipment transmits second and third waiting and receiving address information made to be associated with the selected relay communication equipment to the server apparatus.
The server apparatus transmits the second waiting and receiving address information to the request issuance side communication equipment via the first communication path, and transmits the third waiting and receiving address information to the request acceptance side communication equipment via the second communication path.
The request issuance side communication equipment transmits the second connection start signal having the destination of the second waiting and receiving address information to the selected relay communication equipment not via the server apparatus but via the network.
The request acceptance side communication equipment transmits the third connection start signal having the destination of the third waiting and receiving address information to the selected relay communication equipment not via the server apparatus but via the network.
A direct connection between the request issuance side communication equipment and the selected relay communication equipment and a direct connection between the request acceptance side communication equipment and the selected relay communication equipment are then established, and the communication between the request issuance side communication equipment and the request acceptance side communication equipment relayed by the relay communication equipment is then established.

According to a twenty second aspect of the present invention, there is provided a server apparatus provided in a communication system, for mediating establishment of a connection between a request issuance side communication equipment and a request acceptance side communication equipment. The communication system includes the request issuance side communication equipment and the request acceptance side communication equipment respectively connected to a network; and a server apparatus connected to the network.
The server apparatus and the request issuance side communication equipment authenticate each other.
The server apparatus receives a connection request signal for requesting the establishment of the connection between the request issuance side communication equipment and the request acceptance communication equipment from the request issuance side communication equipment.

When the server apparatus receives the connection request signal, the server apparatus and the request acceptance side communication equipment authenticate each other.

The server apparatus generates a cipher key when the server apparatus authenticates the request issuance side communication equipment and the request acceptance side communication equipment, respectively, encrypts the generated cipher key, and transmits the encrypted cipher key to the request issuance side communication equipment and the request acceptance side communication equipment, respectively.

According to a twenty third aspect of the present invention, there is provided a request issuance side communication equipment provided in a communication system, for establishing a connection with the request acceptance side communication equipment through a mediation of a server apparatus, and for holding a communication with the request acceptance side communication equipment by using the connection established through the mediation of the server apparatus. The communication system including the request issuance side communication equipment and the request acceptance side communication equipment respectively connected to the network; and the server apparatus connected to the network.

The request issuance side communication equipment and the server apparatus authenticate each other.

The request issuance side communication equipment transmits a connection request signal for requesting the establishment of the connection between the request issuance side communication equipment and the request acceptance side communication equipment to the server apparatus when authenticating the server apparatus.

The request issuance side communication equipment receives an encrypted and transmitted encryption key from the server apparatus, and decrypts the encrypted encryption key.

The request issuance side communication equipment establishes a direct connection between the request issuance side communication equipment and the request acceptance side communication equipment not via the server apparatus but via the network, and starts the communication encrypted by the decrypted encryption key by using the established direct connection.

According to a twenty fourth aspect of the present invention, there is provided a request acceptance side communication equipment provided in a communication system, for establishing a connection with the request issuance side communication equipment through a mediation of a server apparatus, and for holding a communication with the request issuance side communication equipment by using the connection established through the mediation of the server apparatus. The communication system includes the request issuance side communication equipment and the request acceptance side communication equipment respectively connected to the network; and the server apparatus connected to the network.

The request acceptance side communication equipment and the server apparatus authenticate each other.

The request acceptance side communication equipment receives an encrypted encryption key from the server apparatus, and decrypts the encrypted encryption key.

The request acceptance side communication equipment establishes a direct connection between the request issuance side communication equipment and the request acceptance side communication equipment not via the server apparatus but via the network, and starts the communication encrypted by the decrypted encryption key by using the established direct connection.

According to a twenty fifth aspect of the present invention, there is provided a communication system including a request issuance side communication equipment and a request acceptance side communication equipment respectively connected to the network; and a server apparatus connected to the network. The communication system mediates establishment of a connection between the request issuance side communication equipment and the request acceptance side communication equipment by using the server apparatus, and holdes a communication by using the connection established through a mediation of the server apparatus.

The request issuance side communication equipment and the server apparatus authenticate each other.

When the request issuance side communication equipment authenticates the server apparatus, the request issuance side communication equipment transmits a connection request signal for requesting the establishment of the connection between the request issuance side communication equipment and the request acceptance communication equipment to the server apparatus.

When the server apparatus receives the connection request signal, the server apparatus and the request acceptance side communication equipment authenticate each other.

The server apparatus generates a cipher key when the server apparatus authenticates the request issuance side communication equipment and the request acceptance side communication equipment, respectively, encrypts the generated cipher key, and transmits the encrypted cipher key to the request issuance side communication equipment and the request acceptance side communication equipment, respectively.

The request issuance side communication equipment and the request acceptance side communication equipment receive and decrypt the encrypted and transmitted cipher key, respectively.

Each of the request issuance side communication equipment and the request acceptance side communication equipment establishes a direct connection between the request issuance side communication equipment and the request acceptance side communication equipment not via the server apparatus but via the network, and starts the communication encrypted by each of the decrypted cipher key by using the established direct connection.

In the invention of the twenty fifth aspect of the present application, each of the request issuance side communication equipment and the request acceptance side communication equipment includes password information storage means for storing password information on the request acceptance side communication equipment.

When the direct connection is established between the request issuance side communication equipment and the request acceptance side communication equipment, the request issuance side communication equipment transmits the password information stored in the password information storage means of the request issuance side communication equipment to the request acceptance side communication equipment.

The request acceptance side communication equipment receives the transmitted password information, collates the received password information with the password information stored in the password information storage means of the request acceptance side communication equipment, and authenticates the request issuance side communication equipment when these pieces of password information coincide with each other.

According to a twenty sixth aspect of the present invention, there is provided a server apparatus provided in a communication system, for mediating establishment of a connection between a request issuance side communication equipment and a request acceptance side communication equipment. The communication system includes the request issuance side communication equipment and the request acceptance side communication equipment connected to a network; and a server apparatus connected to the network.

The server apparatus and the request issuance side communication equipment authenticate each other.

The server apparatus receives a connection request signal for requesting the connection between the request issuance side communication equipment and the request acceptance communication equipment from the request issuance side communication equipment.

When the server apparatus receives the connection request signal, the server apparatus and the request acceptance side communication equipment authenticate each other.

The server apparatus generates connection authentication information when the server apparatus authenticates the request issuance side communication equipment and the request acceptance side communication equipment, respectively, encrypts the generated connection authentication information, and transmits the encrypted connection authentication information to the request issuance side communication equipment and the request acceptance side communication equipment, respectively.

According to a twenty seventh aspect of the present invention, there is provided a request issuance side communication equipment provided in a communication system, for establishing a connection with the request acceptance side communication equipment through a mediation of a server apparatus, and for holding a communication with the request acceptance side communication equipment by using the connection established through the mediation of the server apparatus. The communication system includes the request issuance side communication equipment and the request acceptance side communication equipment respectively connected to the network; and the server apparatus connected to the network.

The request issuance side communication equipment and the server apparatus authenticate each other.

The request issuance side communication equipment transmits a connection request signal for requesting the establishment of the connection between the request issuance side communication equipment and the request acceptance side communication equipment to the server apparatus when authenticating the server apparatus.

The request issuance side communication equipment receives encrypted and transmitted connection authentication information from the server apparatus, decrypts the encrypted connection authentication information, and stores the decrypted connection authentication information in connection authentication information storage means.

The request issuance side communication equipment establishes a direct connection between the request issuance side communication equipment and the request acceptance side communication equipment not via the server apparatus but via the network.

The request issuance side communication equipment transmits the connection authentication information to the request acceptance side communication equipment by using the established direct connection.

The request issuance side communication equipment starts the communication by using the direct connection between the request issuance side communication equipment and the request acceptance side communication equipment when the request acceptance side communication equipment permits the communication by using the direct connection.

According to a twenty eighth aspect of the present invention, there is provided a request acceptance side communication equipment provided in a communication system, for establishing a connection with the request acceptance side communication equipment through a mediation of a server apparatus, and for holding a communication with the request issuance side communication equipment by using the connection established through the mediation of the server apparatus. The communication system includes the request issuance side communication equipment and the request acceptance side communication equipment respectively connected to the network; and the server apparatus connected to the network.

The request acceptance side communication equipment and the server apparatus authenticate each other.

The request acceptance side communication equipment receives encrypted and transmitted connection authentication information from the server apparatus, decrypts the connection authentication information, and stores the decrypted connection authentication information in connection authentication information storage means.

The request acceptance side communication equipment establishes a direct connection between the request issuance side communication equipment and the request acceptance side communication equipment not via the server apparatus but via the network.

The request acceptance side communication equipment receives the connection authentication information from the request issuance side communication equipment by using the established direct connection, collates the received connection authentication information with the connection authentication information stored in the connection authentication information storage means of the connection acceptance side communication equipment, permits the connection using the direct connection when these pieces of connection authentication information coincide with each other, and starts the communication between the request issuance side communication equipment and the request acceptance side communication equipment by using the established direct connection.

According to a twenty ninth aspect of the present invention, there is provided a communication system including a request issuance side communication equipment and a request acceptance side communication equipment respectively connected to the network; and a server apparatus connected to the network. The communication system mediates establishment of a connection between the request issuance side communication equipment and the request acceptance side communication equipment by using the server apparatus, and holds a communication by using the connection established through a mediation of the server apparatus.

The request issuance side communication equipment and the server apparatus authenticate each other. '

When the request issuance side communication equipment authenticates the server apparatus, the request issuance side communication equipment transmits a connection request signal for requesting the establishment of the connection between the request issuance side communication equipment and the request acceptance communication equipment to the server apparatus.

When the server apparatus receives the connection request signal, the server apparatus and the request acceptance side communication equipment authenticate each other.

The server apparatus generates connection authentication information when the server apparatus authenticates the request issuance side communication equipment and the request acceptance side communication equipment, respectively, encrypts the generated connection authentication information, and transmits the encrypted connection authentication information to the request issuance side communication equipment and the request acceptance side communication equipment, respectively, and store the encrypted connection authentication information in the connection authentication information storage means of the respective communication equipments, respectively.

The request issuance side communication equipment and the request acceptance side communication equipment receive and decrypt the encrypted and transmitted connection authentication information, respectively.

Each of the request issuance side communication equipment and the request acceptance side communication equipment establishes a direct connection between the request issuance side communication equipment and the request acceptance side communication equipment not via the server apparatus but via the network.

The request issuance side communication equipment transmits the connection authentication information to the request acceptance side communication equipment by using the established direct connection.

The request acceptance side communication equipment receives the transmitted connection authentication information, collates the received connection authentication information with the connection authentication information stored in the connection authentication information storage means of the connection acceptance side communication equipment, permits the communication by using the direct connection when these pieces of connection authentication information coincide with each other, and starts the communication between the request issuance side communication equipment and the request acceptance side communication equipment by using the direct connection.

According to a thirtieth aspect of the present invention, there is provided a program that causes an apparatus operating according to the program to operate as the server apparatus according to one of the first, fifth, ninth, thirteenth, seventeenth, twenty-second, and twenty-sixth aspects of the present invention.

According to a thirty-first aspect of the present invention, there is provided a program that causes an apparatus operating according to the program to operate as the request issuance side communication equipment according to one of the second, sixth, tenth, fourteenth, eighteenth, twenty-third, and twenty-seventh aspects of the present invention.

According to a thirty-second aspect of the present invention, there is provided a program that causes an apparatus operating according to the program to operate as the request acceptance side communication equipment according to one of the third, seventh, eleventh, fifteenth, nineteenth, twenty-fourth, and twenty-eighth aspects of the present invention.

According to a thirty-third aspect of the present invention, there is provided a program that causes an apparatus operating according to the program to operate as the relay communication equipment according to the twentieth aspect of the present invention.

According to a thirty-fourth aspect of the present invention, there is provided a recording medium that stores the program according to any one of the thirtieth to the thirty-third aspects of the present invention.

EFFECTS OF THE INVENTION

As mentioned above, according to the present invention, it is possible to provide the communication system for holding a communication between the equipment connected to the Internet via a LAN and another equipment connected to the Internet via another LAN. At this time, the equipment connected to the Internet or LAN can be connected to another equipment connected to the Internet or another LAN without any user's static NAT setting in each router apparatus and user's checking the WAN side dynamic IP address. Even if one of the equipment does not include the UPnP-IGD function, the peer-to-peer connection can be held. Even if neither of the equipment include UPnP-IGD function, it is possible to automatically establish a connection via the server. Therefore, the establishment of the connection can be ensured and high convenience can be ensured. According to the present invention, by holding the peer-to-peer connection, the load on the server can be reduced, and the server apparatus can perform processings having a high management load for the mutual authentication between the equipment. Therefore, there is caused such an advantageous effect that it is possible to improve the convenience of the equipment, reduce the cost, and ensure the higher security. Since the communication system having high convenience, higher security, and higher user friendliness is constituted at lower cost, many conspicuous advantageous effects can be exhibited.

It is difficult to establish a direct peer-to-peer connection between the communication equipment connected to the Internet via a LAN and another communication equipment connected to the Internet via another LAN via the Internet because of problems of the IP address change and the NAT setting in each router apparatus. Due to this, in order to transfer large amounts of data between the equipment such as transmission of AV streams, the communication is inevitably held via the server, and then, this leads to increase in the load on the server. A dedicated server connected to the Internet is prepared, two equipments transmit and receive necessary information to and from each other by holding a communication via the server in advance, and the data is directly transferred between the two equipments using the peer-to-peer connection not via the server according to the information. A communication sequence includes steps of judging NAT setting capabilities of the two equipments and selecting the connection side equipment and the waiting and receiving side equipment. This leads to that, if one of the two equipments can set the static NAT, the peer-to-peer communication can be held. The necessary information includes IP address information, port number information and the like for the static NAT setting in the router apparatus. In order to set the static NAT, it is appropriate to use a Universal Plug and Play protocol.

BRIEF DESCRIPTION OF THE DRAWINGS

Fig. 1 is a block diagram of a configuration of a communication system in which equipments or apparatuses are connected to each other via networks according to a first embodiment of the present invention.

Fig. 2 is a sequence diagram showing a communication sequence of the communication system shown in Fig. 1.

Fig. 3A is a table showing an improvement effect in a peer-to-peer connection probability as produced by the embodiment shown in Fig. 1, and showing results of calculating a peer-to-peer connection probability when a ratio of the number of communication equipments connected to the Internet and having global IP addresses to the number of communication equipments connected to LANs and having private IP addresses is 2:8.

Fig. 3B is a table showing an improvement effect in a peer-to-peer connection probability as produced by the embodiment shown in Fig. 1, and showing results of calculating a peer-to-peer connection probability when a ratio of the number of communication equipments connected to the Internet and having global IP addresses to the number of communication equipments connected to LANs and having private IP addresses is 2 : 8 and a ratio of the number of UPnP compliant communication equipments to the number of UPnP incompliant communication equipments is 5 : 5.

Fig. 4 is a block diagram of a configuration of a communication system in which equipment or apparatuses are connected to each other via networks according to a first modified embodiment of the first embodiment of the present invention.

Fig. 5 is sequence diagram showing a communication sequence of the communication system shown in Fig. 4.

Fig. 6 is a block diagram of a configuration of a communication system in which equipment or apparatuses are connected to each other via networks according to a second modified embodiment of the first embodiment of the present invention.

Fig. 7 is sequence diagram showing a communication sequence of the communication system shown in Fig. 6.

Fig. 8 is sequence diagram showing a communication sequence according to a second embodiment of the present invention.

Fig. 9 is sequence diagram showing a communication sequence according to a first modified embodiment of the second embodiment of the present invention.

Fig. 10 is sequence diagram showing a communication sequence according to a second modified embodiment of the second embodiment of the present invention.

Fig. 11 is sequence diagram showing a communication sequence according to a third embodiment of the present invention.

Fig. 12 is sequence diagram showing a communication sequence according to a first modified embodiment of the third embodiment of the present invention.

Fig. 13 is sequence diagram showing a communication sequence according to a second modified embodiment of the third embodiment of the present invention.

Fig. 14 is sequence diagram showing a communication sequence according to a fourth embodiment of the present invention.

Fig. 15 is sequence diagram showing a communication sequence according to a first modified embodiment of the fourth embodiment of the present invention.

Fig. 16 is sequence diagram showing a communication sequence according to a second modified embodiment of the fourth embodiment of the present invention.

Fig. 17 is a block diagram of a configuration of a communication system in which equipment or apparatuses are connected to each other via networks according to a fifth embodiment of the present invention.

Fig. 18 is a sequence diagram showing a communication sequence of the communication system shown in Fig. 17.

Fig. 19 is a sequence diagram showing a first part of a communication sequence according to a sixth embodiment of the present invention.

Fig. 20 is a sequence diagram showing a second part of a communication sequence according to the sixth embodiment of the present invention.

Fig. 21 is a diagram showing a data structure of a session identifier SID2 shown in Fig. 20.

Fig. 22 is a sequence diagram showing a communication sequence according to a seventh embodiment of the present invention.

Fig. 23 is a sequence diagram showing a first part of a communication sequence according to a first modified embodiment of the seventh embodiment of the present invention.

Fig. 24 is a sequence diagram showing a second part of a communication sequence according to the first modified embodiment of the seventh embodiment of the present invention.

Fig. 25 is a sequence diagram showing a first part of a communication sequence according to a second modified embodiment of the seventh embodiment of the present invention.

Fig. 26 is a sequence diagram showing a second part of a communication sequence according to the second modified embodiment of the seventh embodiment of the present invention.

Fig. 27 is a sequence diagram showing a first part of a communication sequence according to a third modified embodiment of the seventh embodiment of the present invention.

Fig. 28 is a sequence diagram showing a second part of a communication sequence according to the third modified embodiment of the seventh embodiment of the present invention.

DESCRIPTION OF REFERENCE SYMBOLS

101, 102, and 106 ... Communication equipment;
103, and 103a ... Server apparatus;
104, 104a, 105, 105a, and 107 ... Router apparatus;
110 ... Internet (WAN);
111, 112, and 113 ... LAN;
121, 122, 123, 124, 125, and 126 ... Communication line;
K, K1, K2, and K3 ... Encryption key; and
SID, SID1, and SID2 ... Session identifier.

BEST MODE FOR CARRYING OUT THE INVENTION

Communication systems according to some embodiments of the present invention will be described hereinafter with reference to the drawings. In the respective drawings, like constituent elements, signals or processings are denoted by the same reference symbols, respectively.

FIRST EMBODIMENT

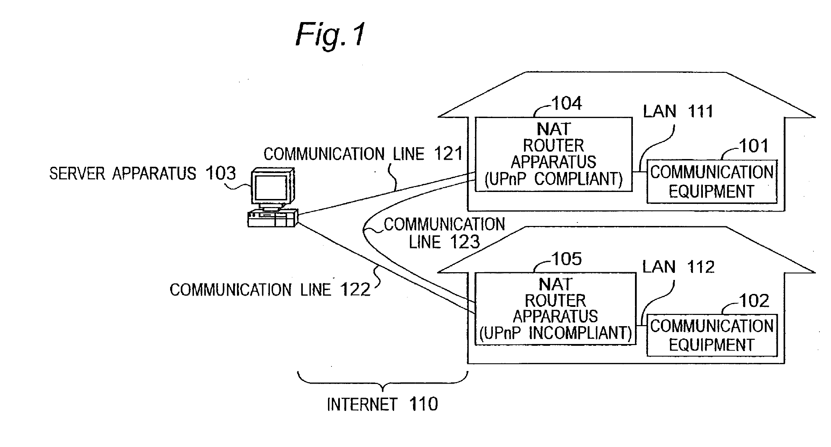

A communication system according to a first embodiment will be described hereinafter with reference to the drawings. Fig. 1 is a block diagram of a configuration of a communication system in which equipment or apparatuses are connected to each other via networks according to the present embodiment. A communication equipment 101 is connected to a NAT router (hereinafter, referred to as "a router apparatus") 104 operating as a UPnP-IGD via a LAN 111. A WAN side port of the router apparatus 104 is connected to the Internet (WAN) 110. In a manner similar to that of above, a communication equipment 102 is connected to a NAT router (hereinafter, referred to as "a router apparatus") 105 that does not include any function such as the UPnP-IGD via a LAN 112. A WAN side port of the router apparatus 105 is connected to the Internet (WAN) 110. Accordingly, the communication equipment 101 is connected to the Internet 110 via the LAN 111 and the router apparatus 104. The communication equipment 102 is connected to the Internet 110 via the LAN 112 and the router apparatus 105. Further, a server apparatus 103 is connected to the Internet 110, and the server apparatus 103 is connected to the router apparatus 104 and 105 via the Internet (WAN) 110. In the example of Fig. 1, the server apparatus 103 is connected to the WAN side port of the NAT router apparatus 104 via a first communication line 121 and to the WAN side port of the NAT router apparatus 105 via a second communication line 122. In addition, another WAN side port of the router apparatus 104 is connected to another WAN side port of the router apparatus 105 via a communication line 123.
Furthermore, in the communication network according to the present embodiment, each of the server apparatus 103 and the router apparatus 104 and 105 has a global IP address, and on the other hand, each of the communication equipments 101 and 102 has a private IP address.

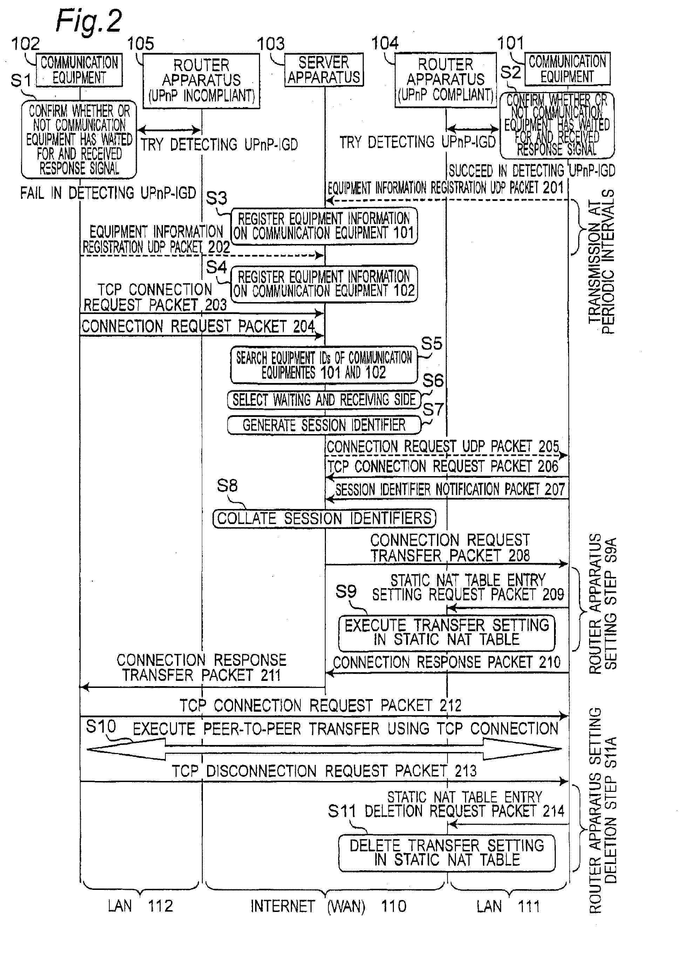

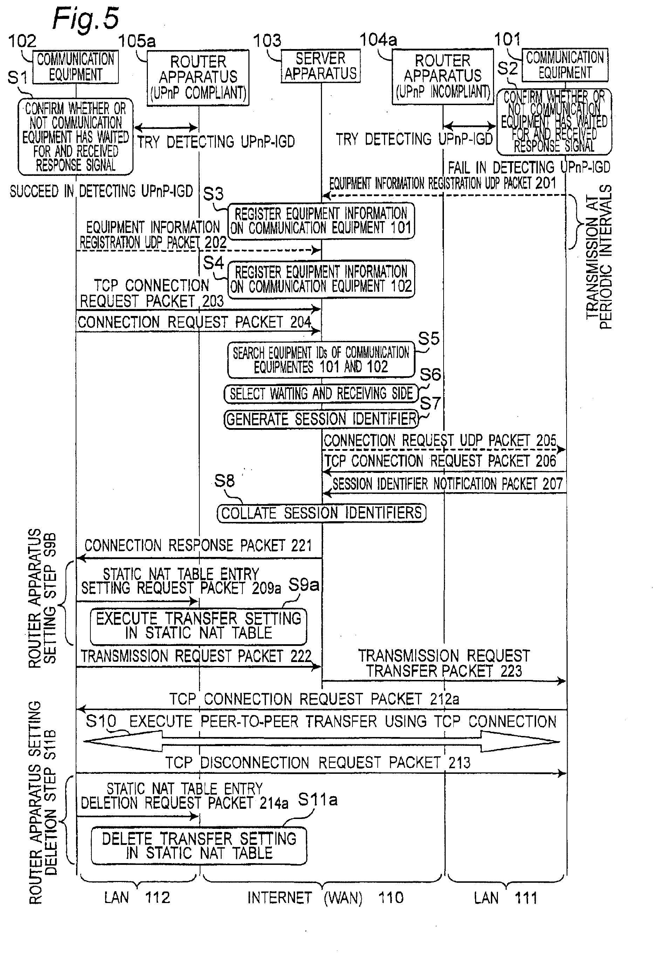

In the communication network according to the present embodiment, the communication equipment 102 operates as a request issuance side communication equipment that requests to establish a connection with the communication equipment 101 and that issues a connection request packet for transmitting this connection request. The communication equipment 101 operates as a request acceptance side communication equipment that accepts the connection request. The server apparatus 103 mediates the signal for transmitting the connection request between the communication equipments 101 and 102. In addition, the server apparatus 103 decides whether each of the communication equipments 101 and 102 serve as the request issuance side communication equipment or the request acceptance side communication equipment, respectively, in a later peer-to-peer communication. In this case, waiting and reception means one communication equipment's reception of a TCP connection start packet (e.g., a TCP connection start packet 212 shown in Fig. 2 or a TCP connection start packet 212a shown in Fig. 5) transmitted from another communication equipment via the Internet 110 so as to establish a TCP connection. In the present embodiment, when the router apparatus that connects an equipment to the Internet 110 includes the UPnP-IGD function, the communication equipment connected to the router apparatus will be referred to as "a communication equipment capable of waiting for and receiving a response signal (or a communication equipment that has a waiting and reception capability)". In addition, a communication equipment connected to the Internet 110 via the router apparatus, that does not include any UPnP-IGD function, will be referred to as "a communication equipment incapable of waiting for and receiving a response signal (or a communication equipment that does not have any waiting and reception capability)". In the present specification, the communication equipment that is a communication equipment having the waiting and reception capability and decided by the server apparatus 103 as a communication equipment that receives a TCP connection request packet when the TCP connection is established for the peer-to-peer communication will be referred to as "a waiting and receiving side communication equipment". In addition, the communication equipment decided by the server apparatus 103 as a communication equipment that transmits the TCP connection request packet will be referred to as "a connection side communication equipment".

The server apparatus 103 and the communication equipment 101 maintain, in advance, a communication path (hereinafter, referred to as "a communication path R1") that includes the communication line 121, the router apparatus 104, and the LAN 111 and that enables a communication even if the NAT router apparatus 104 is present on the path. In the present specification, "maintaining a communication path" means that if the server apparatus 103 transmits a packet addressed to the communication equipment 101 to the router apparatus 104, the router apparatus 104 transfers the packet to the communication equipment 101 to ensure that the packet can arrive at the communication equipment 101, that is, the server apparatus 103 can be connected to the communication equipment 101 over the router apparatus 104. In the configuration shown in Fig. 1, when the communication equipment 101 conversely transmits a packet addressed to the server apparatus 103 to the router apparatus 104, the router apparatus 104 transfers the packet to the server apparatus 103 to ensure that the packet can arrive at the server apparatus 103. In order to maintain the communication path R1, it is particularly suitable to use a communication method (which will be described later) as disclosed in the Patent Document 1 since a communication can be instantly started from the server apparatus 103 and the load imposed on the server apparatus 103 is light. Therefore, the present invention will be described on assumption of using the communication method in the present specification. Alternatively, the other method for maintaining the communication path R1 by allowing the communication equipment 101 to poll the server apparatus 103 may be used.

Furthermore, the server apparatus 103 and the communication equipment 102 establish a communication path (hereinafter, referred to as "a communication path R2") that includes the communication line 122, the router apparatus 105, and the LAN 112 and that enables a communication even if the NAT router apparatus 105 is present on the path prior to issuance of a request (which will be described later in detail).

The router apparatus 104 and 105 include NAT functions for transferring packets received via the Internet 110 to the communication equipments 101 and 102, and for transferring the packets received from the communication equipments 101 and 102 to another communication equipment via the Internet 110, respectively. In other words, each of the router apparatuses 103 and 105 rewrites information on an IP address and a port number of the packet that passes through the router apparatus in a transmission source field or a transmission destination field by using the NAT function. More concretely, the router apparatus 104 includes a table memory (not shown) that stores a static NAT table including, as entries, a set of a private IP address and a port number of the communication equipment 101, and a global IP address and a port number of an arbitrary free unoccupied WAN side port of the router apparatus 104. The router apparatus 104 performs a mutual translation between the private IP address of the communication equipment 101 and the global IP address of the router apparatus 104 by using this static NAT table. Then, when the communication equipment 101 is to transmit a packet to another communication equipment via the Internet 110, then the router apparatus 104, rewrites the private IP address and the port number of the communication equipment 101, which has been written as transmission source information, in a header of the packet to the global IP address and the WAN side port number of the router apparatus 104, respectively, with reference to the entries of the static NAT table, and then, transmits the packet to another communication equipment which is the transmission destination equipment. On the other hand, when the communication equipment 101 is to receive a packet from another communication equipment via the Internet 110, then the router apparatus 104 rewrites the global IP address and the WAN side port number of the router apparatus 104, which has been written as destination information, in a header of the packet to the private IP address and the port number of the communication equipment 101, respectively, with reference to the entries of the static NAT table, and then, transmits the packet to the communication equipment 101. As can be seen, the router apparatus 104 performs the mutual translation of the private IP address to and from the global IP address, and this leads to that the communication equipment 101 connected to the LAN 111 and allocated the private IP address can hold a communication with another communication equipment via the Internet 110.

In a manner similar to that of above, the router apparatus 105 includes a table memory (not shown) that stores a static NAT table including, as entries, a set of a private IP address and a port number of the communication equipment 102, and a global IP address and a port number of a WAN side port of the router apparatus 105. The router apparatus 105 performs a mutual translation between the private IP address and the port number of the communication equipment 102 and the global IP address and the WAN side port number of the router apparatus 105 by using this static NAT table. The communication equipment 102 connected to the LAN 112 and allocated the private IP address can then hold a communication with another communication equipment via the Internet 110.

In the present embodiment, the router apparatus 104 includes the UPnP-IGD function, and this leads to that the communication equipment 101 can be connected to the router apparatus 104 via the LAN 111 to call the UPnP-IGD function, and can refer to and set the static NAT table of the router apparatus 104. Therefore, according to the present embodiment, the communication equipment 101 can set the router apparatus 104 so that the router apparatus 104 receives a TCP connection request packet having a destination of predetermined waiting and receiving address information made to be associated with the communication equipment 101 for establishing the peer-to-peer connection between the communication equipments 101 and 102, and transfers the packet to the communication equipment 101 when the packet is transmitted from the connection side communication equipment 102.

Referring next to a sequence diagram shown in Fig. 2, a communication sequence of the communication system according to the present embodiment will be described. At the waiting and reception capability detection steps S2 and S1 which are executed prior to a peer-to-peer communication between the communication equipments 101 and 102, the communication equipments 101 and 102 confirm whether or not the communication equipments 101 and 102 have waiting and reception capabilities with respect to the router apparatus 104 and 105 that connect the equipments 101 and 102 to the Internet 110 either regularly or periodically at predetermined intervals. In other words, the communication equipment 102 judges whether or not the communication equipment 102 has the waiting and reception capability of waiting for and receiving a signal (the TCP connection start packet 212a shown in Fig. 5) transmitted from the communication equipment 101 via the internet 110 at step S1. The communication equipment 101 judges whether or not the communication equipment 101 has the waiting and reception capability of waiting for and receiving a signal (the TCP connection start packet 212 shown in Fig. 2) transmitted from the communication equipment 102 via the internet 110 at step S2. In this case, it is assumed to confirm whether or not the equipment has the waiting and reception capability is to try to detect the UPnP-IGD connected to the communication equipment 101 or 102, namely, in order to confirm whether or not the router apparatus 104 or 105 includes the UPnP-IGD function. This can be executed by a Discovery protocol specified in the UPnP protocol and a series of sequences subsequent to the Discovery protocol. In the present embodiment, since the router apparatus 104 is a UPnP compliant equipment (namely, includes the UPnP-IGD function), the communication equipment 101 succeeds in detecting the UPnP-IGD. In addition, since the router apparatus 105 is a UPnP incompliant equipment, the communication equipment 102 fails in detecting the UPnP-IGD. Accordingly, the communication equipment 101 acquires the waiting and reception capability information indicating that the equipment 101 can wait for and receive a response signal. The communication equipment 102 acquires the waiting and reception capability information indicating that the equipment 102 cannot wait for and receive a response signal. Further, the communication equipments 101 and 102 acquire information on the global IP addresses and the WAN side port numbers of the router apparatuses 104 and 105, respectively. The communication equipments 101 and 102 may acquire these pieces of information either simultaneously with the waiting and reception capability detection steps S1 and S2 or at steps different from steps S 1 and S2, respectively.

Next, the communication equipment 101 transmits an equipment information registration UDP packet 201 including, as a payload, equipment information on the communication equipment 101 to the server apparatus 103 either regularly or periodically at predetermined intervals. The equipment information on the communication equipment 101 includes an equipment ID of the communication equipment 101 and the global IP address and WAN side port number of the router apparatus 104 notified by a notification UDP packet described in the Patent Document 1, and the waiting and reception capability information being acquired at the waiting and reception capability detection step S2 and indicating that the equipment 101 can wait for and receive a response signal. At this time, the router apparatus 104 executes translation of the IP address and the port number in the header of the equipment information registration UDP packet 201 by using the NAT function, and transfers the packet 201 to the server apparatus 103. In the present specification, the operation for translating the IP address and the port number performed by the router apparatus 104 will not be described for simplicity of description. However, it is assumed that, when the communication equipment 101 actually transmits or receives a packet to or from the server apparatus 103 or another communication equipment via the Internet 110, then the equipment 101 always transmits or receives the packet via the router apparatus 104 and the router apparatus 104 always executes translation of the IP address and the port number for the packet.

When receiving the equipment information registration UDP packet 201, the server apparatus 103 registers the WAN side IP address and WAN side port number of the router apparatus 104 and the waiting and reception capability information in an equipment information database apparatus (not shown) in the server apparatus 103 with making them be associated with the equipment ID of the communication equipment 101 at the equipment information registration step S3.

In a manner similar to that of above, the communication equipment 102 transmits an equipment information registration UDP packet 202 including, as a payload, equipment information on the communication equipment 102 to the server apparatus 103, either regularly or periodically at predetermined intervals. The equipment information on the communication equipment 102 includes an equipment ID of the communication equipment 102 and the global IP address and WAN side port number of the router apparatus 105, and the waiting and reception capability information acquired at the waiting and reception capability detection step S1 and indicating that the equipment 102 cannot wait for and receive a response signal, in a manner similar to that of the case with the packet 201. At this time, the router apparatus 105 executes translation of the IP address and the port number in the header of the equipment information registration UDP packet 202 by using the NAT function, and transfers the packet 202 to the server apparatus 103. In the present specification, the operation for translating the IP address and the port number performed by the router apparatus 105 will not be described for simplicity of description. However, it is assumed that, when the communication equipment 102 actually transmits or receives a packet to or from the server apparatus 103 or another communication equipment via the Internet 110, then the equipment 102 always transmits or receives the packet via the router apparatus 105 and the router apparatus 105 always executes translation of the IP address and the port number for the packet.

When receiving the equipment information registration UDP packet 202, the server apparatus 103 registers the WAN side IP address and WAN side port number of the router apparatus 105 and the waiting and reception capability information in the equipment information database apparatus in the server apparatus 103 with making them be associated with the equipment ID of the communication equipment 102 at the equipment information registration step S4.

As described so far, the server apparatus 103 registers the WAN side IP address and port number of the router apparatus that connects each of the communication equipments 101 and 102 to the Internet 110 and the waiting and reception capability information on each of communication equipments in the equipment information database apparatus in the server apparatus 103 with making them be associated with the equipment ID of each of the communication equipments. Alternatively, the server apparatus 103 may register the IP address and the port number of each of the communication equipments 101 and 102 and the waiting and reception capability information on each of the communication equipments 101 and 102 in the equipment information database apparatus with making them be associated with the equipment ID of each equipment 101 or 102 in relation to one or a plurality of communication equipment other than the communication equipments 101 and 102. The equipment information registration UDP packet 201 in the present embodiment is equal in function to the notification UDP packet described in the Patent Document 1 except that the packet 201 also includes the waiting and reception capability information. The communication equipment 101 regularly transmits the equipment information registration UDP packet 201 to the server 103, and this leads to that the communication path R1 can be maintained between the communication equipment 101 and the server apparatus 103.

Referring now to the Patent Document 1, the method for maintaining the communication path R1 will be described in more detail. The equipment information database apparatus of the server apparatus 103 further includes a memory for recording a final access time of each of the communication equipments. The server apparatus 103 transmits maximum access confirmation period information to each of the communication equipments in advance. Each of the communication equipments receives the maximum access confirmation period information and stores the information in an internal memory (not shown). In addition, the communication equipment transmits the equipment information registration UDP packet periodically in a shorter period than a period, which is indicated by the maximum access confirmation period information. At the time of receiving the equipment information registration UDP packet from each of the communication equipments, the server apparatus 103 updates the final access time of the communication equipment to the time when the equipment 103 receives the equipment information registration UDP packet. For instance, when the communication equipment 102 transmits a connection request packet 204 (which will be described later) indicating a connection request to the communication equipment 101 to the server apparatus 103, the server apparatus 103 rejects the connection request if a difference between the final access time of the communication equipment 101 and the present time exceeds the period indicated by the maximum access confirmation period information, and transmits a connection request UDP packet 205 (which will be described later) as a response to the equipment information registration UDP packet 201 to the communication equipment 101 if the difference is equal to or smaller than the period indicated by the maximum access confirmation period information.

As can be seen, the communication system in which the server apparatus 103 acquires information on a connection state of each of the communication equipments in advance can instantly confirm whether or not the equipment 101 is operative and communicable when the connection request packet 204 is transmitted from the communication equipment 102 to the server apparatus 103. Therefore, the server apparatus 103 can promptly transmits a response to the communication equipment 102 to reject the connection request from the communication equipment 102 when a communication with the communication equipment 101 cannat be established. Further, even if the IP address of the communication equipment 101 is dynamically allocated by an Internet service provider (ISP) and the IP address of the communication equipment 101 registered in the server apparatus 103 has been already allocated to a communication equipment independent of and other than the equipment 101 due to cutoff of the power as supplied to the communication equipment 101 or the like, it is possible to prevent the connection request UDP packet 205 from being erroneously transmitted to another communication equipment. Moreover, by designating the maximum access confirmation period information to the communication equipment 101 from the server apparatus 103 in advance, it is possible to control a transmission period for transmitting the equipment information registration UDP packet 201 for confirming whether or not the communication equipment 101 is communicable. In addition, the server apparatus 103 can freely adjust a tradeoff relationship between load for receiving the equipment information registration UDP packet 201 and time passing since the server apparatus 103 detects that the communication equipment 101 is incommunicable. Furthermore, according to the present embodiment, the equipment information registration UDP packet 201 is transmitted periodically from the communication equipment 101 to the server apparatus 103. This packet 201 then acts as a so-called keep-alive packet for the router apparatus 104, prevents WAN side connection of the router apparatus 104 from being disconnected from the ISP because of passage of a time-out period specified in a point-to-point protocol (PPP) or a dynamic host configuration protocol (DHCP). Therefore, there is caused there is an advantageous effect that it is possible to maintain the router apparatus 104 communicable with the server apparatus 103 or another communication equipment via the Internet 110.

It is then assumed that on an occasion of a user's operation or the like, the communication equipment 102 is desired to establish a communication with the communication equipment 101. At this time, in order to transmit this connection request to the communication equipment 101, the communication equipment 102 first establishes a communication path R2 prior to issuance of the request. "In order to establish a communication path R2" means to establish a TCP connection between the communication equipment 102 and the server apparatus 103 on the communication path R2 that includes the communication line 122, the router apparatus 105, and the LAN 112 by transmitting the TCP connection request packet 203 to the server apparatus 103. The TCP connection established on this communication path R2 enables the communication equipment 102 to be connected from the server apparatus 103 via the router apparatus 105 when it is necessary to do so. By using the TCP connection established on the communication path R2, the communication equipment 102 transmits a connection request packet 204 to the server apparatus 103. The connection request packet 204 is a packet for notifying the server apparatus 103 of a request to establish a peer-to-peer connection between the communication equipment 102 and 101 by designating the equipment ID of the request acceptance side communication equipment 101 as a destination. In addition, the equipment ID of the connection request issuance side communication equipment 102 is added to the connection request packet 204. When receiving this connection request packet 204, the server apparatus 103 searches the equipment information database apparatus for equipment information on each of the communication equipments registered in the equipment information database apparatus with the equipment ID of the communication equipment 101 used as a key at an equipment information search step S5. In the present embodiment, the equipment ID of the communication equipment 101 has been already registered in the database apparatus at step S3. Therefore, the server apparatus 103 reads and acquires, as information made to be associated with the equipment ID of the communication equipment 101, the WAN side IP address and WAN side port number of the router apparatus 104 for connecting the communication equipment 101 to the Internet 110, and waiting and reception capability information indicating that the equipment 101 has the waiting and reception capability from the equipment information database apparatus. Further, the server apparatus 103 similarly searches the equipment information database apparatus, with the equipment ID of the communication equipment 102 added to the connection request packet 204. Therefore, the server apparatus 103 reads and acquires the WAN side IP address and WAN side port number of the router apparatus 105 for connecting the communication equipment 102 to the Internet 110, and waiting and reception capability information indicating that the equipment 102 does not have any waiting and reception capability.

Next, at the waiting and receiving side selection step S6, the server apparatus 103 selects and decides the waiting and receiving side communication equipment at the time of establishing the TCP connection for the later peer-to-peer communication between the communication equipments 101 and 102 based on the waiting and reception capability information thus read and acquired. At the time of selection, the server apparatus 103 selects the communication equipment having the waiting and reception capability as the waiting and receiving side equipment and another communication equipment as the connection side equipment when one of the communication equipments 101 and 102 has the waiting and reception capability. The server apparatus 103 selects arbitrary one of the communication equipments 101 and 102 as the waiting and receiving side communication equipment and another communication equipment as the connection side communication equipment when both of the communication equipments 101 and 102 have the waiting and reception capabilities. In the example of the present embodiment, the communication equipment 101 is selected as the waiting and receiving side communication equipment, and the communication equipment 102 is selected as the connection side communication equipment

The server apparatus 103 starts a communication with the request acceptance side communication equipment 101 via the communication path R1 which is maintained between the server apparatus 103 and the communication equipment 101 and which enables a communication even if the router apparatus 104 is present on the path R1. As procedures for communicating with the communication equipment 101 via the router apparatus 104, the server apparatus 103 generates a session identifier, stores the generated session identifier in an internal memory (not shown) of the server apparatus 103, and transmits a connection notification UDP packet 205, which includes the generated session identifier as a payload, to the communication equipment 101 at step S7. When receiving the connection notification UDP packet 205, the communication equipment 101 transmits a TCP connection request packet 206 to the server apparatus 103. A TCP connection is then established between the communication equipment 101 and the server apparatus 103 on the communication path R1. By using the established TCP connection, the communication equipment 101 transmits a session identifier notification packet 207, which includes the session identifier included in the received connection notification UDP packet 205 as a payload, to the server apparatus 103. When receiving the session identifier notification packet 207 from the communication equipment 101, the server apparatus 103 collates the session identifier generated and stored at step S7 with the session identifier included in the session identifier notification packet 207 and transmitted back from the communication equipment 101 at step S8. After confirming the these session identifiers coincide with each other as results of the collation, the server apparatus 103 decides that the TCP connection established on the communication path R1 by the TCP connection start packet 206 is used for a later communication between the communication equipment 101 and the server apparatus 103. It is noted that details of the procedures from step S7 to step S8 are the same as those disclosed in the Patent Document 1.

By using the TCP connection established on the communication path R1, the server apparatus 103 transmits a connection request transfer packet 208 to the communication equipment 101. The server apparatus 103 then notifies the communication equipment 101 that a connection request from the communication equipment 102 to the communication equipment 101 is present, and that the communication equipment 101 is selected as a waiting and receiving side communication equipment.

Next, the communication equipment 101 that receives the notification that the equipment 101 is selected as the waiting and receiving side communication equipment starts the processing at router apparatus setting step S9A. In the processing at the router apparatus setting step S9A, the communication equipment 101 transmits a static NAT table entry setting request packet 209 to the router apparatus 104. In addition, the communication equipment 101 requests the router apparatus 104 to additionally set entries for the peer-to-peer communication between the communication equipment 102 and the communication equipment 101 via the Internet 110 to the static NAT table of the router apparatus 104 according to a UPnP-IGD protocol. In response to this request, the router apparatus 104 executes a transfer setting of the request to the static NAT table of the router apparatus 104, and additionally sets the entries for the peer-to-peer communication between the communication equipment 102 and the communication equipment 101 via the Internet 110 to the static NAT table at step S9. These entries includes a set of the IP address and WAN side port number of the router apparatus 104 (hereinafter, referred to as "a waiting and receiving address information"), and the private IP address and port number of the communication equipment 101. These entries are set to the static NAT table of the router apparatus 104, and this leads to that the router apparatus 104 can transfer a packet transmitted from the communication equipment 102 and having a destination of the waiting and receiving address information to the communication equipment 101. At the time of executing the processing at the router apparatus setting step S9A, the communication equipment 101 can set the static NAT table of the router apparatus 104 so as to designate the port number of the WAN side port of the router apparatus 104 by using the static NAT table entry setting request packet 209. In addition, the communication equipment 101 can acquire information on the WAN side global IP address of the router apparatus 104. Then it is possible to specify an IP address and a port number available when a packet is transmitted to the communication equipment 101 from another equipment via the Internet (WAN) 110 and the LAN 111. The communication equipment 101 can automatically perform the processing at the router apparatus setting step S9A according to, for example, the UPnP-IGD protocol.

Next, in response to the connection request transfer packet 208, the communication equipment 101 transmits a connection response packet 210 to the server apparatus 103 by using the TCP connection established on the communication path R1. The connection response packet 210 includes the waiting and receiving address information on the communication equipment 101 (namely, information on the WAN side IP address and port number of the router apparatus 104) available as the destination IP address and the destination port number when a packet is directly transmitted from the communication equipment 102 to the communication equipment 101. The server apparatus 103, which receives the connection response packet 210, transmits a connection response transfer packet 211 to the communication equipment 102 by using the TCP connection established on the communication path R2. The server apparatus 103 then notifies the communication equipment 102 that the equipment 102 is selected as the connection side communication equipment, and transfers the waiting and receiving address information on the communication equipment 101 for connecting the equipment 102 to the equipment 101 to the communication equipment 102.

By using the waiting and receiving address information received by the connection response transfer packet 211, the communication equipment 102 transmits a TCP connection request packet 212, in which the WAN side IP address and WAN side port number of the router apparatus 104 are designated as a destination, to the router apparatus 104 not via the server apparatus 103 but via the Internet 110 (e.g., via the communication line 123 shown in Fig: 1). When the transmitted TCP connection request packet 212 arrives at the router apparatus 104, the destination IP address and the destination port number of the TCP connection request packet 212 are rewritten by the NAT function of the router apparatus 104. This is because the IP address and the port number coincident with the destination IP address and the destination port number of the TCP connection request packet 212 are present in the entries of the static NAT table set in the router apparatus 104. The TCP connection request packet 212 is then transferred to the communication equipment 101. Thus, a communication path (hereinafter, referred to as "a communication path R3") that includes the LAN 112, the router apparatus 105, the communication line 123, the router apparatus 104, and the LAN 111, and that establishes the TCP connection between the communication equipment 102 and the communication equipment 101 not via the server apparatus 103 is established.

Through the above-mentioned procedures, the communication path R3 for the peer-to-peer TCP connection is established between the communication equipments 101 and 102. Therefore, at step S10, the data is subsequently arbitrarily transferred between the communication equipment 101 and the communication equipment 102. When the communication is completed, a TCP disconnection request packet 213 is transmitted from an arbitrary side communication equipment to another communication equipment at an arbitrary time.

With a view of ensuring higher security, the communication equipment 101 may start executing a router apparatus setting deletion step S11A after the completion of the communication at step S10. At the router apparatus setting deletion step S11A, the communication equipment 101 transmits a static NAT table entry deletion request packet 214 to the router apparatus 104 to cause the router apparatus 104 to execute the processing at step S11. The entries set in the static NAT table of the router apparatus 104 at step S9 for the peer-to-peer communication between the communication equipment 102 and the communication equipment 101 via the Internet 110 are then deleted.

The communication system that holds the peer-to-peer communication between the communication equipment 101 connected to the Internet 110 via the LAN 111 and the communication equipment 102 connected to the Internet 110 via the LAN 112 through the above-mentioned communication sequence can be provided. During the peer-to-peer communication, the user can connect the communication equipment 102 connected to the LAN 112 and having only the private IP address to a different communication equipment via the Internet (WAN) 110 or connect the communication equipment 102 to the communication equipment 101 connected to the LAN 111 and having only the private IP address without setting any static NAT tables in the router apparatus 104 and 105 or checking the WAN side dynamic IP address.

A plurality of request issuance side communication equipments and a plurality of request acceptance communication equipments may be provided. However, it is noted that a communication is established between one of the request issuance side communication equipments and one of the request acceptance communication equipments.

As will be described later, the waiting and reception capability detection steps S 1 and S2 can be executed when or after the request issuance side communication equipment 102 is desired to establish the peer-to-peer connection with the communication equipment 101. However, as shown in Fig. 2, when it is confirmed that the equipment can wait for and receive a response signal and the confirmation results are registered in the server apparatus 103 before the request issuance side communication equipment 102 is desired to establish the connection with the request acceptance side communication equipment 101, the processing at the waiting and receiving side selection step S6 can be executed instantly by judgment of the server apparatus 103 when the server apparatus 103 receives the connection request packet 204. Therefore, this is provided the preferred embodiment in which the processing time required before the peer-to-peer communication is established between the communication equipments 101 and 102 can be reduced.

In the present embodiment, the communication equipments 101 and 102 are connected to the LANs 111 and 112, and connected to the Internet 110 via the LANs 111 and 112 and the router apparatuses 104 and 105, respectively. Alternatively, even if one of or both of the communication equipments 101 and 102 are directly connected to the Internet 110 and have global IP addresses, respectively, the respective steps in the communication sequence of Fig. 2 can be applied thereto. When the server apparatus 103 detects that one of the communication equipments 101 and 102 is directly connected to the Internet 110 by the waiting and reception capability detection steps S 1 and S2 executed by the respective communication equipments 102 and 101 and by the transmitted packets 201 and 202, the server apparatus 103 judges that the one communication equipment is the communication equipment having the waiting and reception capability. Further, when the communication equipment 101, for example, is directly connected to the Internet 110, the IP address and the port number of the communication equipment 101 can be used per se as the destination IP address and the port number available when the communication equipment 102 transmits a packet to the communication equipment 101 via the Internet 110 instead of using the information on the IP address and the port number of the NAT router apparatus 104 connected to the communication equipment 101 and the static NAT table that includes the entries for registering these pieces of information are registered in the table. In this case, the peer-to-peer communication line can be established with no problem by using the similar communication sequence except that the processings at steps S9A and S11A are not executed, and that each of the connection response packet 210 and the connection response transfer packet 211 includes the IP address and port number of the communication equipment 101.

According to the present embodiment, the server apparatus 103 receives the periodically transmitted equipment information registration UDP packet 201, so as to grasp the connection state of the potentially request acceptance communication equipment 101 (namely, whether or not the communication path is maintained between the server apparatus 103 and the communication equipment 101). Accordingly, provided that a communication with the communication equipment 101 cannot be established, the server apparatus 103 does not execute the step S7 and the following steps, and does not permit any communication but rejects the connection request notified by the connection request packet 204. The configuration for executing this processing is preferable as compared with a configuration in which the server apparatus 103 tries to communicate with the communication equipment 101 but fails, due to a reduction of the load, a high response rate, and the like. The Patent Document 1 discloses that the server apparatus 103 includes a function of grasping the connection state of the communication equipment 101. Needless to say, the function can be used for the reduction of the load, the reduction of the response time in the embodiment according to the present invention.

In the present embodiment, the method disclosed in the Patent Document 1 is used so as to maintain the communication path R1 that enables the communication between the server apparatus 103 and the communication equipment 101 even if the router apparatus is present on the path R1, and to transmit the connection request UDP packet 205 by using this communication path R1. By applying this method to the present embodiment, the waiting and reception capability information on the communication equipments 101 and 102 can be registered by using the equipment information registration UDP packets 201 and 202, respectively. In addition, even the simple NAT router apparatus 104 that does not include any special function can maintain the communication path between the server apparatus 103 and the communication equipment 101 in advance. Thus, the communication system according to the present embodiment can exhibit particularly preferable and characteristic advantageous effects such as the reduction of the load on the server apparatus 103, no need to make special settings to the router apparatus 104 in advance, and an ability of promptly starting the communication. The communication system according to the present embodiment exhibits these advantageous effects because of use of the method disclosed in the Patent Document 1. However, the present embodiment is not limited to the use of the method disclosed in the Patent Document 1 to maintain the communication path R1. Alternatively, the communication equipment 101 may poll the server apparatus 103, a specific port number of the router apparatus 104 may be set to the static NAT table and used for starting a communication from the server apparatus 103, and a special communication function that enables starting a communication with the communication equipment 101 in response to a communication from the Internet side may be included in the router apparatus 104. In short, as long as arbitrary means for enabling starting a communication from the server apparatus 103 to the communication equipment 101 is prepared, the communication system according to the present embodiment can be obviously realized.

In the embodiment described with reference to Fig. 1, the communication equipment 102 transmits the connection request packet 204 to the server apparatus 103. Alternatively, by including equivalent functions in the respective communication equipments 101 and 102, the communication equipment 101 can transmit the connection request packet for requesting a connection with the communication equipment 102. In addition, it is eventually possible to constitute a peer-to-peer network that enables both the communication equipments 101 and 102 to symmetrically transmit and receive the connection request.

The server apparatus 103 and the respective communication equipments 101 and 102 hold communications via the communication paths R1 and R2, and execute connection preparation procedures for establishing the direct connection between the communication equipments 101 and 102. The connection preparation procedures may be started in response to a connection establishment request from the communication equipment 101 or 102, or when the third party indicates the server apparatus 103 to establish the connection between the communication equipments 101 and 102.

In the present embodiment, the server apparatus 103 maintains, in advance, only the communication path R1 between the server apparatus 103 and the communication equipment 101 as the communication path that enables a communication even if the router apparatus is present on the path. Alternatively, the server apparatus 103 may also maintain, in advance, the communication path R2 between the server apparatus 103 and the communication equipment 102 as the communication path that enables a communication even if the router apparatus is present on the path. A processing for maintaining the communication path R2 as the communication path mentioned above in advance is the same as that described for the communication path R1. This configuration is particularly preferable for the following reasons. When the communication equipment 101 transmits a connection request packet as mentioned above, the communication equipment 101 can transmit a connection request transfer packet to the communication equipment 102. Therefore, the peer-to-peer network in which the communication equipments 101 and 102 can symmetrically transmit and receive the connection request can be constituted. The communication system according to the present embodiment exhibits the above-mentioned advantageous effects when each of the communication equipments 101 and 102 is configured to be able to symmetrically serve as the request issuance side communication equipment or the request acceptance communication equipment. However, the embodiment according to the present invention is not limited to the communication system having the symmetric configuration. When the communication equipment 102 is limited to the equipment that always transmits the connection request packet, the communication from the server apparatus 103 to the communication equipment 102 can be held on the TCP connection established by transmitting the TCP connection request packet 203 from the communication equipment 102. Therefore, even if the communication equipment 102 does not maintain any communication path R2 for the communication with the server apparatus 103 in advance, the communication sequence according to the embodiment of the present invention can be obviously realized.

In the present embodiment, the communication equipment 102 is notified of the information indicating that the communication equipment 102 is selected as the connection side communication equipment together with the waiting and receiving address information by the packet 211. However, the notification is not limited to that by the packet 211 but the communication equipment 102 may be notified of the information at an arbitrary time after the waiting and receiving side selection step S6.

If the entries for converting the IP address and the port number of a destination of a packet transmitted to the communication equipment 101 from another communication equipment or the server apparatus 103 via the Internet (WAN) 110 are present in the static NAT table of the router apparatus 104 in advance, the processing at the router apparatus setting step S9A (namely, transmission of static NAT table entry setting request packet 209 from the communication equipment 101 and execution of the processing by the router apparatus 104 at step S9) can be omitted. In this case, the entries present in the static NAT table and information on the IP address and the port number in the entries may be selected by the user in advance and set to the communication equipment 101, or may be automatically detected by the communication equipment 101 by using the UPnP-IGD function.

In the present embodiment, the static NAT table setting is executed by the UPnP-IGD function at the router apparatus setting step. However, the present invention is not limited to the static NAT table setting by the UPnP-IGD standard, but an arbitrary communication method that can generally make an equivalent setting can be used.

Alternatively, router apparatuses each including a firewall function can be employed instead of the NAT router apparatuses 104 and 105 according to the present embodiment, respectively, and the communication equipment 101 can execute a firewall traversal setting instead of the static NAT table setting. When a certain communication equipment connected to an external network of the LAN 111 is not set as an equipment given a connection permission in advance, a communication of the communication equipment connected to the external network with the communication equipment connected to the LAN 111 is no permitted. Instead, a permission setting (or the other necessary setting) is made with respect to the external communication equipment. This leads to that the communication of the communication equipment connected to the external network of the LAN 111 with the specific communication equipment connected to the LAN 111 can be held. In this respect, the NAT and the firewall are equal in characteristics. Therefore, it is obvious that even if the router apparatuses each including the firewall function are employed, the peer-to-peer communication between the communication equipments 101 and 102 can be realized based on the same principle as that of the communication method described so far.

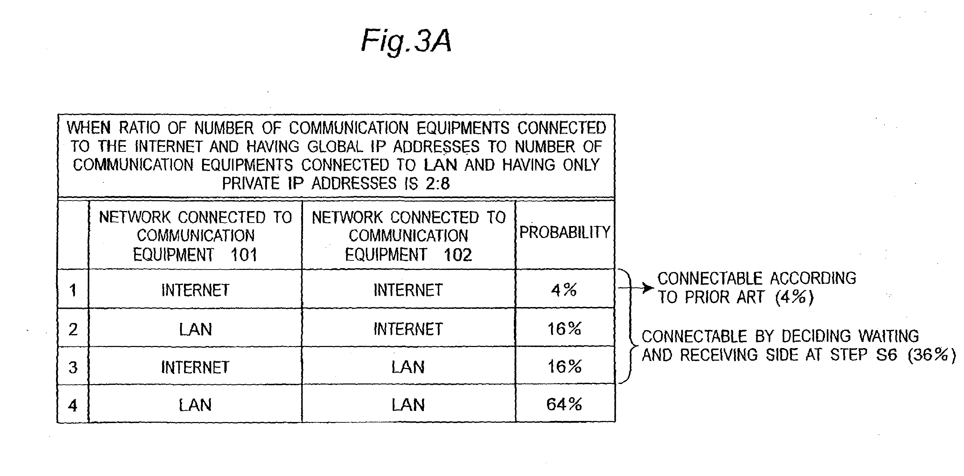

According to the present embodiment, the waiting and receiving side selection step S6 is included. Due to this, as long as the router apparatus of arbitrary one of the request issuance side communication equipment 102 and the request acceptance communication equipment 101 has the waiting and reception capability in a manner similar to that of the communication system in Fig. 1, the peer-to-peer connection can be established between the communication equipments 101 and 102, then raising the probability to establish the peer-to-peer connection. For instance, according to the method disclosed in the Patent Document 2, the peer-to-peer connection can be established only between the two communication equipments each having the global IP address. It is assumed, for example, that 20 % of communication equipments of an arbitrary communication equipment group are connected directly to the Internet 110 not via router apparatuses and have IP addresses, respectively, and that remaining 80 % of the communication equipments are connected to the Internet 110 via NAT router apparatuses and thus have only private IP addresses, respectively, peer-to-peer connections among the communication equipment are tried. In this case, according to the prior arts, a probability of the establishment of the peer-to-peer connection is four % as indicated by a first row in the table shown in Fig. 3A. Therefore, there is no avoiding saying that the connectability is low. The communication system according to the present embodiment can improve the connectability (connection probability) between the two communication equipments mainly by the following two functions.

A first function is as follows. The communication system according to the present embodiment includes the waiting and receiving side selection step S6 for deciding the waiting and receiving side communication equipment and the connection side communication equipment. Then it is possible to decide the waiting and receiving side and the connection side based on their connection establishment capabilities irrespectively of whether or not each of the communication equipments is a connection request side or whether or not each of the communication equipments is an information providing side or an information receiving side. Accordingly, it is possible to establish a communication from the communication equipment that has only the private IP address to the communication equipment that has the global IP address. That is, when one of the two communication equipments has the global IP address, a peer-to-peer communication can be held between the two equipments. When the present waiting and receiving side selection step S6 is applied to, for example, the case of the prior art described in the first row in the table of Fig. 3A, the probability of the peer-to-peer communication is greatly improved to 36 % as indicated in the first to the third rows in the table of Fig. 3A.

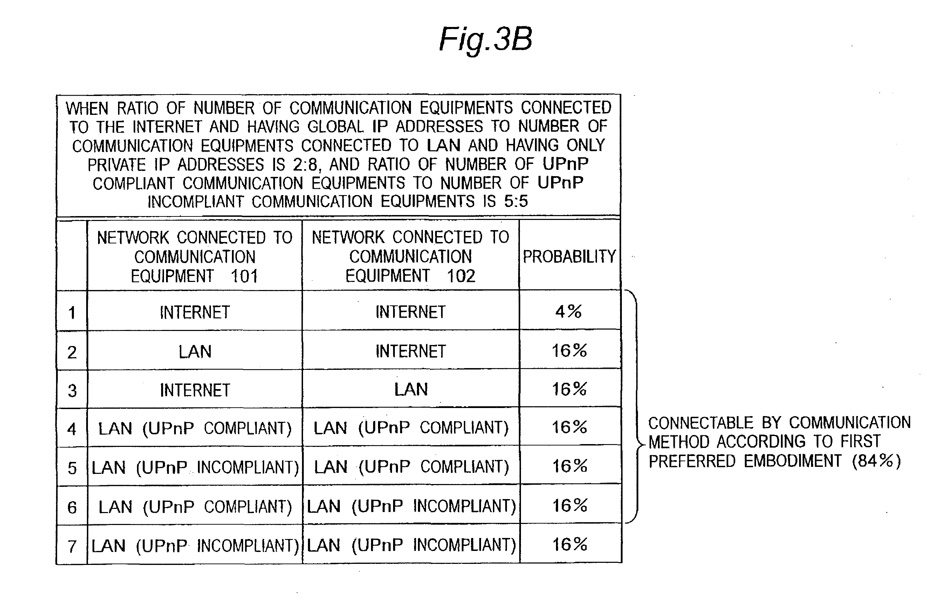

A second function is as follows. The communication system according to the present embodiment provides means for allowing even the communication equipment connected to the LAN and having only the private address to execute a communication with the communication equipment that includes the UPnP-IGD function or the like and that then has the waiting and reception capability via the server apparatus 103, and to wait for and receive the communication with the latter communication by a series of steps including the router apparatus setting step. Therefore, even the two communication equipments each having the private IP address can often establish a communication between them. In addition, there is caused an advantageous effect that the probability of establishing the peer-to-peer connection can be increased. It is assumed, for example, that 50 % of the NAT router apparatuses connecting the communication equipment connected to the LAN to the Internet are UPnP-IG compliant router apparatuses that have waiting and reception capabilities. In this case, due to the effect of the above-mentioned waiting and receiving selection step S6, it is possible to make a total of about 84 % of the communication equipments peer-to-peer connectable as shown in the table of Fig. 3B. Thus, the peer-to-peer connectability can be remarkably improved.

FIRST MODIFIED EMBODIMENT OF FIRST EMBODIMENT

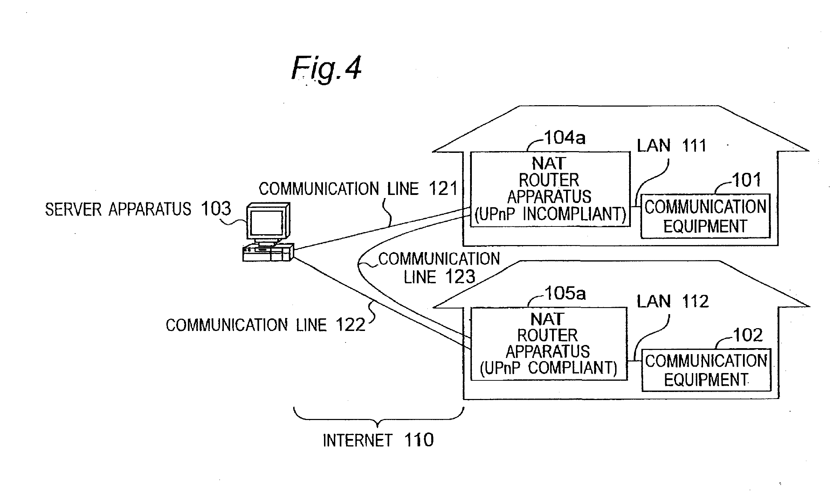

Fig. 4 is a block diagram of a configuration of a communication system in which apparatuses or equipment are connected to each other via networks according to a first modified embodiment of the first embodiment of the present invention. The communication system shown in Fig. 4 is similar in configuration to that of Fig. 1 except for the following respect. The router apparatus including the UPnP-IGD function is changed from the router apparatus 104 of the communication system shown in Fig. 1 to the router apparatus 105. In other words, the communication equipment 101 is connected to the Internet 110 via a router apparatus 104a that does not include any UPnP-IGD function, and the communication equipment 102 is connected to the Internet 110 via the router apparatus 105a that includes the UPnP-IGD function.

In the communication system shown in Fig. 4, the router apparatus 105a includes the UPnP-IGD function. Then it is possible that the communication equipment 102 connected to a LAN 112 can invoke the UPnP-IGD function by being connected to the router apparatus 105a connected to the communication equipment 102 itself, and refer to and set a static NAT table of the router apparatus 105a. Therefore, according to the present embodiment, the communication equipment 102 can set the router apparatus 105a so as to be able to receive a TCP connection request packet that includes a destination of predetermined waiting and receiving address information made to be associated with the communication equipment 102 for establishing a peer-to-peer connection between the communication equipments 101 and 102, and to transfer the packet to the communication equipment 102 when the TCP connection request packet is transmitted from the connection side communication equipment 101.

Fig. 5 is a sequence diagram showing a communication sequence of the communication system shown in Fig. 4. The sequence diagram shown in Fig. 5 is similar to that of Fig. 2 before it is confirmed whether or not each of the communication equipments can wait for and receive a response signal at steps S 1 and S2, and equipment information on each of the communication equipments is registered at steps S3 and S4. In a manner similar to that of the communication sequence of Fig. 2, the server apparatus 103 and the communication equipment 101 maintain, in advance, a communication path (hereinafter, referred to as "a communication path R1" in a manner similar to that of the communication sequence of Fig. 1 for simplicity of description) that includes a communication line 121, a router apparatus 104a, and a LAN 111. The server apparatus 103 and the communication equipment 102 establishes a communication path (hereinafter, referred to as "a communication path R2" in a manner similar to that of the communication sequence of Fig. 1 for simplicity of description) that includes a communication line 122, the router apparatus 105a, and the LAN 112 prior to issuance of a request. However, the communication sequence of Fig. 5 differs from the communication sequence of Fig. 2 in the following respects. The communication equipment 101 acquires waiting and reception capability information indicating that the equipment 101 cannot wait for and receive a response signal. The communication equipment 102 acquires waiting and reception capability information indicating that the equipment 102 can wait for and receive a response signal. These pieces of waiting and reception capability information are registered in an equipment information database apparatus of the server apparatus 103.

In a manner similar to that of the communication sequence of Fig. 2, when the communication equipment 102 is desired to establish a communication with the communication equipment 101 on an occasion of a user's operation or the like, then the communication equipment 102 transmits packets 203 and 204 to the server apparatus 103, and the server apparatus 103 executes processings at steps S5 and S6. However, the communication sequence of Fig. 5 differs from the communication sequence of Fig. 2 in the following respects. At step S5, the server apparatus 103 acquires waiting and reception capability information indicating that the communication equipment 101 cannot wait for and receive a response signal as the waiting and reception capability information on the communication equipment 101, and acquires waiting and reception capability information indicating that the communication equipment 102 can wait for and receive a response signal as the waiting and reception capability information on the communication equipment 102. Therefore, at step S6, the server apparatus 103 selects the communication equipment 102 as a waiting and receiving side communication equipment and the communication equipment 101 as a connection side communication equipment based on the waiting and reception capability information.

Next, the server apparatus 103 establishes a TCP connection on the communication path R1 that is maintained, in advance, between the request acceptance communication equipment 101 and the server apparatus 103. The sequence for establishing the TCP connection (including execution of the processings at steps S7 and S8 and transmission and reception of packets 205, 206, and 207) is similar to that of Fig. 2. When the TCP connection is established between the request acceptance communication equipment 101 and the server apparatus 103, then the server apparatus 103 transmits a connection response packet 221 to the request issuance side communication equipment 102, and then, notifies the communication equipment 102 that the communication equipment 102 has been selected as the waiting and receiving side communication equipment. The transmission of the connection response packet 221 may be done either before step S7 or step S8 as long as the transmission is performed after step S6.

The communication equipment 102 that receives the notification that the communication equipment 102 is selected as the waiting and receiving side communication equipment starts the processing at router apparatus setting step S9B. The processing by the router apparatus setting step S9B is similar to that at the router apparatus setting step S9A executed by the communication equipment 101 in the embodiment shown in Fig. 2. In other words, the processing includes that the communication equipment 101 transmits a static NAT table entry setting request packet 209 to the router apparatus 105a, and this leads to that the router apparatus 105a is requested to additionally set entries for a communication with the communication equipment 102 from the Internet (WAN) 110 side according to the UPnP-IGN protocol. In response to this request, the router apparatus 105a executes the processing at step S9a in a manner similar to that of step S9 shown in Fig. 2. The router apparatus 105a then makes a transfer setting to the static NAT table of the router apparatus 105a, and additionally set entries for a peer-to-peer communication between the communication equipment 102 and 101 via the Internet 110 to the static NAT table. These entries includes a set of an IP address and a WAN side port number of the router apparatus 105a (hereinafter, referred to as "waiting and receiving address information"), and a private IP address and a port number of the communication equipment 102. These entries are set to the static NAT table of the router apparatus 105a, and this leads to that the router apparatus 105a can transfer a packet transmitted from the communication equipment 101 and having a destination of the waiting and receiving address information to the communication equipment 102.

The communication equipment 102 transmits a transmission request packet 222 including the waiting and receiving address information on the communication equipment 102 to the server apparatus 103 by using the TCP connection established on the communication path R2. The server apparatus 103 that receives the transmission request packet 222 transmits a transmission request transfer packet 223 to the communication equipment 101 by using the TCP connection established on the communication path R1. The server apparatus 103 then notifies the communication equipment 101 that the communication equipment 101 is selected as the connection side communication equipment, and transfers the waiting and receiving address information on the communication equipment 102 for connecting the communication equipment 102 to the communication equipment 101 to the communication equipment 101.

By using the waiting and receiving address information of communication equipment 102 received as the connection request transfer packet 223, the communication equipment 101 transmits a TCP connection request packet 212a, in which the WAN side IP address and WAN side port number of the router apparatus 105a are designated as a destination, to the router apparatus 105a not via the server apparatus 103 but via the Internet 110 (e.g., via the communication line 123 shown in Fig. 4). When the transmitted TCP connection request packet 212a arrives at the router apparatus 105a, the destination IP address and the destination port number of the TCP connection request packet 212a are rewritten by the NAT function of the router apparatus 105a. In addition, the TCP connection request packet 212a is transferred to the communication equipment 102. Thus, a communication path R3 that includes the LAN 112, the router apparatus 105a, the communication line 123, the router apparatus 104a, and the LAN 111, arid that establishes the TCP connection between the communication equipment 102 and the communication equipment 101 not via the server apparatus 103 is established.

Through the above-mentioned procedures, the peer-to-peer TCP connection is established on the communication path R3 between the communication equipments 101 and 102. Therefore, at step S10, the data is subsequently arbitrarily transferred between the communication equipment 101 and the communication equipment 102. At an arbitrary time, a TCP disconnection request packet 213 is transmitted from an arbitrary side communication equipment, and then, the communication is completed.

With a view of ensuring higher security, the communication equipment 102 may start a router apparatus setting deletion step S11B similar to step S 11A of Fig. 2 after the completion of the communication at step S10. At the router apparatus setting deletion step S11B, the communication equipment 101 transmits a static NAT table entry deletion request packet 214a to the router apparatus 105a. The router apparatus 105a then deletes the entries set in the static NAT table of the router apparatus 105a for the peer-to-peer communication between the communication equipment 102 and 101 via the Internet 110 at step S11a.

In the present embodiment, the communication equipment 101 is notified of the selection of the communication equipment 101 as the connection side communication equipment together with the waiting and receiving address information by the packet 223. However, the notification is not limited to the notification by the packet 223, but the communication equipment 102 may be notified of the selection at an arbitrary time after the TCP connection is established between the server apparatus 103 and the communication equipment 101.

The communication system that holds the peer-to-peer communication between the communication equipment 101 connected to the Internet 110 via the LAN 111 and the communication equipment 102 connected to the Internet 110 via the LAN 112 in a manner similar to that of the case shown in Fig. 2 through the above-mentioned communication sequence can be provided. In the embodiment shown in Fig. 1, only the communication equipment 101 has the waiting and reception capability. However, it is obvious that the role of the communication equipment 101 is replaced by that of the communication equipment 102 after step S6, and that the peer-to-peer communication line can be similarly established also when only the communication equipment 102 has the waiting and reception capability or both the communication equipments 101 and 102 have the waiting and reception capabilities. In other words, as long as the router apparatus on the side of arbitrary one of the request issuance side communication equipment and the request acceptance side communication equipment includes the UPnP-IGD function, the peer-to-peer connection can be established. Due to this, the load on the server apparatus 104 can be reduced, as compared with the communication system disclosed in the Patent Document 1. Thus, the communication system according to the present embodiment can exhibit conspicuous advantageous effects.

SECOND MODIFIED EMBODIMENT OF FIRST EMBODIMENT

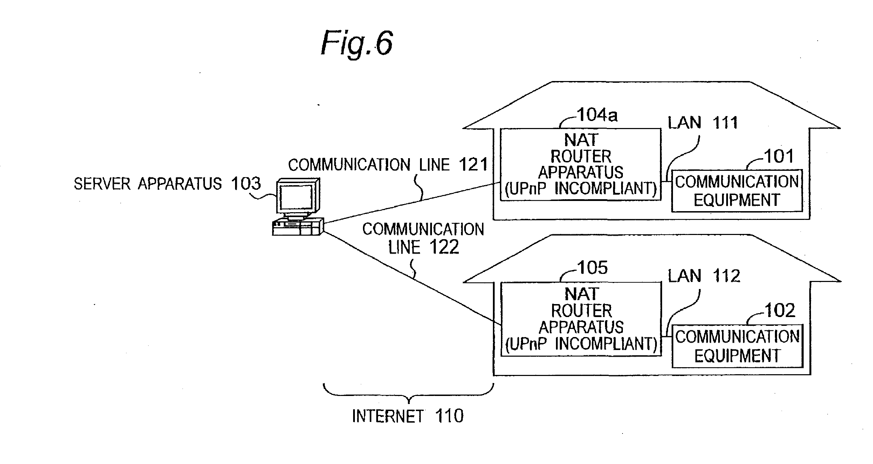

A second modified embodiment of the first embodiment of the present invention will be described with reference to the drawings, mainly describing differences from the embodiment shown in Fig. 1. Fig. 6 is a block diagram of a configuration of a communication system in which apparatuses or equipment are connected to each other via networks according to the second modified embodiment of the first embodiment according to the present invention. The communication system shown in Fig. 6 is similar in configuration to that of Fig. 1 except for the following respects. Both router apparatuses do not include any UPnP-IGD function. In other words, the communication equipment 101 is connected to the Internet 110 via a router apparatus 104a that does not include any UPnP-IGD function. The communication equipment 102 is connected to the Internet 110 via the router apparatus 105 that does not include any UPnP-IGD function.

In the communication system shown in Fig. 6, the function that enables the communication via the server apparatus 103 is added to the configuration, the operations, and the functions according to the embodiment shown in Fig. 1. In the communication system shown in Fig. 6, the communication equipments 101 and 102 are connected to the router apparatuses 104a and 105a that do not include any UPnP-IGD functions, respectively. Due to this, neither the communication equipment 101 nor 102 are selected as a waiting and receiving side communication equipment. Therefore, in the communication system shown in Fig. 6, the data is transferred without using any peer-to-peer communication lines but with using a communication path via the server apparatus 103.

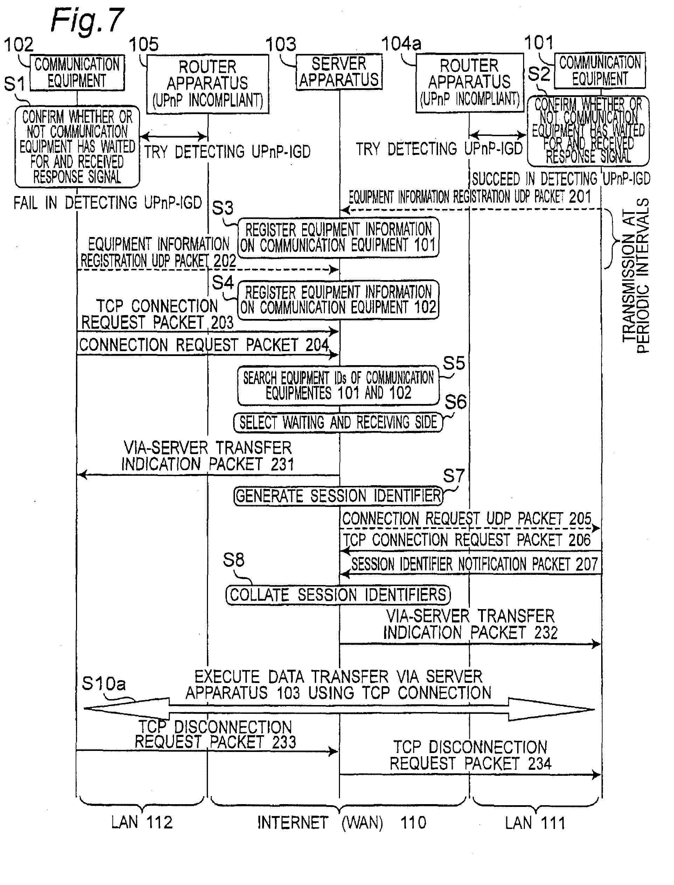

A communication sequence according to the present embodiment will be described with reference to Fig. 7. Fig. 7 is a sequence diagram showing the communication sequence of the communication system of Fig. 6. The sequence diagram shown in Fig. 7 is equal to that of Fig. 2 before it is confirmed whether or not each of the communication equipments can wait for and receive a response signal at steps S1 and S2, and the equipment information on each of the communication equipments is registered at steps S3 and S4. In a manner similar to that of the communication sequence of Fig. 2, the server apparatus 103 and the communication equipment 101 maintain, in advance, a communication path (hereinafter, referred to as "a communication path R1" in a manner similar to that of the communication sequence of Fig. 1 for simplicity of description) that includes a communication line 121, the router apparatus 104a, and a LAN 111. The server apparatus 103 and the communication equipment 102 establish a communication path R2 that includes a communication line 122, the router apparatus 105, and a LAN 112 prior to issuance of a request. However, the communication sequence of Fig. 5 differs from the communication sequence of Fig. 2 in the following respects. Both the communication equipments 101 and 102 acquire waiting and reception capability information indicating that the equipments 101 and 102 cannot wait for and receive a response signal. These pieces of waiting and reception capability information are registered in an equipment information database apparatus of the server apparatus 103.

In a manner similar to that of the communication sequence of Fig. 2, when the communication equipment 102 is desired to establish a communication with the communication equipment 101 on an occasion of a user's operation or the like, then the communication equipment 102 transmits packets 203 and 204 to the server apparatus 103, and the server apparatus 103 executes processings at steps S5 and S6. However, the communication sequence of Fig. 7 differs from the communication sequence of Fig. 2 in the following respects. At step S5, the server apparatus 103 acquires the pieces of waiting and reception capability information indicating that the communication equipments 101 and 102 cannot wait for and receive a response signal as the waiting and reception capability information on the communication equipments 101 and 102, respectively. At step S6, the server apparatus 103 decides to transfer data via the server apparatus 103 since it acquires the pieces of waiting and reception capability information indicating that the communication equipments 101 and 102 cannot wait for and receive the response signal as the waiting and reception capability information on the communication equipments 101 and 102, respectively.

In response to the connection request packet 204, the server apparatus 103 transmits a via-server transfer indication packet 231 to the communication equipment 102 by using a TCP connection established on the communication path R2. At this time, the server apparatus 103 notifies the communication equipment 102 of data transfer via the server apparatus 103.

Next, the server apparatus 103 establishes a TCP connection on the communication path R1 that is maintained, in advance, between the request acceptance communication equipment 101 and the server apparatus 103. A sequence for establishing the TCP connection (including execution of the processings at steps S7 and S8 and transmission and reception of packets 205, 206, and 207) is similar to that of Fig. 2. When the TCP connection is established, then the server apparatus 103 transmits a via-server transfer indication packet 232 to the communication equipment 101, and notifies the communication equipment 101 of data transfer via the server apparatus 103.

Thus, the notification to the respective communication equipments 101 and 102 that data is transferred via the server apparatus 103 between the communication equipment 101 and the communication equipment 102 is completed. Thereafter, at step S10a, the communication equipments 101 and 102 execute a communication via the server apparatus 103 by using the TCP connection established between the communication equipment 102 and the server apparatus 103 by the TCP connection request packet 203 and the TCP connection established between the communication equipment 101 and the server apparatus 103 by the TCP connection request packet 206. By allowing the server apparatus 103 to relay the data, the communication equipment 101 and the communication equipment 102 can communicate arbitrary data with each other. When the communication on the TCP connections at step S10a is finished, then an arbitrary side communication equipment transmits a TCP disconnection request packet 233 to the server apparatus 103 at an arbitrary time, and the server apparatus 103 disconnects the TCP connection with the communication equipment that transmits the TCP disconnection request packet 233. In addition, the server apparatus 103 transmits a TCP disconnection request packet 234 to the other side communication equipment to disconnect the TCP connection with the communication equipment, and this leads to that the data transfer via the server apparatus 103 is finished.

The present embodiment exhibits such an advantageous effect that the communication via the server apparatus 103 can be held if it is necessary to do so in addition to the advantageous effects of the embodiment shown in Fig. 1. Even if the both router apparatuses that connect the respective communication equipments 101 and 102 to the Internet 110 do not include any UPnP-IGD function or the like that indicate that the corresponding communication equipment serves as the waiting and receiving side communication equipment, data can be transferred. Therefore, certainty of establishing the connection and the communication can be improved up to 100 %. Further, as evident from Fig. 3B, the most part of the communications established are held as the peer-to-peer communication shown in Figs. 2 and 5, and this leads to that the load on the server apparatus 103 can be reduced. Thus, the present embodiment can further exhibit conspicuous advantageous effects.

SECOND EMBODIMENT

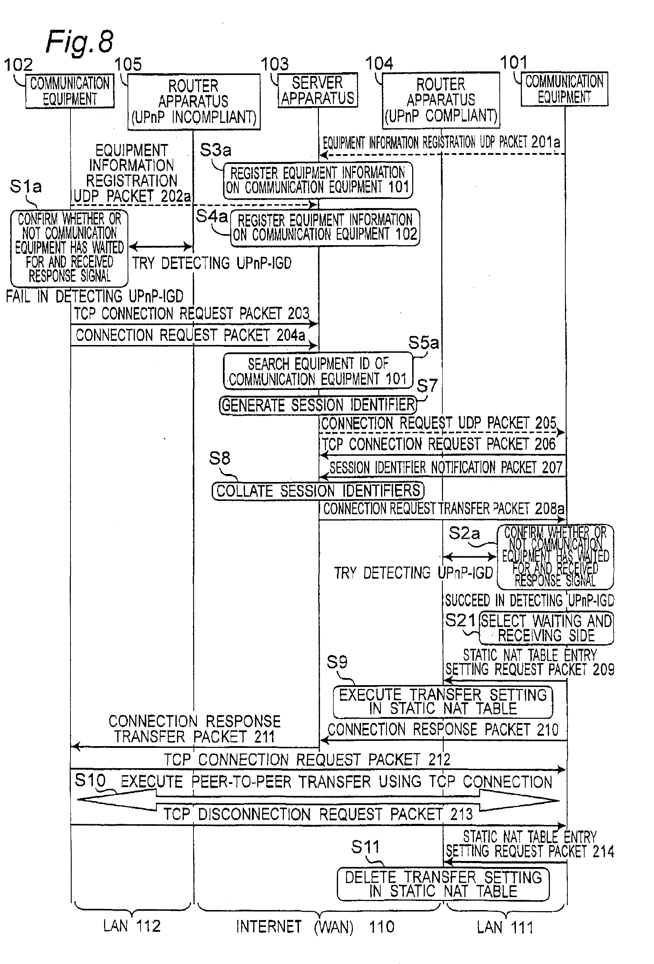

Fig. 8 is a sequence diagram showing a communication sequence according to a second embodiment of the present invention. The present embodiment is characterized in that a communication system similar to that of Fig. 1 operates, it is unnecessary to register, in advance, waiting and reception capability information on each of the communication equipments, and in that the request acceptance side communication equipment 101 decides the waiting and receiving side communication equipment and the connection side communication equipment.

In the first embodiment, the server apparatus 103 selects the waiting and receiving side communication equipment at step S6 shown in Fig. 2. However, the embodiments of the present invention are not limited to the case in which the server apparatus 103 selects the waiting and receiving side communication equipment. One of a request issuance side communication equipment 102 and the request acceptance side communication equipment 101 may select the waiting and receiving side communication equipment and the connection side communication equipment. In short, it suffices that one of the communication equipments 101 and 102 acquires waiting and reception capability information on the equipment and that on another equipment by a communication via the server apparatus 103, the communication equipment having a waiting and reception capability is selected as a waiting and receiving side communication equipment and another equipment is selected as a connection side communication equipment when it is judged that one of the communication equipments 101 and 102 has the waiting and reception capability based on the contents of these pieces of waiting and reception capability information, and arbitrary one of the communication equipments 101 and 102 is selected as the waiting and receiving side communication equipment and another equipment is selected as the connection side communication equipment when it is judged that both of the communication equipments 101 and 102 have the waiting and reception capabilities based on the contents of the waiting and reception capability information according to a communication protocol used in the communication sequence according to the embodiments of the present invention.

A communication sequence according to the present embodiment will be described with reference to Fig. 8. The communication equipment 101 transmits an equipment information registration UDP packet 201a, which includes equipment information on the communication equipment 101 as a payload, to the server apparatus 103 either regularly or periodically at predetermined intervals. In the present embodiment, the equipment information on the communication equipment 101 is the same as the equipment information according to the first embodiment except that the equipment information does not include any waiting and reception capability information on the communication equipment 101. In other words, the equipment information on the first communication equipment includes an equipment ID of the communication equipment 101, and a global IP address and a WAN side port number of a router apparatus 104. The communication equipment 101 acquires information on the global IP address and the WAN side port number of the router apparatus 104 in advance. When receiving the equipment information registration UDP packet 201a, the server apparatus 103 registers a WAN side IP address and WAN side port number of the router apparatus 104 in an equipment information database apparatus (not shown) in the server apparatus 103 with making them be associated with the apparatus ID of the communication equipment 101 at step S3a.

In a manner similar to that of above, the communication equipment 102 transmits an equipment information registration UDP packet 202a, which includes equipment information on the communication equipment 102 as a payload, to the server apparatus 103 either regularly or periodically at predetermined intervals. In a manner similar to that of the equipment information registration UDP packet 201a, the equipment information on the communication equipment 102 includes an equipment ID of the communication equipment 102, and a global IP address and a WAN side port number of the router apparatus 105. The communication equipment 102 acquires information on the global IP address and the WAN side port number of the router apparatus 105 in advance. When receiving the equipment information registration UDP packet 202a, the server apparatus 103 registers a WAN side IP address and WAN side port number of the router apparatus 105 in the equipment information database apparatus in the server apparatus 103 with making them be associated with the apparatus ID of the communication equipment 102 at step S4a.

The communication equipments 101 and 102 transmit the equipment information registration UDP packets 201a and 202a to the server apparatus 103 either regularly or periodically at predetermined intervals, respectively. The communication equipment 101 then maintains a communication path R1 between the communication equipment 101 and the server apparatus 103 in a manner similar to that of the first embodiment. The communication equipment 102 establishes a communication path R2 between the communication equipment 102 and the server apparatus 103 prior to issuance of a request.

It is then assumed that on an occasion of a user's operation or the like, the communication equipment 102 is desired to establish a connection with the communication equipment 101. The communication equipment 102 executes the processing at the waiting and reception capability detection step S1a to confirm whether or not the router apparatus 105 that connects the communication equipment 102 to the Internet 110 includes a UPnP-IGD function. Since the router apparatus 105 is an UPnP incompliant, the communication equipment 102 acquires waiting and reception capability information indicating that the equipment 102 cannot wait for and receive a response signal in a manner similar to that of step S1 in the communication sequence of Fig. 2. Next, the communication equipment 102 transmits a TCP connection request packet 203 to the server apparatus 103, so as to establish a TCP connection with the server apparatus 103 on the communication path R2. By using the TCP connection established on this communication path R2, the communication equipment 102 transmits a connection request packet 204a to the server apparatus 103. The connection request packet 204a notifies the server apparatus 103 of a request to establish a peer-to-peer connection between the communication equipments 101 and 102 and of waiting and reception capability information (which indicates that the communication equipment 102 cannot wait for and receive a response signal in the present embodiment) by designating the equipment ID of the request acceptance side communication equipment 101 as a destination. When receiving this connection request packet 204a, the server apparatus 103 searches equipment information on the respective communication equipments which is registered in the equipment information database apparatus with the equipment ID of the communication equipment 101 as a key at step S5a. In addition, the server apparatus 103 acquires the WAN side IP address and the WAN side port number of the router apparatus 104 that connects the communication equipment 101 to the Internet 110.

Next, the server apparatus 103 establishes a TCP connection on the communication path R1 that is maintained in advance between the server apparatus 103 and the request acceptance side communication equipment 101. A sequence for establishing the TCP connection (including execution of the processings at steps S7 and S8 and transmission and reception of packets 205, 206, and 207) is similar to that of Fig. 2. The server apparatus 103 transmits a connection request transfer packet 208a to the communication equipment 101 by using the TCP connection thus established. The server apparatus 103 then notifies the communication equipment 101 of presence of the connection request from the communication equipment 102 to the communication equipment 101, and of the waiting and reception capability information indicating that the communication equipment 102 cannot wait for and receive a response signal.

The communication equipment 101 that receives the connection request transfer packet 208a executes the processing at the waiting and reception capability detection step S2a to confirm whether or not the router apparatus 104 that connects the communication equipment 101 to the Internet 110 includes a UPnP-IGD function. Since the router apparatus 104 is UPnP compliant, the communication equipment 101 generates and acquires waiting and reception capability information indicating that the communication equipment can wait for and receive a response signal in a manner similar to that of step S2 in the communication sequence of Fig. 2. The communication equipment 101 acquires the waiting and reception capability information on both the communication equipments 101 and 102 by receiving the connection request notification packet 208a and executing the processing at the waiting and reception capability detection step S2a. In this case, the communication equipment 101 executes the processing at the waiting and receiving side selection step S21 similar to the waiting and receiving side selection step S6 of Fig. 2, and decides the waiting and receiving side communication equipment based on the waiting and reception capability information on the respective communication equipments 101 and 102. In the example of the present embodiment, the communication equipment 101 is selected as the waiting and receiving side communication equipment, and the communication equipment 102 is selected as the connection side communication equipment.

If the communication equipment 101 itself is selected as the waiting and receiving side communication equipment, the equipment 101 starts the processing at the router apparatus setting step. The processing at this router apparatus setting step is the same as that at the router apparatus setting step S9A of Fig. 2. Next, in a manner similar to that of the sequence of Fig. 2, the communication equipment 101 transmits a connection response packet 210 to the server apparatus 103 by using the TCP connection established on the communication path R1. The server apparatus 103 transmits a connection response transfer packet 211 to the communication equipment 102 by using the TCP connection established on the communication path R2. The server apparatus 103 then notifies the communication equipment 102 of waiting and receiving address information on the communication equipment 101 (that is, the WAN side IP address and the port number of the router apparatus 104), and of the selection of the communication equipment 102 as the connection side communication equipment.

The communication equipment 102 transfers a TCP connection request packet 212, which includes a destination of the waiting and receiving address information on the communication equipment 101, to the communication equipment 101 not via the server apparatus 103 but via the Internet 110, so as to establish a TCP connection between the communication equipments 101 and 102. The processings after transmission of the packet 212 are the same as those of Fig. 2.

In the present embodiment, the communication equipment 102 is notified of the selection of the communication equipment 102 as the connection side communication equipment together with the waiting and receiving address information by the packets 210 and 211 after the router apparatus setting step. However, the notification is not limited to the notification by the packets 210 and 222 but the communication equipment 102 may be notified of the selection at an arbitrary time after the waiting and receiving side selection step S21 and before the router apparatus selection step.

The communication system that holds the peer-to-peer communication between the communication equipment 101 connected to the Internet 110 via the LAN 111 and the communication equipment 102 connected to the Internet 110 via the LAN 112 through the above-mentioned communication sequence can be provided in a manner similar to that of the first embodiment. Further, according to the present embodiment, in a manner different from that of the first embodiment, it is unnecessary to confirm the waiting and reception capability information on each of the communication equipments and register the information in the server apparatus 103 in advance. In addition, the request acceptance side communication equipment 101 can select the waiting and receiving side communication equipment and the connection side communication equipment. Therefore, the processing amount required of the server apparatus 103 can be reduced.

FIRST. MODIFIED EMBODIMENT OF SECOND EMBODIMENT

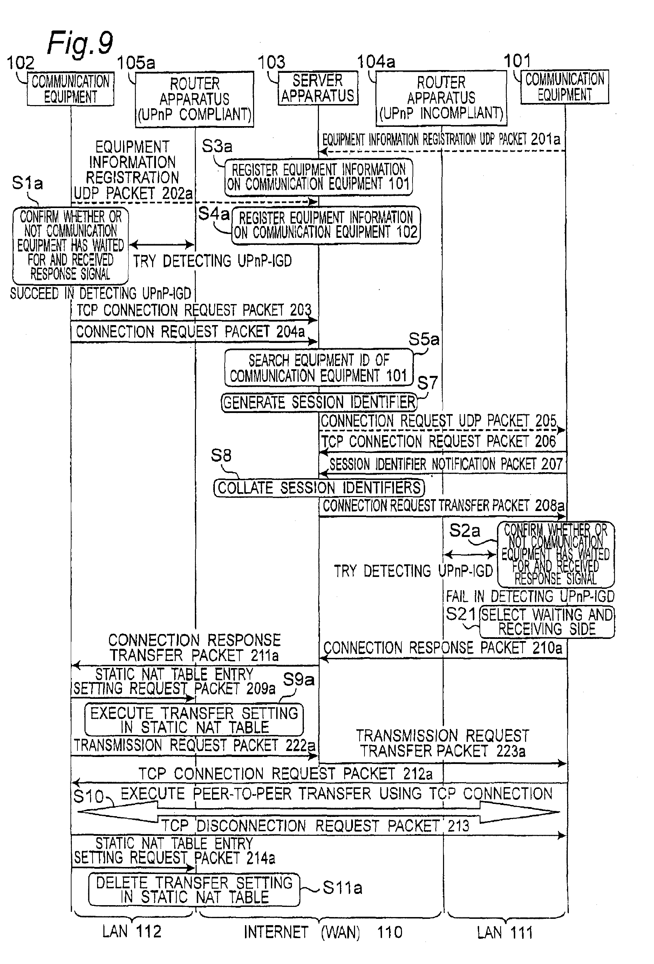

Fig. 9 is a sequence diagram showing a communication sequence according to a first modified embodiment of the second embodiment of the present invention. The communication sequence according to this modified embodiment is characterized in that a communication system similar to that of Fig. 4 operates, it is unnecessary to register, in advance, waiting and reception capability information on each of the communication equipments, and in that the request acceptance side communication equipment 101 decides the waiting and receiving side communication equipment and the connection side communication equipment. In the present embodiment, the communication equipments 101 and 102 and the server apparatus 103 include both of or one of hardware constituent elements and software constituent elements similar to those of Fig. 8.

The communication system will be described with reference to the communication sequence of Fig. 9. In Fig. 9, the processings from start of the communication sequence until decision of the waiting and receiving side communication equipment at step S21 are the same as those of Fig. 8. However, the communication sequence of Fig. 9 differs from that of Fig. 8 in the following respects. The communication equipment 102 acquires the waiting and reception capability information at step S1a, and this waiting and reception capability information is transmitted to the communication equipment 101 via packets 204a and 208a. In addition, the communication equipment 101 acquires the waiting and reception capability information indicating that the equipment 101 cannot wait for and receive a response signal at step S2a. The communication equipment 101 selects the communication equipment 102 as the waiting and receiving side communication equipment and the communication equipment 101 as the connection side communication equipment based on the waiting and reception capability information on the communication equipments 101 and 102 at waiting and receiving side selection step S21.

Next, in order to notify the communication equipment 102 that the communication equipment 102 is selected as the waiting and receiving side communication equipment, the communication equipment 101 transmits a connection response packet 210a to the server apparatus 103 by using a TCP connection established on a communication path R1. The server apparatus 103 transmits a connection response transfer packet 211a to the communication equipment 102 by using a TCP connection established on a communication path R2. The server apparatus 103 then notifies the communication equipment 102 that the communication equipment 102 is selected as the waiting and receiving side communication equipment. When receiving the connection response transfer packet 211a, the communication equipment 102 starts the processing at the router apparatus setting step. The processing at this router apparatus setting step is similar to that at the router apparatus setting step S9B of Fig. 5.

In order to notify the connection side communication equipment 101 of waiting and receiving address information of the communication equipment 102 (that is, a WAN side IP address and a port number of a router apparatus 105a), the communication equipment 102 transmits a transmission request packet 222a including the waiting and receiving address information to the server apparatus by using the TCP connection established on the communication path R2. The server apparatus 103 that has received the transmission request packet 222a transmits a transmission request transfer packet 223a to the communication equipment 101 by using the TCP connection established on the communication path R1. The server apparatus 103 then transfers the waiting and receiving address information on the communication equipment 102 to the communication equipment 101.

The communication equipment 101 transmits a TCP connection request packet 212a, which includes a destination of the waiting and receiving address information on the communication equipment 102, to the communication equipment 102 not via the server apparatus 103 but via the Internet 110, so as to establish a TCP connection between the communication equipments 101 and 102. The processings after transmission of the packet 212a are similar to those of Fig. 5.

The communication system that holds the peer-to-peer communication between the communication equipment 101 connected to the Internet 110 via a LAN 111 and the communication equipment 102 connected to the Internet 110 via a LAN 112 through the above-mentioned communication sequence can be provided in a manner similar to those of the examples shown in Figs. 4 and 5 even if the request issuance side communication equipment 102 has the waiting and reception capability and the request acceptance side communication equipment 101 does not have any waiting and reception capability. In addition, in a manner different from that of the examples shown in Figs. 4 and 5, according to the communication sequence described with reference to Fig. 9, it is unnecessary to confirm the waiting and reception capability information on each of the communication equipments and register the information in the server apparatus 103 in advance. In addition, the request acceptance side communication equipment 101 can select the waiting and receiving side communication equipment and the connection side communication equipment. Therefore, the processing amount required of the server apparatus 103 can be reduced.

SECOND MODIFIED EMBODIMENT OF SECOND EMBODIMENT

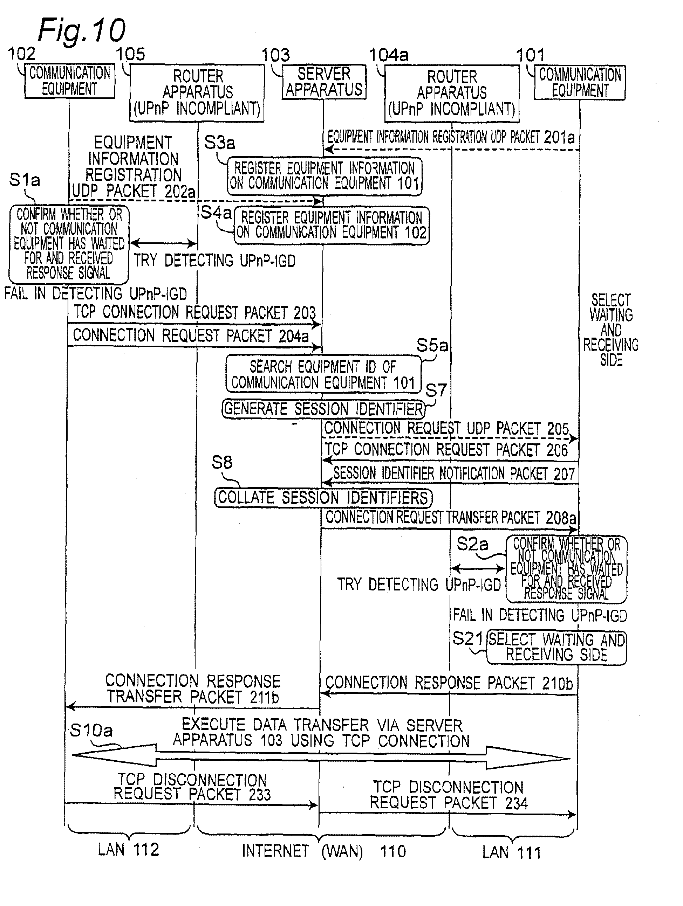

Fig. 10 is a sequence diagram showing a communication sequence of a communication according to a second modified embodiment of the second embodiment of the present invention. The communication sequence according to this modified embodiment is characterized in that a communication system similar to that of Fig. 6 operates, it is unnecessary to register, in advance, waiting and reception capability information on each of the communication equipments, and in that a request acceptance side communication equipment 101 decides the waiting and receiving side communication equipment and the connection side communication equipment. In the present embodiment, the communication equipments 101 and 102 and the server apparatus 103 include both of or one of hardware constituent elements and software constituent elements similar to those of Fig. 8.

The communication system will be described with reference to the communication sequence of Fig. 10. In Fig. 10, the processings from start of the communication sequence until decision of the waiting and receiving side communication equipment at step S21 are the same as those of Fig. 8. However, the communication sequence of Fig. 10 differs from that of Fig. 8 in that the communication equipment 101 acquires the waiting and reception capability information indicating at step S2a. At waiting and receiving side selection step S21, the communication equipment 101 decides to transfer data via the server apparatus 103 since the communication equipment 101 acquires the waiting and reception capability information on both the communication equipments 101 and 102 indicating that each of the communication equipments 101 and 102 cannot wait for and receive a response signal. Next, the communication equipment 101 transmits a connection response packet 210b to the server apparatus 103 by using a TCP connection established on a communication path R1. At that time, the communication equipment 101 notifies the server apparatus 103 that data is transferred via the server apparatus 103. When receiving the connection response packet 210b, the server apparatus 103 transmits a connection response transfer packet 211b to the communication equipment 102 by using a TCP connection established on a communication path R2. The server apparatus 103 then notifies the communication equipment 102 that data is transferred via the server apparatus 103.

Thereafter, at step S10a, a communication via the server apparatus 103 is executed by using the TCP connection established on the communication path R2 between the communication equipment 102 and the server apparatus 103 by a TCP connection request packet 203, and the TCP connection established on the communication path R1 between the communication equipment 101 and the server apparatus 103 by a TCP connection request packet 206. By allowing the server apparatus 103 to relay data between the communication equipment 101 and the communication equipment 102, the communication equipment 101 and the communication equipment 102 can communicate arbitrary data with each other. In order to finish the communication on the TCP connections at step S10a, the processing similar to that in the communication sequence of Fig. 7 is executed.

The communication system that holds the communication between via the server apparatus 103 the communication equipment 101 connected to the Internet 110 via a LAN 111 and the communication equipment 102 connected to the Internet 110 via a LAN 112 through the above-mentioned communication sequence can be provided. In addition, in a manner different from that of the communication sequence of Fig. 7, according to the communication sequence described with reference to Fig. 10, it is unnecessary to confirm the waiting and reception capability information on each of the communication equipments and register the information in the server apparatus 103 in advance. In addition, the request acceptance side communication equipment 101 can select the waiting and receiving side communication equipment and the connection side communication equipment.

THIRD EMBODIMENT

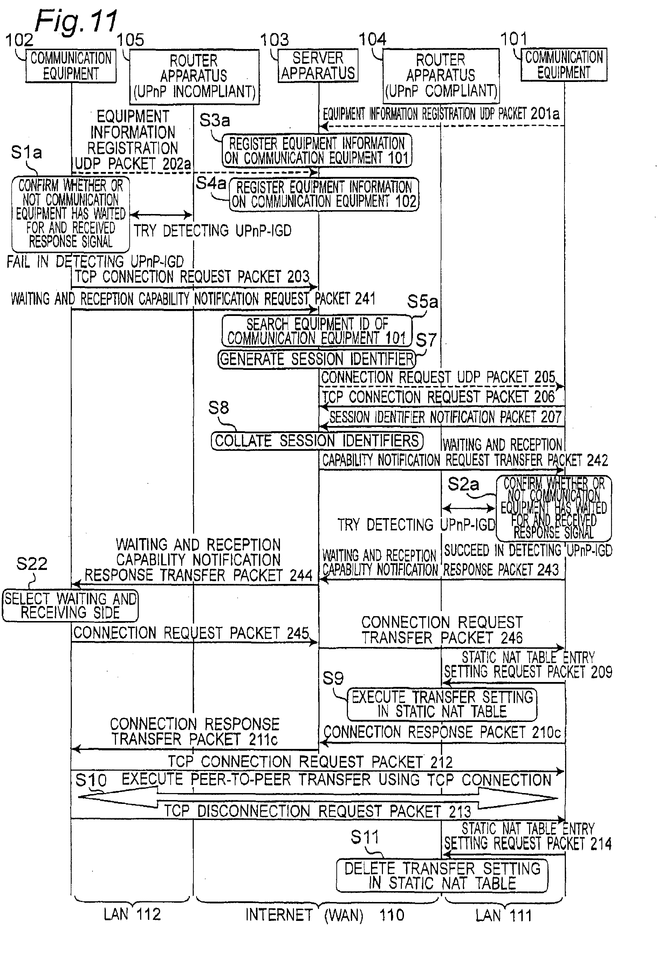

Fig. 11 is a sequence diagram showing a communication sequence according to the third embodiment of the present invention. The present embodiment is characterized in that that a communication system similar to that of Fig. 1 operates, it is unnecessary to register, in advance, waiting and reception capability information on each of the communication equipments, and in that the request issuance side communication equipment 102 decides the waiting and receiving side communication equipment and the connection side communication equipment.

The communication system will be described with reference to the communication sequence of Fig. 11. In a manner similar to that of Fig. 8, communication equipments 101 and 102 register equipment information on the communication equipments 101 and 102 in an equipment information database apparatus (not shown) of the server apparatus 103 by using equipment information registration UDP packets 201a and 202a, respectively. In addition, the communication equipment 101 maintains a communication path R1 between the communication equipment 101 and the server apparatus 103. The communication equipment 102 establishes a communication path R2 between the communication equipment 102 and the server apparatus 103 prior to issuance of a request.

If the communication equipment 102 is desired to establish a connection with the communication equipment 101 on an occasion of a user's operation or the like, then the communication equipment 102 executes the processing at the waiting and reception capability detection step S 1 a to generate and acquire waiting and reception capability information on the equipment 102 in a manner similar to that of Fig. 8. The communication equipment 102 transmits a TCP connection request packet 203 to the server apparatus 103, so as to establish a TCP connection between the communication equipment 102 and the server apparatus 103 on the communication path R2. By using the TCP connection established on the communication path R2, the communication equipment 102 transmits a waiting and reception capability notification request packet 241 to the server apparatus 103. The waiting and reception capability notification request packet 241 is a packet that designates an equipment ID of the communication equipment 101 as a destination, and that requests the server apparatus 103 to transmit waiting and reception capability information on the communication equipment 101 to the communication equipment 102.

When receiving the waiting and reception capability notification request packet 241, the server apparatus 103 executes the processing at step S5a in a manner similar to that of Fig. 8. The server apparatus 103 then acquires a WAN side IP address and a WAN side port number of a router apparatus 104a that connects the communication equipment 101 to the Internet 110 from the equipment information database apparatus. Next, by executing processings at steps S7 and S8 and transmitting or receiving packets 205, 206, and 207, the server apparatus 103 establishes a TCP connection on the communication path R1 between the server apparatus 103 and the request acceptance side communication equipment 101. The server apparatus 103 then transmits a waiting and reception capability notification request transfer packet 242 to the communication equipment 101 by using the TCP connection thus established. The server apparatus 103 then notifies the communication equipment 101 of presence of a connection request from the communication equipment 102 to the communication equipment 101, and requests the communication equipment 101 to transmit the waiting and reception capability information on the communication equipment 101 to the communication equipment 102.

In a manner similar to that of Fig. 8, the communication equipment 101 that has received the waiting and reception capability notification request transfer packet 242 executes the processing at the waiting and reception capability detection step S2a, and acquires the waiting and reception capability information on the communication equipment 101. The communication equipment 101 transmits a waiting and reception capability notification response packet 243 to the server apparatus 103 by using the TCP connection established on the communication path R1. The communication equipment 101 then notifies the server apparatus 103 of the waiting and reception capability information on the communication equipment 101. The server apparatus 103 transmits a waiting and reception capability notification response transfer packet 244 to the communication equipment 102 by using the TCP connection established on the communication path R2. The server apparatus 103 then transfers the waiting and reception capability information on the communication equipment 101 to the communication equipment 102.

The communication equipment 102 acquires the waiting and reception capability information on both the communication equipments 101 and 102 by executing the processing at the waiting and reception capability detection step S1a and receiving the waiting and reception capability notification response transfer packet 244. The communication equipment 102 then executes the processing at waiting and receiving side selection step S22 similar to the waiting and receiving side selection step S6 shown in Fig. 2, then deciding the waiting and receiving side communication equipment based on the waiting and reception capability information on both the communication equipments 101 and 102. In the example shown in Fig. 11, the communication equipment 101 is selected as the waiting and receiving side communication equipment and the communication equipment 102 is selected as the connection side communication equipment.

Next, in order to notify the communication equipment 101 that the communication equipment 101 is selected as the waiting and receiving side communication equipment, the communication equipment 102 transmits a connection request packet 245 in which the equipment ID of the communication equipment 101 is designated as a destination to the server apparatus 103 by using the TCP connection established on the communication path R2. The server apparatus 103 transmits a connection request transfer packet 246 to the communication equipment 101 by using the TCP connection established on the communication path R1. The server apparatus 103 then notifies the communication equipment 101 that the communication equipment 101 is selected as the waiting and receiving side communication equipment. When receiving the connection request transfer packet 246, the communication equipment 101 starts the processing at the router apparatus setting step. The processing at this router apparatus setting step is the same as that at the router apparatus setting step S9A show in Fig. 2.

The communication equipment 101 transmits a connection response packet 210c including waiting and receiving address information on the communication equipment 101 (that is, a WAN side IP address and a port number of the router apparatus 104) to the server apparatus 103 by using the TCP connection established on the communication path R1. The server apparatus 103 that has received the connection response packet 210 transmits a connection response transfer packet 211 c to the communication equipment 102 by using the TCP connection established on the communication path R2. The server apparatus 103 then transfers the waiting and receiving address information on the communication equipment 101 to the communication equipment 102.

The communication equipment 102 transmits a TCP connection request packet 212 having a destination of the waiting and receiving address information on the communication equipment 101 to the communication equipment 101 not via the server apparatus 103 but via the Internet 110, so as to establish a TCP connection between the communication equipments 101 and 102. The processings after transmission of the packet 212 are the same as those of Fig. 2.

The communication system that holds the peer-to-peer communication between the communication equipment 101 connected to the Internet 110 via a LAN 111 and the communication equipment 102 connected to the Internet 110 via a LAN 112 through the above-mentioned communication sequence can be provided in a manner similar to that of the first embodiment. Further, according to the communication sequence described with reference to Fig. 11, in a manner different from that of the first embodiment, it is unnecessary to confirm the waiting and reception capability information on each of the communication equipments and register the information in the server apparatus 103 in advance. The request issuance side communication equipment 102 can select the waiting and receiving side communication equipment and the connection side communication equipment. Therefore, the processing amount required of the server apparatus 103 can be reduced.

FIRST MODIFIED EMBODIMENT OF THIRD EMBODIMENT

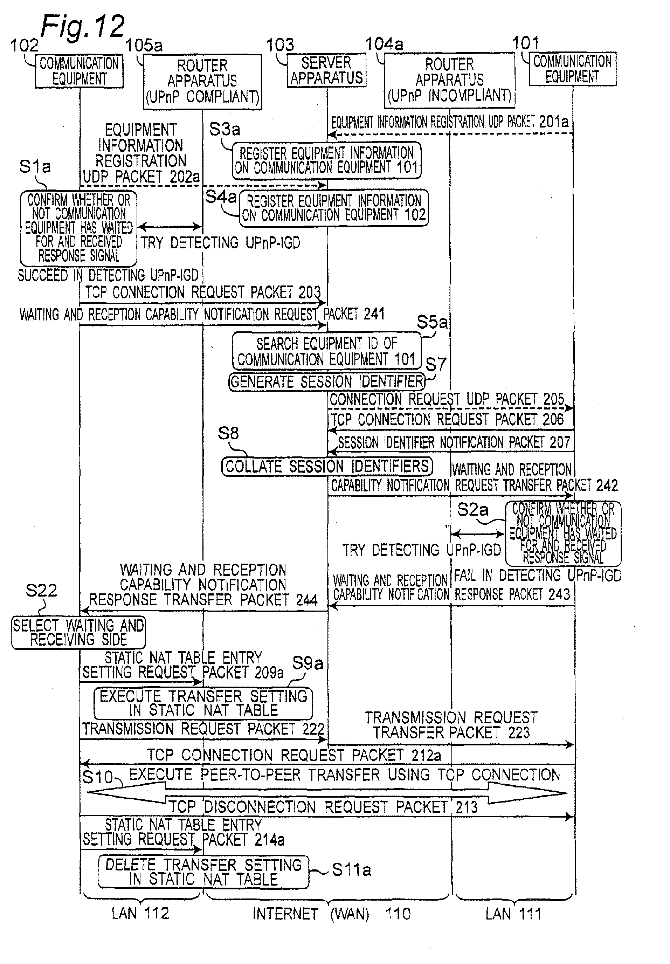

Fig. 12 is a sequence diagram showing a communication sequence according to the first modified embodiment of the third embodiment of the present invention. The communication sequence according to this modified embodiment is characterized in that a communication system similar to that of Fig. 4 operates, it is unnecessary to register, in advance, waiting and reception capability information on each of the communication equipments, and in that the request issuance side communication equipment 102 decides the waiting and receiving side communication equipment and the connection side communication equipment. In the present embodiment, communication equipments 101 and 102 and the server apparatus 103 include both of or one of hardware constituent elements and software constituent elements similar to those of Fig. 11.

The communication system will be described with reference to the communication sequence of Fig. 12. In Fig. 12, the processings from start of the communication sequence until decision of the waiting and receiving side communication equipment at step S22 are the same as those of Fig. 11. However, the communication sequence of Fig. 12 differs from that of Fig. 11 in the following respects. The communication equipment 102 acquires waiting and reception capability information at step S1a. At step S2a, the communication equipment 101 acquires the waiting and reception capability information indicating that the equipment 101 cannot wait for and receive a response signal. The present waiting and reception capability information is transmitted to the communication equipment 102 via packets 243 and 244. The communication equipment 102 selects the communication equipment 102 as the waiting and receiving side communication equipment and the communication equipment 101 as the connection side communication equipment based on the waiting and reception capability information on the communication equipments 101 and 102 at the waiting and receiving side selection step S22.

Next, the communication equipment 102 starts the processing at the router apparatus setting step. The processing by the present router apparatus setting step is the same as that at the router apparatus setting step S9B executed by the communication equipment 102 in the example of the communication sequence of Fig. 5. The processings after the router apparatus setting step are also the same as those of Fig. 5.

The communication system that holds the peer-to-peer communication between the communication equipment 101 connected to the Internet 110 via a LAN 111 and the communication equipment 102 connected to the Internet 110 via a LAN 112 through the above-mentioned communication sequence can be provided, in a manner similar to that of the examples as described with reference to Figs. 4 and 5, even if the request issuance side communication equipment 102 has the waiting and reception capability and the request acceptance side communication equipment 101 does not have any waiting and reception capability. In addition, according to the communication sequence described with reference to Fig. 12, in a manner different from that of the examples shown in Figs. 4 and 5, it is unnecessary to confirm the waiting and reception capability information on each of the communication equipments and register the information in the server apparatus 103 in advance. In addition, the request issuance side communication equipment 102 can select the waiting and receiving side communication equipment and the connection side communication equipment. Therefore, the processing amount required of the server apparatus 103 can be reduced.

SECOND MODIFIED EMBODIMENT OF THIRD EMBODIMENT

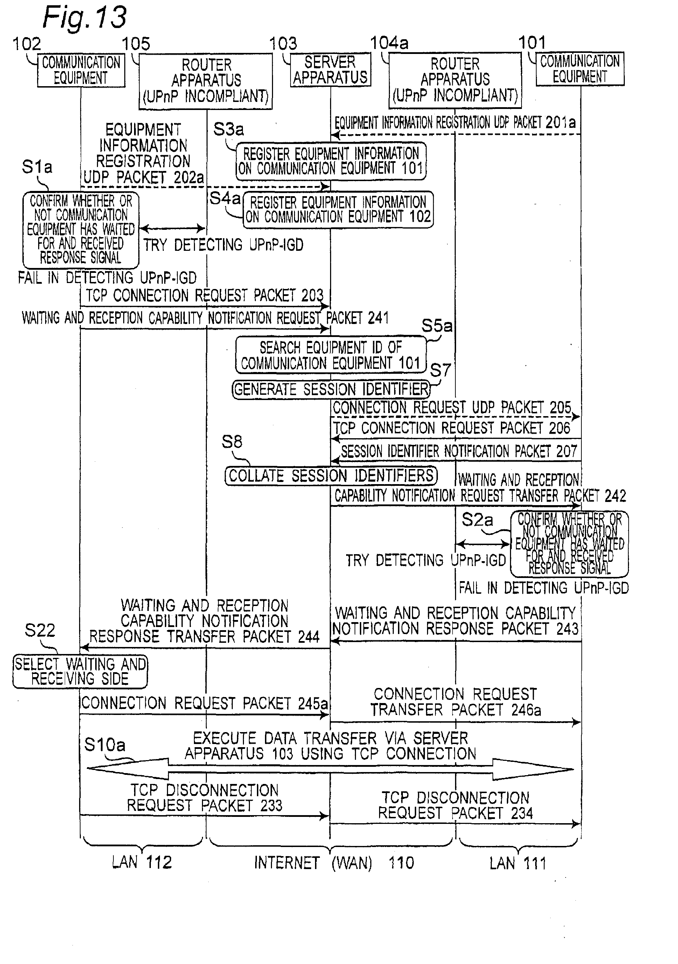

Fig. 13 is a sequence diagram showing a communication sequence according to a second modified embodiment of the third embodiment of the present invention. The communication sequence according to this modified embodiment is characterized in that a communication system similar to that of Fig. 6 operates, it is unnecessary to register, in advance, waiting and reception capability information on each of the communication equipments, and in that the request issuance side communication equipment 102 decides the waiting and receiving side communication equipment and the connection side communication equipment. In the present embodiment, the communication equipments 101 and 102 and the server apparatus 103 include both of or one of hardware constituent elements and software constituent elements similar to those of Fig. 11.

The communication system will be described with reference to the communication sequence of Fig. 13. In Fig. 13, the processings from start of the communication sequence until decision of the waiting and receiving side communication equipment at step S22 are the same as those of Fig. 11. However, the communication sequence of Fig. 12 differs from that of Fig. 11 in the following respects. At step S2a, the communication equipment 101 acquires waiting and reception capability information on the equipment 101 indicating that the equipment 101 cannot wait for and receive a response signal. The present waiting and reception capability information is transmitted to the communication equipment 102 via packets 243 and 244. At waiting and receiving side selection step S22, the communication equipment 101 decides to transfer data via the server apparatus 103 since the equipment 101 acquires the waiting and reception capability information on the communication equipments 101 and 102 indicating that each of the communication equipments 101 and 102 cannot wait for and receive a response signal.

The communication equipment 102 transmits a connection request packet 245a to the server apparatus 103 by using a TCP connection established on a communication path R2. At that time, the communication equipment 102 notifies the server apparatus 103 that data is transferred via the server apparatus 103. When receiving the connection request packet 245a, the server apparatus 103 transmits a connection request transfer packet 246a to the communication equipment 101 by using a TCP connection established on a communication path R1. The server apparatus 103 then notifies the communication equipment 101 that data is transferred via the server apparatus 103.

Thereafter, at step S10a, a communication via the server apparatus 103 is executed by using the TCP connection established on the communication path R2 between the communication equipment 102 and the server apparatus 103 by a TCP connection request packet 203, and the TCP connection established on the communication path R1 between the communication equipment 101 and the server apparatus 103 by a TCP connection request packet 206. By allowing the server apparatus 103 to relay data between the communication equipments 101 and 102, the communication equipments 101 and 102 can communicate arbitrary data with each other. In order to finish the communication on the TCP connections at step S10a, the processing similar to that in the communication sequence of Fig. 7 is executed.

The communication system that holds the communication via the server apparatus 103 between the communication equipment 101 connected to the Internet 110 via a LAN 111 and the communication equipment 102 connected to the Internet 110 via a LAN 112 through the above-mentioned communication sequence can be provided in a manner similar to that of the first embodiment. In addition, in a manner different from that of the communication sequence of Fig. 7, according to the communication sequence described with reference to Fig. 13, it is unnecessary to confirm the waiting and reception capability information on each of the communication equipments and register the information in the server apparatus 103 in advance. In addition, the request issuance side communication equipment 102 can select the waiting and receiving side communication equipment and the connection side communication equipment.

FOURTH EMBODIMENT

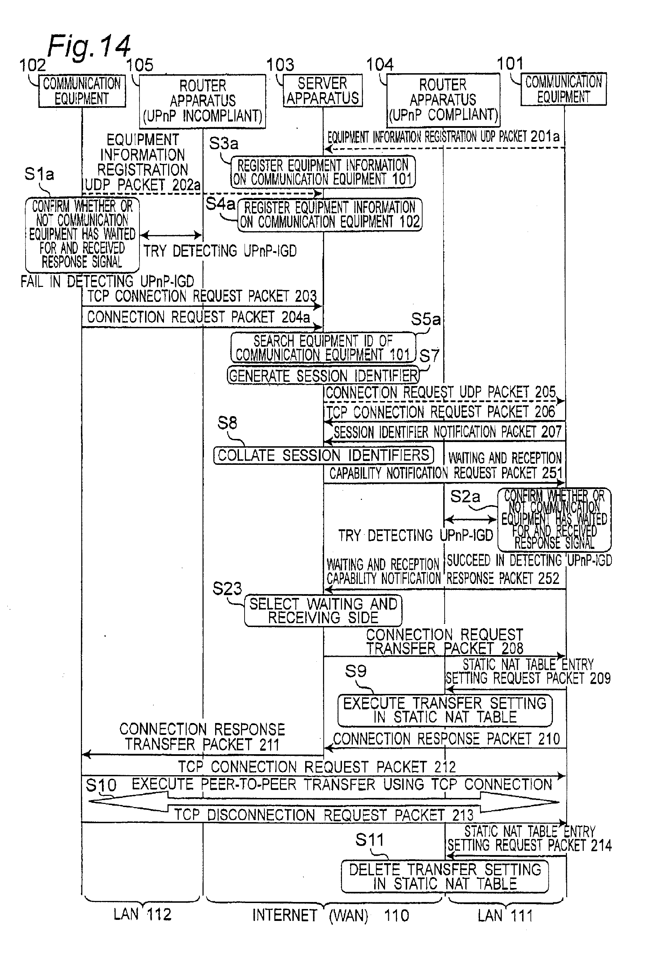

Fig. 14 is a sequence diagram showing a communication sequence according to the fourth embodiment of the present invention. The present embodiment is characterized in that a communication system similar to that of Fig. 1 operates, and in that it is unnecessary to execute a step of registering, in advance, waiting and reception capability information on each of the communication equipments. In the communication system according to the present embodiment, in a manner similar to that of the first embodiment, the server apparatus 103 decides the waiting and receiving side communication equipment and the connection side communication equipment.

The communication system will be described hereinafter with reference to the communication sequence of Fig. 14. In a manner similar to that of Fig. 8, the communication equipments 101 and 102 register equipment information on the respective communication equipments 101 and 102 in the equipment information database apparatus of the server apparatus 103 by using equipment information registration UDP packets 201a and 202a, respectively. In addition, the communication equipment 101 maintains a communication path R1 between the communication equipment 101 and the server apparatus 103. The communication equipment 102 establishes the communication path R2 between the communication equipment 102 and the server apparatus 103 prior to issuance of a request. In a manner different from that of the first embodiment, the equipment information database apparatus (not shown) of the server apparatus 103 stores waiting and reception capability information on the communication equipments 101 and 102 at a later time separately from information on WAN side IP addresses and WAN side port numbers of router apparatuses 104 and 105 (as will be described later).

If the communication equipment 102 is desired to establish a connection with the communication equipment 101 on an occasion of a user's operation or the like, the communication equipment 102 executes the processing at waiting and reception capability detection step S1a in a manner similar to that of Fig. 8. Next, the communication equipment 102 transmits a TCP connection request packet 203 to the server apparatus 103, so as to establish a TCP connection with the server apparatus 103 on the communication path R2. By using the TCP connection established on the communication path R2, the communication equipment 102 transmits a connection request packet 204a to the server apparatus 103.

When receiving the present connection request packet 204a, the server apparatus 103 executes the processing at step S5a in a manner similar to that of Fig. 8. The server apparatus 103 then acquires the WAN side IP address and the WAN side port number of the router apparatus 104a that connects the communication equipment 101 to the Internet 110 from the equipment information database apparatus. The server apparatus 103 then establishes a TCP connection on the communication path R1 between the server apparatus 103 and the request acceptance side connection equipment 101 by execution of the processings at steps S7 and S8 and transmission or reception of the packets 205, 206, and 207. The server apparatus 103 transmits the waiting and reception capability notification request packet 251 to the communication equipment 101 by using the TCP connection thus established, and then requesting the communication equipment 101 to transmit waiting and reception capability information on the communication equipment 101 to the server apparatus 103.

The communication equipment 101 that has received the waiting and reception capability notification request packet 251 executes the processing at waiting and reception capability detection step S2a in a manner similar to that of Fig. 8, and then acquiring the waiting and reception capability information on the communication equipment 101. The communication equipment 101 then transmits a waiting and reception capability notification response packet 252 to the server apparatus 103 by using the TCP connection established on the communication path R1, and then notifying the server apparatus 103 of the waiting and reception capability information on the communication equipment 101.

At waiting and receiving side selection step S23 similar to the waiting and receiving side selection step S6 shown in Fig. 2, the server apparatus 103 decides the waiting and receiving side communication equipment based on the waiting and reception capability information on the communication equipments 101 and 102. In the example of Fig. 14, the communication equipment 101 is selected as the waiting and receiving side communication equipment and the communication equipment 102 is selected as the connection side communication equipment. The server apparatus 103 then transmits a connection request transfer packet 208 to the communication equipment 101 by using the TCP connection established on the communication path R1, and then notifying the communication equipment 101 that the communication equipment 101 is selected as the waiting and receiving side communication equipment.

When receiving the connection request transfer packet 208, the communication equipment 101 starts the processing at the router apparatus setting step. The processing at the present router apparatus setting step is the same as that at the router apparatus setting step S9A shown in Fig. 2. Next, in a manner similar to that of Fig. 2, the communication equipment 101 transmits a connection response packet 210 to the server apparatus 103 by using the TCP connection established on the communication path R1. The server apparatus 103 transmits a connection response transfer packet 211 to the communication equipment 102 by using the TCP connection established on the communication path R2. The server apparatus 103 then notifies the communication equipment 102 of waiting and receiving address information on the communication equipment 101 (that is, the WAN side IP address and port number of the router apparatus 104), and notifies the communication equipment 102 that the communication equipment 102 is selected as the connection side communication equipment.

The communication equipment 102 transmits a TCP connection request packet 212 that includes a destination of the waiting and receiving address information of the communication equipment 101 to the communication equipment 101 not via the server apparatus 103 but via the Internet 110, so as to establish a TCP connection between the communication equipments 101 and 102. The processings after transmission of the packet 212 are the same as those of Fig. 2.

In the present embodiment, the communication equipment 102 is notified of information indicating that the communication equipment 102 is selected as the connection side communication equipment together with the waiting and receiving address information by the packet 211. However, the notification is not limited to that by the packet 211 but the communication equipment 102 may be notified of the information at an arbitrary time after the waiting and receiving side selection step S23.

The communication system that holds the peer-to-peer communication between the communication equipment 101 connected to the Internet 110 via a LAN 111 and the communication equipment 102 connected to the Internet 110 via a LAN 112 through the above-mentioned communication sequence can be provided in a manner similar to that of the first embodiment. Further, according to the present embodiment, in a manner different from that of the first embodiment, it is unnecessary to confirm the waiting and reception capability information on each of the communication equipments and register the information in the server apparatus 103 in advance.

FIRST MODIFIED EMBODIMENT OF FOURTH EMBODIMENT

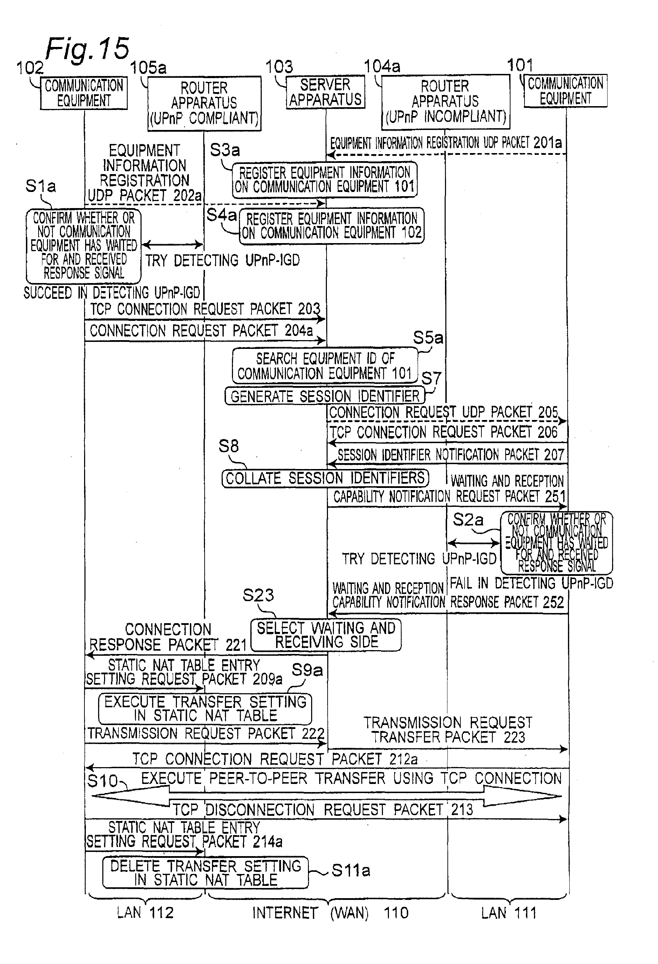

Fig. 15 is a sequence diagram showing a communication sequence according to the first modified embodiment of the fourth embodiment of the present invention. The communication sequence according to this modified embodiment is characterized in that a communication system similar to that of Fig. 4 operates, it is unnecessary to register, in advance, waiting and reception capability information on each of the communication equipments. In the communication system according to this example, the server apparatus 103 decides the waiting and receiving side communication equipment and the connection side communication equipment. In the present embodiment, communication equipments 101 and 102 and the server apparatus 103 include both of or one of hardware constituent elements and software constituent elements similar to those of Fig. 14.

The communication system will be described with reference to the communication sequence of Fig. 15. In Fig. 15, the processings from start of the communication sequence until decision of the waiting and receiving side communication equipment at step S23 are the same as those of Fig. 14. However, the communication sequence of Fig. 15 differs from that of Fig. 14 in the following respects. The communication equipment 102 acquires waiting and reception capability information at step S1a, and this waiting and reception capability information is transmitted to the server apparatus 103 via a packet 204a. At step S2a, the communication equipment 101 acquires the waiting and reception capability information indicating that the communication equipment 101 cannot wait for and receive a response signal, and this waiting and reception capability information is transmitted to the server apparatus 103 via a packet 252. The server apparatus 103 selects the communication equipment 102 as the waiting and receiving side communication equipment and the communication equipment 101 as the connection side communication equipment based on the waiting and reception capability information on the communication equipments 101 and 102 at the waiting and receiving side selection step S23.

Next, the server apparatus 103 transmits a connection response packet 221 to the communication equipment 102 by using a TCP connection established on a communication path R2, and then notifying the communication equipment 102 that the communication equipment 102 is selected as the waiting and receiving side communication equipment. When receiving the connection response packet 221, the communication equipment 102 starts the processing at the router apparatus setting step. The processing at this router apparatus setting step is the same as that at the router apparatus setting step S9B shown in Fig. 5. The processings after the router apparatus setting step are the same as those of Fig. 5.

The communication system that holds a peer-to-peer communication between the communication equipment 101 connected to the Internet 110 via a LAN 111 and the communication equipment 102 connected to the Internet 110 via a LAN 112 through the above-mentioned communication sequence can be provided, in a manner similar to that of the examples as described with reference to Figs. 4 and 5, even if the request issuance side communication equipment 102 has the waiting and reception capability and the request acceptance side communication equipment 101 does not have any waiting and reception capability. In addition, according to the communication sequence described with reference to Fig. 15, in a manner different from that of the first embodiment, it is unnecessary to confirm the waiting and reception capability information on each of the communication equipments and register the information in the server apparatus 103 in advance.


SECOND MODIFIED EMBODIMENT OF FOURTH EMBODIMENT


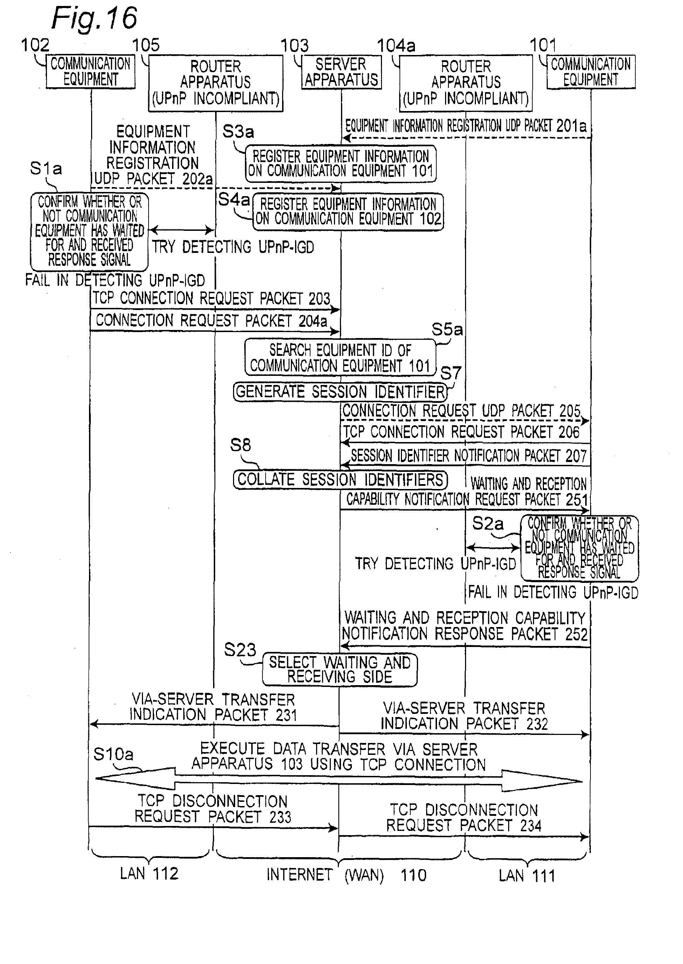

Fig. 16 is a sequence diagram showing a communication sequence of a communication according to a second modified embodiment of the fourth embodiment of the present invention. The communication sequence according to this modified embodiment is characterized in that a communication system similar to that of Fig. 6 operates, and in that it is unnecessary to register, in advance, the waiting and reception capability information on each of the communication equipments. In the communication system according to this example, the server apparatus 103 decides the waiting and receiving side communication equipment and the connection side communication equipment. In the present embodiment, the communication equipments 101 and 102 and the server apparatus 103 include both of or one of hardware constituent elements and software constituent elements similar to those of Fig. 14.

The communication system will be described with reference to the communication sequence of Fig. 16. In Fig. 16, the processings from start of the communication sequence until decision of the waiting and receiving side communication equipment at step S23 are the same as those of Fig. 11. However, the communication sequence of Fig. 16 differs from that of Fig. 14 in the following respects. At step S2a, the communication equipment 101 acquires waiting and reception capability information on the equipment 101 indicating that the equipment 101 cannot wait for and receive a response signal. The present waiting and reception capability information is transmitted to the server apparatus 103 via a packet 252. At the waiting and receiving side selection step S23, the server apparatus 103 decides to transfer data via the server apparatus 103 since the server apparatus 103 acquires the waiting and reception capability information on the communication equipments 101 and 102 indicating that each of the communication equipments 101 and 102 cannot wait for and receive a response signal. The server apparatus 103 transmits a via-server transfer indication packet 231 to the communication equipment 102 by using a TCP connection established on a communication path R2. In addition, the server apparatus 103 transmits a via-server transfer indication packet 232 to the communication equipment 101 by using a TCP connection established on a communication path R1. The server apparatus 103 then notifies the communication equipments 101 and 102 that data is transferred via the server apparatus 103.

Thereafter, at step S10a, a communication via the server apparatus 103 is executed by using the TCP connection established on the communication path R2 between the communication equipment 102 and the server apparatus 103 by a TCP connection request packet 203, and the TCP connection established on the communication path R1 between the communication equipment 101 and the server apparatus 103 by a TCP connection request packet 206. By allowing the server apparatus 103 to relay data between the communication equipments 101 and 102, the communication equipments 101 and 102 can communicate arbitrary data with each other. In order to finish the communication on the TCP connections at step S10a, the same processing as that in the communication sequence of Fig. 7 is executed.

The communication system that holds the communication via the server apparatus 103 between the communication equipment 101 connected to the Internet 110 via a LAN 111 and the communication equipment 102 connected to the Internet 110 via a LAN 112 through the above-mentioned communication sequence can be provided. In addition, in a manner different from that of the communication sequence of Fig. 7, according to the communication sequence described with reference to Fig. 16, it is unnecessary to confirm the waiting and reception capability information on each of the communication equipments and register the information in the server apparatus 103 in advance.

FIFTH EMBODIMENT

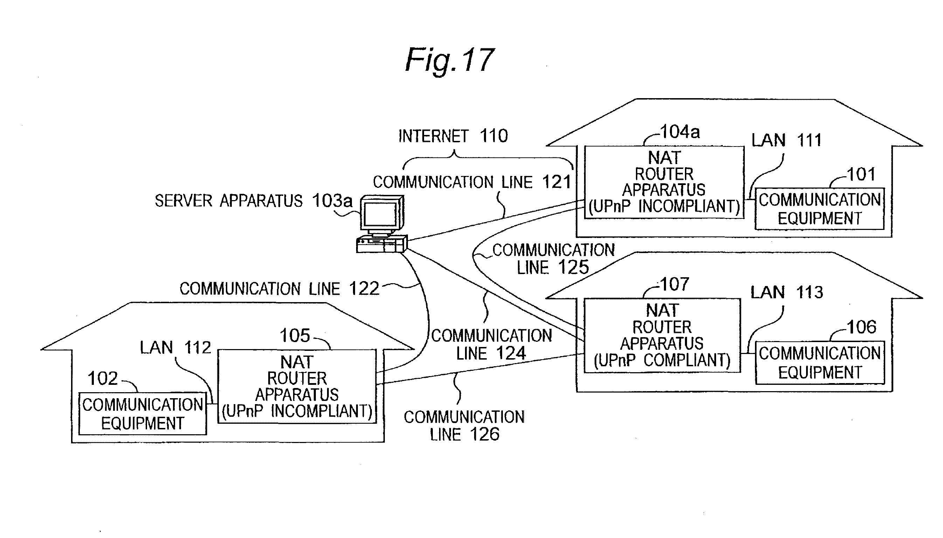

A communication system according to the fifth embodiment of the present invention will be described hereinafter with reference to the drawings. Fig. 17 is a block diagram of a configuration of the communication system in which equipment or apparatuses are connected to each other via networks according to the present embodiment. The communication system according to the present embodiment is configured as follows. The communication system includes a communication equipment 106 and a NAT router apparatus (hereinafter, referred to as "a router apparatus") 107 connected to the communication equipment 106 via a LAN 113 and operating as a UPnP-IGD in addition to the constituent elements of the communication equipment shown in Fig. 6. In addition, the communication system includes the server apparatus 103a in place of the server apparatus 103 of Fig. 6. A WAN side port of a router apparatus 104 is connected to the Internet (WAN) 110. Therefore, the communication equipment 106 is connected to the Internet (WAN) 110 via the LAN 113 and the router apparatus 107. In addition, the server apparatus 103 is connected to router apparatuses 104, 105, and 107 via the Internet (WAN) 110. In the example of Fig. 17, the server apparatus 103a is also connected to a WAN side port of the router apparatus 104a via a communication line 124, another WAN side port of the router apparatus 107 is connected to the WAN side port of the router apparatus 104a by a communication line 125, and another WAN side port of the router apparatus 107 is connected to a WAN side port of the router apparatus 105 by a communication line 126. In this communication network, the router apparatus 107 has a global IP address whereas the communication equipment 106 has a private IP address.

In the present embodiment, the communication system includes at least one other communication equipment 106 in addition to a request issuance side communication equipment 102 and a request acceptance side communication equipment 101. Then it is possible to establish a connection between the communication equipments 101 and 102 by using the communication equipment 106 having a waiting and reception capability as a relay communication equipment even if a direct peer-to-peer connection cannot be established between the communication equipments 101 and 102 since neither communication equipment 101 nor 102 have waiting and reception capabilities.

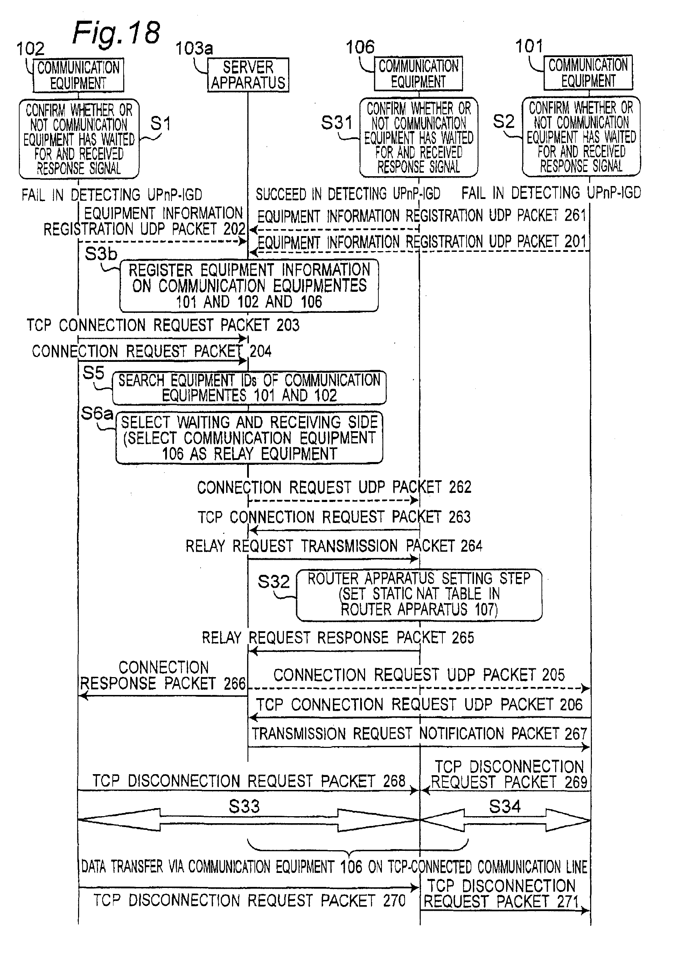

The communication system according to the present embodiment is characterized as follows. When the server apparatus 103a receives a signal for requesting establishment of the peer-to-peer connection between the request issuance side communication equipment 102 and the request acceptance side communication equipment 101 from the communication equipment 102, the server apparatus 103a executes the following waiting and receiving side selection step (See step S6a of Fig. 18). When waiting and receiving side selection step, the server apparatus 103a selects one of the communication equipment as a waiting and receiving side communication equipment and another communication equipment as a connection side communication equipment in a manner similar to that of the case as described with reference to the communication sequence of Fig. 2 or 5 when it is judged that one or both of the communication equipments 101 and 102 have the waiting and reception capabilities based on waiting and reception capability information stored in an equipment information database apparatus (not shown) of the server apparatus 103a. However, when it is judged that neither of the communication equipment have the waiting and reception capabilities, then the server apparatus 103 selects both the communication equipments 101 and 102 as connection side communication equipment, and the processing at the relay equipment selection step is executed. This leads to that the server apparatus 103a selects, as the waiting and receiving side communication equipment, any one communication equipment judged to have the waiting and reception capability out of the communication equipment connected to the server apparatus 103a based on the waiting and reception capability information stored in the equipment information database apparatus of the server apparatus 103a. In this case, the communication equipments 101 and 102 execute data communications by using the selected waiting and receiving side communication equipment as the relay communication equipment.

The server apparatus 103 and the communication equipment 106 maintain, in advance, a communication path (hereinafter, referred to as "a communication path R4") that includes the communication line 124, the router apparatus 107, and the LAN 113 and that can ensure a communication even if the NAT router apparatus 107 is present on the path. In order to maintain the communication path R4, it is particularly suitable to use the communication method disclosed in the Patent Document 1 in a manner similar to that of the communication path R1 since a communication can be instantly started from the server apparatus 103 and a server load is light. Therefore, the present invention will be described on this assumption in the present specification. Alternatively, the other method for maintaining the communication path R4 by allowing the communication equipment 106 to poll the server apparatus 103 may be used.

A communication sequence according to the present embodiment will be described with reference to Fig. 18. Fig. 18 is a sequence diagram showing the communication sequence of the communication system shown in Fig. 17. For simplicity of description, the router apparatuses 104a, 105, and 107 are not shown in the communication sequence of Fig. 18.

The communication equipments 101, 102, and 106 confirm whether or not the router apparatuses 104a, 105, and 107, which connect the respective communication equipments 101, 102, and 106 to the Internet 110, include UPnP-IGD functions at waiting and reception capability detection steps S2, S1, and S3 which are executed prior to a peer-to-peer communication between the communication equipments either regularly or periodically at predetermined intervals. In other words, the communication equipment 102 judges whether or not the communication equipment 102 has a waiting and reception capability of waiting for and receiving a signal transmitted from the communication equipment 101 via the Internet 110 at step S1. The communication equipment 101 judges whether or not the communication equipment 101 has a waiting and reception capability of waiting for and receiving a signal transmitted from the communication equipment 102 via the Internet 110 at step S2. The communication equipment 106 judges whether or not the communication equipment 106 has a waiting and reception capability of waiting for and receiving a signal transmitted from the communication equipments 101 and 102 via the Internet 110 at step S6. In a manner similar to that of the first embodiment, it is assumed herein that to confirm whether or not the equipment has the waiting and reception capability is to try to detect the UPnP-IGD connected to the communication equipment 101, 102 or 106, namely, in order to confirm whether or not the router apparatus 104a, 105 or 107 includes the UPnP-IGD function. This can be executed by the Discovery protocol specified in the UPnP protocol and a series of sequences subsequent to the Discovery protocol. In the present embodiment, since the router apparatus 107 is a UPnP compliant equipment (namely, includes the UPnP-IGD function), the communication equipment 106 succeeds in detecting the UPnP-IGD. In addition, since the router apparatuses 104a and 105 are UPnP incompliant equipment, the communication equipments 101 and 102 fail in detecting the UPnP-IGD. Accordingly, the communication equipment 106 acquires the waiting and reception capability information indicating that the equipment 106 can wait for and receive a response signal. The communication equipments 101 and 102 acquire the waiting and reception capability information indicating that the equipments 101 and 102 cannot wait for and receive a response signal. Further, the communication equipments 101, 102, and 106 acquire information on global IP addresses and WAN side port numbers of the router apparatus 104a, 105, and 107, respectively, in a manner similar to that of the first embodiment.

Next, the communication equipments 101, 102, and 106 transmit equipment information registration UDP packets 201, 202, and 206 for registering equipment information on the respective communication equipments 101, 102, and 106 in the equipment information database apparatus (not shown) of the server apparatus 103a to the server apparatus 103a. In a manner similar to that of the equipment information registration UDP packet according to the first embodiment, these packets 201, 202, and 206 include the equipment information on the respective communication equipments, and function to maintain the communication paths R1 and R4 between the server apparatus 103 and the respective communication equipments 101 and 106. The server apparatus 103 that has received the packets 202, 204, and 206 registers the WAN side IP address and port number of the corresponding router apparatuses and waiting and reception capability information on the respective communication equipments in the equipment information database apparatus within the server apparatus 103 with making them be associated with equipment IDs of the respective communication equipments at step S3b similar to steps S3 and S4 shown in Fig. 2.

The waiting and reception capability detection steps S1, S2, and S31 may be executed after the request issuance side communication equipment 102 transmits a connection request packet 204 to the server apparatus 103. However, as shown in Fig. 18, it is preferable that detections are carried out and the waiting and reception capability information is registered in the equipment information database apparatus of the server apparatus 103 before the request issuance side communication equipment 102 is desired to establish a connection with the request acceptance side communication equipment 101. This is because then the processing at the waiting and receiving side selection step S6a (which will be described later) can be instantly executed by judgment of the server apparatus 103 when the server apparatus 103 receives the connection request packet 204. This can reduce the processing time until the communication is established between the communication equipments 101 and 102.

It is assumed that on an occasion of a user's operation or the like, the communication equipment 102 is desired to establish a connection with the communication equipment 101. In this case, in a manner similar to that of Fig. 2, the communication equipment 102 establishes a communication path R2 prior to issuance of a request. In other words, the communication equipment 102 transmits a TCP connection request packet 203 to the server apparatus 103, so as to establish a TCP connection between the communication equipment 102 and the server apparatus 103 on the communication path R2. By using the TCP connection thus established, the communication equipment 102 transmits the connection request packet 204 to the server apparatus 103. When receiving the connection request packet 204, the server apparatus 103 executes the processing at an equipment information search step S5. The server apparatus 103 then acquires the WAN side IP address and the WAN side port number of the router apparatus 104a and the waiting and reception capability information indicating that the communication equipment 101 cannot wait for and receive a response signal in relation to the communication equipment 101. In addition, the server apparatus 103 acquires the WAN side IP address and the WAN side port number of the router apparatus 105a and the waiting and reception capability information indicating that the communication equipment 102 cannot wait for and receive a response signal in relation to the communication equipment 102.

The server apparatus 103 then executes the processing at step S6a, and then deciding the waiting and receiving side communication equipment based on the waiting and reception capability information. At this time, when one of the communication equipments 101 and 102 has the waiting and reception capability, the server apparatus 103 selects the communication equipment having the waiting and reception capability as the waiting and receiving side communication equipment and another communication equipment as the connection side communication equipment. When both of the communication equipment 101 and communication equipment 102 have the waiting and reception capabilities, the server apparatus 103 selects arbitrary one of the communication equipments 101 and 102 as the waiting and receiving side communication equipment and another communication equipment as the connection side communication equipment. In these cases, the processings similar to those of Fig. 2 or 5 are executed, so as to establish the peer-to-peer connection between the communication equipments 101 and 102. When neither the communication equipment 101 nor 102 have the waiting and reception capabilities, the server apparatus 103 selects both the communication equipments as connection side communication equipment. In the example of Fig. 18, the server apparatus 103 selects both the communication equipments 101 and 102 as connection side communication equipment according to the information registered in the equipment information database apparatus at step S3b. When both of the communication equipments 101 and 102 are selected as the connection side communication equipment, the peer-to-peer connection cannot be established as it is. Therefore, the server apparatus 103 further selects a relay communication equipment. The relay communication equipment is a waiting and receiving side communication equipment that receives a TCP connection request packet 268 (which will be described later) from the request issuance side communication equipment 102 for establishing a peer-to-peer connection with the communication equipment 102, and that receives a TCP connection request packet 269 (which will be described later) from the request acceptance side communication equipment 101 for establishing a peer-to-peer connection with the communication equipment 101. In the present embodiment, the communication equipment that satisfies conditions that the communication equipment has the waiting and reception capability and that the communication equipment includes sufficient bands and processing capability at present and can be used for relay, and the like is selected from among the communication equipments connected to the server apparatus 103 (namely, the communication equipment the equipment information on which is registered in the equipment information database apparatus, and which maintains the communication path with the server apparatus 103). In the present embodiment, the communication equipment 106 is selected as the relay communication equipment.

In the present embodiment, the server apparatus 103 selects the waiting and receiving side communication equipment and the connection side communication equipment. However, the embodiment of the present invention is not limited to the case in which the server apparatus 103 selects them but either the request issuance side communication equipment or request acceptance side communication equipment may make the judgment. In short, it suffices that a communication protocol used in the communication sequence according to the embodiment of the present invention is the following communication protocol. One of the communication equipments 101 and 102 acquires the waiting and reception capability information on the communication equipment, and also acquires the waiting and reception capability information on another communication and that on another communication equipment that may possibly serve as the relay communication equipment by the communication via the server apparatus 103. Based on the contents of the acquired information, when one of the communication equipments 101 and 102 has the waiting and reception capability, then the communication equipment having the waiting and reception capability is selected as the waiting and receiving side communication equipment, and another communication equipment is selected as the connection side communication equipment. When both of the communication equipments 101 and 102 have the waiting and reception capabilities, then arbitrary one of the communication equipments 101 and 102 is selected as the waiting and receiving side communication equipment, and another communication equipment is selected as the connection side communication equipment. When neither the communication equipment 101 nor 102 has the waiting and reception capabilities, then both of the communication equipments 101 and 102 are selected as the connection side communication equipment, and another communication equipment having the waiting and reception capability is selected as the relay communication equipment.

Next, the server apparatus 103 starts communicating with the communication equipment 106 selected as the relay communication equipment via the communication path R4 that can ensure a communication even if the NAT router apparatus 107 is present on the path. The procedures for establishing a communication between the server apparatus 103 and the communication equipment 106 over the NAT router apparatus 107 are as follows. The server apparatus 103 transmits a connection request UDP packet 262 to the communication equipment 106. The communication equipment 106 transmits a TCP connection request packet 263 to the server apparatus 103 in response to the packet 262. A TCP connection is then established between the server apparatus 103 and the communication equipment 106. The server apparatus 103 may use a session identifier when establishing the TCP connection with the communication equipment 106. In this case, the server apparatus 103 generates the session identifier, stores the generated session identifier in an internal memory (not shown) of the server apparatus 103, and transmits the connection notification UDP packet 262 including the generated session identifier as a payload to the communication equipment 106. The communication equipment 106 transmits the session identifier received by the connection notification UDP packet 262 to the server apparatus 103 by using the TCP connection established by the TCP connection request packet 263. The server apparatus 103 collates the stored session identifier with the session identifier sent back from the communication equipment 106, and establishes the TCP connection on the communication path R4 between the communication equipment 106 and the server apparatus 103. Details of the procedures since the session identifier is generated until the TCP connection is established can be made the same as execution of the processings at steps S7 and S8 and the transmission or the reception of the packets 205, 206, and 207 shown in Fig. 2.

By using the TCP connection established between the communication equipment 106 and the server apparatus 103, the server apparatus 103 transmits a relay request transmission packet 264 to the communication equipment 106. The server apparatus 103 then notifies the communication equipment 106 that the communication equipment 106 is selected as the relay communication equipment.

The communication equipment 106 that has received the notification that the communication equipment 106 is selected as the relay communication equipment executes the processing at the router apparatus setting step S32. The processing at the router apparatus setting step S32 is the same as that at the router apparatus setting step S9A shown in Fig. 2. The communication equipment 106 transmits a static NAT table entry setting request packet to the router apparatus 107 to request the router apparatus 107 to additionally set entries for allowing each of the communication equipments 101 and 102 to communicate with the communication equipment 106 via the Internet (WAN) 110 to the static NAT table of the router apparatus 107 according to a UPnP-IGD protocol. In response to this request, the router apparatus 104a executes a transfer setting of the request to a static NAT table of the router apparatus 107, and additionally sets entries for a peer-to-peer communication between the communication equipment 101 and 106 via the Internet 110, and those for a peer-to-peer communication between the communication equipment 102 and 106 via the Internet 110 to the static NAT table. The router apparatus 107 can then transfer each packet transmitted from the communication equipments 101 and 102 to the communication equipment 106. At the time of this setting, the communication equipment 106 can designate port numbers of two WAN side ports of the router apparatus 107 and acquire the WAN side IP address of the router apparatus 107. Then it is possible to specify two pieces of waiting and receiving address information available when the two communication equipments 101 and 102 transmit packets to the communication equipment 106 via the Internet 110, the router apparatus 107, and the LAN 113. In other words, it is possible to specify a set of the IP address and WAN side first port number Port1 of the router apparatus 107 (hereinafter, referred to as "request issuance side waiting and receiving address information), and a set of the IP address and WAN side second port number Port2 of the router apparatus 107 (hereinafter, referred to as "request acceptance side waiting and receiving address information). The processing at the router apparatus setting step S32 can be automatically performed by the communication equipment 106 according to, for example, the UPnP-IGD protocol.

The communication equipment 106 starts a step of transmitting the waiting and receiving address information to the communication equipments 101 and 102, respectively. The communication equipment 106 transmits a relay request response packet 265 to the server apparatus 103a by using the TCP connection established on the communication path R4 as a response to the relay request transmission packet 264. The communication equipment 106 then returns the request issuance side waiting and receiving address information including the IP address and the port number Port1 of the router apparatus set to the static NAT table of the router apparatus 107, and the request acceptance side waiting and receiving address information including the IP address and the port number Port2 to the server apparatus 103. The server apparatus 103 that has received the relay request response packet 265 transmits a connection response packet 266 including the request issuance side waiting and receiving address information to the communication equipment 102 by using the TCP connection established on the communication path R2. The server apparatus 103 then notifies the communication equipment 102 of the request issuance side waiting and receiving address information for connecting the communication equipment 102 to the communication equipment 106 (that is, the WAN side IP address and port number Port1 of the router apparatus 107 set to the static NAT table of the router apparatus 107 that connects the communication equipment 106 to the Internet 110). In addition, the server apparatus 103 notifies the communication equipment 102 that the communication equipment 102 is selected as the connection side communication equipment, and requests the communication equipment 102 to be connected to the communication equipment 106. Further, the server apparatus 103 transmits or receives the connection request UDP packet 205 and the TCP connection request UDP packet 206 to or from the communication equipment 101 through the same procedures as those for transmission or reception of the packets 262 and 263 (or through the same procedures as those for transmission and reception of the packets 205 and 206 in the communication sequence of Fig. 2). The TCP connection is then established on the communication path R1 on which the server apparatus 103 can communicate with the communication equipment 101 over the NAT router apparatus 104a. By using the TCP connection established on the communication path R1 between the server apparatus 103 and the communication equipment 101, the server apparatus 103 transmits a transmission request notification packet 267 including the request acceptance side waiting and receiving address information to the communication equipment 101. The server apparatus 103 then notifies the communication equipment 101 of the request acceptance side waiting and receiving address information (that is, the WAN side IP address and port number Port2 of the router apparatus 107 set to the static NAT table of the router apparatus 107 that connects the communication equipment 106 to the Internet 110) for connecting the communication equipment 101 to the communication equipment 106. At the same time, the server apparatus 103 notifies the communication equipment 101 that the communication equipment 101 is selected as the connection side communication equipment, and requests the communication equipment 101 to be connected to the communication equipment 106.

The communication equipment 102 transmits a TCP connection request packet 268 having the WAN side IP address and port number Port 1 of the router apparatus 107 designated as a destination not via the server apparatus 103a but via the Internet 110 based on information received by the packet 266. The entries of the static NAT table set to the router apparatus 107 coincident with the IP address and the port number which are the destination of the TCP connection request packet 268 are present. Therefore, the IP address and the port number which are the destination of the TCP connection request packet 268 are rewritten by an NAT function of the router apparatus 107, and the TCP connection request packet 268 is transferred to the communication equipment 106. A communication path (hereinafter, referred to as "communication path R6") that includes the LAN 112, the router apparatus 105, the communication line 126, the router apparatus 107, and the LAN 113, and that establishes the TCP connection between the communication equipments 102 and 106 not via the server apparatus 103 is then established. On the other hand, the communication equipment 101 transmits the TCP connection request packet having the WAN side IP address and the port number Port2 of the router apparatus 107 designated as a destination not via the server apparatus 103a but via the Internet 110 based on the information received by the packet 267. The entries of the static NAT table set to the router apparatus 107 coincident with the IP address and the port number which are the destination of the TCP connection request packet 269 are present. Therefore, the IP address and the port number which are the destination of the TCP connection request packet 269 are rewritten by the NAT function of the router apparatus 107, and the TCP connection request packet 268 is transferred to the communication equipment 106. A communication path (hereinafter, referred to as "a communication path R5") that includes the LAN 111, the router apparatus 104a, the communication line 125, the router apparatus 107, and the LAN 113, and that establishes the TCP connection between the communication equipment 101 and the communication equipment 106 not via the server apparatus 103 is then established.

Through the above-mentioned procedures, a communication path that includes the communication paths R5 and R6 and that connects the communication equipment 101 to the communication equipment 102 via the communication equipment 106 is established. The communication equipments 102 and 106 execute a peer-to-peer communication at step S33, and the communication equipments 101 and 106 execute a peer-to-peer communication at step S34. Therefore, the communication equipments 101 and 102 can arbitrarily execute data transfer to each other. According to the present embodiment, by allowing the communication equipment 106 to relay the data transfer, it is possible to realize the data transfer not via the server apparatus 103 and to reduce the load on the server apparatus 103.

Thereafter, when the communication equipment 101 or 102 transmits a TCP disconnection request packet 270 to the communication equipment 106 at an arbitrary time, the communication equipment 106 disconnects the TCP connection with the communication equipment that has transmitted the TCP disconnection request packet 270. In addition, the server apparatus transmits a TCP disconnection request packet 271 to another communication equipment, disconnects the TCP connection with another communication equipment, and finishes the data transfer relayed by the communication equipment 106. With a view of ensuring higher security, the communication equipment 101 preferably cause the router apparatus 107 to delete the entries in the static NAT table of the router apparatus 107 in a manner similar to that of the router apparatus setting deletion step S11A shown in Fig. 2.

It is noted that each of the communication equipments 101, 102, and 106 may be directly connected to the Internet 110 and holds a global IP address or may be connected to the Internet 110 via the NAT router apparatus. A plurality of request issuance side communication equipments, a plurality of request acceptance communication equipments, and a plurality of communication equipments operating as the relay communication equipment may be provided. However, a communication is established between one of the request issuance side communication equipments and one of the request acceptance communication equipments through relay of at least one relay communication equipment.

In the present embodiment, the communication equipment 102 is notified of the selection of the communication equipment 102 as the connection side communication equipment together with the request issuance side waiting and receiving address information by the packet 266. However, the notification is not limited to the notification by the packet 266 but the communication equipment 102 may be notified of the selection at an arbitrary time after the waiting and receiving side selection step S6a. In addition, the communication equipment 101 is notified of the selection of the communication equipment 101 as the connection side communication equipment together with the request acceptance side waiting and receiving address information by the packet 267. However, the notification is not limited to the notification by the packet 267 but the communication equipment 101 may be notified of the selection at an arbitrary time after the waiting and receiving side selection step S6a.

If the server apparatus 103 executes the processing at the waiting and receiving side selection step S6a, selects both the request issuance side communication equipment 102 and the request acceptance side communication equipment 101 as the connection side communication equipment, and cannot discover the communication equipment that has the waiting and reception capability and that can be used as the relay communication equipment, then the server apparatus 103 may decide to realize a communication between the communication equipments 101 and 102 via the server apparatus 103. In this case, the processings after step S6a may be the same as those after step S6 shown in Fig. 7.

The communication system that holds the communication between the communication equipment 101 connected to the Internet 110 via the LAN 111 and the communication equipment 102 connected to the Internet 110 via the LAN 112 through the above-mentioned communication sequence can be provided. During the communication, the communication equipment 102 connected to the LAN 112 and having only the private IP address can be connected to a different communication equipment directly connected to the Internet 110 or the communication equipment connected to a LAN other than the LAN 112 and having only the private IP address without any user's setting the static NAT table of the router apparatus 103 and checking the WAN side dynamic IP address.

The present embodiment can exhibit the following conspicuous advantageous effects as well as the advantageous effects of the communication system according to the first embodiment. Even if neither the communication equipment 101 nor the communication equipment 102 have the waiting and reception capabilities, the communication can be established and certainty of establishing the connection and the communication can be improved. During the connection and the communication, the present embodiment can reduce the load of the server apparatus 103 since the connection and the communication are established not via the server apparatus 103 in addition to the advantageous effects of the second modified embodiment of the first embodiment (See Figs. 6 and 7).

The communication system according to the present embodiment is one obtained by adding the function that enables the communication via the relay communication equipment to the communication system according to the first embodiment of the present invention if it is necessary to add the same. The certainty of the communication and the connection can be improved. The relay communication equipment is not necessarily any communication equipment which is specially prepared so as to assist in the server apparatus 103. For instance, the communication equipment that satisfies conditions that the communication equipment has the waiting and reception capability, the communication equipment includes sufficient bands and processing capability at present, and that an be used for relay, and the like may be arbitrarily selected from among those connected to the server apparatus 103 and used as the request issuance side communication equipment or the request acceptance communication equipment. With this configuration, the respective communication equipments participating in the present communication system make accommodations of the bands and the processing capabilities, and this leads to that the communication system can operate efficiently at lower cost as a whole.

SIXTH EMBODIMENT

According to the sixth embodiment of the present invention, a method for establishing a peer-to-peer connection is the same in operation as that according to the first embodiment. However, in order to authenticate each of the communication equipments at the time of establishing a connection between the communication equipments, characteristic operations of the present embodiment are added. The sixth embodiment of the present invention will be described with reference to the drawings, with mainly describing differences from the first embodiment.

In the present embodiment, the communication equipment 101 acquires authentication information or certificate data on the communication equipment 101 from a certificate authority (CA) (not shown) in advance, and stores the acquired information or data in an internal memory (not shown) of the communication equipment 101. In a manner similar to that of above, the communication equipment 102 and the server apparatus 103 acquire authentication information or certificate data on the communication equipment 102 and the server apparatus 103 from the CA (not shown) in advance, and stored in memories (not shown) in the communication equipment 102 and the server apparatus 103, respectively.

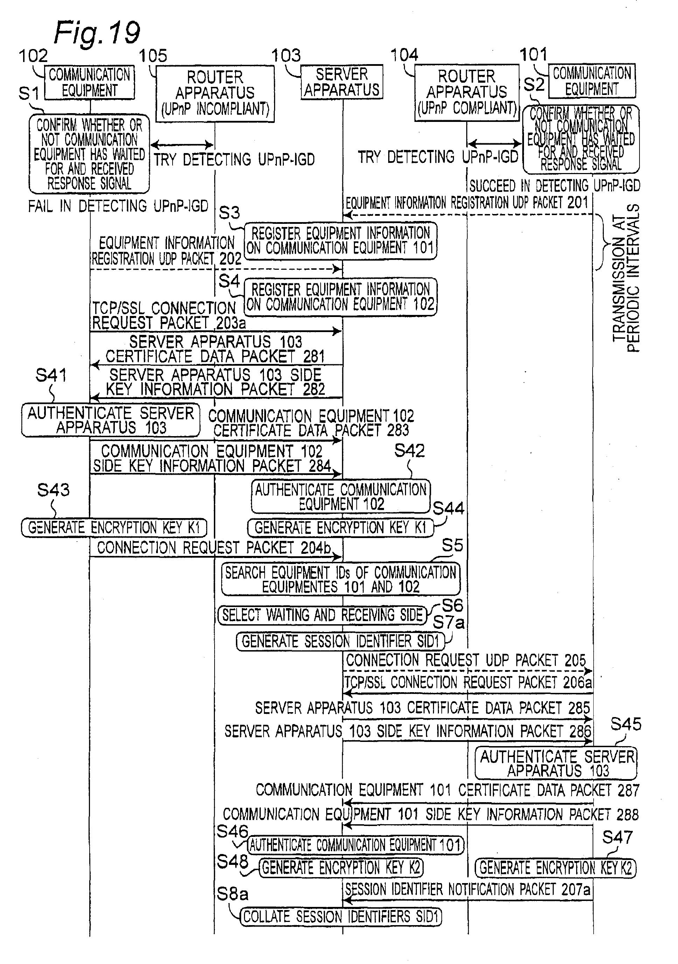

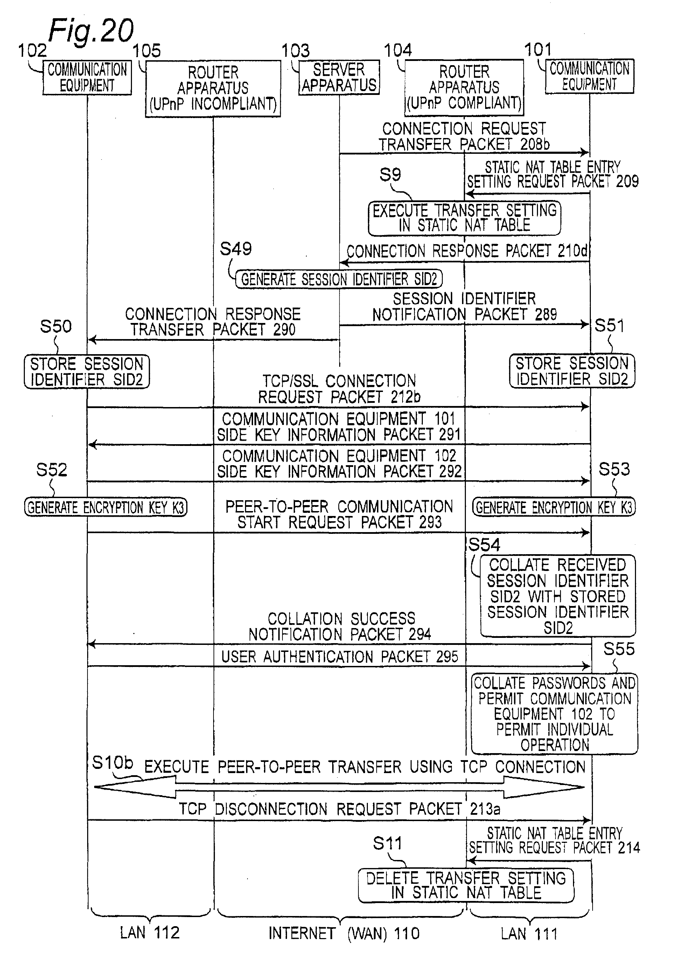

Since a connection and a configuration of a communication network according to the present embodiment are the same as those according to the first embodiment, they will be described with reference to Fig. 1. A communication sequence according to the present embodiment will be described with reference to Figs. 19 and 20. Fig. 19 is a first part of a sequence diagram showing the communication sequence according to the present embodiment. Fig. 20 is a second part of the sequence diagram. In Fig. 19, the communication sequence is similar to that of Fig. 2 since it is confirmed whether or not each of the communication equipments can wait for and receive a response signal at steps S1 and S2, until equipment information on each of the communication equipments is registered at steps S3 and S4.

Next, when the communication equipment 102 is desired to establish a connection with the communication equipment 101 on an occasion of a user's operation or the like, the communication equipment 102 transmits first a TCP/SSL connection request packet 203a to the server apparatus 103. Concretely, the TCP/SSL connection request packet 203 is a syn packet for a TCP connection request to a SSL connection port and normally transmitted first at the time of holding an SSL communication. The TCP/SSL connection request packet 203 includes an SSL Client_Hello message. Ordinary SSL procedures are executed subsequently to the transmission of the TCP/SSL connection request packet 203a. These ordinary SSL procedures are widely and well known by the Non-Patent Document 2 (communication protocol specifications of TLS compatible with SSL) issued by the IETF (Internet Engineering Task Force), the Non-Patent Document 3 that is SSL communication protocol specifications, and the like. Therefore, they will not be described in detail and only essential points related to the constitution of the present embodiment of the present invention will be described hereinafter.

In the SSL communication procedures subsequent to the transmission of the TCP/SSL connection request packet 203a, the server apparatus 103 transmits the server apparatus 103 certificate data packet 281 that includes the certificate data on the server apparatus 103 stored in the memory of the server apparatus 103 to the communication equipment 102 in response to the packet 203a. Further, the server apparatus 103 generates server apparatus 103 side key information K1a and stores the information K1a in the internal memory of the server apparatus 103. In addition, the server apparatus 103 transmits a server apparatus 103 side key information packet 282 including the server apparatus 103 side key information K1a to the communication equipment 102. At step S41, the communication equipment 102 authenticates the server apparatus 103 based on the certificate data on the server apparatus 103 according to SSL server authentication procedures. It is assumed herein that the server apparatus 103 is successfully authenticated. As a result of the successful authentication at step S41, it is assumed that the communication equipment 102 trusts the communication contents from the server apparatus 103 in subsequent procedures. When the server apparatus 103 is authenticated at step S41, the communication equipment 102 transmits the communication equipment 102 certificate data packet 283 including the certificate data on the communication equipment 102 stored in the internal memory of the communication equipment 102 to the server apparatus 103. Further, the communication equipment 102 generates communication equipment 102 side key information K1b, stores the generated key information K1b in the internal memory of the communication equipment 102, and transmits a communication equipment 102 side key information packet 284 including the communication equipment 102 side key information K1b to the server apparatus 103. At step S42, the server apparatus 103 authenticates the communication equipment 102 based on the certificate data on the communication equipment 102 according to SSL client authentication procedures. It is assumed herein that the communication equipment 102 is successfully authenticated. As a result of the successful authentication of the equipment at step S42, the server apparatus 103 is assumed to trust the communication contents from the communication equipment 102 in subsequent procedures.

In order to enhance communication safety, when the server apparatus 103 transmits the packets 281 and 282 to the communication equipment 102 and when the communication equipment 102 transmits the packets 283 and 284 to the server apparatus 103, these packets may be encrypted by using a predetermined public key encryption.

If the communication equipment 102 is authenticated at step S42, the server apparatus 103 generates an encryption key K1 to be used as a common key to the server apparatus 103 and the communication equipment 102 based on the server apparatus 103 side key information K1a and the communication equipment 102 side key information K1b at step S44. In a manner similar to that of above, the communication equipment 102 generates the encryption key K1 based on the server apparatus 103 side key information K1a and the communication equipment 102 side key information K1b at step S43 subsequent to transmission of the packet 284. The same encryption key K1 is then shared between the server apparatus 103 and the communication equipment 102. Thereafter, an encrypted TCP connection (hereinafter, referred to as "a TCP/SSL connection") is established between the server apparatus 103 and the communication equipment 102, and a communication by using this TCP connection is encrypted by the encryption key K1.

An order of transmitting or receiving the packets 281 to 284 is not limited to that shown in the communication sequence of Fig. 19. The packets 281 to 284 can be transmitted or received in an arbitrary order as long as the communication sequence includes the step of causing the server apparatus 103 to transmit the server apparatus 103 certificate and the server apparatus 103 side key information to the communication equipment 102, and the step of causing the communication equipment 102 to transmit the communication equipment 102 certificate and the communication equipment 102 side key information to the server apparatus 103. For instance, first of all, the communication equipment 102 may transmit the communication equipment 102 certificate data packet 283 and the communication equipment 102 side key information 284 to the server apparatus 103. In addition, the server apparatus 103 may transmit the server apparatus 103 certificate data packet 281 and the server apparatus 103 side key information packet 282 to the communication equipment 102 in response to these packets.

One example of generation of the encryption key K1 shared between the communication equipment 102 and the server apparatus 103 will be described in detail. First, the communication equipment 102 and the server apparatus 103 mutually confirm the specifications of the encryption used in the subsequent TCP/ SSL communication. The communication equipment 102 first transmits a TCP/SSL connection request packet 203a to the server apparatus 103, and then notifying the server apparatus 103 of the Client_Hello message including a random number ClientHello.randam generated by the communication equipment 102 as well as information such as an available SSL version, a list of available encryptions, and a session ID. When the server apparatus 103 receives the TCP/SSL connection request packet 203a and accepts to start a communication, the server apparatus 103 transmits the server apparatus 103 certificate data packet 281 to the communication equipment 102 . The packet 281 includes the server apparatus 103 certificate data, information such as an SSL version to be used (a latest version among versions supported by both the communication equipment 102 and the server apparatus 103), a session ID, and an encryption to be used, and a random number ServerHello.randam generated by the server apparatus 103 in a manner similar to that of the random number ClientHello.randam. Thereafter, the SSL version and the encryption designated by the packet 281 are used for the communication between the communication equipment 102 and the server apparatus 103. These random numbers ClientHello.randam and ServerHello.randam are generated as a 32-bit timestamp and a 28-byte random number (or sufficiently safe pseudo random number) by the communication equipment 102 and the server apparatus 103 independently of each other. The packets 203a and 281 respectively including these random numbers ClientHello.randam and ServerHello.randam are transmitted without any encryption.

If the communication equipment 102 and the server apparatus 103 thus mutually confirm the specifications of the encryption, then they generate the key information K1a and K1b, respectively, exchange the key information K1a and K1b with each other, and respectively generate the encryption key K1 based on the key information K1a and K1b, as described above.

An embodiment for generating the encryption key K1 is changed by the encryption used at the time of exchange of the SSL keys. When an RSA encryption is used, then the server apparatus 103 stores a set of a server public key and a server private key for encryption of the public key in the internal memory in advance. Next, the server apparatus 103 adds the server public key to the certificate data on the server apparatus 103, and transmits the server public key to the communication equipment 102 by using the server apparatus 103 certificate data packet 281. The communication equipment 102 extracts the server public key from the received packet 281 and stores the server public key in the internal memory. The communication equipment 102 then generates a 48-byte random number referred to as "premaster secret (PMS)" as the communication equipment 102 side key information K1b, and stores the generated PMS in the internal memory of the communication equipment 102. In addition, the communication equipment 102 encrypts the generated PMS by using the server public key included in the certificate data on the server apparatus 103. The communication equipment 102 transmits the encrypted PMS to the server apparatus 103. The server apparatus 103 decrypts the PMS received in an encrypted state by using the server private key stored in the internal memory of the server apparatus 103, and then acquiring the transmitted PMS. The generation and transmission of the server apparatus 103 side key information 1a will not be described herein. The server apparatus 103 and the communication equipment 102 generate the encryption key K1 by using this PMS (which will be described later in detail), and then sharing the key between the server apparatus 103 and the communication equipment 102.

If a Diffie-Hellman encryption is used in the exchange of the SSL keys, the communication equipment 102 and the server apparatus 103 agree on two parameters (namely, a prime number p and a primitive root g of the prime number p) for using the Diffie-Hellman key to be common to the server apparatus 103 and the communication equipment 102 in advance. Prior to transmission of the packet 282, the server apparatus 103 generates a random number a, calculates a minimum positive remainder of $g^a$ modulo p as the server apparatus 103 side key information K1a, and transmits the server apparatus 103 side key information packet 282 including this key information K1a to the communication equipment 102. On the other hand, prior to transmission of the packet 284, the communication equipment 102 generates a random number b, calculates a minimum positive remainder of $g^b$ modulo p as the communication equipment 102 side key information K1b, and transmits the communication equipment 102 side key information packet 284 including this key information K1b to the server apparatus 103. Accordingly, these pieces of key information K1a and K1b mutually transmitted are used as Diffie-Hellman public keys. Further, when the key information K1a and K1b are transmitted, signatures of the communication equipment 102 and the server apparatus 103 may be added to the respective key information K1a and K1b.

If the communication equipment 102 and the server apparatus 103 exchange the key information K1b an K1a with each other as mentioned above, the encryption key K1 used as the private key in a later communication is generated by using the key information K1a and K1b. In order to generate the encryption key K1, the premaster secret (PMS) is generated first from the mutually exchanged key information K1a and K1b. In case of the RSA encryption, the PMS is the communication equipment 102 side key information K1b as mentioned above. In case of the Diffie-Hellman encryption, the PMS is generated by using the Diffie-Hellman public keys for both the server apparatus 103 and the communication equipment 102. In other words, the server apparatus 103 calculates, as the PMS, the minimum positive remainder modulo p, of a value obtained by raising the minimum positive remainder of $g^b$ modulo the received p to a-th power. The communication equipment 102 calculates, as the PMS, the minimum positive remainder modulo p, of a value obtained by raising the minimum positive remainder of $g^a$ modulo the received p to b-th power. When the Diffie-Hellman encryption is used, the PMS calculated by each of the communication equipment 102 and the server apparatus 103 is equal to the minimum positive remainder of $g^{ab}$ modulo p.

In order to generate the encryption key K1 from the PMS, two hash algorithms of MD5 (Message Digest 5) and SHA (Secure Hash Algorithm) are used to make the following calculation.

$$\text{Common Key master\_secret}$$
$$= \text{MD5(PMS} \parallel \text{SHA('A'} \parallel \text{PMS} \parallel \text{ClientHello.randam} \parallel$$
$$\text{ServerHello.randam)) MD5(PMS} \parallel \text{SHA('BB'} \parallel \text{PMS} \parallel \text{ClientHello.randam}$$
$$\parallel \text{ServerHello.randam))} \parallel \text{MD5(PMS} \parallel \text{SHA('CCC'} \parallel \text{PMS} \parallel$$
$$\text{ClientHello.randam} \parallel \text{ServerHello.randam))} \tag{1}$$

In the Equation (1), "||" represents connection of bit sequences.

Thereafter, the communication equipment 102 and the server apparatus 103 encrypt and decrypt the connection request packet 204b by using the common key master_secret calculated according to the Equation (1) as the encryption key K1. Then it is possible to hold a private communication between them.

In the present embodiment, the SSL authentication procedures are used between the communication equipment 102 and the server apparatus 103. However, the embodiment of the present invention is not limited to the case of using the SSL authentication procedures. Generally speaking, arbitrary procedures can be used as long as the equipment 102 and the server apparatus 103 can mutually confirm whether or not connection destinations are trustworthy via the communication lines and a preparation can be made to ensure safe encryption communication without any wiretapping by the third party. As alternative communication procedures for realizing these functions, many methods such as a method disclosed in, for example, the Non-Patent Document 4 (The Internet Key Exchange) are put to practical use. It is possible to perform the mutual authentication and establish the encryption communication by executing a series of the communication sequences including well-known techniques such as the Diffie-Hellman algorithm, the public key encryption, and the public key signature. According to the present embodiment, the SSL procedures are used as authentication procedures between the communication equipment 101 and the server apparatus 103 and those between the communication equipments 101 and 102. The above-mentioned alternative procedures may be used.

After authenticating the server apparatus 103 and generating the encryption key K1, the communication equipment 102 transmits a connection request packet 204b to the server apparatus 103 so as to notify a request of a peer-to-peer connection between the communication equipments 101 and 102. The equipment ID of the request acceptance side communication equipment 101 is designated as a destination of the connection request packet 204b, and the equipment ID of the communication equipment 102 as the connection request issuance side is added to the packet 204b. The connection request packet 204b is encrypted by the encryption key K1. When receiving the connection request packet 204b, the server apparatus 103 decrypts the packet 204b by using the encryption key K1, and executes the processing at an equipment information search step S5. At step S5, in a manner similar to that of the case of Fig. 2, the server apparatus 103 acquires the WAN side IP address and the WAN side port number of the router apparatus 104a and waiting and reception capability information indicating that the communication equipment 101 cannot wait for the receive a response signal with respect to the communication equipment 101. In addition, the server apparatus 103 acquires the WAN side IP address and the WAN side port number of the router apparatus 105a and waiting and reception capability information indicating that the communication equipment 102 can wait for the receive a response signal with respect to the communication equipment 102. Next, at waiting and receiving side selection step S6, the server apparatus 103 decides the waiting and receiving side communication equipment based on the waiting and reception capability information. In the present embodiment, in a manner similar to that of the case of Fig. 2, the communication equipment 101 is selected as the waiting and receiving side communication equipment, and the communication equipment 102 is selected as the connection side communication equipment.

The server apparatus 103 starts a communication with the request acceptance side communication equipment 101 via the communication path R1 which enables a communication even if the router apparatus 104 is present on the path. At step S7a, in a manner similar to that of step S7 in the communication sequence of Fig. 2, the server apparatus 103 generates and stores a session identifier SID1, and transmits a connection notification UDP packet 205 that includes the generated session identifier SID 1 as a payload to the communication equipment 101.

When receiving the connection notification UDP packet 205, the communication equipment 101 executes the same processings as the authentication and key generation processings (including the processings at steps S41 to S44 and the transmission or reception of the packets 203a, 281 to 284) executed between the communication equipment 102 and the server apparatus 103. First of all, the communication equipment 101 transmits a TCP/ SSL connection request packet 206a to the server apparatus 103, so as to establish a TCP connection with the server apparatus 103 on the communication path R1. The TCP/SSL connection request packet 206a is a syn packet that includes an SSL Client_Hello message in a manner similar to that of the TCP/SSL connection request packet 203a. The normal SSL procedures are executed subsequently to transmission of the packet 206a.

The server apparatus 103 transmits a server apparatus 103 certificate data packet 285 to the communication equipment 101 in response to the TCP/ SSL connection request packet 206a. In a manner similar to that of the server apparatus 103 certificate data packet 281, the server apparatus 103 certificate data packet 285 includes certificate data on the server apparatus 103. Further, the server apparatus 103 generates server apparatus 103 side key information K2a, stores the generated key information K2a in the internal memory of the server apparatus 103, and transmits a server apparatus 103 side key information packet 286 including the server apparatus 103 side key information K2a to the communication equipment 101. At step S45, the communication equipment 101 authenticates the server apparatus 103 based on the certificate data on the server apparatus 103 according to SSL server authentication procedures. It is assumed herein that the server apparatus 103 is successfully authenticated. As a result of the successful authentication at step S45, it is assumed that the communication equipment 101 trusts the communication contents from the server apparatus 103 in subsequent procedures. When the server apparatus 103 is authenticated at step S45, the communication equipment 101 transmits a communication equipment 101 certificate data packet 287 including the certificate data on the communication equipment 101 stored in the internal memory of the equipment 101 1 to the server apparatus 103. Further, the communication equipment 101 generates the communication equipment 101 side key information K2b, stores the generated key information K2b in the internal memory of the communication equipment 101, and transmits a communication equipment 101 side key information packet 288 including the communication equipment 101 side key information K2b to the server apparatus 103. At step S46, the server apparatus 103 authenticates the communication equipment 101 based on the certificate data on the communication equipment 101 according to SSL client authentication procedures. It is assumed herein that the communication equipment 101 is successfully authenticated. As a result of the successful authentication of the equipment at step S46, the server apparatus 103 is assumed to trust the communication contents from the communication equipment 101 in subsequent procedures.

In order to enhance the communication safety, when the server apparatus 103 transmits the packets 285 and 286 to the communication equipment 101 and when the communication equipment 101 transmits the packets 287 and 288 to the server apparatus 103, these packets may be encrypted by using a predetermined public key encryption.

If the communication equipment 101 is authenticated at step S46, the server apparatus 103 generates an encryption key K2 to be used as a common key to the server apparatus 103 and the communication equipment 101 based on the server apparatus 103 side key information K2a and the communication equipment 101 side key information K2b. In a manner similar to that of above, the communication equipment 101 generates the encryption key K2 based on the server apparatus 103 side key information K2a and the communication equipment 101 side key information K2b at step S47 subsequent to transmission of the packet 288. The same encryption key K2 is then shared between the server apparatus 103 and the communication equipment 101. Thereafter, an encrypted TCP connection (hereinafter, referred to as "a TCP/ SSL connection") is established between the server apparatus 103 and the communication equipment 101, and a communication using this TCP connection is encrypted by the encryption key K2.

An order of transmitting or receiving the packets 285 to 288 is not limited to that shown in the communication sequence of Fig. 19. The packets 285 to 288 can be transmitted or received in an arbitrary order as long as the communication sequence includes the step of causing the server apparatus 103 to transmit the server apparatus 103 certificate and the server apparatus 103 side key information to the communication equipment 101, and the step of causing the communication equipment 101 to transmit the communication equipment 101 certificate and the communication equipment 101 side key information to the server apparatus 103. For instance, the communication equipment 102 may transmit the communication equipment 101 certificate data packet 287 and the communication equipment 101 side key information 288 to the server apparatus 103 after transmission of the TCP/SSL connection request.packet 206. In addition, the server apparatus 103 may transmit the server apparatus 103 certificate data packet 285 and the server apparatus 103 side key information packet 286 to the communication equipment 101 in response to these packets.

The communication procedures for allowing the communication equipments 101 and 102 and the server apparatus 103 to trust one another have been disclosed above. In order to improve reliability of these procedures, different types of security functions are incorporated in the server apparatus 103 and the communication equipments 101 and 102 separately. This leads to that the safety of the communication system can be effectively maintained. For instance, it is appropriate that the private key used to encrypt the packets 281 to 284 by the public key encryption and to encrypt the packets 285 to 288 by the public key encryption is included only in the server apparatus 103. This leads to that it is unnecessary to include private key data in the communication equipments 101 or 102 supposed to be bought and managed by an end user. The safety of the private key can be easily maintained. Further, each of the communication equipments is highly likely analyzed or counterfeited. Due to this, when the server apparatus 103 side executes revocation (invalidation) of each of the communication equipments, then the safety of the communication system can be maintained without any incorporating of revocation function in each of many communication equipment having limited resources, and it is possible to take effective measures against counterfeiting of the communication equipment. Therefore, the communication equipment cost and the system management cost can be reduced. Further, in order to confirm that the server apparatus 103 is trustworthy, means for allowing each of the communication equipments to confirm the reliability of the server certificate according to a certificate authority (CA) certificate is incorporated in each of the communication equipments. This leads to that it is possible to take effective measures against counterfeiting on the server apparatus 103 side. When the authentication method using this CA certificate is applied to confirmation of the reliability of the communication equipment, it is necessary to provide a signature based on a CA public key for the certificate of each of many communication equipments. Despite the effectiveness, the management cost is increased. For this reason, it is effective to use the authentication method using the CA certificate in confirmation of the reliability of the server apparatus 103. As mentioned so far, according to the present embodiment, it is particularly suitable to enhance the safety of the certification by the methods suited for the server apparatus 103 and the communication equipments 101 and 102, respectively.

The communication equipment 101 transmits a session identifier notification packet 207a, which includes the session identifier SID1 included in the received connection request UDP packet 205 as a payload, to the server apparatus 103 by using the TCP/SSL connection established between the communication equipment 101 and the server apparatus 103. When receiving the session identifier notification packet 207a transmitted from the communication equipment 101, the server apparatus 103 collates a session identifier SID1 generated and stored at step S7a with the session identifier SID1 sent back from the communication equipment 101 and included in the session identifier notification packet 207a. After confirming that these session identifiers SID 1 coincide with each other as a result of the collation, the server apparatus 103 decides the TCP connection established on a communication path R1 by a TCP connection start packet 206 as a TCP/SSL connection between the communication equipment 101 and the server apparatus 103.

By using the TCP/SSL connection established between the communication equipment 101 and the server apparatus 103, the server apparatus 103 transmits a connection request transfer packet 208b to the communication equipment 101. The server apparatus 103 then notifies the communication equipment 101 that the connection request from the connection equipment 102 to the communication equipment 101 is present and that the communication equipment 101 is selected as the waiting and receiving side communication equipment.

The communication equipment 101 that has received the notification that the communication equipment 101 is selected as the waiting and receiving side communication equipment executes the processing at the router apparatus setting step. The processing at this router apparatus setting step is the same as that at the router apparatus setting step S9A in the communication sequence of Fig. 2.

The communication equipment 101 transmits a connection response packet 210d including waiting and receiving address information on the communication equipment 101 (that is, information on a WAN side IP address and a port number of a router apparatus 104) to the server apparatus 103 in a manner similar to that of the case of Fig. 2.

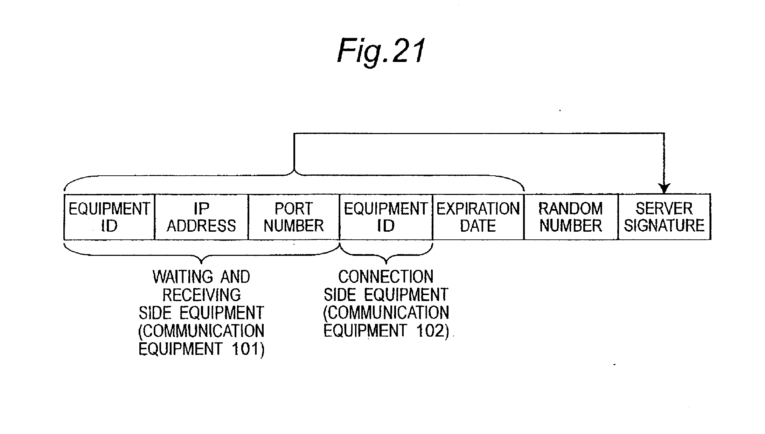

The server apparatus 103 that has received the connection response packet 210a generates a session identifier SID2 at step S49. The session identifier SID2 is issued to certify that the server apparatus 103 successfully authenticates both the communication equipments 101 and 102 and that the server apparatus 103 permits establishment of a peer-to-peer connection between the communication equipments 101 and 102. It is assumed that the session identifier SID2 is generated as a unique value whenever the above-described mutual authentication is completed between the communication equipment 101 or 102 and the server apparatus 103. The above-described session identifier SID 1 is an identifier generated to make transmission and reception of the connection request UDP packet be associated with the session identifier notification packet 207a. Since the session identifier SID 1 completely differs in value and management method from the session identifier SID2, these identifiers are denoted by different reference symbols. The contents of the session identifier SID2 will be described hereinafter with reference to Fig. 21. Fig. 21 shows a data structure of the session identifier SID2. As shown in Fig. 21, the session identifier SID2 includes, as necessary information to establish the peer-to-peer connection between the communication equipments 101 and 102, the WAN side IP address and the port number of the router apparatus 104 included in the connection response packet 210d transmitted from the communication equipment 101. The session identifier SID2 also includes equipment IDs of the waiting and receiving side communication equipment and the connection side communication equipment to identify both communication equipments, respectively. The session identifier SID2 further includes an expiration date before the peer-to-peer connection permitted by the server apparatus 103 is started. Random numbers are further added to the session identifier SID2 as well as these pieces of information. Besides, by allocating a server signature to the session identifier SID2 by using the private key owned only by the server apparatus 103, it is impossible to counterfeit or alter the session identifier SID2, and it is guaranteed that the communication identified by the content of the session identifier SID2 is the communication permitted by the server apparatus 103.

More concretely, the session identifier SID2 is transmitted and received upon being encrypted only on communication lines connected by TCP/SSL connection. Therefore, a malicious third party different from the communication equipments 101 and 102 cannot easily acquire the session identifier SID2. Further, the signature by the private key owned only by the server apparatus 103 is allocated to the session identifier SID2. Due to this, even when the malicious third party tries to be connected to the communication equipment 101 by counterfeiting the session identifier SDI2, verification of the signature by the communication equipment 101 (which will be described later) fails and a connection cannot be established between the communication equipment 101 and the malicious third party. Further, the random number is embedded in the session identifier SID2 and the signature by the private key that can be owned only by the server apparatus 103 is allocated to the session identifier SID2. Due to this, even when the malicious third party spoofs the communication equipment 102 by using the session identifier SID 1 obtained by wiretapping or the like and tries to be connected to the communication equipment 101, a random number part of the session identifier used by the malicious third party is not, with high probability, equal to that of the session identifier SID 1 (which will be described later) stored in the communication equipment 101 when they are collated with each other. As long as this inequality is present in the session identifier used by the third party, any connection is not established between the communication equipment 101 and the malicious third party. Furthermore, the expiration date is included in the session identifier SID2 and the signature by the private key that can be owned only by the server apparatus 103 is allocated to the session identifier SID2. When the malicious third party spoofs the communication equipment 102 by using the session identifier SID 1 obtained by wiretapping or the like and tries to be connected to the communication equipment 101, the random number part of the session identifier used by the malicious third party is equal to that of the session identifier SID 1 stored in the communication equipment 101 by accident after many trials of connection. However, because of passage of the expiration date, any connection is not established between the communication equipment 101 and the malicious third party. As can be seen, when the communication method according to the present embodiment is used, a communication line between the request issuance side communication equipment 102 and the request acceptance side communication equipment 101 can be established according to the results of the selection of the waiting and receiving side communication equipment by the server apparatus 103 with maintaining higher security.

After generating the session identifier SID2, the server apparatus 103 encrypts the session identifier SID2 by using the encryption key K2, and transmits a session identifier notification packet 289 including the encrypted session identifier SID2 to the communication equipment 101. The server apparatus 103 then notifies the communication equipment 101 of the session identifier SID2. At step S51, the communication equipment 101 decrypts the received session identifier SID2 by using the encryption key K2, and stores the decrypted session identifier SID2 in the internal memory of the communication equipment 101. Further, the server apparatus 103 encrypts the session identifier SID2 by using the encryption key K1, and transmits a connection response transfer packet 290 including the encrypted session identifier SID2 to the communication equipment 102. The server apparatus 103 then notifies the communication equipment 102 that the communication equipment 102 is selected as the connection side communication equipment. At the same time, the server apparatus 103 notifies the communication equipment 102 of the session identifier SID2 as necessary information to connect the communication equipment 102 to the communication equipment 101. At step S50, the communication equipment 102 decrypts the received session identifier SID2 by using the encryption key K1, and stores the decrypted session identifier SID2 in the memory of the communication equipment 102.

In the present embodiment, the communication equipments 101 and 102 are notified by the packets 208b and 290 which of the communication equipment 101 and the communication equipment 102 is selected as the waiting and receiving side communication equipment and which is selected as the connection side communication equipment (hereinafter, referred to as "a selection information"). However, the notification of this selection information is not limited to the notification by using these packets. For instance, in order to notify the communication equipment 101 of the selection information, the packet 289 may be used or another packet transmitted after transmission of the packet 289 may be used. In order to notify the communication equipment 102 of the selection information, a packet transmitted separately from the packet 290 at an arbitrary time after step S6 may be used.

After storing the session identifier SID2, the communication equipment 102 that has been selected as the connection side communication equipment starts to establish a TCP / SSL connection between the connection side communication equipment 102 and the waiting and receiving side communication equipment 101. At this time, it is assumed that TCP connection request procedures are carried out as done ordinarily when starting an SSL communication. In addition, it is assumed that the procedures for exchanging the common keys between the communication equipments 101 and 102 are carried out, and that communication procedures for establishing the TCP connection are included in the procedures. By using the WAN side IP address and the port number of the router apparatus 104 included in the session identifier SID2, the communication equipment 102 transmits a TCP/SSL connection request packet 212b having the WAN side IP address and the WAN side port number of the router apparatus 104 designated as a destination. In a manner similar to that of the TCP connection request packet 212 shown in Fig. 2, the TCP/SSL connection request packet 212b is transferred by the router apparatus 104 to the communication equipment 101. When receiving the packet 212b, the communication equipment 101 generates communication equipment 101 side key information K3a, stores the generated key information K3a in the internal memory of the communication equipment 101, and transmits a communication equipment 101 side key information packet 291 including the communication equipment 101 side key information K3a, to the communication equipment 102. When receiving the packet 291, the communication equipment 102 generates communication equipment 102 side key information K3b, stores the generated key information K3b in the internal memory of the communication equipment 102, and transmits a communication equipment 102 side key information packet 292 including the communication equipment 102 side key information K3b to the communication equipment 101. At step S52, the communication equipment 102 generates an encryption key K3 to be used as a common key between the communication equipments 101 and 102 based on the communication equipment 101 side key information K3a and the communication equipment 102 side key information K3b. In a manner similar to that of above, at step S53, the communication equipment 101 generates the encryption key K3 based on the communication equipment 102 side key information K3a and the communication equipment 102 side key information K3b. The same encryption key K3 is then shared between the communication equipments 101 and 102. Thereafter, an encrypted TCP connection (hereinafter, referred to as "a TCP/SSL connection") is established between the communication equipments 101 and 102 not via the server apparatus 103, and a communication using this TCP connection is encrypted by the encryption key K3.

The series of procedures in the TCP/SSL establishment sequence subsequent to the transmission 424 of the TCP/SSL connection request packet 212b differs from those in the sequences subsequent to the transmission of the TCP/SSL connection request packet 203a or 206a in the following respect. In the sequence subsequent to the transmission of the TCP/SSL connection request packet 203a or 206a, it is essential to include the authentication procedures. In the TCP/SSL establishment sequence subsequent to the transmission of the TCP/SSL connection request packet 212b, it is not always necessary to include the authentication procedures and it suffices to share the encryption key K3 between the communication equipments 101 and 102 and to prepare for an encryption communication. Therefore, concretely speaking, only the processing corresponding to the SSL server authentication necessary to share the key is performed, and then, the SSL client authentication can be omitted. In addition, in the processing corresponding to the SSL server authentication, a confirmation processing for confirming a server signature by the CA certificate and the like can be omitted.

Next, the communication equipment 102 transmits a peer-to-peer communication start request packet 293 to the communication equipment 101. During the transmission, the session identifier SID2 stored in the internal memory of the communication equipment 102 is encrypted by the encryption key K3, and the encrypted session identifier SID2 is added to the peer-to-peer communication start request packet 293. The communication equipment 101 decrypts the session identifier SID2 included in the received peer-to-peer communication start request packet 293 by using the encryption key K3. At step S54, if a predetermined timeout time does not pass since the communication equipment 101 stores the session identifier SID2 at step S51 (or since a predetermined reference time), the communication equipment 101 compares the session identifier SID2 received from the communication equipment 102 with the session identifier SID2 stored in the internal memory of the communication equipment 101. If these session identifiers SID2 coincide with each other, the communication equipment 101 judges that the peer-to-peer connection established between the communication equipments 101 and 102 is permitted by the server apparatus 103. In addition, the communication equipment 101 decides to continue a subsequent communication according to the content described in the session identifier SID2 (namely, the content to the effect that the packet transmitted from the communication equipment 102 should be received via the IP address and the port as the waiting and receiving address information described in the session identifier SID2). At this time, if the session identifier SID2 received and included in the packet 293 does not coincide with that stored in the internal memory of the communication equipment 101, if the expiration date described on the session identifier SID2 passes, if the authentication of the server signature by the server public key fails, or if the IP address and the port number via which the TCP/SSL connection is held differ from those described in the session identifier SID2, then the connection request by the peer-to-peer communication start request packet 293 is rejected so as to eliminate a possible connection by an illegal communication equipment, and the communication with the communication equipment 102 is cut off.

Through the above-mentioned procedures, a peer-to-peer communication line is established between the communication equipments 101 and 102. Accordingly, at step S10b and the following, the communication equipments 101 and 102 can transfer data to each other arbitrarily. If the collation at step S54 succeeds, the communication equipment 101 may transmit a collation success notification packet 294 to the communication equipment 102 as a handshake procedure for notifying the communication equipment 102 of the success.

In order to confirm a detailed operation right and to confirm an operator of the communication equipment 102, it is preferable that the communication equipment 102 transmits a user authentication packet 295 including a password of the communication equipment 101 to the communication equipment 101 in response to the packet 294 after the communication equipment 101 transmits the packet 294 to the communication equipment 102, and that the communication equipment 101 executes an additional sequence such as password collation at step S55. Preferably, the user authentication packet 295 can include the password of the communication equipment 101 provided to a specific user of the communication equipment 102 as well as identification information, authentication information, and the like on a user of the communication equipment 102. By collating these pieces of information received and included in the packet 295 at step S55, the communication equipment 101 can individually authenticate the user of the communication equipment 102 who is to remotely control the communication equipment 101 via the communication equipment 102.

In order to transmit the password of the communication equipment 101, the communication equipment 102 may transmit the password to the communication equipment 101 by transmitting the packet 293. In that case, it is unnecessary to transmit the packets 294 and 295. However, when the password is transmitted to the communication equipment 101 by transmitting the packet 293, the communication equipment 102 may possibly transmit the password to a different and erroneous communication equipment other than the request acceptance side communication equipment 101 desired by the request issuance side communication equipment 102 even if the password is encrypted by the encryption key K3. Then, the password may be possibly stolen. In the communication sequence of Fig. 20, after executing the handshake procedure for confirming that the encryption communication with the request acceptance side communication equipment is established, the request issuance side communication equipment 102 transmits important data (e.g., the password) to the communication equipment 101. Therefore, as compared with the transmission of the password by transmitting the packet 293, the security is suitably improved. The handshake procedure for confirming that the encryption communication is established can be executed not only by transmitting the packet 294 from the communication equipment 101 to the communication equipment 102 but also by transmitting a change_cipher_spec message as indication of a change in encryption specifications and a Finished message for confirming that the key exchange and the authentication processing succeed from the communication equipment 102 to the communication equipment 101, and by transmitting a change_cipher_spec message and a Finished message from the communication equipment 101 to the communication equipment 102 as done in the SSL encryption communication.

The communication equipments 101 and 102 execute data communication by using the established TCP connection at step S10b, and the arbitrary side communication equipment transmits a TCP disconnection request packet 213a at an arbitrary time to complete communication, in a manner similar to that of the communication sequence of Fig. 2. Further, in a manner similar to that of the communication sequence of Fig. 2, after end of the communication at step S10b, the communication equipment 101 causes the router apparatus 104 to delete the transfer setting in the static NAT table.

In the present embodiment, the communication sequence to which the authentication and encryption steps are added has been described based on the communication sequence of Fig. 2. However, the communication sequence to which the authentication and encryption steps are added can be executed based on the communication sequences described with reference to Figs. 4 to 16.

The session identifier SID2 includes the IP address for connection to the communication equipment 101 and the expiration date, and the server apparatus 103 adds the signature to the session identifier. Due to this, when the communication equipment 102 authenticates the signature, and then, establishes the connection to the communication equipment 101 only within the expiration date, it is possible to prevent the communication equipment 102 from being induced to an IP address of the malicious third party and from being connected to another communication equipment having an IP address allocated by the ISP. As can be seen, particularly appropriate advantageous effects can be attained.

The communication sequence that holds the communication between the communication equipment 101 connected to the Internet 110 via a LAN 111 and the communication equipment 102 connected to the Internet 110 via a LAN 112 through the above-mentioned sequences can be provided. At this time, the connection can be established from the communication equipment connected to the LAN to a different communication equipment directly connected to the Internet or to the communication equipment connected to a different LAN and having only a private IP address without any user's setting of the static NAT tables in the router apparatuses 104 and 105 and checking the WAN side dynamic IP address of the router apparatuses 104 and 105.

Furthermore; a part of the authentication processing to ensure that the communication equipments 101 and 102 trust each other in the peer-to-peer connection is performed with the assistance of the server apparatus 103. Then it is possible to effectively share the authentication function among the server apparatus 103 connected to the Internet 110 and the communication equipments 101 and 102 disposed in the house or office. Therefore, conspicuous advantageous effects can be exhibited. For example, the management load can be reduced, user friendliness can be enhanced, and the communication system low in the cost and high in the security can be provided.

The communication system according to the present embodiment is configured, as compared with the communication system according to the first to fifth embodiments, in order to additionally include the authentication function by the efficient peer-to-peer connection. The authentication of communication equipment includes authentication of the respective communication equipments 101 and 102 by the server apparatus 103. As the authentication, well-known authentication included in the SSL or IPsec can be applied thereto. The session identifier SID2 generated at step S49 is used so that the communication equipments 101 and 102 are notified that the server apparatus 103 authenticate the respective communication equipments 101 and 102, and so that the communication equipments 101 and 102 can trust each other in place of causing the communication equipments 101 and 102 to directly authenticate each other to trust each other. Therefore, it is suitable to use, for example, the equipment ID of each of the communication equipments, connection request time, and the session number generated uniquely and randomly for every connection, to which signatures are added by the private key of the server apparatus 103, as the authentication information. By referring to this authentication information, the communication equipments 101 and 102 can easily judge that they can establish connections with each other with the assistance of the server apparatus 103.

SEVENTH EMBODIMENT

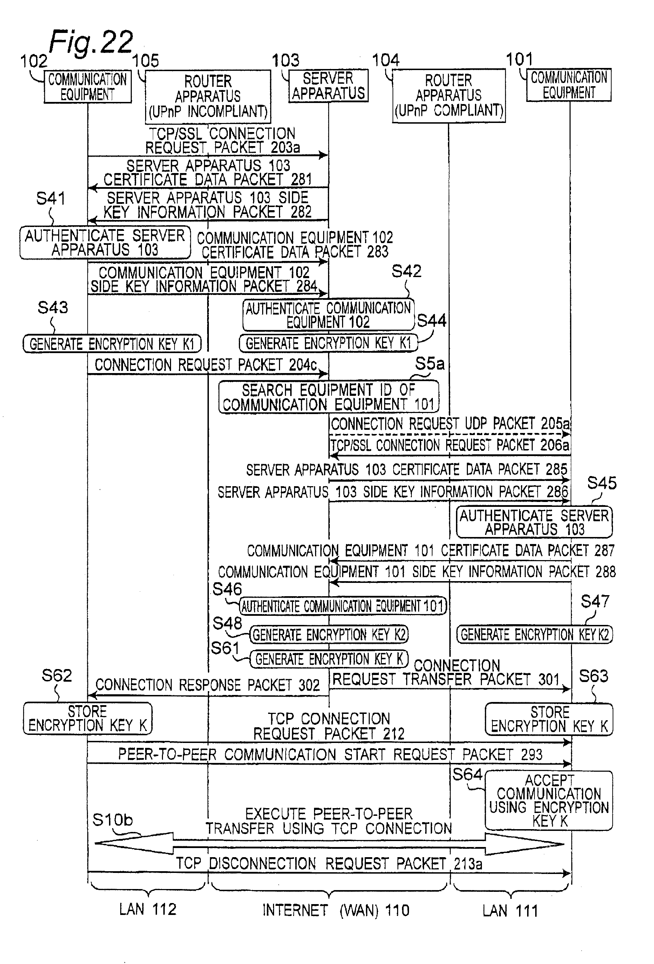

Fig. 22 is a sequence diagram showing a communication sequence according to the seventh embodiment of the present invention. The present embodiment is characterized in that the communication sequence operates in the same communication system as that of Fig. 1 operates, and in that the communication sequence further includes authentication and encryption steps. In Fig. 22, steps S1, S2, S9, and S11 related to router apparatuses 104 and 105, equipment information registration steps S3 and S4, the waiting and receiving side selection step S6, and the like are not shown for simplicity of description. The present embodiment will be described according to this simplified sequence. However, actually and obviously, the communication sequence according to the present embodiment can be applied to the embodiments described with reference to Figs. 1 to 18. In the present embodiment, each of the communication equipments 101 and 102 includes a memory (not shown) storing authentication information or certificate data on each of the communication equipments. The server apparatus 103 includes a memory (not shown) storing authentication information or certificate data on the server apparatus 103.

If the communication equipment 102 is desired to establish a connection with the communication equipment 101 on an occasion of a user's operation or the like, the communication equipment 102 first establishes a TCP/SSL connection with the server apparatus 103. The procedures for establishing this TCP/SSL connection are the same as those from transmission of the packet 203a until execution of the processings at steps S43 and S44 shown in Fig. 19. In a manner similar to that of the case of Fig. 19, in the course of establishing the TCP/ SSL connection, the communication equipment 102 is authenticated by the server apparatus 103, and the server apparatus 103 is authenticated by the communication equipment 102.

If the TCP/SSL connection is established between the communication equipment 102 and the serer apparatus 103, and the communication equipment 102 and the server apparatus 103 authenticate each other, the communication equipment 102 transmits a connection request packet 204c that notifies the server apparatus 103 of a request of a connection to the communication equipment 101, and that is encrypted by an encryption key K1 to the server apparatus 103. When receiving this connection request packet 204c, the server apparatus 103 executes the processing at step S5a, and then acquiring a WAN side IP address and a WAN side port number of a router apparatus 104a that connects the communication equipment 101 to the Internet 110 from an equipment information database apparatus (not shown). Thereafter, the server apparatus executes the same processing as that at step S6 shown in Fig. 2, and selects a connection side communication equipment and a waiting and receiving side communication equipment. In the present embodiment, the communication equipment 101 is selected as the waiting and receiving side communication equipment, and the communication equipment 102 is selected as the connection side communication equipment. Next, in order to transfer the connection request from the communication equipment 102 to the communication equipment 101, the server apparatus 103 establishes a TCP/ SSL connection with the communication equipment 101. The procedures for establishing the TCP/SSL connection are the same as those from transmission of the packet 205a until execution of the processings at steps S47 and S48 shown in Fig. 19. In a manner similar to that of the case as described with reference to Fig. 19, in the course of establishing the TCP/SSL connection, the communication equipment 101 is authenticated by the server apparatus 103, and the server apparatus 103 is authenticated by the communication equipment 101.

After step S48, the server apparatus 103 executes the processing at step S61, then generating an encryption key K to be used for a peer-to-peer communication between the communication equipments 101 and 102. The server apparatus 103 transmits a connection request transfer packet 301 to the communication equipment 101 by using the established TCP/SSL connection. The server apparatus 103 then notifies the communication equipment 101 that the connection request from the communication equipment 102 to the communication equipment 101 is present, and that the communication equipment 101 is selected as the waiting and receiving side communication equipment. In addition, the server apparatus 103 transmits the encryption key K generated at step S61 to the communication equipment 101. At this time, since the connection request transfer packet 301 is encrypted by an encryption key K2, the encryption key K to be used when peer-to-peer communication is executed later on between the communication equipments 101 and 102 is delivered to the communication equipment 101 in safety. At step S63, the communication equipment 101 stores the encryption key K included in the received packet 301 in the internal memory of the communication equipment 101. In addition, the server apparatus 103 transmits a connection response packet 302 to the communication equipment 102. The server apparatus 103 then notifies the communication equipment 102 that the equipment 102 is selected as the connection side communication equipment. In addition, the server apparatus 103 transmits the encryption key K generated at step S61 to the communication equipment 102. At this time, since the connection request transfer packet 302 is encrypted by the encryption key K1, the encryption key K to be used when the peer-to-peer communication is executed later on between the communication equipments 101 and 102 is delivered to the communication equipment 102 in safety. At step S62, the communication equipment 102 stores the encryption key K included in the received packet 302 in the internal memory of the communication equipment 102.

After acquiring and storing the encryption key K, the connection side communication equipment 102 transmits a TCP connection request packet 212 with the communication equipment 101 designated as a destination to the communication equipment 101 by using waiting and receiving address information transmitted from the waiting and receiving side communication equipment 101 or the waiting and receiving address information on the waiting and receiving side communication equipment 101 acquired in advance in a manner similar to that of the first embodiment. The communication equipment 101 receives the packet 212. When a reception time of this packet 212 is within a predetermined time-out period since the encryption key K is stored at step S63 (or from a predetermined reference time), the communication equipment 101 decides to continue the communication with the communication equipment 102 at step S64. Since a peer-to-peer communication line is established between the communication equipments 101 and 102 through the above-mentioned procedures, the communication equipment 101 and the communication equipment 102 can transfer data to each other arbitrarily at step S10b and the following.

In a manner similar to that of the case of Fig. 2, the communication equipments 101 and 102 execute data communication at step S10b by using the established TCP connection, and the communication is completed by transmitting a TCP disconnection request packet 213a from the arbitrary side communication equipment at an arbitrary time.

The communication system that holds the communication between the two communication equipments 101 and 102 connected to the Internet 110 through the above-mentioned procedures can be provided.

Further, at this time, a part of the authentication processing to ensure that the communication equipments 101 and 102 trust each other in the peer-to-peer connection is performed with the assistance of the server apparatus 103. Then it is possible to effectively share the authentication function among the server apparatus 103 connected to the Internet 110 and the communication equipments 101 and 102 disposed in the house or office. Therefore, conspicuous advantageous effects can be exhibited. For example, the management load can be reduced, the user friendliness can be enhanced, and the communication system low in the cost and high in the security can be provided.

In the present embodiment, the server apparatus 103 and the communication equipment 102 authenticate each other. In a manner similar to that of above, the server apparatus 103 and the communication equipment 101 authenticate each other. As a result, the probability that each of the server apparatus 103, the communication equipment 101 and the communication equipment 102 suffers a fraud by the third party can be eliminated. As a consequence, the present embodiment exhibits the following conspicuous advantageous effects. The communication equipments 101 and 102 can trust each other without any direct mutual authentication between them and without any probability of the fraud by the third party.

In practice, when the probability that one of the server apparatus 103, the communication equipment 101 and the communication equipment 102 suffers a fraud is extremely low, the authentication of the apparatus or communication equipment can be omitted. It is assumed, for example, that the probability that the communication equipment 101 and the communication equipment 102 suffer the fraud is high since each of the communication equipments 101 and 102 is any one of many and unspecified communication equipments, and that the probability that the server apparatus 103 suffers the fraud is low and measures against the fraud are prepared since the server apparatus 103 is open to the public on the Internet 110 for use with being managed by an administrator. In this case, even if a constitution in which step of authenticating the server apparatus 103 is omitted from a series of sequence procedures shown in Fig. 22 or the like is adopted, the advantageous effects of the present embodiment are not lost.

FIRST MODIFIED EMBODIMENT OF SEVENTH EMBODIMENT

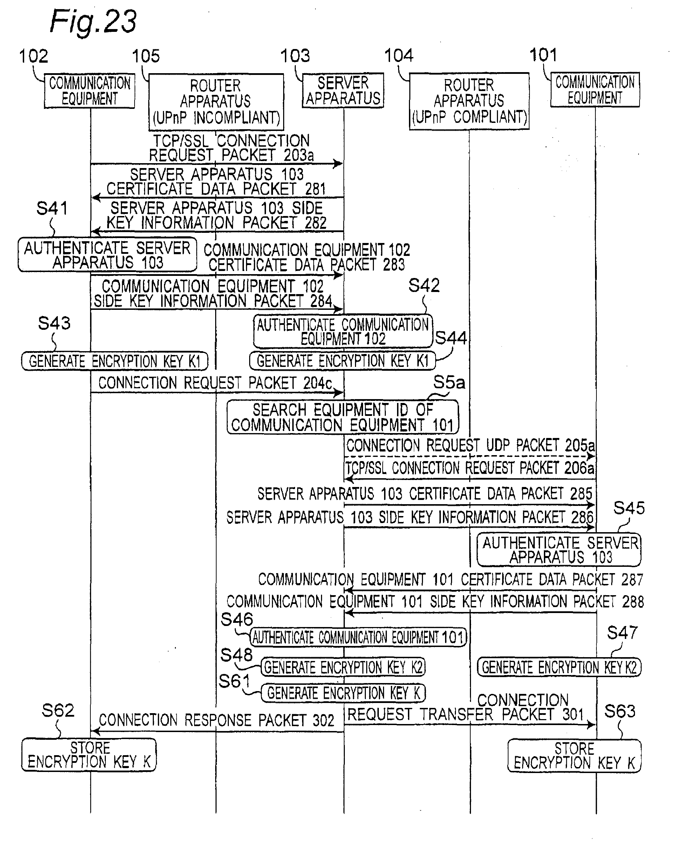

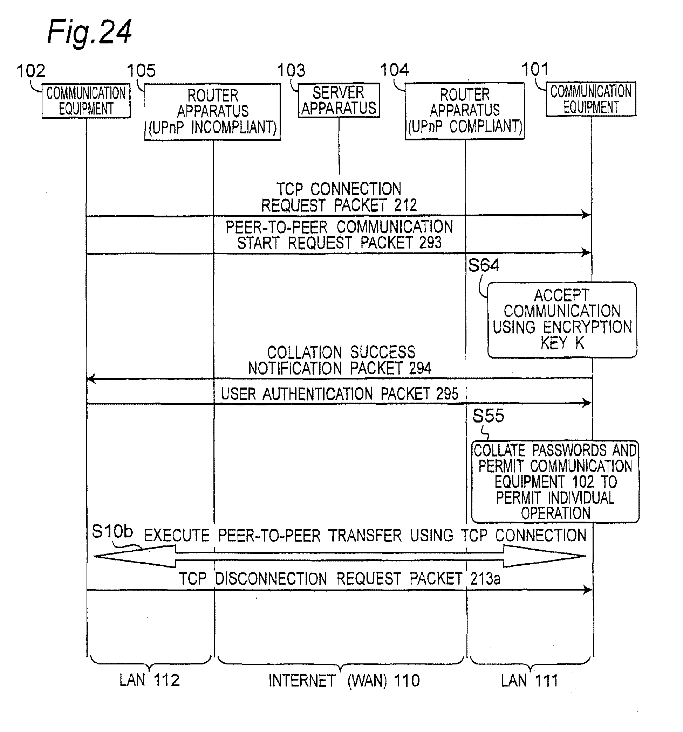

Figs. 23 and 24 are sequence diagrams showing a communication sequence according to the first modified embodiment of the seventh embodiment of the present invention. The preset embodiment is characterized in that the communication sequence further includes a user authentication step by using a password in addition to the respective steps in the communication sequence of Fig. 22. In the present embodiment, communication equipment 102 includes a memory (not shown) storing authentication information or certificate data on the communication equipment 102, and a memory (not shown) storing password information on a request acceptance side communication equipment 101. The communication equipment 101 includes a memory (not shown) storing authentication information or certificate data on the communication equipment 101, and a memory (not shown) storing the password information on the communication equipment 101. The server apparatus 103 includes a memory (not shown) storing authentication information or certificate data on the server apparatus 103.

In Figs. 23 and 24, the procedures from start of the communication sequence until the connection side communication equipment 102 transmits packets 212 and 293 to the waiting and receiving side communication equipment 101, and the communication equipment 101 decides to continue communicating with the communication equipment 102 at step S64 are the same as those of Fig. 22. After a peer-to-peer connection is established between the communication equipments 101 and 102 by transmission of the packets 212 and 293, if the communication equipment 101 accepts to hold a communication by using an encryption key K at step S64, the communication equipment 101 transmits a collation success notification packet 294 to the communication equipment 102. When receiving the packet 294, the request issuance side communication equipment 102 transmits the password information on the request acceptance side communication equipment 101 stored in the memory (not shown) of the communication equipment 102 to the communication equipment 101. When receiving the password information from the communication equipment 102, the communication equipment 101 collates the received password information with that stored in the memory (not shown) of the communication equipment 101 at step S55. If these pieces of password information coincide with each other, the communication equipment 101 authenticates the request issuance side communication equipment 102. Only when the request issuance side communication equipment 102 is authenticated at step S55, the communication equipment 101 permits the communication between the communication equipments 101 and 102 to be continued.

According to this example, not only the advantageous effects of the embodiment shown in Fig. 22 but also such characteristic advantageous effects that it is possible for the communication equipment 102 to confirm a detailed operation right to the communication equipment 101, and that it is possible to confirm an operator of the communication equipment 102 can be exhibited.

SECOND MODIFIED EMBODIMENT OF SEVENTH EMBODIMENT

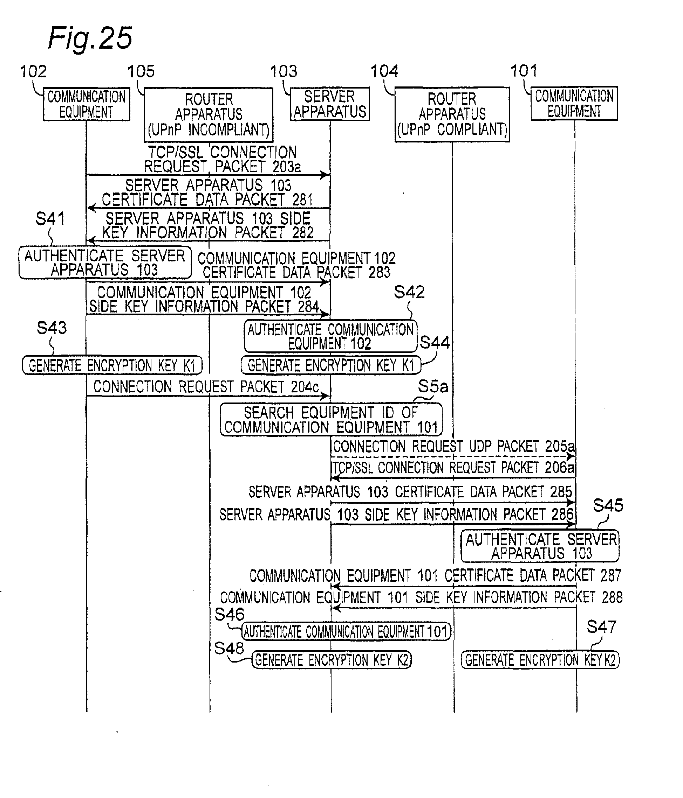

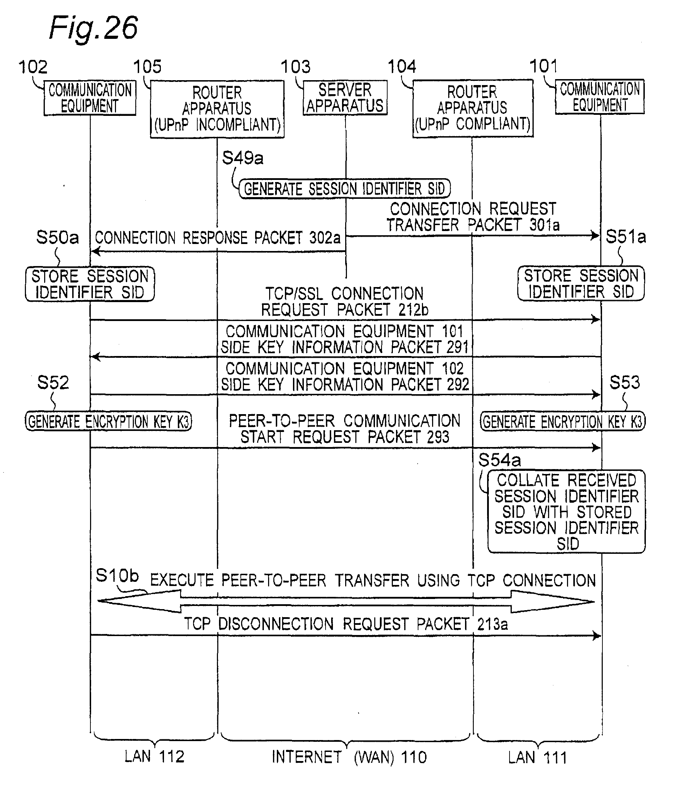

Fig. 25 is a first part of a sequence diagram showing a communication sequence according to the second modified embodiment of the seventh embodiment of the present invention. Fig. 26 is a second part of the sequence diagram. The present embodiment is characterized in that the communication sequence operates in the same communication sequence as that of Fig. 1 in a manner similar to that of the communication sequence of Fig. 22, the communication sequence further includes authentication and encryption steps in a manner similar to that of the communication sequence of Fig. 22, and in that the communication sequence further includes an authentication step between the communication equipment 101 and the communication equipment 102 by using a session identifier SID generated by the server apparatus 103 in place of generation and use of the encryption key K in the communication sequence of Fig. 22. In the present embodiment, each of the communication equipments 101 and 102 includes a memory (not shown) storing authentication information or certificate data on each of the communication equipments, and a memory (not shown) storing peer-to-peer connection authentication information. The server apparatus 103 includes a memory (not shown) storing authentication information or certificate data on the server apparatus 103.

The procedures from start of the communication sequence of Fig. 25 until a step S48 are the same as those in the communication sequence of Fig. 22. In the example of Fig. 25, after executing the processing at step S48, the server apparatus 103 generates a session identifier SID in place of generation of the encryption key K (at step S61 of Fig. 22) at step S49a. This session identifier SID is the same as the session identifier SID2 (See Fig. 21) according to the sixth embodiment. The server apparatus 103 transmits a connection request transfer packet 301a to the communication equipment 101 by using an established TCP/SSL connection. The server apparatus 103 then notifies the communication equipment 101 that a connection request from the communication equipment 102 to the communication equipment 101 is present, and that the communication equipment 101 is selected as a waiting and receiving side communication equipment. In addition, the server apparatus 103 transmits the session identifier SID generated at step S49a. At this time, since the connection request transfer packet 301a is encrypted by an encryption key K2, the session identifier SID to be used when a peer-to-peer communication is executed later on between the communication equipments 101 and 102 is delivered to the communication equipment 101 in safety. At step S51a, the communication equipment 101 stores the session identifier SID included in the received packet 301a in the internal memory of the communication equipment 101. In addition, the server apparatus 103 transmits a connection response packet 302a to the communication equipment 102. The server apparatus 103 then notifies the communication equipment 102 that the communication equipment 102 is selected as the connection side communication equipment. In addition, the server apparatus 103 transmits the session identifier SID generated at step S49a to the communication equipment 102. At this time, since the connection request transfer packet 302a is encrypted by an encryption key K1, the session identifier SID to be used when a peer-to-peer communication is executed later on between the communication equipments 101 and 102 is delivered to the communication equipment 102 in safety. At step S50a, the communication equipment 102 stores the session identifier SID included in the received packet 302a in the internal memory of the communication equipment 102.

After storing the session identifier SID, the communication equipment 102 starts a step of establishing a TCP/SSL connection with the waiting and receiving side communication equipment 101. In a manner similar to that of the communication sequence of Fig. 20, this step includes transmission or reception of packets 212b, 291, and 292 and execution of the processings at steps S52 and S53. Next, the communication equipment 102 transmits a peer-to-peer connection request packet 293 to the communication equipment 101. In the transmission, the communication equipment 102 transmits the packet 293 with adding the session identifier SID stored in the memory of the communication equipment 102 to the packet 293. The communication equipment 101 receives the packet 293 and executes the processing at step S54a similar to step S54 shown in Fig. 20. Since a peer-to-peer communication line is established between the communication equipments 101 and 102 through the above-mentioned procedures, the communication equipments 101 and 102 can transfer data to each other arbitrarily at step S10b and the following.

In a manner similar to that of the sequence of Fig. 2, the communication equipments 101 and 102 execute data communication at step S10b by using the established TCP connection, and the communication is completed by transmitting a TCP disconnection request packet 213a from the arbitrary side communication equipment at an arbitrary time.

The use of the session identifier SID produces particularly suitable advantageous effects as follows. When the communication equipment 102 authenticates a signature, and then establishes the connection to the communication equipment 101 only within an expiration date, it is possible to prevent the communication equipment 102 from being induced to an IP address of the malicious third party. In addition, it is possible to prevent the communication equipment 102 from being connected to another communication equipment having an IP address which has been already allocated again by the ISP.

The communication system that holds the communication between the two communication equipments 101 and 102 connected to the Internet 110 through the above-mentioned procedures can be provided. Further, at this time, a part of the authentication processing performed to ensure that the communication equipments 101 and 102 trust each other in the peer-to-peer connection is performed with the assistance of the server apparatus 103. Then it is possible to effectively share the authentication function among the server apparatus 103 connected to the Internet 110 and the communication equipments 101 and 102 disposed in the house or office. Therefore, conspicuous advantageous effects can be exhibited. For example, the management load can be reduced, user friendliness can be enhanced, and the communication system low in the cost and high in the security can be provided.

THIRD MODIFIED EMBODIMENT OF SEVENTH EMBODIMENT

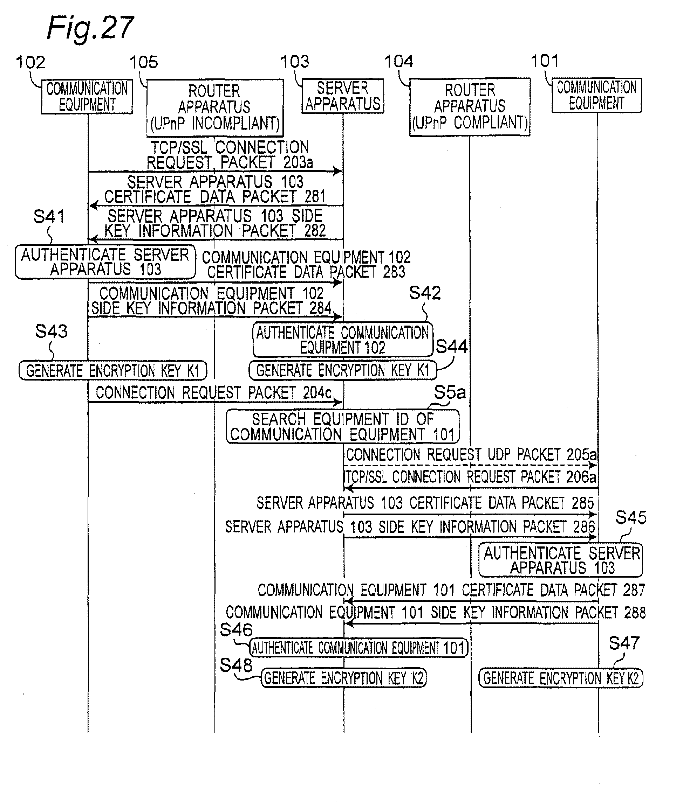

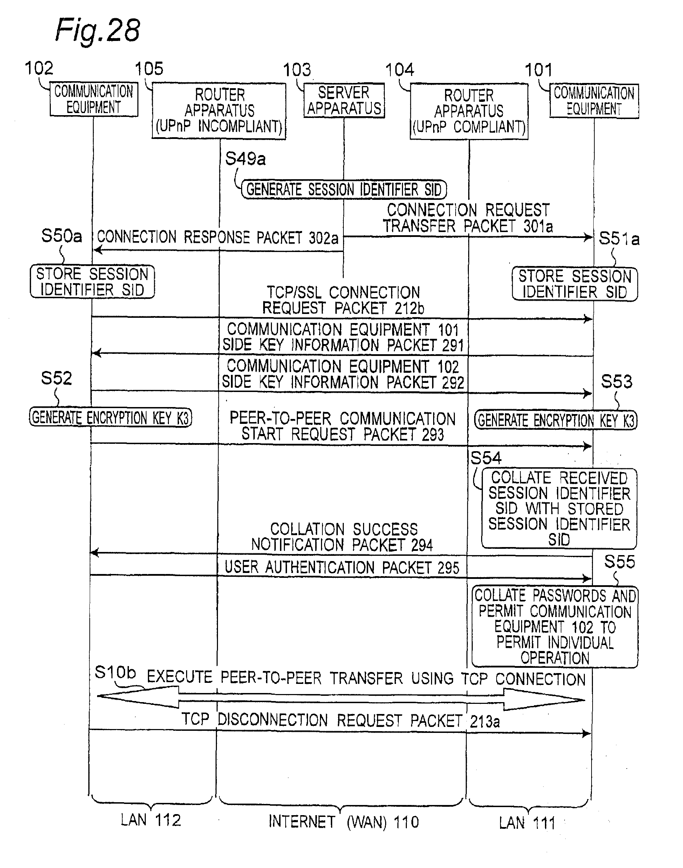

Figs. 27 and 28 are sequence diagrams showing a communication sequence according to the third modified embodiment of the seventh embodiment of the present invention. The preset embodiment is characterized in that the communication sequence further includes a user authentication step by using a password in addition to the respective steps in the communication sequence of Figs. 25 and 26. In the present embodiment, communication equipment 102 includes a memory (not shown) storing authentication information or certificate data on the communication equipment 102, and a memory (not shown) storing password information on a request acceptance side communication equipment 101. The communication equipment 101 includes a memory (not shown) storing authentication information or certificate data on the communication equipment 101, and a memory (not shown) storing the password information on the communication equipment 101. The server apparatus 103 includes a memory (not shown) storing authentication information or certificate data on the server apparatus 103.

In Figs. 27 and 28, the procedures from start of the communication sequence until the connection side communication equipment 102 transmits a packet 293 to the waiting and receiving side communication equipment 101, and the communication equipment 101 decides to continue communication with the communication equipment 102 at step S54 are the same as those of Figs. 25 and 26. After the communication equipment 102 transmits the packet 293 and the communication equipment 101 decides to continue communication at step S54, the communication equipment 101 transmits a collation success notification packet 294 for notifying the communication equipment 102 that collation of session identifiers SID succeed and that continuation of the communication is decided, to the communication equipment 102. When receiving the packet 294, the request issuance side communication equipment 102 transmits the password information on the request acceptance side communication equipment 101 stored in the memory (not shown) of the communication equipment 102 to the communication equipment 101. When receiving the password information from the communication equipment 102, the communication equipment 101 collates the received password information with that stored in the memory (not shown) of the communication equipment 101 at step S55. If these pieces of password information coincide with each other, the communication equipment 101 authenticates the request issuance side communication equipment 102. Only when the request issuance side communication equipment 102 is authenticated at step S55, the communication equipment 101 permits the communication between the communication equipment 101 and the communication equipment 102 to be continued.

According to this example, not only the advantageous effects of the embodiment shown in Figs. 25 and 26 but also such characteristic advantageous effects that it is possible for the communication equipment 102 to confirm a detailed operation right to the communication equipment 101, and that it is possible to confirm an operator of the communication equipment 102 can be exhibited.

MODIFIED EMBODIMENTS

In the respective embodiments described so far, the NAT setting is made for the TPC protocol, and the peer-to-peer communication is directly held according to the TCP. Obviously, when the NAT setting is made for a UDP protocol in place of that for the TCP protocol, a peer-to-peer communication can be directly held according to the UDP.

As yet another embodiment of the present invention, a program that includes the respective steps related to the communication sequences shown in Figs. 2, 5, 7 to 16, 18 to 20, and 22 to 28 may be provided. Alternatively, a computer readable recording medium that records this program may be provided. In this case, a computer or an equipment connected to the Internet is allowed to read the program and to execute the respective steps in the program. This leads to that the computer or equipment can be made to operate as one of or all of the server apparatus 103 or 103a, the connection issuance side communication equipment 102, the connection acceptance side communication equipment 101, and the relay communication equipment described in the above-mentioned embodiments. Examples of the recording medium that records the program include optical recording mediums such as a CD-ROM and a DVD-ROM, magnetic recording mediums such as a flexible disk and a hard disk, and a semiconductor memory. However, the recording medium is not limited to these examples. Alternatively, the program may be distributed via a network such as the Internet.

INDUSTRIAL APPLICABILITY

The present invention can provide the communication between a communication equipment connected to the Internet via a LAN and another communication equipment connected to the Internet via another LAN surely or safely in terms of communication security at lower cost irrespectively of a band and of a LAN environment. Therefore, the present invention can be applied to provide a network communication such as the case in which the user watches the contents of an AV equipment disposed in one house, in another house by using a TV set.

**Claims**

1. A server apparatus provided in a communication system, for mediating establishment of a connection between a request issuance side communication equipment and a request acceptance side communication equipment, the communication system including the request issuance side communication equipment connected to a network via a first router apparatus; the request acceptance side communication equipment connected to the network via a second router apparatus; and a server apparatus connected to the network,
   wherein the server apparatus establishes a first communication path for connecting the server apparatus to the request issuance side communication equipment via the first router apparatus between the server apparatus and the request issuance side communication equipment prior to issuance of a request;
   wherein the server apparatus maintains, in advance, a second communication path for connecting the server apparatus to the request acceptance side communication equipment via the second router apparatus between the server apparatus and the request acceptance side communication equipment;
   wherein the server apparatus receives waiting and reception capability information on the request issuance side communication equipment from the request issuance side communication equipment, the waiting and reception capability information on the request issuance side communication equipment indicating whether or not the request issuance side communication equipment has a waiting and reception capability to wait for and receive a signal transmitted from the request acceptance side communication equipment via the network, and stores the waiting and reception capability information in equipment information storage means;
   wherein the server apparatus receives waiting and reception capability information on the request acceptance side communication equipment from the request acceptance side communication equipment, the waiting and reception capability information on the request acceptance side communication equipment indicating whether or not the request acceptance side communication equipment has a waiting and reception capability to wait for and receive a signal transmitted from the request issuance side communication equipment via the network, and stores the waiting and reception capability information in the equipment information storage means;
   wherein, in the case that the server apparatus receives a signal for requesting the establishment of the connection between the request issuance side communication equipment and the request acceptance side communication equipment from the request issuance side communication equipment, when the server apparatus judges that at least one of the request issuance side communication equipment and the request acceptance side communication equipment has the waiting and reception capability based on the waiting and reception capability information stored in the equipment information storage means, then the server apparatus selects the one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, notifies the request issuance side communication equipment and the request acceptance side communication equipment, as which the respective communication equipments are selected by using the first and second communication paths, respectively, among the waiting and receiving side communication equipment and the connection side communication equipment;
   wherein the server apparatus receives waiting and receiving address information made to be associated with the selected waiting and receiving side communication equipment from the waiting and receiving side communication equipment; and
   wherein the server apparatus transfers the received waiting and receiving address information to the connection side communication equipment via one of the first communication path and the second communication path for connecting the server apparatus to the selected connection side communication equipment.

**2.** A request issuance side communication equipment provided in a communication system, for establishing a connection with the request acceptance side communication equipment through a mediation of a server apparatus, and for holding a communication with the request acceptance side communication equipment by using the connection established through the mediation of the server apparatus, the communication system including the request issuance side communication equipment connected to a network via a first router apparatus; the request acceptance side communication equipment connected to the network via a second router apparatus; and the server apparatus connected to the network,

wherein the request issuance side communication equipment establishes a first communication path between the request issuance side communication equipment and the server apparatus prior to issuance of a request;

wherein the request issuance side communication equipment judges whether or not the request issuance side communication equipment has a waiting and reception capability to wait for and receive a signal transmitted from the request acceptance side communication equipment via the network, and transmits waiting and reception capability information as judgment results to the server apparatus;

wherein the request issuance side communication equipment transmits a signal for requesting the establishment of the connection between the request issuance side communication equipment and the request acceptance side communication equipment to the server apparatus;

wherein the request issuance side communication equipment receives from the server apparatus via the first communication path as which the request issuance side communication equipment is selected, a waiting and receiving side communication equipment that receives a connection start signal for establishing a direct connection between the request issuance side communication equipment and the request acceptance side communication equipment or a connection side communication equipment that transmits the connection start signal;

(a) when the request issuance side communication equipment is selected as the waiting and receiving side communication equipment, then the request issuance side communication equipment sets the first router apparatus so that the first router apparatus receives a signal being transmitted from the request acceptance side communication equipment and having a destination of waiting and receiving address information made to be associated with the request issuance side communication equipment, and so that the first router apparatus transfers the received signal to the request issuance side communication equipment, and transmits the waiting and receiving address information made to be associated with the request issuance side communication equipment to the server apparatus, and

wherein the request issuance side communication equipment receives the connection start signal having the destination of the waiting and receiving address information made to be associated with the request issuance side communication equipment from the request acceptance side communication equipment not via the server apparatus but via the network, so as to establish the direct connection between the request issuance side communication equipment and the request acceptance side communication equipment; and

(b) when the request issuance side communication equipment is selected as the connection side communication equipment,

then the request issuance side communication equipment receives the waiting and receiving address information made to be associated with the request acceptance side communication equipment from the server apparatus via the first communication path, and

wherein the request issuance side communication equipment transmits the connection start signal having the destination of the waiting and receiving address information made to be associated with the request acceptance side communication equipment to the request acceptance side communication equipment not via the server apparatus but via the network, so as to establish the direct connection between the request issuance side communication equipment and the request acceptance side communication equipment.

**3.** A request acceptance side communication equipment provided in a communication system, for establishing a connection with the request issuance side communication equipment through a mediation of a server apparatus, and for holding a communication with the request issuance side communication equipment by using the connection established through the mediation of the server apparatus, the communication system including the request issuance side communication equipment connected to a network via a first router apparatus; the request acceptance side communication equipment connected to the network via a second router apparatus; and the server apparatus connected to the network,

wherein the request acceptance side communication equipment maintains, in advance, a second communication path between the request acceptance side communication equipment and the server apparatus for connecting the server apparatus to the request acceptance side communication equipment via the second router apparatus;

wherein the request acceptance side communication equipment judges whether or not the request acceptance side communication equipment has a waiting and reception capability to wait for and receive a signal transmitted from the request issuance side communication equipment via the network, and transmits waiting and reception capability information as judgment results to the server apparatus;

wherein the request acceptance side communication equipment receives from the server apparatus via the second communication path as which the request acceptance side communication equipment is selected, a waiting and receiving side communication equipment that receives a connection start signal for establishing a direct connection between the request issuance side communication equipment and the request acceptance side communication equipment or a connection side communication equipment that transmits the connection start signal;

(a) when the request acceptance side communication equipment is selected as the waiting and receiving side communication equipment,

then the request acceptance side communication equipment sets the second router apparatus so that the second router apparatus receives a signal being transmitted from the request issuance side communication equipment and having a destination of waiting and receiving address information made to be associated with the request acceptance side communication equipment, and so that the second router apparatus transfers the received signal to the request acceptance side communication equipment, and transmits the waiting and receiving address information made to be associated with the request acceptance side communication equipment to the server apparatus; and

wherein the request acceptance side communication equipment receives the connection start signal having the destination of the waiting and receiving address information made to be associated with the request acceptance side communication equipment from the request issuance side communication equipment not via the server apparatus but via the network, so as to establish the direct connection between the request issuance side communication equipment and the request acceptance side communication equipment; and

(b) when the request acceptance side communication equipment is selected as the connection side communication equipment,

then the request acceptance side communication equipment receives the waiting and receiving address information made to be associated with the request issuance side communication equipment from the server apparatus via the second communication path; and

wherein the request acceptance side communication equipment transmits the connection start signal having the destination of the waiting and receiving address information made to be associated with the request issuance side communication equipment to the request issuance side communication equipment not via the server apparatus but via the network, so as to establish the direct connection between the request issuance side communication equipment and the request acceptance side communication equipment.

4. A communication system including a request issuance side communication equipment connected to a network via a first router apparatus; a request acceptance side communication equipment connected to the network via a second router apparatus; and a server apparatus connected to the network, the communication system mediating establishment of a connection between the request issuance side communication equipment and the request acceptance side communication equipment by using the server apparatus, and holding a communication by using the connection established through a mediation of the server apparatus,

wherein the server apparatus and the request issuance side communication equipment establish a first communication path for connecting the server apparatus to the request issuance side communication equipment via the first router apparatus between the server apparatus and the request issuance side communication equipment prior to issuance of a request;

wherein the server apparatus and the request acceptance side communication equipment maintain, in advance, a second communication path for connecting the server apparatus to the request acceptance side communication equipment via the second router apparatus between the server apparatus and the request acceptance side communication equipment;

wherein the request issuance side communication equipment judges whether or not the request issuance side communication equipment has a waiting and reception capability to wait for and receive a signal transmitted from the request acceptance side communication equipment via the network, and transmits waiting and reception capability information on the request issuance side communication equipment as judgment results to the server apparatus;

wherein the request acceptance side communication equipment judges whether or not the request acceptance side communication equipment has the waiting and reception capability to wait for and receive a signal transmitted from the request issuance side communication equipment via the network, and transmits waiting and reception capability information on the request acceptance side communication equipment as judgment results to the server apparatus;

wherein the server apparatus receives the waiting and reception capability information on the request issuance side communication equipment and the waiting and reception capability information on the request acceptance side communication equipment, and stores the waiting and reception capability information in equipment information storage means;

wherein, in the case that the server apparatus judges that at least one of the request issuance side communication equipment and the request acceptance side communication equipment has the waiting and reception capability based on the waiting and reception capability information stored in the equipment information storage means, when the server apparatus receives a signal for requesting the establishment of the connection between the request issuance side communication equipment and the request acceptance side communication equipment from the request issuance side communication equipment, then the server apparatus selects the one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, notifies the request issuance side communication equipment and the request acceptance side communication equipment, as which the respective communication equipments are selected by using the first and second communication paths, respectively, among the waiting and receiving side communication equipment and the connection side communication equipment;

wherein the selected waiting and receiving side communication equipment sets the router apparatus that connects the waiting and receiving side communication equipment to the network so that the router apparatus receives a signal being transmitted from the selected connection side communication equipment and having a destination of waiting and receiving address information made to be associated with the waiting and receiving side communication equipment, and so that the router apparatus transfers the received signal to the waiting and receiving side communication equipment, and transmits the waiting and receiving address information to the server apparatus;

wherein the server apparatus transfers the waiting and receiving address information to the connection side communication equipment via one of the first communication path and the second communication path for connecting the server apparatus to the selected connection side communication equipment; and

wherein the connection side communication equipment transmits the connection start signal having the destination of the waiting and receiving address information to the waiting and receiving side communication equipment not via the server apparatus but via the network, so as to establish the direct connection between the request issuance side communication equipment and the request acceptance side communication equipment.

**5.** A server apparatus provided in a communication system, for mediating establishment of a connection between a request issuance side communication equipment and a request acceptance side communication equipment, the communication system including the request issuance side communication equipment connected to a network via a first router apparatus; the request acceptance side communication equipment connected to the network via a second router apparatus; and the server apparatus connected to the network,

wherein the server apparatus establishes a first communication path for connecting the server apparatus to the request issuance side communication equipment via the first router apparatus between the server apparatus and the request issuance side communication equipment prior to issuance of a request;

wherein the server apparatus maintains, in advance, a second communication path for connecting the server apparatus to the request acceptance side communication equipment via the second router apparatus between the server apparatus and the request acceptance side communication equipment;

wherein the server apparatus receives a connection request signal including waiting and reception capability information on the request issuance side communication equipment from the request issuance side communication equipment, the waiting and reception capability information on the request issuance side communication equipment indicating whether or not the request issuance side communication equipment has a waiting and reception capability to wait for and receive a signal transmitted from the request acceptance side communication equipment via the network;

wherein the server apparatus transfers the received connection request signal to the request acceptance side communication equipment via the second communication path;

wherein the server apparatus receives a first connection response signal from the request acceptance side communication equipment, the first connection response signal notifying the request issuance side communication equipment, as which the request issuance side communication equipment is selected, among a waiting and receiving side communication equipment that receives a connection start signal for establishing a direct connection between the request issuance side communication equipment and the request acceptance side communication equipment or a connection side communication equipment that transmits the connection start signal;

wherein the server apparatus transfers the received first connection response signal to the request issuance side communication equipment via the first communication path;

wherein the server apparatus receives waiting and receiving address information made to be associated with the selected waiting and receiving side communication equipment from the waiting and receiving side communication equipment; and

wherein the server apparatus transfers the received waiting and receiving address information to the connection side communication equipment via one of the first communication path and the second communication path for connecting the server apparatus to the selected connection side communication equipment.

6. A request issuance side communication equipment provided in a communication system, for establishing a connection with the request acceptance side communication equipment through a mediation of a server apparatus, and for holding a communication with the request acceptance side communication equipment by using the connection established through the mediation of the server apparatus, the communication system including the request issuance side communication equipment connected to a network via a first router apparatus; the request acceptance side communication equipment connected to the network via a second router apparatus; and the server apparatus connected to the network,

wherein the request issuance side communication equipment establishes a first communication path between the request issuance side communication equipment and the server apparatus prior to issuance of a request;

wherein, when the request issuance side communication equipment desires to establish the connection with the request acceptance side communication equipment, then the request issuance side communication equipment judges whether or not the request issuance side communication equipment has a waiting and reception capability to wait for and receive a signal transmitted from the request acceptance side communication equipment via the network, and transmits a connection request signal including waiting and reception capability information as judgment results to the server apparatus;

wherein the request issuance side communication equipment receives a first connection response signal from the server apparatus via the first communication path, the first connection response signal notifying the request issuance side communication equipment, as which the request issuance side communication equipment is selected, among a waiting and receiving side communication equipment that receives a connection start signal for establishing a direct connection between the request issuance side communication equipment and the request acceptance side communication equipment or a connection side communication equipment that transmits the connection start signal;

(a) when the request issuance side communication equipment is selected as the waiting and receiving side communication equipment,

then the request issuance side communication equipment sets the first router apparatus so that the first router apparatus receives a signal being transmitted from the request acceptance side communication equipment and having a destination of waiting and receiving address information made to be associated with the request issuance side communication equipment, and so that the first router apparatus transfers the received signal to the request issuance side communication equipment, transmits the waiting and receiving address information made to be associated with the request issuance side communication equipment to the server apparatus, and

wherein the request issuance side communication equipment receives the connection start signal having the destination of the waiting and receiving address information made to be associated with the request issuance side communication equipment from the request acceptance side communication equipment not via the server apparatus but via the network, so as to establish the direct connection between the request issuance side communication equipment and the request acceptance side communication equipment; and

(b) when the request issuance side communication equipment is selected as the connection side communication equipment,

then the request issuance side communication equipment receives the waiting and receiving address information made to be associated with the request acceptance side communication equipment from the server apparatus via the first communication path, and

wherein the request issuance side communication equipment transmits the connection start signal having the destination of the waiting and receiving address information made to be associated with the request acceptance side communication equipment to the request acceptance side communication equipment not via the server apparatus but via the network, so as to establish the direct connection between the request issuance side communication equipment and the request acceptance side communication equipment.

7. A request acceptance side communication equipment provided in a communication system, for establishing a connection with the request issuance side communication equipment through a mediation of a server apparatus, and for holding a communication with the request issuance side communication equipment by using the connection established through the mediation of the server apparatus, the communication system including the request issuance side communication equipment connected to a network via a first router apparatus; the request acceptance side communication equipment connected to the network via a second router apparatus; and the server apparatus connected to the network,

wherein the request acceptance side communication equipment maintains, in advance, a second communication path between the request acceptance side communication equipment and the server apparatus for connecting the server apparatus to the request acceptance side communication equipment via the second router apparatus;

wherein the request acceptance side communication equipment receives a connection request signal including waiting and reception capability information on the request issuance side communication equipment from the server apparatus via the second communication path, the waiting and reception capability information on the request issuance side communication equipment indicating whether or not the request issuance side communication equipment has a waiting and reception capability to wait for and receive a signal transmitted from the request acceptance side communication equipment via the network;

wherein, when the request acceptance side communication equipment receives the connection request signal, then the request acceptance side communication equipment judges whether or not the request acceptance side communication equipment has a waiting and reception capability to wait for and receive a signal transmitted from the request issuance side communication equipment via the network, and generates waiting and reception capability information on the request acceptance side communication equipment as judgment results;

wherein, when the request acceptance side communication equipment judges that at least one of the request issuance side communication equipment and the request acceptance side communication equipment has the waiting and reception capability based on the waiting and reception capability information on the request issuance side communication equipment and on the waiting and reception capability information on the request acceptance side communication equipment, then the request acceptance side communication equipment selects the at least one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, and transmits a first connection response signal to the server apparatus, the first connection response signal notifying the request issuance side communication equipment, as which the request issuance side communication equipment is selected, among the waiting and receiving side communication equipment and the connection side communication equipment;

(a) when the request acceptance side communication equipment is selected as the waiting and receiving side communication equipment,
then the request acceptance side communication equipment sets the second router apparatus so that the second router apparatus receives a signal being transmitted from the request issuance side communication equipment and having a destination of waiting and receiving address information made to be associated with the request acceptance side communication equipment, and so that the second router apparatus transfers the received signal to the request acceptance side communication equipment, transmits the waiting and receiving address information made to be associated with the request acceptance side communication equipment to the server apparatus, and
wherein the request acceptance side communication equipment receives the connection start signal having the destination of the waiting and receiving address information made to be associated with the request acceptance side communication equipment from the request issuance side communication equipment not via the server apparatus but via the network, so as to establish a direct connection between the request issuance side communication equipment and the request acceptance side communication equipment; and
(b) when the request acceptance side communication equipment is selected as the connection side communication equipment,
then the request acceptance side communication equipment receives the waiting and receiving address information made to be associated with the request issuance side communication equipment from the server apparatus via the second communication path, and

wherein the request acceptance side communication equipment transmits the connection start signal having the destination of the waiting and receiving address information made to be associated with the request issuance side communication equipment to the request issuance side communication equipment not via the server apparatus but via the network, so as to establish the direct connection between the request issuance side communication equipment and the request acceptance side communication equipment.

8. A communication system including a request issuance side communication equipment connected to a network via a first router apparatus; a request acceptance side communication equipment connected to the network via a second router apparatus; and a server apparatus connected to the network, the communication system mediating establishment of a connection between the request issuance side communication equipment and the request acceptance side communication equipment by using the server apparatus, and holding a communication by using the connection established through a mediation of the server apparatus,

wherein the server apparatus and the request issuance side communication equipment establish a first communication path for connecting the server apparatus to the request issuance side communication equipment via the first router apparatus between the server apparatus and the request issuance side communication equipment prior to issuance of a request;

wherein the server apparatus and the request acceptance side communication equipment maintain, in advance, a second communication path for connecting the server apparatus to the request acceptance side communication equipment via the second router apparatus between the server apparatus and the request acceptance side communication equipment;

wherein, when the request issuance side communication equipment desires to establish the connection with the request acceptance side communication equipment, then the request issuance side communication equipment judges whether or not the request issuance side communication equipment has a waiting and reception capability to wait for and receive a signal transmitted from the request acceptance side communication equipment via the network, and transmits a connection request signal including waiting and reception capability information on the request issuance side communication equipment as judgment results to the server apparatus;

wherein the server apparatus transfers the connection request signal to the request acceptance side communication equipment via the second communication path;

wherein, when the request acceptance side communication equipment receives the transferred connection request signal, then the request acceptance side communication equipment judges whether or not the request acceptance side communication equipment has the waiting and reception capability to wait for and receive a signal transmitted from the request issuance side communication equipment via the network, and generates waiting and reception capability information on the request acceptance side communication equipment as judgment results;

wherein, when the request acceptance side communication equipment judges that at least one of the request issuance side communication equipment and the request acceptance side communication equipment has the waiting and reception capability based on the waiting and reception capability information on the request issuance side communication equipment and on the waiting and reception capability information on the request acceptance side communication equipment, then the request acceptance side communication equipment selects the at least one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, and transmits a first connection response signal to the server apparatus, the first connection response signal notifying the request issuance side communication equipment, as which the request issuance side communication equipment is selected, among the waiting and receiving side communication equipment and the connection side communication equipment;

wherein the server apparatus transfers the first connection response signal to the request issuance side communication equipment via the first communication path;

wherein the selected waiting and receiving side communication equipment sets the router apparatus that connects the waiting and receiving side communication equipment to the network so that the router apparatus receives a signal being transmitted from the selected connection side communication equipment and having a destination of waiting and receiving address information made to be associated with the waiting and receiving side communication equipment, and so that the router apparatus transfers the received signal to the waiting and receiving side communication equipment, and transmits the waiting and receiving address information to the server apparatus;

wherein the server apparatus transfers the waiting and receiving address information to the connection side communication equipment via one of the first communication path and the second communication path for connecting the server apparatus to the selected connection side communication equipment; and

wherein the connection side communication equipment transmits the connection start signal having the destination of the waiting and receiving address information to the waiting and receiving side communication equipment not via the server apparatus but via the network, so as to establish a direct connection between the request issuance side communication equipment and the request acceptance side communication equipment.

9. A server apparatus provided in a communication system, for mediating establishment of a connection between a request issuance side communication equipment and a request acceptance side communication equipment, the communication system including the request issuance side communication equipment connected to a network via a first router apparatus; the request acceptance side communication equipment connected to the network via a second router apparatus; and the server apparatus connected to the network,

wherein the server apparatus establishes a first communication path for connecting the server apparatus to the request issuance side communication equipment via the first router apparatus between the server apparatus and the request issuance side communication equipment prior to issuance of a request;

wherein the server apparatus maintains, in advance, a second communication path for connecting the server apparatus to the request acceptance side communication equipment via the second router apparatus between the server apparatus and the request acceptance side communication equipment;

wherein the server apparatus receives a waiting and reception capability notification request signal for requesting waiting and reception capability information on the request acceptance side communication equipment from the request issuance side communication equipment, the waiting and reception capability information on the request acceptance side communication equipment indicating whether or not the request acceptance side communication equipment has a waiting and reception capability to wait for and receive a signal transmitted from the request issuance side communication equipment via the network;

wherein the server apparatus transfers the received waiting and reception capability notification request signal to the request acceptance side communication equipment via the second communication path;

wherein the server apparatus receives a waiting and reception capability notification response signal including the waiting and reception capability information on the request acceptance side communication equipment from the request acceptance side communication equipment;

wherein the server apparatus transfers the received waiting and reception capability notification response signal to the request issuance side communication equipment via the first communication path;

wherein the server apparatus receives a first connection request signal from the request issuance side communication equipment, the first connection request signal notifying the request acceptance side communication equipment, as which the request acceptance side communication equipment is selected, among a waiting and receiving side communication equipment that receives a connection start signal for establishing a direct connection between the request issuance side communication equipment, and the request acceptance side communication equipment or a connection side communication equipment that transmits the connection start signal;

wherein the server apparatus transfers the received first connection response signal to the request acceptance side communication equipment via the second communication path;

wherein the server apparatus receives waiting and receiving address information made to be associated with the waiting and receiving side communication equipment from the waiting and receiving side communication equipment; and

wherein the server apparatus transfers the received waiting and receiving address information to the connection side communication equipment via one of the first communication path and the second communication path for connecting the server apparatus to the selected connection side communication equipment.

10. A request issuance side communication equipment provided in a communication system, for establishing a connection with the request acceptance side communication equipment through a mediation of a server apparatus, and for holding a communication with the request acceptance side communication equipment by using the connection established through the mediation of the server apparatus, the communication system including the request issuance side communication equipment connected to a network via a first router apparatus; the request acceptance side communication equipment connected to the network via a second router apparatus; and the server apparatus connected to the network,

wherein the request issuance side communication equipment establishes a first communication path between the request issuance side communication equipment and the server apparatus prior to issuance of a request;

wherein, when the request issuance side communication equipment desires to establish the connection with the request acceptance side communication equipment, then the request issuance side communication equipment judges whether or not the request issuance side communication equipment has a waiting and reception capability to wait for and receive a signal transmitted from the request acceptance side communication equipment via the network, and generates waiting and reception capability information as judgment results;

wherein the request issuance side communication equipment transmits a waiting and reception capability notification request signal for requesting waiting and reception capability information on the request acceptance side communication equipment to the server apparatus, the waiting and reception capability information on the request acceptance side communication equipment indicating whether or not the request acceptance side communication equipment has a waiting and reception capability to wait for and receive a signal transmitted from the request issuance side communication equipment via the network;

wherein the request issuance side communication equipment receives the waiting and reception capability notification response signal including the waiting and reception capability information on the request acceptance side communication equipment from the server apparatus via the first communication path;

wherein, when the request issuance side communication equipment judges that at least one of the request issuance side communication equipment and the request acceptance side communication equipment has the waiting and reception capability based on the waiting and reception capability information on the request issuance side communication equipment and on the waiting and reception capability information on the request acceptance side communication equipment, then the request issuance side communication equipment selects the at least one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, and transmits a first connection request signal to the server apparatus, the first connection request signal notifying the server apparatus, as which the request acceptance side communication equipment is selected, among the waiting and receiving side communication equipment and the connection side communication equipment;

(a) when the request issuance side communication equipment is selected as the waiting and receiving side communication equipment, then the request issuance side communication equipment sets the first router apparatus so that the first router apparatus receives a signal being transmitted from the request acceptance side communication equipment and having a destination of waiting and receiving address information made to be associated with the request issuance side communication equipment, and so that the first router apparatus transfers the received signal to the request issuance side communication equipment, transmits the waiting and receiving address information made to be associated with the request issuance side communication equipment to the server apparatus, and

wherein the request issuance side communication equipment receives the connection start signal having the destination of the waiting and receiving address information made to be associated with the request issuance side communication equipment from the request acceptance side communication equipment not via the server apparatus but via the network, so as to establish the direct connection between the request issuance side communication equipment and the request acceptance side communication equipment; and

(b) when the request issuance side communication equipment is selected as the connection side communication equipment,

then the request issuance side communication equipment receives the waiting and receiving address information made to be associated with the request acceptance side communication equipment from the server apparatus via the first communication path, and

wherein the request issuance side communication equipment transmits the connection start signal having the destination of the waiting and receiving address information made to be associated with the request acceptance side communication equipment to the request acceptance side communication equipment not via the server apparatus but via the network, so as to establish the direct connection between the request issuance side communication equipment and the request acceptance side communication equipment.

**11.** A request acceptance side communication equipment provided in a communication system, for establishing a connection with the request issuance side communication equipment through a mediation of a server apparatus, and for holding a communication with the request issuance side communication equipment by using the connection established through the mediation of the server apparatus, the communication system including the request issuance side communication equipment connected to a network via a first router apparatus; the request acceptance side communication equipment connected to the network via a second router apparatus; and the server apparatus connected to the network,

wherein the request acceptance side communication equipment maintains, in advance, a second communication path between the request acceptance side communication equipment and the server apparatus for connecting the server apparatus to the request acceptance side communication equipment via the second router apparatus;

wherein the request acceptance side communication equipment receives a waiting and reception capability notification request signal for requesting waiting and reception capability information on the request acceptance side communication equipment from the server apparatus via the second communication path, the waiting and reception capability information on the request acceptance side communication equipment indicating whether or not the request acceptance side communication equipment has a waiting and reception capability to wait for and receive a signal transmitted from the request issuance side communication equipment via the network;

wherein, when the request acceptance side communication equipment receives the waiting and reception capability notification request signal, then the request acceptance side communication equipment judges whether or not the request acceptance side communication equipment has the waiting and reception capability, and transmits a waiting and reception capability notification response signal including the waiting and reception capability information as judgment results to the server apparatus;

wherein the request acceptance side communication equipment receives which the request acceptance side communication equipment is selected as, a waiting and receiving side communication equipment that receives a connection start signal for establishing a direct connection between the request issuance side communication equipment and the request acceptance side communication equipment or a connection side communication equipment that transmits the connection start signal, from the server apparatus via the second communication path;

(a) when the request acceptance side communication equipment is selected as the waiting and receiving side communication equipment,

then the request acceptance side communication equipment sets the second router apparatus so that the second router apparatus receives a signal being transmitted from the request issuance side communication equipment and having a destination of waiting and receiving address information made to be associated with the request acceptance side communication equipment, and so that the second router apparatus transfers the received signal to the request acceptance side communication equipment, transmits the waiting and receiving address information made to be associated with the request acceptance side communication equipment to the server apparatus, and

wherein the request acceptance side communication equipment receives the connection start signal having the destination of the waiting and receiving address information made to be associated with the request acceptance side communication equipment from the request issuance side communication equipment not via the server apparatus but via the network, so as to establish a direct connection between the request issuance side communication equipment and the request acceptance side communication equipment; and

(b) when the request acceptance side communication equipment is selected as the connection side communication equipment, then the request acceptance side communication equipment receives the waiting and receiving address information made to be associated with the request issuance side communication equipment from the server apparatus via the second communication path, and

wherein the request acceptance side communication equipment transmits the connection start signal having the destination of the waiting and receiving address information made to be associated with the request issuance side communication equipment to the request issuance side communication equipment not via the server apparatus but via the network, so as to establish the direct connection between the request issuance side communication equipment and the request acceptance side communication equipment.

12. A communication system including a request issuance side communication equipment connected to a network via a first router apparatus; a request acceptance side communication equipment connected to the network via a second router apparatus; and a server apparatus connected to the network, the communication system mediating establishment of a connection between the request issuance side communication equipment and the request acceptance side communication equipment by using the server apparatus, and holding a communication by using the connection established through a mediation of the server apparatus,

wherein the server apparatus and the request issuance side communication equipment establish a first communication path for connecting the server apparatus to the request issuance side communication equipment via the first router apparatus between the server apparatus and the request issuance side communication equipment prior to issuance of a request;

wherein the server apparatus and the request acceptance side communication equipment maintain, in advance, a second communication path for connecting the server apparatus to the request acceptance side communication equipment via the second router apparatus between the server apparatus and the request acceptance side communication equipment;

wherein, when the request issuance side communication equipment desires to establish the connection with the request acceptance side communication equipment, then the request issuance side communication equipment judges whether or not the request issuance side communication equipment has a waiting and reception capability to wait for and receive a signal transmitted from the request acceptance side communication equipment via the network, and generates waiting and reception capability information on the request issuance side communication equipment as judgment results;

wherein the request issuance side communication equipment transmits a waiting and reception capability notification request signal for requesting waiting and reception capability information on the request acceptance side communication equipment to the server apparatus, the waiting and reception capability information on the request acceptance side communication equipment indicating whether or not the request acceptance side communication equipment has a waiting and reception capability to wait for and receive a signal transmitted from the request issuance side communication equipment via the network;

wherein the server apparatus transfers the waiting and reception capability notification request signal to the request acceptance side communication equipment via the second communication path;

wherein, when the request acceptance side communication equipment receives the waiting and reception capability notification request signal, then the request acceptance side communication equipment judges whether or not the request acceptance side communication equipment has the waiting and reception capability, and transmits a waiting and reception capability notification response signal including the waiting and reception capability information on the request acceptance side communication equipment as judgment results to the server apparatus;

wherein the server apparatus transfers the waiting and reception capability notification response signal to the request issuance side communication equipment via the first communication path;

wherein, when the request issuance side communication equipment judges that at least one of the request issuance side communication equipment and the request acceptance side communication equipment has the waiting and reception capability based on the waiting and reception capability information on the request issuance side communication equipment and on the waiting and reception capability information on the request acceptance side communication equipment, then the request issuance side communication equipment selects the at least one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, and transmits a first connection request signal to the server apparatus, the first connection request signal notifying the server apparatus, as which the request acceptance side communication equipment is selected, among the waiting and receiving side communication equipment or the connection side communication equipment;

wherein the server apparatus transfers the first connection request signal to the request acceptance side communication equipment via the second communication equipment;

wherein the selected waiting and receiving side communication equipment sets the router apparatus that connects the waiting and receiving side communication equipment to the network so that the router apparatus receives a signal being transmitted from the selected connection side communication equipment and having a destination of waiting and receiving address information made to be associated with the waiting and receiving side communication equipment, and so that the router apparatus transfers the received signal to the waiting and receiving side communication equipment, and transmits the waiting and receiving address information to the server apparatus;

wherein the server apparatus transfers the waiting and receiving address information to the connection side communication equipment via one of the first communication path and the second communication path for connecting the server apparatus to the selected connection side communication equipment; and

wherein the connection side communication equipment transmits the connection start signal having the destination of the waiting and receiving address information to the waiting and receiving side communication equipment not via the server apparatus but via the network, so as to establish a direct connection between the request issuance side communication equipment and the request acceptance side communication equipment.

13. A server apparatus provided in a communication system, for mediating establishment of a connection between a request issuance side communication equipment and a request acceptance side communication equipment, the communication system including the request issuance side communication equipment connected to a network via a first router apparatus; the request acceptance side communication equipment connected to the network via a second router apparatus; and the server apparatus connected to the network,

wherein the server apparatus establishes a first communication path for connecting the server apparatus to the request issuance side communication equipment via the first router apparatus between the server apparatus and the request issuance side communication equipment prior to issuance of a request;

wherein the server apparatus maintains, in advance, a second communication path for connecting the server apparatus to the request acceptance side communication equipment via the second router apparatus between the server apparatus and the request acceptance side communication equipment;

wherein the server apparatus receives a connection request signal including waiting and reception capability information on the request issuance side communication equipment from the request issuance side communication equipment, the waiting and reception capability information on the request issuance side communication equipment indicating whether or not the request issuance side communication equipment has a waiting and reception capability to wait for and receive a signal transmitted from the request acceptance side communication equipment via the network;

wherein, when the server apparatus receives the connection request signal, the server apparatus transmits a waiting and reception capability notification request signal for requesting waiting and reception capability information on the request acceptance side communication equipment to the request acceptance side communication equipment via the second communication path, the waiting and reception capability information on the request acceptance side communication equipment indicating whether or not the request acceptance side communication equipment has a waiting and reception capability to wait for and receive a signal transmitted from the request issuance side communication equipment via the network;

wherein the server apparatus receives the waiting and reception capability information on the request acceptance side communication equipment from the request acceptance side communication equipment;

wherein, when the server apparatus judges that at least one of the request issuance side communication equipment and the request acceptance side communication equipment has the waiting and reception capability based on the waiting and reception capability information on the request issuance side communication equipment and on the waiting and reception capability information on the request acceptance side communication equipment, then the server apparatus selects the one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, and notifies the request issuance side communication equipment and the request acceptance side communication equipment, as which the respective communication equipments are selected by using the first and second communication paths, respectively, among the waiting and receiving side communication equipment and the connection side communication equipment;

wherein the server apparatus receives waiting and receiving address information made to be associated with the waiting and receiving side communication equipment from the waiting and receiving side communication equipment; and

wherein the server apparatus transfers the received waiting and receiving address information to the connection side communication equipment via one of the first communication path and the second communication path for connecting the server apparatus to the selected connection side communication equipment.

14. A request issuance side communication equipment provided in a communication system, for establishing a connection with the request acceptance side communication equipment through a mediation of a server apparatus, and for holding a communication with the request acceptance side communication equipment by using the connection established through the mediation of the server apparatus, the communication system including the request issuance side communication equipment connected to a network via a first router apparatus; the request acceptance side communication equipment connected to the network via a second router apparatus; and the server apparatus connected to the network,

wherein the request issuance side communication equipment establishes a first communication path between the request issuance side communication equipment and the server apparatus prior to issuance of a request;

wherein, when the request issuance side communication equipment desires to establish the connection with the request acceptance side communication equipment, then the request issuance side communication equipment judges whether or not the request issuance side communication equipment has a waiting and reception capability to wait for and receive a signal transmitted from the request acceptance side communication equipment via the network, and transmits a connection request signal including waiting and reception capability information as judgment results to the server apparatus;

wherein the request issuance side communication equipment receives, from the server apparatus via the first communication path, which the request issuance side communication equipment is selected as, a waiting and receiving side communication equipment that receives a connection start signal for establishing a direct connection between the request issuance side communication equipment and the request acceptance side communication equipment or a connection side communication equipment that transmits the connection start signal;

(a) when the request issuance side communication equipment is selected as the waiting and receiving side communication equipment,

then the request issuance side communication equipment sets the first router apparatus so that the first router apparatus receives a signal being transmitted from the request acceptance side communication equipment and having a destination of waiting and receiving address information made to be associated with the request issuance side communication equipment, and so that the first router apparatus transfers the received signal to the request issuance side communication equipment made to be associated with the request issuance side communication equipment, transmits the waiting and receiving address information to the server apparatus, and wherein the request issuance side communication equipment receives the connection start signal having the destination of the waiting and receiving address information made to be associated with the request issuance side communication equipment from the request acceptance side communication equipment not via the server apparatus but via the network, so as to establish the direct connection between the request issuance side communication equipment and the request acceptance side communication equipment; and
(b) when the request issuance side communication equipment is selected as the connection side communication equipment,
then the request issuance side communication equipment receives the waiting and receiving address information made to be associated with the request acceptance side communication equipment from the server apparatus via the first communication path, and

wherein the request issuance side communication equipment transmits the connection start signal having the destination of the waiting and receiving address information made to be associated with the request acceptance side communication equipment to the request acceptance side communication equipment not via the server apparatus but via the network, so as to establish the direct connection between the request issuance side communication equipment and the request acceptance side communication equipment.

**15.** A request acceptance side communication equipment provided in a communication system, for establishing a connection with the request issuance side communication equipment through a mediation of a server apparatus, and for holding a communication with the request issuance side communication equipment by using the connection established through the mediation of the server apparatus, the communication system including the request issuance side communication equipment connected to a network via a first router apparatus; the request acceptance side communication equipment connected to the network via a second router apparatus; and the server apparatus connected to the network,
wherein the request acceptance side communication equipment maintains, in advance, a second communication path between the request acceptance side communication equipment and the server apparatus for connecting the server apparatus to the request acceptance side communication equipment via the second router apparatus;
wherein the request acceptance side communication equipment receives a waiting and reception capability notification request signal for requesting waiting and reception capability information on the request acceptance side communication equipment from the server apparatus via the second communication path, the waiting and reception capability information on the request acceptance side communication equipment indicating whether or not the request acceptance side communication equipment has a waiting and reception capability to wait for and receive a signal transmitted from the request issuance side communication equipment via the network;
wherein, when the request acceptance side communication equipment receives the waiting and reception capability notification request signal, then the request acceptance side communication equipment judges whether or not the request acceptance side communication equipment has the waiting and reception capability, and transmits the waiting and reception capability information on the request acceptance side communication equipment as judgment results to the server apparatus;
wherein the request acceptance side communication equipment receives information from the server apparatus via the second communication path, the information indicating as which the request acceptance side communication equipment is selected, a waiting and receiving side communication equipment that receives a connection start signal for establishing a direct connection between the request issuance side communication equipment and the request acceptance side communication equipment or a connection side communication equipment that transmits the connection start signal;

(a) when the request acceptance side communication equipment is selected as the waiting and receiving side communication equipment,
then the request acceptance side communication equipment sets the second router apparatus so that the second router apparatus receives a signal being transmitted from the request issuance side communication equipment and having a destination of waiting and receiving address information made to be associated with the request acceptance side communication equipment, and so that the second router apparatus transfers the received signal to the request acceptance side communication equipment, transmits the waiting and receiving address information made to be associated with the request acceptance side communication equipment to the server apparatus, and
wherein the request acceptance side communication equipment receives the connection start signal having the destination of the waiting and receiving address information made to be associated with the request acceptance side communication equipment from the request issuance side communication equipment not via the server apparatus but via the network, so as to establish a direct connection between the request issuance side communication equipment and the request acceptance side communication equipment; and
(b) when the request acceptance side communication equipment is selected as the connection side communication equipment,
then the request acceptance side communication equipment receives the waiting and receiving address information made to be associated with the request issuance side communication equipment from the server apparatus via the second communication path, and

wherein the request acceptance side communication equipment transmits the connection start signal having the destination of the waiting and receiving address information made to be associated with the request issuance side communication equipment to the request issuance side communication equipment not via the server apparatus but via the network, so as to establish the direct connection between the request issuance side communication equipment and the request acceptance side communication equipment.

16. A communication system including a request issuance side communication equipment connected to a network via a first router apparatus; a request acceptance side communication equipment connected to the network via a second router apparatus; and a server apparatus connected to the network, the communication system mediating establishment of a connection between the request issuance side communication equipment and the request acceptance side communication equipment by using the server apparatus, and holding a communication by using the connection established through a mediation of the server apparatus,
wherein the server apparatus and the request issuance side communication equipment establish a first communication path for connecting the server apparatus to the request issuance side communication equipment via the first router apparatus between the server apparatus and the request issuance side communication equipment prior to issuance of a request;
wherein the server apparatus and the request acceptance side communication equipment maintain, in advance, a second communication path for connecting the server apparatus to the request acceptance side communication equipment via the second router apparatus between the server apparatus and the request acceptance side communication equipment;
wherein, when the request issuance side communication equipment desires to establish the connection with the request acceptance side communication equipment, then the request issuance side communication equipment judges whether or not the request issuance side communication equipment has a waiting and reception capability to wait for and receive a signal transmitted from the request acceptance side communication equipment via the network, and transmits a connection request signal including waiting and reception capability information on the request issuance side communication equipment as judgment results to the server apparatus;
wherein, when the server apparatus receives the connection request signal, the server apparatus transmits a waiting and reception capability notification request signal for requesting waiting and reception capability information on the request acceptance side communication equipment to the request acceptance side communication equipment via the second communication path, the waiting and reception capability information on the request acceptance side communication equipment indicating whether or not the request acceptance side communication equipment has a waiting and reception capability to wait for and receive a signal transmitted from the request issuance side communication equipment via the network;
wherein, when the request acceptance side communication equipment receives the waiting and reception capability notification request signal, then the request acceptance side communication equipment judges whether or not the request acceptance side communication equipment has the waiting and reception capability, and transmits waiting and reception capability information on the request acceptance side communication equipment as judgment results to the server apparatus;
wherein, when the server apparatus judges that at least one of the request issuance side communication equipment and the request acceptance side communication equipment has the waiting and reception capability based on the waiting and reception capability information on the request issuance side communication equipment and on the waiting and reception capability information on the request acceptance side communication equipment, then the server apparatus selects the one communication equipment having the waiting and reception capability as a waiting and receiving side communication equipment that receives a connection start signal for establishing a direct connection between the request issuance side communication equipment and the request acceptance side communication equipment, selects another communication equipment as a connection side communication equipment that transmits the connection start signal, notifies the request issuance side communication equipment and the request acceptance side communication equipment, as which the respective communication equipments are selected by using the first and second communication paths, respectively, among the waiting and receiving side communication equipment and the connection side communication equipment;
wherein the selected waiting and receiving side communication equipment sets the router apparatus that connects the waiting and receiving side communication equipment to the network so that the router apparatus receives a signal being transmitted from the selected connection side communication equipment and having a destination of waiting and receiving address information made to be associated with the waiting and receiving side communication equipment, and so that the router apparatus transfers the received signal to the waiting and receiving side communication equipment, and transmits the waiting and receiving address information to the server apparatus;
wherein the server apparatus transfers the waiting and receiving address information to the connection side communication equipment via one of the first communication path and the second communication path for connecting the server apparatus to the selected connection side communication equipment; and
wherein the connection side communication equipment transmits the connection start signal having the destination of the waiting and receiving address information to the waiting and receiving side communication equipment not via the server apparatus but via the network, so as to establish a direct connection between the request issuance side communication equipment and the request acceptance side communication equipment.

17. The communication system as claimed in Claim 16,
wherein, when the server apparatus judges that each of the request issuance side communication equipment and the request acceptance side communication equipment does not have the waiting and reception capability based on the waiting and reception capability information on the request issuance side communication equipment and on the waiting and reception capability information on the request acceptance side communication equipment, then the server apparatus decides to relay a communication between the request issuance side communication equipment and the request acceptance side communication equipment, notifies the request issuance side communication equipment and the request acceptance side communication equipment that the server apparatus relays the communication between the request issuance side communication equipment and the request acceptance side communication equipment by using the first and second communication paths, respectively, and establishes the connection between the request issuance side communication equipment and the request acceptance side communication equipment relayed by the server apparatus.

18. A server apparatus provided in a communication system, for mediating establishment of a connection between a request issuance side communication equipment and a request acceptance side communication equipment, the communication system including the request issuance side communication equipment connected to a network via a first router apparatus; the request acceptance side communication equipment connected to the network via a second router apparatus; at least one relay communication equipment connected to the network; and the server apparatus connected to the network,
wherein the server apparatus establishes a first communication path for connecting the server apparatus to the request issuance side communication equipment via the first router apparatus between the server apparatus and the request issuance side communication equipment prior to issuance of a request;
wherein the server apparatus maintains, in advance, a second communication path for connecting the server apparatus to the request acceptance side communication equipment via the second router apparatus between the server apparatus and the request acceptance side communication equipment;
wherein the server apparatus maintains, in advance, a communication path for connecting the server apparatus to the respective relay communication equipments between the server apparatus and the respective relay communication equipments;
wherein the server apparatus receives waiting and reception capability information on the request issuance side communication equipment from the request issuance side communication equipment, the waiting and reception capability information on the request issuance side communication equipment indicating whether or not the request issuance side communication equipment has a waiting and reception capability to wait for and receive a signal transmitted from the request acceptance side communication equipment via the network, and stores the waiting and reception capability information in equipment information storage means;
wherein the server apparatus receives waiting and reception capability information on the request acceptance side communication equipment from the request acceptance side communication equipment, the waiting and reception capability information on the request acceptance side communication equipment indicating whether or not the request acceptance side communication equipment has a waiting and reception capability to wait for and receive a signal transmitted from the request issuance side communication equipment via the network, and stores the waiting and reception capability information in the equipment information storage means;
wherein the server apparatus receives waiting and reception capability information on the respective relay communication equipments from the respective relay communication equipments, the waiting and reception capability information on the respective relay communication equipments indicating whether or not the respective relay communication equipments have a waiting and reception capability to wait for and receive a signal transmitted from each of the request issuance side communication equipment and the request acceptance side communication equipment via the network, and stores the waiting and reception capability information in the equipment information storage means;
wherein, in the case that the server apparatus receives a signal for requesting the establishment of the connection between the request issuance side communication equipment and the request acceptance side communication equipment from the request issuance side communication equipment, when the server apparatus judges that at least one of the request issuance side communication equipment and the request acceptance side communication equipment has the waiting and reception capability based on the waiting and reception capability information stored in the equipment information storage means, then the server apparatus selects the one communication equipment having the waiting and reception capability as a waiting and receiving side communication equipment that receives a first connection start signal for establishing a direct connection between the request issuance side communication equipment and the request acceptance side communication equipment, and selects another communication equipment as a connection side communication equipment that transmits the first connection start signal, on the other hand, when the server apparatus judges that each of the request issuance side communication equipment and the request acceptance side communication equipment does not have the waiting and reception capability, then the server apparatus selects the request issuance side communication equipment as the connection side communication equipment that transmits a second connection start signal for establishing a direct connection between the request issuance side communication equipment and one relay communication equipment selected from among the at least one relay communication equipment, and selects the request acceptance side communication equipment as the connection side communication equipment that transmits a third connection start signal for establishing a direct connection between the request acceptance side communication equipment and the selected relay communication equipment;

wherein the server apparatus notifies the request issuance side communication equipment and the request acceptance side communication equipment, as which the respective communication equipments are selected by using the first and second communication paths, respectively, among the waiting and receiving side communication equipment and the connection side communication equipment;

(a) when one of the request issuance side communication equipment and the request acceptance side communication equipment is selected as the waiting and receiving side communication equipment, then the server apparatus receives first waiting and receiving address information made to be associated with the waiting and receiving side communication equipment from the waiting and receiving side communication equipment, and wherein the server apparatus transfers the received waiting and receiving address information to the connection side communication equipment via one of the first and second communication paths for connecting the server apparatus to the selected connection side communication equipment;

(b) when each of the request issuance side communication equipment and the request acceptance side communication equipment is selected as the connection side communication equipment,
then the server apparatus selects one arbitrary relay communication equipment judged to have the waiting and reception capability from among the relay communication equipments as the waiting and receiving side communication equipment based on the waiting and reception capability information stored in the equipment information storage means, notifies the selected relay communication equipment that the relay communication equipment is selected as the waiting and receiving side communication equipment via the communication path for connecting the server apparatus to the selected relay communication equipment,

wherein the server apparatus receives second and third waiting and receiving address information made to be associated with the selected relay communication equipment from the relay communication equipment, and wherein the server apparatus transmits the second waiting and receiving address information to the request issuance side communication equipment via the first communication path, and transmits the third waiting and receiving address information to the request acceptance side communication equipment via the second communication path.

19. A request issuance side communication equipment provided in a communication system, for establishing a connection with the request acceptance side communication equipment through a mediation of a server apparatus, and for holding a communication with the request acceptance side communication equipment by using the connection established through the mediation of the server apparatus, the communication system including the request issuance side communication equipment connected to a network via a first router apparatus; the request acceptance side communication equipment connected to the network via a second router apparatus; at least one relay communication equipment connected to the network; and the server apparatus connected to the network,
wherein the request issuance side communication equipment establishes a first communication path between the request issuance side communication equipment and the server apparatus prior to issuance of a request;
wherein the request issuance side communication equipment judges whether or not the request issuance side communication equipment has a waiting and reception capability to wait for and receive a signal transmitted from the request acceptance side communication equipment via the network, and transmits waiting and reception capability information as judgment results to the server apparatus;
wherein the request issuance side communication equipment transmits a signal for requesting the establishment of the connection between the request issuance side communication equipment and the request acceptance side communication equipment to the server apparatus;

wherein the request issuance side communication equipment receives from the server apparatus via the first communication path as which the request issuance side communication equipment is selected, a waiting and receiving side communication equipment that receives a first connection start signal for establishing a direct connection between the request issuance side communication equipment and the request acceptance side communication equipment or a connection side communication equipment that transmits the first connection start signal or a second connection start signal for establishing the direct connection between the request issuance side communication equipment and one relay communication equipment selected from among the at least one relay communication equipment;

(a) when the request issuance side communication equipment is selected as the waiting and receiving side communication equipment,

then the request issuance side communication equipment sets the first router apparatus so that the first router apparatus receives a signal being transmitted from the request acceptance side communication equipment and having a destination of first waiting and receiving address information made to be associated with the request issuance side communication equipment, and so that the first router apparatus transfers the received signal to the request issuance side communication equipment, and transmits the first waiting and receiving address information made to be associated with the request issuance side communication equipment to the server apparatus, and

wherein the request issuance side communication equipment receives the first connection start signal having the destination of the first waiting and receiving address information made to be associated with the request issuance side communication equipment from the request acceptance side communication equipment not via the server apparatus but via the network, so as to establish the direct connection between the request issuance side communication equipment and the request acceptance side communication equipment; and

(b) in the case that the request issuance side communication equipment is selected as the connection side communication equipment,

when receiving the first waiting and receiving address information made to be associated with the request acceptance side communication equipment from the server apparatus via the first communication path, the request issuance side communication equipment transmits the first connection start signal having the destination of the first waiting and receiving address information made to be associated with the request acceptance side communication equipment to the request acceptance side communication equipment not via the server apparatus but via the network, so as to establish the direct connection between the request issuance side communication equipment and the request acceptance side communication equipment, and

wherein, when the request issuance side communication equipment receives the second waiting and receiving address information made to be associated with the relay communication equipment selected as the waiting and receiving side communication equipment by the server apparatus from the server apparatus via the first communication path, the request issuance side communication equipment transmits the second connection start signal having the destination of the second waiting and receiving address information made to be associated with the relay communication equipment to the selected relay communication equipment not via the server apparatus but via the network, so as to establish the direct connection between the request issuance side communication equipment and the selected relay communication equipment, and establishing the communication between the request issuance side communication equipment and the request acceptance side communication equipment relayed by the relay communication equipment.

20. A request acceptance side communication equipment provided in a communication system, for establishing a connection with the request issuance side communication equipment through a mediation of a server apparatus, and for holding a communication with the request issuance side communication equipment by using the connection established through the mediation of the server apparatus, the communication system including the request issuance side communication equipment connected to a network via a first router apparatus; the request acceptance side communication equipment connected to the network via a second router apparatus; at least one relay communication equipment connected to the network; and the server apparatus connected to the network,

wherein the request acceptance side communication equipment maintains, in advance, a second communication path between the request acceptance side communication equipment and the server apparatus for connecting the server apparatus to the request acceptance side communication equipment via the second router apparatus;

wherein the request acceptance side communication equipment judges whether or not the request acceptance side communication equipment has a waiting and reception capability to wait for and receive a signal transmitted from the request issuance side communication equipment via the network, and transmits waiting and reception capability information as judgment results to the server apparatus;

wherein the request acceptance side communication equipment receives from the server apparatus via the second communication path as which the request acceptance side communication equipment is selected, a waiting and receiving side communication equipment that receives a first connection start signal for establishing a direct connection between the request issuance side communication equipment and the request acceptance side communication equipment or a connection side communication equipment that transmits the first connection start signal or a third connection start signal for establishing the direct connection between the request acceptance side communication equipment and one relay communication equipment selected from among the at least one relay communication equipment;

(a) when the request acceptance side communication equipment is selected as the waiting and receiving side communication equipment, then the request acceptance side communication equipment sets the second router apparatus so that the second router apparatus receives a signal being transmitted from the request issuance side communication equipment and having a destination of first waiting and receiving address information made to be associated with the request acceptance side communication equipment, and so that the second router apparatus transfers the received signal to the request acceptance side communication equipment, transmits the first waiting and receiving address information made to be associated with the request acceptance side communication equipment to the server apparatus, and

wherein the request acceptance side communication equipment receives the first connection start signal having the destination of the first waiting and receiving address information made to be associated with the request acceptance side communication equipment from the request issuance side communication equipment not via the server apparatus but via the network, so as to establish the direct connection between the request issuance side communication equipment and the request acceptance side communication equipment; and

(b) in the case that the request acceptance side communication equipment is selected as the connection side communication equipment,

when receiving the first waiting and receiving address information made to be associated with the request issuance side communication equipment from the server apparatus via the second communication path, the request acceptance side communication equipment transmits the first connection start signal having the destination of the first waiting and receiving address information made to be associated with the request issuance side communication equipment to the request issuance side communication equipment not via the server apparatus but via the network, so as to establish the direct connection between the request issuance side communication equipment and the request acceptance side communication equipment, and

wherein, when the request acceptance side communication equipment receives third waiting and receiving address information made to be associated with the relay communication equipment selected as the waiting and receiving side communication equipment by the server apparatus from the server apparatus via the second communication path, the request acceptance side communication equipment transmits the third connection start signal having the destination of the third waiting and receiving address information made to be associated with the relay communication equipment to the selected relay communication equipment not via the server apparatus but via the network, so as to establish the direct connection between the request acceptance side communication equipment and the selected relay communication equipment, and establishing the communication between the request issuance side communication equipment and the request acceptance side communication equipment relayed by the relay communication equipment.

21. A relay communication equipment provided in a communication system, for relaying a connection between a request issuance side communication equipment and a request acceptance side communication equipment through a mediation of a server apparatus, the communication system including the request issuance side communication equipment connected to a network via a first router apparatus; the request acceptance side communication equipment connected to the network via a second router apparatus; at least one relay communication equipment connected to the network; and the server apparatus connected to the network,

wherein the server apparatus and the relay communication equipment respectively maintain, in advance, a communication path for connecting the server apparatus to the relay communication equipment;

wherein the relay communication equipment judges whether or not the relay communication equipment has a waiting and reception capability to wait for and receive a signal transmitted from each of the request issuance side communication equipment and the request acceptance side communication equipment via the network, and transmits waiting and reception capability information as judgment results to the server apparatus;

wherein the relay communication equipment receives from the server apparatus via the communication path for connecting the server apparatus to the relay communication equipment information indicating that the relay communication equipment is selected as a waiting and receiving side communication equipment that receives a second connection start signal for establishing a direct connection with the request issuance side communication equipment, and a third connection start signal for establishing the direct connection with the request acceptance side communication equipment;

wherein the relay communication equipment transmits second and third waiting and receiving address information made to be associated with the relay communication equipment to the server apparatus;

wherein the relay communication equipment receives the second connection start signal having a destination of the second waiting and receiving address information from the request issuance side communication equipment not via the server apparatus but via the network;

wherein the relay communication equipment receives the third connection start signal having a destination of the third waiting and receiving address information from the request acceptance side communication equipment not via the server apparatus but via the network; and

wherein the relay communication equipment then establishes the direct connection between the relay communication equipment and the request issuance side communication equipment and direct connection between the relay communication equipment and the request acceptance side communication equipment, and establishes the communication between the request issuance side communication equipment and the request acceptance side communication equipment relayed by the relay communication equipment.

22. A communication system including a request issuance side communication equipment connected to a network via a first router apparatus; a request acceptance side communication equipment connected to the network via a second router apparatus; at least one relay communication equipment connected to the network; and a server apparatus connected to the network, the communication system mediating establishment of a connection between the request issuance side communication equipment and the request acceptance side communication equipment by using the server apparatus, and holding a communication by using the connection established through a mediation of the server apparatus,

wherein the server apparatus and the request issuance side communication equipment establish a first communication path for connecting the server apparatus to the request issuance side communication equipment via the first router apparatus between the server apparatus and the request issuance side communication equipment prior to issuance of a request;

wherein the server apparatus and the request acceptance side communication equipment maintain, in advance, a second communication path for connecting the server apparatus to the request acceptance side communication equipment via the second router apparatus between the server apparatus and the request acceptance side communication equipment;

wherein the server apparatus and each of the relay communication equipment maintains, in advance, a communication path for connecting the server apparatus to the relay communication equipment;

wherein the request issuance side communication equipment judges whether or not the request issuance side communication equipment has a waiting and reception capability to wait for and receive a signal transmitted from the request acceptance side communication equipment via the network, and transmits waiting and reception capability information on the request issuance side communication equipment as judgment results to the server apparatus;

wherein the request acceptance side communication equipment judges whether or not the request acceptance side communication equipment has the waiting and reception capability to wait for and receive a signal transmitted from the request issuance side communication equipment via the network, and transmits waiting and reception capability information on the request acceptance side communication equipment as judgment results to the server apparatus;

wherein each of the relay communication equipment judges whether or not the relay communication equipment has a waiting and reception capability to wait for and receive a signal transmitted from each of the request issuance side communication equipment and the request acceptance side communication equipment via the network, and transmits waiting and reception capability information as judgment results to the server apparatus, respectively;

wherein the server apparatus receives the waiting and reception capability information on the request issuance side communication equipment, the waiting and reception capability information on the request acceptance side communication equipment, and the waiting and reception capability information on the relay communication equipment, and stores the waiting and reception capability information in equipment information storage means;

wherein, in the case that the server apparatus receives a signal for requesting the establishment of the connection between the request issuance side communication equipment and the request acceptance side communication equipment from the request issuance side communication equipment, when the server apparatus judges that at least one of the request issuance side communication equipment and the request acceptance side communication equipment has the waiting and reception capability based on the waiting and reception capability information stored in the equipment information storage means, then the server apparatus selects the one communication equipment having the waiting and reception capability as a waiting and receiving side communication equipment that receives a first connection start signal for establishing a direct connection between the request issuance side communication equipment and the request acceptance side communication equipment, and selects another communication equipment as a connection side communication equipment that transmits the first connection start signal, and on the other hand, when the server apparatus judges that each of the request issuance side communication equipment and the request acceptance side communication equipment does not have the waiting and reception capability, then the server apparatus selects the request issuance side communication equipment as the connection side communication equipment that transmits a second connection start signal for establishing a direct connection between the request issuance side communication equipment and one relay communication equipment selected from among the at least one relay communication equipment, and selects the request acceptance side communication equipment as the connection side communication equipment that transmits a third connection start signal for establishing a direct connection between the request acceptance side communication equipment and the selected relay communication equipment;

wherein the server apparatus notifies the request issuance side communication equipment and the request acceptance side communication equipment, as which the respective communication equipments are selected by using the first and second communication paths, respectively, among the waiting and receiving side communication equipment and the connection side communication equipment;

(a) when one of the request issuance side communication equipment and the request acceptance side communication equipment is selected as the waiting and receiving side communication equipment,
then the request issuance side communication equipment sets the router apparatus that connects the waiting and receiving side communication equipment to the network so that the router apparatus receives a signal being transmitted from the selected connection side communication equipment and having a destination of first waiting and receiving address information made to be associated with the waiting and receiving side communication equipment, and so that the router apparatus transfers the received signal to the waiting and receiving side communication equipment, and transmits the first waiting and receiving address information to the server apparatus,
wherein the server apparatus transfers the received first waiting and receiving address information to the connection side communication equipment via one of the first and second communication paths for connecting the server apparatus to the selected connection side communication equipment, and
wherein the connection side communication equipment transmits the first connection start signal having the destination of the first waiting and receiving address information to the waiting and receiving side communication equipment not via the server apparatus but via the network, so as to establish the direct connection between the request issuance side communication equipment and the request acceptance side communication equipment; and
(b) when each of the request issuance side communication equipment and the request acceptance side communication equipment is selected as the connection side communication equipment,
then the server apparatus selects one arbitrary relay communication equipment judged to have the waiting and reception capability from among the relay communication equipments as the waiting and receiving side communication equipment based on the waiting and reception capability information stored in the equipment information storage means, notifies the selected relay communication equipment that the relay communication equipment is selected as the waiting and receiving side communication equipment via the communication path for connecting the server apparatus to the selected relay communication equipment,

wherein the selected relay communication equipment transmits second and third waiting and receiving address information made to be associated with the selected relay communication equipment to the server apparatus,
wherein the server apparatus transmits the second waiting and receiving address information to the request issuance side communication equipment via the first communication path, and transmits the third waiting and receiving address information to the request acceptance side communication equipment via the second communication path,
wherein the request issuance side communication equipment transmits the second connection start signal having the destination of the second waiting and receiving address information to the selected relay communication equipment not via the server apparatus but via the network,
wherein the request acceptance side communication equipment transmits the third connection start signal having the destination of the third waiting and receiving address information to the selected relay communication equipment not via the server apparatus but via the network, and
wherein a direct connection between the request issuance side communication equipment and the selected relay communication equipment and a direct connection between the request acceptance side communication equipment and the selected relay communication equipment are then established, and the communication between the request issuance side communication equipment and the request acceptance side communication equipment relayed by the relay communication equipment is then established.

23. A server apparatus provided in a communication system, for mediating establishment of a connection between a request issuance side communication equipment and a request acceptance side communication equipment, the communication system including the request issuance side communication equipment and the request acceptance side communication equipment respectively connected to a network; and a server apparatus connected to the network,

wherein the server apparatus and the request issuance side communication equipment authenticate each other; wherein the server apparatus receives a connection request signal for requesting the establishment of the connection between the request issuance side communication equipment and the request acceptance communication equipment from the request issuance side communication equipment;

wherein, when the server apparatus receives the connection request signal, the server apparatus and the request acceptance side communication equipment authenticate each other; and

wherein the server apparatus generates a cipher key when the server apparatus authenticates the request issuance side communication equipment and the request acceptance side communication equipment, respectively, encrypts the generated cipher key, and transmits the encrypted cipher key to the request issuance side communication equipment and the request acceptance side communication equipment, respectively.

24. A request issuance side communication equipment provided in a communication system, for establishing a connection with the request acceptance side communication equipment through a mediation of a server apparatus, and for holding a communication with the request acceptance side communication equipment by using the connection established through the mediation of the server apparatus, the communication system including the request issuance side communication equipment and the request acceptance side communication equipment respectively connected to the network; and the server apparatus connected to the network,

wherein the request issuance side communication equipment and the server apparatus authenticate each other; wherein the request issuance side communication equipment transmits a connection request signal for requesting the establishment of the connection between the request issuance side communication equipment and the request acceptance side communication equipment to the server apparatus when authenticating the server apparatus;

wherein the request issuance side communication equipment receives an encrypted and transmitted encryption key from the server apparatus, and decrypts the encrypted encryption key; and

wherein the request issuance side communication equipment establishes a direct connection between the request issuance side communication equipment and the request acceptance side communication equipment not via the server apparatus but via the network, and starts the communication encrypted by the decrypted encryption key by using the established direct connection.

25. A request acceptance side communication equipment provided in a communication system, for establishing a connection with the request issuance side communication equipment through a mediation of a server apparatus, and for holding a communication with the request issuance side communication equipment by using the connection established through the mediation of the server apparatus, the communication system including the request issuance side communication equipment and the request acceptance side communication equipment respectively connected to the network; and the server apparatus connected to the network,

wherein the request acceptance side communication equipment and the server apparatus authenticate each other; wherein the request acceptance side communication equipment receives an encrypted encryption key from the server apparatus, and decrypts the encrypted encryption key; and

wherein the request acceptance side communication equipment establishes a direct connection between the request issuance side communication equipment and the request acceptance side communication equipment not via the server apparatus but via the network, and starts the communication encrypted by the decrypted encryption key by using the established direct connection.

26. A communication system including a request issuance side communication equipment and a request acceptance side communication equipment respectively connected to the network; and a server apparatus connected to the network, the communication system mediating establishment of a connection between the request issuance side communication equipment and the request acceptance side communication equipment by using the server apparatus, and holding a communication by using the connection established through a mediation of the server apparatus,

wherein the request issuance side communication equipment and the server apparatus authenticate each other; wherein, when the request issuance side communication equipment authenticates the server apparatus, the request issuance side communication equipment transmits a connection request signal for requesting the establishment of the connection between the request issuance side communication equipment and the request acceptance communication equipment to the server apparatus;

wherein, when the server apparatus receives the connection request signal, the server apparatus and the request acceptance side communication equipment authenticate each other;

wherein the server apparatus generates a cipher key when the server apparatus authenticates the request issuance side communication equipment and the request acceptance side communication equipment, respectively, encrypts the generated cipher key, and transmits the encrypted cipher key to the request issuance side communication equipment and the request acceptance side communication equipment, respectively;

wherein the request issuance side communication equipment and the request acceptance side communication equipment receive and decrypt the encrypted and transmitted cipher key, respectively; and

wherein each of the request issuance side communication equipment and the request acceptance side communication equipment establishes a direct connection between the request issuance side communication equipment and the request acceptance side communication equipment not via the server apparatus but via the network, and starts the communication encrypted by each of the decrypted cipher key by using the established direct connection.

27. The communication system as claimed in Claim 26,

wherein each of the request issuance side communication equipment and the request acceptance side communication equipment includes password information storage means for storing password information on the request acceptance side communication equipment,

wherein, when the direct connection is established between the request issuance side communication equipment and the request acceptance side communication equipment, the request issuance side communication equipment transmits the password information stored in the password information storage means of the request issuance side communication equipment to the request acceptance side communication equipment; and

wherein the request acceptance side communication equipment receives the transmitted password information, collates the received password information with the password information stored in the password information storage means of the request acceptance side communication equipment, and authenticates the request issuance side communication equipment when these pieces of password information coincide with each other.

28. A server apparatus provided in a communication system, for mediating establishment of a connection between a request issuance side communication equipment and a request acceptance side communication equipment, the communication system including the request issuance side communication equipment and the request acceptance side communication equipment connected to a network; and a server apparatus connected to the network,

wherein the server apparatus and the request issuance side communication equipment authenticate each other;

wherein the server apparatus receives a connection request signal for requesting the connection between the request issuance side communication equipment and the request acceptance communication equipment from the request issuance side communication equipment;

wherein, when the server apparatus receives the connection request signal, the server apparatus and the request acceptance side communication equipment authenticate each other; and

wherein the server apparatus generates connection authentication information when the server apparatus authenticates the request issuance side communication equipment and the request acceptance side communication equipment, respectively, encrypts the generated connection authentication information, and transmits the encrypted connection authentication information to the request issuance side communication equipment and the request acceptance side communication equipment, respectively.

29. A request issuance side communication equipment provided in a communication system, for establishing a connection with the request acceptance side communication equipment through a mediation of a server apparatus, and for holding a communication with the request acceptance side communication equipment by using the connection established through the mediation of the server apparatus, the communication system including the request issuance side communication equipment and the request acceptance side communication equipment respectively connected to the network; and the server apparatus connected to the network,

wherein the request issuance side communication equipment and the server apparatus authenticate each other;

wherein the request issuance side communication equipment transmits a connection request signal for requesting the establishment of the connection between the request issuance side communication equipment and the request acceptance side communication equipment to the server apparatus when authenticating the server apparatus;

wherein the request issuance side communication equipment receives encrypted and transmitted connection authentication information from the server apparatus, decrypts the encrypted connection authentication information, and stores the decrypted connection authentication information in connection authentication information storage means;

wherein the request issuance side communication equipment establishes a direct connection between the request issuance side communication equipment and the request acceptance side communication equipment not via the server apparatus but via the network;

wherein the request issuance side communication equipment transmits the connection authentication information to the request acceptance side communication equipment by using the established direct connection; and

wherein the request issuance side communication equipment starts the communication by using the direct connection between the request issuance side communication equipment and the request acceptance side communication equipment when the request acceptance side communication equipment permits the communication by using the direct connection.

30. A request acceptance side communication equipment provided in a communication system, for establishing a connection with the request acceptance side communication equipment through a mediation of a server apparatus, and for holding a communication with the request issuance side communication equipment by using the connection established through the mediation of the server apparatus, the communication system including the request issuance side communication equipment and the request acceptance side communication equipment respectively connected to the network; and the server apparatus connected to the network,

wherein the request acceptance side communication equipment and the server apparatus authenticate each other;

wherein the request acceptance side communication equipment receives encrypted and transmitted connection authentication information from the server apparatus, decrypts the connection authentication information, and stores the decrypted connection authentication information in connection authentication information storage means;

wherein the request acceptance side communication equipment establishes a direct connection between the request issuance side communication equipment and the request acceptance side communication equipment not via the server apparatus but via the network; and

wherein the request acceptance side communication equipment receives the connection authentication information from the request issuance side communication equipment by using the established direct connection, collates the received connection authentication information with the connection authentication information stored in the connection authentication information storage means of the connection acceptance side communication equipment, permits the connection using the direct connection when these pieces of connection authentication information coincide with each other, and starts the communication between the request issuance side communication equipment and the request acceptance side communication equipment by using the established direct connection.

31. A communication system including a request issuance side communication equipment and a request acceptance side communication equipment respectively connected to the network; and a server apparatus connected to the network, the communication system mediating establishment of a connection between the request issuance side communication equipment and the request acceptance side communication equipment by using the server apparatus, and holding a communication by using the connection established through a mediation of the server apparatus,

wherein the request issuance side communication equipment and the server apparatus authenticate each other;

wherein, when the request issuance side communication equipment authenticates the server apparatus, the request issuance side communication equipment transmits a connection request signal for requesting the establishment of the connection between the request issuance side communication equipment and the request acceptance communication equipment to the server apparatus;

wherein, when the server apparatus receives the connection request signal, the server apparatus and the request acceptance side communication equipment authenticate each other;

wherein the server apparatus generates connection authentication information when the server apparatus authenticates the request issuance side communication equipment and the request acceptance side communication equipment, respectively, encrypts the generated connection authentication information, and transmits the encrypted connection authentication information to the request issuance side communication equipment and the request acceptance side communication equipment, respectively, and store the encrypted connection authentication information in the connection authentication information storage means of the respective communication equipments, respectively;

wherein the request issuance side communication equipment and the request acceptance side communication equipment receive and decrypt the encrypted and transmitted connection authentication information, respectively;

wherein each of the request issuance side communication equipment and the request acceptance side communication equipment establishes a direct connection between the request issuance side communication equipment and the request acceptance side communication equipment not via the server apparatus but via the network;

wherein the request issuance side communication equipment transmits the connection authentication information to the request acceptance side communication equipment by using the established direct connection; and

wherein the request acceptance side communication equipment receives the transmitted connection authentication information, collates the received connection authentication information with the connection authentication information stored in the connection authentication information storage means of the connection acceptance side communication equipment, permits the communication by using the direct connection when these pieces of connection authentication information coincide with each other, and starts the communication between the request issuance side communication equipment and the request acceptance side communication equipment by using the direct connection.

**32.** A program that causes an apparatus operating according to the program to operate as the server apparatus as claimed in one of claims 1, 5, 9, 13, 18, 23, and 28.

**33.** A program that causes an apparatus operating according to the program to operate as the request issuance equipment as claimed in one of claims 2, 6, 10, 14, 19, 24, and 29.

**34.** A program that causes an apparatus operating according to the program to operate as the request acceptance equipment as claimed in one of claims 3, 7, 11, 15, 20, 25, and 30.

**35.** A program that causes an apparatus operating according to the program to operate as the relay communication equipment as claimed in claim 21.

**36.** A recording medium that stores the program as claimed in claim 32.

**37.** A recording medium that stores the program as claimed in claim 33.

**38.** A recording medium that stores the program as claimed in claim 34.

**39.** A recording medium that stores the program as claimed in claim 35.

## Fig.1

SERVER APPARATUS 103

COMMUNICATION LINE 121

COMMUNICATION LINE 123

COMMUNICATION LINE 122

104
NAT ROUTER APPARATUS (UPnP COMPLIANT)

LAN 111

101
COMMUNICATION EQUIPMENT

105
NAT ROUTER APPARATUS (UPnP INCOMPLIANT)

LAN 112

102
COMMUNICATION EQUIPMENT

INTERNET 110

## Fig.2

102 COMMUNICATION EQUIPMENT
105 ROUTER APPARATUS (UPnP INCOMPLIANT)
103 SERVER APPARATUS
104 ROUTER APPARATUS (UPnP COMPLIANT)
101 COMMUNICATION EQUIPMENT

S1 CONFIRM WHETHER OR NOT COMMUNICATION EQUIPMENT HAS WAITED FOR AND RECEIVED RESPONSE SIGNAL

TRY DETECTING UPnP-IGD

TRY DETECTING UPnP-IGD

S2 CONFIRM WHETHER OR NOT COMMUNICATION EQUIPMENT HAS WAITED FOR AND RECEIVED RESPONSE SIGNAL

FAIL IN DETECTING UPnP-IGD

SUCCEED IN DETECTING UPnP-IGD

EQUIPMENT INFORMATION REGISTRATION UDP PACKET 201

TRANSMISSION AT PERIODIC INTERVALS

S3 REGISTER EQUIPMENT INFORMATION ON COMMUNICATION EQUIPMENT 101

EQUIPMENT INFORMATION REGISTRATION UDP PACKET 202

S4 REGISTER EQUIPMENT INFORMATION ON COMMUNICATION EQUIPMENT 102

TCP CONNECTION REQUEST PACKET 203

CONNECTION REQUEST PACKET 204

S5 SEARCH EQUIPMENT IDs OF COMMUNICATION EQUIPMENTES 101 AND 102

S6 SELECT WAITING AND RECEIVING SIDE

S7 GENERATE SESSION IDENTIFIER

CONNECTION REQUEST UDP PACKET 205

TCP CONNECTION REQUEST PACKET 206

SESSION IDENTIFIER NOTIFICATION PACKET 207

S8 COLLATE SESSION IDENTIFIERS

CONNECTION REQUEST TRANSFER PACKET 208

STATIC NAT TABLE ENTRY SETTING REQUEST PACKET 209

S9 EXECUTE TRANSFER SETTING IN STATIC NAT TABLE

ROUTER APPARATUS SETTING STEP S9A

CONNECTION RESPONSE TRANSFER PACKET 211

CONNECTION RESPONSE PACKET 210

TCP CONNECTION REQUEST PACKET 212

S10 EXECUTE PEER-TO-PEER TRANSFER USING TCP CONNECTION

TCP DISCONNECTION REQUEST PACKET 213

ROUTER APPARATUS SETTING STEP S11A

STATIC NAT TABLE ENTRY DELETION REQUEST PACKET 214

S11 DELETE TRANSFER SETTING IN STATIC NAT TABLE

ROUTER APPARATUS SETTING DELETION STEP S11A

LAN 112          INTERNET (WAN) 110          LAN 111

# Fig.3A

| WHEN RATIO OF NUMBER OF COMMUNICATION EQUIPMENTS CONNECTED TO THE INTERNET AND HAVING GLOBAL IP ADDRESSES TO NUMBER OF COMMUNICATION EQUIPMENTS CONNECTED TO LAN AND HAVING ONLY PRIVATE IP ADDRESSES IS 2:8 | | |
|---|---|---|
| | NETWORK CONNECTED TO COMMUNICATION EQUIPMENT 101 | NETWORK CONNECTED TO COMMUNICATION EQUIPMENT 102 | PROBABILITY |
| 1 | INTERNET | INTERNET | 4% |
| 2 | LAN | INTERNET | 16% |
| 3 | INTERNET | LAN | 16% |
| 4 | LAN | LAN | 64% |

CONNECTABLE ACCORDING TO PRIOR ART (4%)

CONNECTABLE BY DECIDING WAITING AND RECEIVING SIDE AT STEP S6 (36%)

EP 1 783 622 A1

## Fig.3B

| WHEN RATIO OF NUMBER OF COMMUNICATION EQUIPMENTS CONNECTED TO THE INTERNET AND HAVING GLOBAL IP ADDRESSES TO NUMBER OF COMMUNICATION EQUIPMENTS CONNECTED TO LAN AND HAVING ONLY PRIVATE IP ADDRESSES IS 2:8, AND RATIO OF NUMBER OF UPnP COMPLIANT COMMUNICATION EQUIPMENTS TO NUMBER OF UPnP INCOMPLIANT COMMUNICATION EQUIPMENTS IS 5:5 | | |
|---|---|---|
| | NETWORK CONNECTED TO COMMUNICATION EQUIPMENT 101 | NETWORK CONNECTED TO COMMUNICATION EQUIPMENT 102 | PROBABILITY |
| 1 | INTERNET | INTERNET | 4% |
| 2 | LAN | INTERNET | 16% |
| 3 | INTERNET | LAN | 16% |
| 4 | LAN (UPnP COMPLIANT) | LAN (UPnP COMPLIANT) | 16% |
| 5 | LAN (UPnP INCOMPLIANT) | LAN (UPnP COMPLIANT) | 16% |
| 6 | LAN (UPnP COMPLIANT) | LAN (UPnP INCOMPLIANT) | 16% |
| 7 | LAN (UPnP INCOMPLIANT) | LAN (UPnP INCOMPLIANT) | 16% |

CONNECTABLE BY COMMUNICATION METHOD ACCORDING TO FIRST PREFERRED EMBODIMENT (84%)

EP 1 783 622 A1

# Fig.4

SERVER APPARATUS 103

COMMUNICATION LINE 121

104a
NAT
ROUTER
APPARATUS
(UPnP INCOMPLIANT)

LAN 111

101
COMMUNICATION
EQUIPMENT

COMMUNICATION
LINE 123

COMMUNICATION LINE 122

105a
NAT
ROUTER
APPARATUS
(UPnP COMPLIANT)

LAN 112

102
COMMUNICATION
EQUIPMENT

INTERNET 110

## Fig.5

102 COMMUNICATION EQUIPMENT    105a ROUTER APPARATUS (UPnP COMPLIANT)    103 SERVER APPARATUS    104a ROUTER APPARATUS (UPnP INCOMPLIANT)    101 COMMUNICATION EQUIPMENT

S1 CONFIRM WHETHER OR NOT COMMUNICATION EQUIPMENT HAS WAITED FOR AND RECEIVED RESPONSE SIGNAL

TRY DETECTING UPnP-IGD

TRY DETECTING UPnP-IGD

S2 CONFIRM WHETHER OR NOT COMMUNICATION EQUIPMENT HAS WAITED FOR AND RECEIVED RESPONSE SIGNAL

FAIL IN DETECTING UPnP-IGD

SUCCEED IN DETECTING UPnP-IGD    S3

EQUIPMENT INFORMATION REGISTRATION UDP PACKET 201

REGISTER EQUIPMENT INFORMATION ON COMMUNICATION EQUIPMENT 101

EQUIPMENT INFORMATION REGISTRATION UDP PACKET 202

S4 REGISTER EQUIPMENT INFORMATION ON COMMUNICATION EQUIPMENT 102

TCP CONNECTION REQUEST PACKET 203

CONNECTION REQUEST PACKET 204

S5 SEARCH EQUIPMENT IDs OF COMMUNICATION EQUIPMENTES 101 AND 102

S6 SELECT WAITING AND RECEIVING SIDE

S7 GENERATE SESSION IDENTIFIER

CONNECTION REQUEST UDP PACKET 205

TCP CONNECTION REQUEST PACKET 206

SESSION IDENTIFIER NOTIFICATION PACKET 207

S8 COLLATE SESSION IDENTIFIERS

CONNECTION RESPONSE PACKET 221

STATIC NAT TABLE ENTRY SETTING REQUEST PACKET 209a    S9a

EXECUTE TRANSFER SETTING IN STATIC NAT TABLE

TRANSMISSION REQUEST PACKET 222    TRANSMISSION REQUEST TRANSFER PACKET 223

ROUTER APPARATUS SETTING STEP S9B

TCP CONNECTION REQUEST PACKET 212a

S10 EXECUTE PEER-TO-PEER TRANSFER USING TCP CONNECTION

TCP DISCONNECTION REQUEST PACKET 213

STATIC NAT TABLE ENTRY DELETION REQUEST PACKET 214a    S11a

DELETE TRANSFER SETTING IN STATIC NAT TABLE

ROUTER APPARATUS SETTING DELETION STEP S11B

TRANSMISSION AT PERIODIC INTERVALS

LAN 112    INTERNET (WAN) 110    LAN 111

# Fig.6

SERVER APPARATUS 103

COMMUNICATION LINE 121

COMMUNICATION LINE 122

104a

NAT ROUTER APPARATUS (UPnP INCOMPLIANT)

LAN 111

101

COMMUNICATION EQUIPMENT

105

NAT ROUTER APPARATUS (UPnP INCOMPLIANT)

LAN 112

102

COMMUNICATION EQUIPMENT

INTERNET 110

## Fig.7

Fig.8

## Fig.9

## Fig.10

102 COMMUNICATION EQUIPMENT | 105 ROUTER APPARATUS (UPnP INCOMPLIANT) | 103 SERVER APPARATUS | 104a ROUTER APPARATUS (UPnP INCOMPLIANT) | 101 COMMUNICATION EQUIPMENT

EQUIPMENT INFORMATION REGISTRATION UDP PACKET 201a

S3a

EQUIPMENT INFORMATION REGISTRATION UDP PACKET 202a

REGISTER EQUIPMENT INFORMATION ON COMMUNICATION EQUIPMENT 101

S1a

CONFIRM WHETHER OR NOT COMMUNICATION EQUIPMENT HAS WAITED FOR AND RECEIVED RESPONSE SIGNAL

S4a REGISTER EQUIPMENT INFORMATION ON COMMUNICATION EQUIPMENT 102

TRY DETECTING UPnP-IGD

FAIL IN DETECTING UPnP-IGD

TCP CONNECTION REQUEST PACKET 203

CONNECTION REQUEST PACKET 204a

S5a SEARCH EQUIPMENT ID OF COMMUNICATION EQUIPMENT 101

S7 GENERATE SESSION IDENTIFIER

CONNECTION REQUEST UDP PACKET 205

TCP CONNECTION REQUEST PACKET 206

SESSION IDENTIFIER NOTIFICATION PACKET 207

S8 COLLATE SESSION IDENTIFIERS

CONNECTION REQUEST TRANSFER PACKET 208a

S2a CONFIRM WHETHER OR NOT COMMUNICATION EQUIPMENT HAS WAITED FOR AND RECEIVED RESPONSE SIGNAL

TRY DETECTING UPnP-IGD

FAIL IN DETECTING UPnP-IGD

S21 SELECT WAITING AND RECEIVING SIDE

SELECT WAITING AND RECEIVING SIDE

CONNECTION RESPONSE TRANSFER PACKET 211b

CONNECTION RESPONSE PACKET 210b

S10a EXECUTE DATA TRANSFER VIA SERVER APPARATUS 103 USING TCP CONNECTION

TCP DISCONNECTION REQUEST PACKET 233

TCP DISCONNECTION REQUEST PACKET 234

LAN 112 | INTERNET (WAN) 110 | LAN 111

## Fig.11

102 105 103 104 101

| COMMUNICATION EQUIPMENT | ROUTER APPARATUS (UPnP INCOMPLIANT) | SERVER APPARATUS | ROUTER APPARATUS (UPnP COMPLIANT) | COMMUNICATION EQUIPMENT |

EQUIPMENT INFORMATION REGISTRATION UDP PACKET 201a

S3a

EQUIPMENT INFORMATION REGISTRATION UDP PACKET 202a

REGISTER EQUIPMENT INFORMATION ON COMMUNICATION EQUIPMENT 101

S1a

S4a REGISTER EQUIPMENT INFORMATION ON COMMUNICATION EQUIPMENT 102

CONFIRM WHETHER OR NOT COMMUNICATION EQUIPMENT HAS WAITED FOR AND RECEIVED RESPONSE SIGNAL

TRY DETECTING UPnP-IGD

FAIL IN DETECTING UPnP-IGD

TCP CONNECTION REQUEST PACKET 203

WAITING AND RECEPTION CAPABILITY NOTIFICATION REQUEST PACKET 241

S5a

SEARCH EQUIPMENT ID OF COMMUNICATION EQUIPMENT 101 S7

GENERATE SESSION IDENTIFIER

CONNECTION REQUEST UDP PACKET 205

TCP CONNECTION REQUEST PACKET 206

S8 SESSION IDENTIFIER NOTIFICATION PACKET 207

COLLATE SESSION IDENTIFIERS

WAITING AND RECEPTION CAPABILITY NOTIFICATION REQUEST TRANSFER PACKET 242

S2a

CONFIRM WHETHER OR NOT COMMUNICATION EQUIPMENT HAS WAITED FOR AND RECEIVED RESPONSE SIGNAL

TRY DETECTING UPnP-IGD

WAITING AND RECEPTION CAPABILITY NOTIFICATION RESPONSE TRANSFER PACKET 244

WAITING AND RECEPTION CAPABILITY NOTIFICATION

SUCCEED IN DETECTING UPnP-IGD RESPONSE PACKET 243

S22

SELECT WAITING AND RECEIVING SIDE

CONNECTION REQUEST PACKET 245

CONNECTION REQUEST TRANSFER PACKET 246

STATIC NAT TABLE ENTRY SETTING REQUEST PACKET 209

S9 EXECUTE TRANSFER SETTING IN STATIC NAT TABLE

CONNECTION RESPONSE TRANSFER PACKET 211c

CONNECTION RESPONSE PACKET 210c

TCP CONNECTION REQUEST PACKET 212

S10 EXECUTE PEER-TO-PEER TRANSFER USING TCP CONNECTION

TCP DISCONNECTION REQUEST PACKET 213

STATIC NAT TABLE ENTRY SETTING REQUEST PACKET 214

S11

DELETE TRANSFER SETTING IN STATIC NAT TABLE

LAN 112 INTERNET (WAN) 110 LAN 111

## Fig.12

102    105a    103    104a    101

| COMMUNICATION EQUIPMENT | ROUTER APPARATUS (UPnP COMPLIANT) | SERVER APPARATUS | ROUTER APPARATUS (UPnP INCOMPLIANT) | COMMUNICATION EQUIPMENT |

EQUIPMENT INFORMATION REGISTRATION UDP PACKET 201a

EQUIPMENT INFORMATION REGISTRATION UDP PACKET 202a

S3a

REGISTER EQUIPMENT INFORMATION ON COMMUNICATION EQUIPMENT 101

S1a

CONFIRM WHETHER OR NOT COMMUNICATION EQUIPMENT HAS WAITED FOR AND RECEIVED RESPONSE SIGNAL

S4a REGISTER EQUIPMENT INFORMATION ON COMMUNICATION EQUIPMENT 102

TRY DETECTING UPnP-IGD

SUCCEED IN DETECTING UPnP-IGD

TCP CONNECTION REQUEST PACKET 203

WAITING AND RECEPTION CAPABILITY NOTIFICATION REQUEST PACKET 241

S5a

SEARCH EQUIPMENT ID OF COMMUNICATION EQUIPMENT 101 S7

GENERATE SESSION IDENTIFIER

CONNECTION REQUEST UDP PACKET 205

TCP CONNECTION REQUEST PACKET 206

S8

SESSION IDENTIFIER NOTIFICATION PACKET 207

COLLATE SESSION IDENTIFIERS

WAITING AND RECEPTION CAPABILITY NOTIFICATION REQUEST TRANSFER PACKET 242

S2a CONFIRM WHETHER OR NOT COMMUNICATION EQUIPMENT HAS WAITED FOR AND RECEIVED RESPONSE SIGNAL

TRY DETECTING UPnP-IGD

FAIL IN DETECTING UPnP-IGD

S22

WAITING AND RECEPTION CAPABILITY NOTIFICATION RESPONSE TRANSFER PACKET 244

WAITING AND RECEPTION CAPABILITY NOTIFICATION RESPONSE PACKET 243

SELECT WAITING AND RECEIVING SIDE

STATIC NAT TABLE ENTRY SETTING REQUEST PACKET 209a S9a

EXECUTE TRANSFER SETTING IN STATIC NAT TABLE

TRANSMISSION REQUEST PACKET 222

TRANSMISSION REQUEST TRANSFER PACKET 223

TCP CONNECTION REQUEST PACKET 212a

S10 EXECUTE PEER-TO-PEER TRANSFER USING TCP CONNECTION

TCP DISCONNECTION REQUEST PACKET 213

STATIC NAT TABLE ENTRY SETTING REQUEST PACKET 214a

DELETE TRANSFER SETTING IN STATIC NAT TABLE S11a

LAN 112     INTERNET (WAN) 110     LAN 111

## Fig.13

## Fig.14

102 105 103 104 101

| COMMUNICATION EQUIPMENT | ROUTER APPARATUS (UPnP INCOMPLIANT) | SERVER APPARATUS | ROUTER APPARATUS (UPnP COMPLIANT) | COMMUNICATION EQUIPMENT |

EQUIPMENT INFORMATION REGISTRATION UDP PACKET 201a

EQUIPMENT INFORMATION REGISTRATION UDP PACKET 202a

S3a
REGISTER EQUIPMENT INFORMATION ON COMMUNICATION EQUIPMENT 101

S1a
CONFIRM WHETHER OR NOT COMMUNICATION EQUIPMENT HAS WAITED FOR AND RECEIVED RESPONSE SIGNAL

S4a
REGISTER EQUIPMENT INFORMATION ON COMMUNICATION EQUIPMENT 102

TRY DETECTING UPnP-IGD

FAIL IN DETECTING UPnP-IGD

TCP CONNECTION REQUEST PACKET 203

CONNECTION REQUEST PACKET 204a

S5a
SEARCH EQUIPMENT ID OF COMMUNICATION EQUIPMENT 101

S7
GENERATE SESSION IDENTIFIER

CONNECTION REQUEST UDP PACKET 205

TCP CONNECTION REQUEST PACKET 206

S8
SESSION IDENTIFIER NOTIFICATION PACKET 207

COLLATE SESSION IDENTIFIERS

WAITING AND RECEPTION CAPABILITY NOTIFICATION REQUEST PACKET 251

S2a
CONFIRM WHETHER OR NOT COMMUNICATION EQUIPMENT HAS WAITED FOR AND RECEIVED RESPONSE SIGNAL

TRY DETECTING UPnP-IGD

WAITING AND RECEPTION CAPABILITY NOTIFICATION RESPONSE PACKET 252

SUCCEED IN DETECTING UPnP-IGD

S23
SELECT WAITING AND RECEIVING SIDE

CONNECTION REQUEST TRANSFER PACKET 208

S9
STATIC NAT TABLE ENTRY SETTING REQUEST PACKET 209

EXECUTE TRANSFER SETTING IN STATIC NAT TABLE

CONNECTION RESPONSE TRANSFER PACKET 211

CONNECTION RESPONSE PACKET 210

TCP CONNECTION REQUEST PACKET 212

S10 EXECUTE PEER-TO-PEER TRANSFER USING TCP CONNECTION

TCP DISCONNECTION REQUEST PACKET 213

S11
STATIC NAT TABLE ENTRY SETTING REQUEST PACKET 214

DELETE TRANSFER SETTING IN STATIC NAT TABLE

LAN 112 INTERNET (WAN) 110 LAN 111

# Fig.15

102 COMMUNICATION EQUIPMENT    105a ROUTER APPARATUS (UPnP COMPLIANT)    103 SERVER APPARATUS    104a ROUTER APPARATUS (UPnP INCOMPLIANT)    101 COMMUNICATION EQUIPMENT

EQUIPMENT INFORMATION REGISTRATION UDP PACKET 201a

S3a REGISTER EQUIPMENT INFORMATION ON COMMUNICATION EQUIPMENT 101

EQUIPMENT INFORMATION REGISTRATION UDP PACKET 202a

S1a CONFIRM WHETHER OR NOT COMMUNICATION EQUIPMENT HAS WAITED FOR AND RECEIVED RESPONSE SIGNAL

S4a REGISTER EQUIPMENT INFORMATION ON COMMUNICATION EQUIPMENT 102

TRY DETECTING UPnP-IGD

SUCCEED IN DETECTING UPnP-IGD

TCP CONNECTION REQUEST PACKET 203

CONNECTION REQUEST PACKET 204a

S5a SEARCH EQUIPMENT ID OF COMMUNICATION EQUIPMENT 101

S7 GENERATE SESSION IDENTIFIER

CONNECTION REQUEST UDP PACKET 205

TCP CONNECTION REQUEST PACKET 206

S8 SESSION IDENTIFIER NOTIFICATION PACKET 207

COLLATE SESSION IDENTIFIERS    WAITING AND RECEPTION CAPABILITY NOTIFICATION REQUEST PACKET 251

S2a CONFIRM WHETHER OR NOT COMMUNICATION EQUIPMENT HAS WAITED FOR AND RECEIVED RESPONSE SIGNAL

TRY DETECTING UPnP-IGD    FAIL IN DETECTING UPnP-IGD

S23 SELECT WAITING AND RECEIVING SIDE    WAITING AND RECEPTION CAPABILITY NOTIFICATION RESPONSE PACKET 252

CONNECTION RESPONSE PACKET 221

STATIC NAT TABLE ENTRY SETTING REQUEST PACKET 209a    S9a

EXECUTE TRANSFER SETTING IN STATIC NAT TABLE

TRANSMISSION REQUEST PACKET 222    TRANSMISSION REQUEST TRANSFER PACKET 223

TCP CONNECTION REQUEST PACKET 212a

S10 EXECUTE PEER-TO-PEER TRANSFER USING TCP CONNECTION

TCP DISCONNECTION REQUEST PACKET 213

STATIC NAT TABLE ENTRY SETTING REQUEST PACKET 214a

DELETE TRANSFER SETTING IN STATIC NAT TABLE    S11a

LAN 112    INTERNET (WAN) 110    LAN 111

## Fig.16

102    105    103    104a    101

| COMMUNICATION EQUIPMENT | ROUTER APPARATUS (UPnP INCOMPLIANT) | SERVER APPARATUS | ROUTER APPARATUS (UPnP INCOMPLIANT) | COMMUNICATION EQUIPMENT |

EQUIPMENT INFORMATION REGISTRATION UDP PACKET 201a

S3a

REGISTER EQUIPMENT INFORMATION ON COMMUNICATION EQUIPMENT 101

EQUIPMENT INFORMATION REGISTRATION UDP PACKET 202a

S1a

CONFIRM WHETHER OR NOT COMMUNICATION EQUIPMENT HAS WAITED FOR AND RECEIVED RESPONSE SIGNAL

S4a REGISTER EQUIPMENT INFORMATION ON COMMUNICATION EQUIPMENT 102

TRY DETECTING UPnP-IGD

FAIL IN DETECTING UPnP-IGD

TCP CONNECTION REQUEST PACKET 203

CONNECTION REQUEST PACKET 204a

S5a
SEARCH EQUIPMENT ID OF COMMUNICATION EQUIPMENT 101 S7

GENERATE SESSION IDENTIFIER

CONNECTION REQUEST UDP PACKET 205

TCP CONNECTION REQUEST PACKET 206

S8

SESSION IDENTIFIER NOTIFICATION PACKET 207

COLLATE SESSION IDENTIFIERS

WAITING AND RECEPTION CAPABILITY NOTIFICATION REQUEST PACKET 251

S2a

CONFIRM WHETHER OR NOT COMMUNICATION EQUIPMENT HAS WAITED FOR AND RECEIVED RESPONSE SIGNAL

TRY DETECTING UPnP-IGD

FAIL IN DETECTING UPnP-IGD

WAITING AND RECEPTION CAPABILITY NOTIFICATION RESPONSE PACKET 252

S23 SELECT WAITING AND RECEIVING SIDE

VIA-SERVER TRANSFER INDICATION PACKET 231

VIA-SERVER TRANSFER INDICATION PACKET 232

S10a EXECUTE DATA TRANSFER VIA SERVER APPARATUS 103 USING TCP CONNECTION

TCP DISCONNECTION REQUEST PACKET 233

TCP DISCONNECTION REQUEST PACKET 234

LAN 112     INTERNET (WAN) 110     LAN 111

Fig.17

INTERNET 110

COMMUNICATION LINE 121

SERVER APPARATUS 103a

COMMUNICATION LINE 122

LAN 112

105

102

NAT ROUTER APPARATUS (UPnP INCOMPLIANT)

COMMUNICATION EQUIPMENT

COMMUNICATION LINE 126

104a

LAN 111

NAT ROUTER APPARATUS (UPnP INCOMPLIANT)

101

COMMUNICATION EQUIPMENT

COMMUNICATION LINE 125

107

LAN 113

COMMUNICATION LINE 124

NAT ROUTER APPARATUS (UPnP COMPLIANT)

106

COMMUNICATION EQUIPMENT

## Fig.18

## *Fig.19*

```
102              105              103              104              101
  COMMUNICATION    ROUTER          SERVER          ROUTER          COMMUNICATION
S1 EQUIPMENT       APPARATUS       APPARATUS       APPARATUS    S2 EQUIPMENT
                   (UPnP INCOMPLIANT)              (UPnP COMPLIANT)
```

CONFIRM WHETHER OR NOT COMMUNICATION EQUIPMENT HAS WAITED FOR AND RECEIVED RESPONSE SIGNAL

CONFIRM WHETHER OR NOT COMMUNICATION EQUIPMENT HAS WAITED FOR AND RECEIVED RESPONSE SIGNAL

TRY DETECTING UPnP-IGD            TRY DETECTING UPnP-IGD

SUCCEED IN DETECTING UPnP-IGD

FAIL IN DETECTING UPnP-IGD    S3    EQUIPMENT INFORMATION REGISTRATION UDP PACKET 201

REGISTER EQUIPMENT INFORMATION ON COMMUNICATION EQUIPMENT 101

EQUIPMENT INFORMATION REGISTRATION UDP PACKET 202

S4    REGISTER EQUIPMENT INFORMATION ON COMMUNICATION EQUIPMENT 102

TCP/SSL CONNECTION REQUEST PACKET 203a

SERVER APPARATUS 103 CERTIFICATE DATA PACKET 281

S41    SERVER APPARATUS 103 SIDE KEY INFORMATION PACKET 282

AUTHENTICATE SERVER APPARATUS 103

COMMUNICATION EQUIPMENT 102 CERTIFICATE DATA PACKET 283

COMMUNICATION EQUIPMENT 102 SIDE KEY INFORMATION PACKET 284    S42

AUTHENTICATE COMMUNICATION EQUIPMENT 102    S44

S43

GENERATE ENCRYPTION KEY K1    GENERATE ENCRYPTION KEY K1

CONNECTION REQUEST PACKET 204b    S5

SEARCH EQUIPMENT IDs OF COMMUNICATION EQUIPMENTES 101 AND 102

S6
SELECT WAITING AND RECEIVING SIDE    S7a

GENERATE SESSION IDENTIFIER SID1

CONNECTION REQUEST UDP PACKET 205

TCP/SSL CONNECTION REQUEST PACKET 206a

SERVER APPARATUS 103 CERTIFICATE DATA PACKET 285
                                                            S45
SERVER APPARATUS 103 SIDE KEY INFORMATION PACKET 286

AUTHENTICATE SERVER APPARATUS 103

COMMUNICATION EQUIPMENT 101 CERTIFICATE DATA PACKET 287

COMMUNICATION EQUIPMENT 101 SIDE KEY INFORMATION PACKET 288

S46                                                              S47
AUTHENTICATE COMMUNICATION EQUIPMENT 101

S48    GENERATE ENCRYPTION KEY K2    GENERATE ENCRYPTION KEY K2

S8a    SESSION IDENTIFIER NOTIFICATION PACKET 207a

COLLATE SESSION IDENTIFIERS SID1

TRANSMISSION AT PERIODIC INTERVALS

# Fig.20

```
102        105              103        104            101
COMMUNICATION   ROUTER       SERVER      ROUTER      COMMUNICATION
EQUIPMENT      APPARATUS    APPARATUS    APPARATUS    EQUIPMENT
              (UPnP INCOMPLIANT)        (UPnP COMPLIANT)
```

CONNECTION REQUEST
TRANSFER PACKET 208b

S9          STATIC NAT TABLE ENTRY
            SETTING REQUEST PACKET 209

EXECUTE TRANSFER SETTING
IN STATIC NAT TABLE

S49        CONNECTION RESPONSE PACKET 210d

GENERATE SESSION IDENTIFIER SID2

SESSION IDENTIFIER
NOTIFICATION PACKET 289

S50    CONNECTION RESPONSE
       TRANSFER PACKET 290                            S51

STORE SESSION                            STORE SESSION
IDENTIFIER SID2                          IDENTIFIER SID2

TCP/SSL CONNECTION
REQUEST PACKET 212b

COMMUNICATION EQUIPMENT 101
SIDE KEY INFORMATION PACKET 291

COMMUNICATION EQUIPMENT 102
S52    SIDE KEY INFORMATION PACKET 292                S53

GENERATE ENCRYPTION KEY K3    PEER-TO-PEER COMMUNICATION    GENERATE ENCRYPTION KEY K3
                              START REQUEST PACKET 293

S54
COLLATE RECEIVED
SESSION IDENTIFIER
SID2 WITH STORED
SESSION IDENTIFIER
SID2

COLLATION SUCCESS
NOTIFICATION PACKET 294
                                                     S55
USER AUTHENTICATION PACKET 295

COLLATE PASSWORDS AND
PERMIT COMMUNICATION
EQUIPMENT 102 TO
PERMIT INDIVIDUAL
OPERATION

S10b  EXECUTE PEER-TO-PEER TRANSFER USING TCP CONNECTION

TCP DISCONNECTION REQUEST PACKET 213a

S11        STATIC NAT TABLE ENTRY
           SETTING REQUEST PACKET 214

DELETE TRANSFER SETTING
IN STATIC NAT TABLE

LAN 112        INTERNET (WAN) 110        LAN 111

## Fig.21

| EQUIPMENT ID | IP ADDRESS | PORT NUMBER | EQUIPMENT ID | EXPIRATION DATE | RANDOM NUMBER | SERVER SIGNATURE |
|---|---|---|---|---|---|---|

WAITING AND
RECEIVING
SIDE EQUIPMENT
(COMMUNICATION
EQUIPMENT 101)

CONNECTION
SIDE EQUIPMENT
(COMMUNICATION
EQUIPMENT 102)

## Fig.22

| 102 | 105 | 103 | 104 | 101 |
|---|---|---|---|---|
| COMMUNICATION EQUIPMENT | ROUTER APPARATUS (UPnP INCOMPLIANT) | SERVER APPARATUS | ROUTER APPARATUS (UPnP COMPLIANT) | COMMUNICATION EQUIPMENT |

TCP/SSL CONNECTION REQUEST PACKET 203a

SERVER APPARATUS 103 CERTIFICATE DATA PACKET 281

S41

SERVER APPARATUS 103 SIDE KEY INFORMATION PACKET 282

AUTHENTICATE SERVER APPARATUS 103

COMMUNICATION EQUIPMENT 102 CERTIFICATE DATA PACKET 283

COMMUNICATION EQUIPMENT 102 SIDE KEY INFORMATION PACKET 284

S42

S43

AUTHENTICATE COMMUNICATION EQUIPMENT 102

S44

GENERATE ENCRYPTION KEY K1

GENERATE ENCRYPTION KEY K1

CONNECTION REQUEST PACKET 204c

S5a

SEARCH EQUIPMENT ID OF COMMUNICATION EQUIPMENT 101

CONNECTION REQUEST UDP PACKET 205a

TCP/SSL CONNECTION REQUEST PACKET 206a

SERVER APPARATUS 103 CERTIFICATE DATA PACKET 285

SERVER APPARATUS 103 SIDE KEY INFORMATION PACKET 286

S45

AUTHENTICATE SERVER APPARATUS 103

COMMUNICATION EQUIPMENT 101 CERTIFICATE DATA PACKET 287

COMMUNICATION EQUIPMENT 101 SIDE KEY INFORMATION PACKET 288

S46

AUTHENTICATE COMMUNICATION EQUIPMENT 101

S47

S48

GENERATE ENCRYPTION KEY K2

GENERATE ENCRYPTION KEY K2

S61

GENERATE ENCRYPTION KEY K

CONNECTION REQUEST TRANSFER PACKET 301

S62

CONNECTION RESPONSE PACKET 302

S63

STORE ENCRYPTION KEY K

TCP CONNECTION REQUEST PACKET 212

STORE ENCRYPTION KEY K

PEER-TO-PEER COMMUNICATION START REQUEST PACKET 293

S64

ACCEPT COMMUNICATION USING ENCRYPTION KEY K

S10b

EXECUTE PEER-TO-PEER TRANSFER USING TCP CONNECTION

TCP DISCONNECTION REQUEST PACKET 213a

| LAN 112 | INTERNET (WAN) 110 | LAN 111 |
|---|---|---|

EP 1 783 622 A1

## Fig.23

115

## Fig.24

102      105          103     104        101

| COMMUNICATION EQUIPMENT | ROUTER APPARATUS (UPnP INCOMPLIANT) | SERVER APPARATUS | ROUTER APPARATUS (UPnP COMPLIANT) | COMMUNICATION EQUIPMENT |

TCP CONNECTION
REQUEST PACKET 212

PEER-TO-PEER COMMUNICATION
START REQUEST PACKET 293

S64

ACCEPT
COMMUNICATION
USING ENCRYPTION
KEY K

COLLATION SUCCESS
NOTIFICATION PACKET 294

USER AUTHENTICATION PACKET 295

S55

COLLATE PASSWORDS AND
PERMIT COMMUNICATION
EQUIPMENT 102 TO
PERMIT INDIVIDUAL
OPERATION

S10b EXECUTE PEER-TO-PEER TRANSFER USING TCP CONNECTION

TCP DISCONNECTION REQUEST PACKET 213a

LAN 112        INTERNET (WAN) 110        LAN 111

## Fig.25

## Fig.26

## Fig.27

## Fig.28

102 COMMUNICATION EQUIPMENT

105 ROUTER APPARATUS (UPnP INCOMPLIANT)

103 SERVER APPARATUS

104 ROUTER APPARATUS (UPnP COMPLIANT)

101 COMMUNICATION EQUIPMENT

S49a
GENERATE SESSION IDENTIFIER SID

CONNECTION REQUEST TRANSFER PACKET 301a

S50a CONNECTION RESPONSE PACKET 302a

S51a

STORE SESSION IDENTIFIER SID

STORE SESSION IDENTIFIER SID

TCP/SSL CONNECTION REQUEST PACKET 212b

COMMUNICATION EQUIPMENT 101 SIDE KEY INFORMATION PACKET 291

COMMUNICATION EQUIPMENT 102 SIDE KEY INFORMATION PACKET 292

S52

S53

GENERATE ENCRYPTION KEY K3

PEER-TO-PEER COMMUNICATION START REQUEST PACKET 293

GENERATE ENCRYPTION KEY K3

S54
COLLATE RECEIVED SESSION IDENTIFIER SID WITH STORED SESSION IDENTIFIER SID

COLLATION SUCCESS NOTIFICATION PACKET 294

USER AUTHENTICATION PACKET 295

S55

COLLATE PASSWORDS AND PERMIT COMMUNICATION EQUIPMENT 102 TO PERMIT INDIVIDUAL OPERATION

S10b EXECUTE PEER-TO-PEER TRANSFER USING TCP CONNECTION

TCP DISCONNECTION REQUEST PACKET 213a

LAN 112

INTERNET (WAN) 110

LAN 111

## INTERNATIONAL SEARCH REPORT

| | |
|---|---|
| | International application No. |
| | PCT/JP2005/010361 |

| A. CLASSIFICATION OF SUBJECT MATTER |
|---|
| Int.Cl⁷  G06F13/00, H04L12/46, 12/56 |

According to International Patent Classification (IPC) or to both national classification and IPC

| B. FIELDS SEARCHED |
|---|
| Minimum documentation searched (classification system followed by classification symbols) |
| Int.Cl⁷  G06F13/00, H04L12/46, 12/56 |

Documentation searched other than minimum documentation to the extent that such documents are included in the fields searched

| Jitsuyo Shinan Koho | 1922-1996 | Jitsuyo Shinan Toroku Koho | 1996-2005 |
|---|---|---|---|
| Kokai Jitsuyo Shinan Koho | 1971-2005 | Toroku Jitsuyo Shinan Koho | 1994-2005 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>A | JP 2004-507914 A  (Great Human Software Co., Ltd.),<br>11 March, 2004 (11.03.04),<br>Full text; all drawings<br>& WO 2002/017035 A2 | 1-17,32-39<br>18-22 |
| X | JP 2002-290397 A  (Zaidan Hojin Iryo Joho System Kaihatsu Senta),<br>04 October, 2002 (04.10.02),<br>Abstract<br>(Family: none) | 23-31 |
| A | JP 2003-203023 A  (Sony Corp.),<br>18 July, 2003 (18.07.03),<br>Abstract<br>(Family: none) | 17 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 August, 2005 (26.08.05) | 13 September, 2005 (13.09.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

### INTERNATIONAL SEARCH REPORT

| International application No. |
|---|
| PCT/JP2005/010361 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2003/024056 A2 (KONINKLIJKE PHILIPS ELECTRONICS N.V.), 20 March, 2003 (20.03.03), Full text; all drawings & US 2003/0051052 A1    & JP 2005-503075 A | 1-22,32-39 |
| A | JP 2003-101590 A (Kabushiki Kaisha Werukomu), 04 April, 2003 (04.04.03), Abstract (Family: none) | 1-22,32-39 |
| A | JP 2004-120547 A (Matsushita Electric Industrial Co., Ltd.), 15 April, 2004 (15.04.04), Full text; all drawings & WO 2004/030314 A1 | 1-22,32-39 |
| A | JP 2001-156941 A (Alcatel), 08 June, 2001 (08.06.01), Full text; all drawings & EP 1094648 A2 | 1-22,32-39 |

Form PCT/ISA/210 (continuation of second sheet) (January 2004)

## INTERNATIONAL SEARCH REPORT

<table>
<tr><td>International application No.<br>PCT/JP2005/010361</td></tr>
</table>

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    The inventions of claims 1-22, 32-39 relate to that a communication device serving as the wait side is selected and connection for peer-to-peer (P2P) communication is established.
    The inventions of claims 23-37 relate to transmission/reception of an encryption key used in peer-to-peer communication.
    The inventions of claims 28-31 relate to transmission/reception of connection authentication information used in peer-to-peer communication.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest.

☐ No protest accompanied the payment of additional search fees.

Form PCT/ISA/210 (continuation of first sheet (2)) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3445986 B

- JP 2003203023 A

**Non-patent literature cited in the description**

- *RFC1918, Internet Engineering Task Force,* February 1996
- *RFC2246, Internet Engineering Task Force,* January 1999
- **ALAN O. FREIER et al.** The SSL Protocol Version 3.0. *Transport Layer Security Working Group INTERNET DRAFT,* November 1996, http://wp.netscape.com/eng/ssl3/draft302.txt

- *RFC2409, Internet Engineering Task Force,* November 1998